(19) Europäisches Patentamt
European Patent Office
Office européen des brevets

(11) **EP 3 900 247 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **19832921.1**

(22) Anmeldetag: **19.12.2019**

(51) Internationale Patentklassifikation (IPC):
**H04L 5/00** *(2006.01)* **H04B 1/7143** *(2011.01)*
**H04J 4/00** *(2006.01)*

(52) Gemeinsame Patentklassifikation (CPC):
**H04L 5/0037; H04B 1/7143; H04J 3/0608;**
**H04L 5/0005; H04L 5/0012;** Y02D 30/70

(86) Internationale Anmeldenummer:
**PCT/EP2019/086355**

(87) Internationale Veröffentlichungsnummer:
**WO 2020/127769 (25.06.2020 Gazette 2020/26)**

(54) **EINSATZ VON ZYKLISCH GESCHOBENEN GRUNDMUSTERN ZUR DETEKTIONSRATENOPTIMIERUNG**

USE OF CYCLICALLY SHIFTED BASIC PATTERNS FOR DETECTION RATE OPTIMIZATION

UTILISATION DE MODÈLES DE BASE À DÉCALAGE CYCLIQUE PERMETTANT D'OPTIMISER LES TAUX DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018 DE 102018222859**

(43) Veröffentlichungstag der Anmeldung:
**27.10.2021 Patentblatt 2021/43**

(73) Patentinhaber:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **KILIAN, Gerd**
**91058 Erlangen (DE)**
• **BERNHARD, Josef**
**91058 Erlangen (DE)**
• **ROBERT, Jörg**
**91054 Erlangen (DE)**
• **POPP, Julian**
**91058 Erlangen (DE)**
• **KNEISSL, Jakob**
**91058 Erlangen (DE)**

• **OBERNOSTERER, Frank**
**90411 Nürnberg (DE)**
• **MEYER, Raimund**
**90765 Fürth (DE)**

(74) Vertreter: **Schlenker, Julian et al**
**Schoppe, Zimmermann, Stöckeler Zinkler, Schenk & Partner mbB Patentanwälte**
**Radlkoferstraße 2**
**81373 München (DE)**

(56) Entgegenhaltungen:
**WO-A1-2008/033117 WO-A1-2009/139724**
**WO-A1-2018/059782 DE-B3-102017 211 375**
**US-A1- 2007 153 834 US-A1- 2014 241 313**

- **MEDIATEK INC: "Synchronization Signal Design in CP-OFDM Based on Time-Frequency Hopping Patterns", 3GPP DRAFT; R1-1609329_SYNCHRONIZATION SIGNAL DESIGN IN CP-OFDM BASED ON TIME-FREQUENCY HOPPING PATTERNS, 3RD GENERATION PARTNERSHIP PROJECT (3GPP), MOBILE COMPETENCE CENTRE ; 650, ROUTE DES LUCIOLES , Bd. RAN WG1, Nr. Lisbon, Portugal; 20161010 - 20161014 1. Oktober 2016 (2016-10-01), XP051159423, Gefunden im Internet: URL:http://www.3gpp.org/ftp/tsg_ran/WG1_RL 1/TSGR1_86b/Docs/ [gefunden am 2016-10-01]**

## Beschreibung

Ausführungsbeispiele der vorliegenden Erfindung beziehen sich auf einen Endpunkt und eine Basisstation eines Kommunikationssystems, das in einem Frequenzband drahtlos kommuniziert, welches von einer Mehrzahl von Kommunikationssystemen zur Kommunikation genutzt wird. Weitere Ausführungsbeispiele beziehen sich auf Verfahren zum Betrieb eines Endpunkts und einer Basisstation eines solchen Kommunikationssystems. Manche Ausführungsbeispiele beziehen sich auf zirkulare Sprungmuster.

Aus [1] ist das Telegram-Splitting-Verfahren (Telegrammaufteilungs-Verfahren) bekannt, wonach ein Telegramm (oder Datenpaket) auf eine Mehrzahl von Sub-Datenpakete aufgeteilt wird, die unter Verwendung eines Sprungmusters in der Zeit und optional in der Frequenz verteilt übertragen werden.

In [3] wird eine verbesserte Reichweite für LPWAN Systeme (LPWAN = Low Power Wide Area Network, dt. Niedrigenergieweitverkehrnetzwerk), die das Telegram-Splitting-Verfahren verwenden, beschrieben.

In [4] wird eine verbesserte Übertragungssicherheit für LPWAN Systeme, die das Telegram-Splitting-Verfahren verwenden, beschrieben.

Bei LPWAN Systemen greifen in der Regel eine Vielzahl von Teilnehmern (z.B. Sensorknoten) gleichzeitig auf das zur Verfügung stehende Frequenzband zu. Der Basisstation eines LPWAN Systems, dessen Teilnehmer basierend auf dem Telegram-Splitting-Verfahren auf das Frequenzband zugreifen, ist jedoch für ein betrachtetes Zeitfenster nicht bekannt, ob, und wenn ja, wie viele Teilnehmer und mit welchen Sprungmustern die Teilnehmer auf das gemeinsame Frequenzband zugreifen.

Die Basisstation muss also die Sub-Datenpakete der Teilnehmer des LPWAN Systems, die entsprechend der jeweiligen Sprungmuster ausgesendet werden, detektieren, was bei sehr vielen unterschiedlichen Sprungmustern einen erheblichen Rechenaufwand darstellt und somit insbesondere bei batteriebetriebenen Basisstationen nachteilig ist.

Die US 2014/241313 A1 beschreibt ein Verfahren zum Übertragen von Konstellationssymbolen in einem Kommunikationssystem. Aus einem Zeit-Frequenz-Abbildungsmuster wird ein Satz orthogonaler Zeit-Frequenz-Abbildungsmuster erzeugt. Und ein Zeit-Frequenz-Abbildungsmuster aus dem Satz von orthogonalen Zeit-Frequenz-Abbildungsmustern wird zum Übertragen eines Blocks von Konstellationssymbolen ausgewählt

Die WO 2008/033117 A1 beschreibt ein Verfahren zum Erfassen eines Pilotmusters, das ein Pilotsignal umfasst, in einem empfangenen Signal, das in einem OFDM-System implementiert ist.

In [MEDIATEK INC: "Synchronization Signal Design in CP-OFDM Based on Time-Frequency Hopping Patterns", 3GPP DRAFT; R1-1609329_SYNCHRONIZATION SIGNAL DESIGN IN CP-OFDM BASED ON TIME-FREQUENCY HOPPING PATTERNS, 3RD GENERATION PARTNERSHIP PROJECT (3GPP), MOBILE COMPETENCE CENTRE ; 650, ROUTE DES LUCIOLES, Bd. RAN WG1, Nr. Lisbon, Portugal; 20161010 - 20161014 1. Oktober 2016 (2016-10-01 ), XP051159423] wird ein Design eines Synchronisationssignals für CP-OFDM basierte Zeitfrequenzsprungmuster beschrieben.

Die WO 2009/139724 A1 beschreibt ein Verfahren zum Übertragen von OFDM-Symbolen durch eine Vielzahl von Ad-hoc-Funkkommunikationsgeräten in einer Gruppe von Ad-hoc-Funkkommunikationsgeräten, wobei das Verfahren umfasst.

Die WO 2018/059782 A1 beschreibt eine Möglichkeit zur Ermittlung einer Distanzdifferenz zwischen einem Datensender und einem Datenempfänger in einem Telegram-Splitting basierten Kommunikationssystem.

Der vorliegenden Erfindung liegt somit die Aufgabe zugrunde, ein Konzept zu schaffen, welches es ermöglicht den erforderlichen Rechenaufwand der Basisstation zur Detektion einer Vielzahl von auf unterschiedlichen Sprungmustern basierenden Zugriffen auf das Frequenzband zu detektieren.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender eines Kommunikationssystems, wobei der Datensender ausgebildet ist, um ein Datensignal entsprechend eines Sprungmusters [z.B. innerhalb eines zulässigen Frequenz- und/oder Zeitbereichs bzw. zulässigen Ressourcenbereichs] [z.B. in einer durch das Sprungmuster angebenden Teilmenge der zur Übertragung des Datensignals verwendbaren Ressourcenelemente des Kommunikationssystems] zu senden, wobei das Datensignal eine Mehrzahl von Sub-Datenpaketen aufweist, die entsprechend einer durch das Sprungmuster angegebenen frequenz- und/oder zeitsprungbasierten Belegung [z.B. von Ressourcenelementen] [z.B. von verwendbaren Ressourcenelementen des Kommunikationssystems] des Frequenzbands verteilt übertragen werden, wobei der Datensender ausgebildet ist, um das Sprungmuster von einem Grundsprungmuster basierend auf einer [z.B. durch eine] Verschiebung des Grundsprungmusters in der Frequenz [z.B. in Frequenzrichtung] und/oder Zeit [z.B. in Zeitrichtung] abzuleiten, wobei der Datensender ausgebildet ist, um beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Frequenz [z.B. in Frequenzrichtung] außerhalb eines zulässigen Frequenzbereichs [z.B. zulässigen Ressourcenbereichs [= zur Übertragung der Mehrzahl von Sub-Datenpaketen verwendbare Ressourcenelemente des Kommunikationssystems]] liegt, den zumindest einen Sprung [z.B. ein [z.B. einzelnes] durch das Sprungmuster definiertes Ressourcenelement oder Sub-Datenpaket] basierend auf einer [z.B. durch eine] zyklischen Verschiebung in der Frequenz in den zulässigen Frequenzbereich zu verschieben und den zumindest einen Sprung zusätzlich basierend auf einer [z.B. durch eine] linearen Verschiebung [z.B. eine Verschiebung um ein Ressourcenelement; z.B. in den nachfolgenden oder vorausgegangenen Zeitschlitz oder Zeitschlitzindex] in der Zeit zu verschieben.

Bei Ausführungsbeispielen kommuniziert der Datensender bzw. das Kommunikationssystem in einem Frequenzband drahtlos, welches von einer Mehrzahl von Kommunikationssystemen zur Kommunikation genutzt wird.

Bei Ausführungsbeispielen ist der Datensender ausgebildet, um beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Zeit [z.B. in Zeitrichtung] außerhalb eines zulässigen Zeitbereichs [z.B. zulässigen Ressourcenbereichs [= zur Übertragung der Mehrzahl von Sub-Datenpaketen verwendbare Ressourcenelemente des Kommunikationssystems]] liegt, den zumindest einen Sprung durch eine zyklische Verschiebung in der Zeit in den zulässigen Zeitbereich zu verschieben.

Bei Ausführungsbeispielen wird bei der linearen Verschiebung der Sprung des Sprungmusters um genau plus einen Zeitwert [z.B. ein Ressourcenelement [z.B. einen Zeitschlitz oder Zeitschlitzindex]] verschoben.

Bei Ausführungsbeispielen werden bei der zyklischen Verschiebung der ausgehend von einer Grenze des zulässigen Frequenz- und/oder Zeitbereichs um einen Zeit- und/oder Frequenzwert [z.B. eine Anzahl von Ressourcenelementen [z.B. eine Anzahl an Frequenzkanälen und/oder Zeitschlitzen]] außerhalb des zulässigen Frequenz- und/oder Zeitbereichs liegende zumindest eine Sprung des Sprungmusters um den gleichen Zeit- und/oder Frequenzwert [z.B. die gleiche Anzahl an Ressourcenelementen [z.B. die gleiche Anzahl an Frequenzkanälen und/oder Zeitschlitzen]] ausgehend von einer gegenüberliegenden Grenze des Frequenz- und/oder Zeitbereichs in den zulässigen Frequenz- und/oder Zeitbereich verschoben.

Bei Ausführungsbeispielen erfolgt die zyklische Verschiebung des außerhalb des zulässigen Frequenz- und/oder Zeitbereichs liegenden zumindest einen Sprung des Sprungmusters in den zulässigen Frequenz- und/oder Zeitbereich basierend auf einer Modulo-Operation erfolgen.

Bei Ausführungsbeispielen liegt der zulässige Frequenzbereich innerhalb von Bandgrenzen des Frequenzbands [z.B. wobei der zulässige Frequenzbereich von Bandgrenzen des Frequenzbands begrenzt ist].

Bei Ausführungsbeispielen erfolgt ein Zugriff des Kommunikationssystems auf das Frequenzband basierend auf [z.B. periodisch] aufeinander folgenden Zeitabschnitten, wobei der zulässige Zeitbereich innerhalb eines der Zeitabschnitte liegt [z.B. wobei der zulässige Zeitbereich von dem Zeitabschnitt begrenzt wird, oder wobei der zulässige Zeitbereich ein Datenübertragungsabschnitt des Zeitabschnitts ist [z.B. der auf einen Signalisierungsabschnitt] folgt].

Bei Ausführungsbeispielen ist der zulässige Frequenzbereich [oder das Frequenzband] in Frequenzkanäle unterteilt, wobei der Frequenzwert [z.B. Frequenzindex oder Frequenzwertindex] eine Anzahl von Frequenzkanälen ist.

Bei Ausführungsbeispielen ist der zulässige Zeitbereich in Zeitschlitze unterteilt, wobei der Zeitwert [z.B. Zeitindex oder Zeitwertwertindex] eine Anzahl von Zeitschlitzen ist.

Bei Ausführungsbeispielen sind unmittelbar aufeinander folgende Sprünge des Grundsprungmusters um mindestens einen Frequenzkanal voneinander beabstandet.

Bei Ausführungsbeispielen ist der Datensender ausgebildet, um das Sprungmuster von dem Grundsprungmuster basierend auf einer zufälligen oder pseudozufälligen Verschiebung des Grundsprungmusters in der Frequenz und/oder Zeit abzuleiten.

Bei Ausführungsbeispielen liegt der pseudozufälligen Verschiebung des Grundsprungmusters ein immanenter Parameter des Datensenders, des Datenempfängers oder des Kommunikationssystems zugrunde.

Bei Ausführungsbeispielen liegt der pseudozufälligen Verschiebung des Grundsprungmusters eine CRC (=cyclic redundancy check, dt. zyklische Redundanzprüfung), einen CMAC (=cipher-based message authentication code, dt. chiffrenbasierter Nachrichtenauthentifizierungscode) oder eine ID (= Identifikation) des Datensenders zugrunde.

Bei Ausführungsbeispielen ist der Datensender ausgebildet, um zumindest zwei der Mehrzahl von Sub-Datenpaketen mit Pilotsequenzen zu versehen.

Bei Ausführungsbeispielen ist der Datensender ausgebildet, um ein Steuersignal [z.B. von einer Basisstation] des Kommunikationssystems zu empfangen, wobei das Steuersignal eine Information über das Grundsprungmuster aufweist.

Bei Ausführungsbeispielen ist der Datensender ausgebildet, um sich in der Zeit und/oder Frequenz auf das Steuersignal zu synchronisieren.

Bei Ausführungsbeispielen ist der Datensender ausgebildet, um ein Steuersignal [z.B. von einer Basisstation] des Kommunikationssystems zu empfangen, wobei das Steuersignal eine Information über einen zulässigen Frequenz- und/oder Zeitbereich zur Übertragung des Datensignals mit der Mehrzahl von Sub-Datenpaketen aufweist, wobei der Datensender ausgebildet ist, um das Datensignal mit der Mehrzahl von Sub-Datenpaketen innerhalb des zulässigen Frequenz- und/oder Zeitbereichs zu übertragen.

Bei Ausführungsbeispielen ist der Datensender ausgebildet, um ein Steuersignal [z.B. von einer Basisstation

des Kommunikationssystems] zu empfangen, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei der Datensender ausgebildet ist, um das Kanalzugriffsmuster basierend auf der Information über das Kanalzugriffsmuster zu ermitteln, wobei das Sprungmuster ein relatives Kanalzugriffsmuster ist, wobei das relative Kanalzugriffsmuster die zu verwendende Belegung der durch das Kanalzugriffsmuster angegebenen verwendbaren frequenz- und/oder zeitsprungbasierten Belegung angibt, wobei der Datensender ausgebildet ist, um mittels des Datensignals die Mehrzahl von Sub-Datenpaketen in zumindest einer durch das relative Kanalzugriffsmuster angegebenen Teilmenge der durch das Kanalzugriffsmuster angegebenen verwendbaren frequenz- und/oder zeitsprungbasierten Belegung des Frequenzbands zu senden.

Bei Ausführungsbeispielen ist der Datensender ein Endpunkt des Kommunikationssystems.

Bei Ausführungsbeispielen ist der Endpunkt batteriebetrieben.

Bei Ausführungsbeispielen ist das Grundsprungmuster ein erstes Grundsprungmuster, wobei der Datensender ausgebildet ist, um das Sprungmuster von dem ersten Grundsprungmuster oder einem zweiten Grundsprungmuster basierend auf einer [z.B. durch eine] Verschiebung des jeweiligen Grundsprungmusters in der Frequenz [z.B. in Frequenzrichtung] und/oder Zeit [z.B. in Zeitrichtung] abzuleiten, wobei das erste Grundsprungmuster und das zweite Grundsprungmuster unterschiedlich sind.

Bei Ausführungsbeispielen sind das erste Grundsprungmuster und das zweite Grundsprungmuster unterschiedliche Abstände in der Zeit und/oder Frequenz zwischen zumindest zwei aufeinander folgenden Sprüngen der jeweiligen Grundsprungmuster aufweisen.

Bei Ausführungsbeispielen ist der Datensender ausgebildet, um das Datensignal mit einem Frequenzoffset zu beaufschlagen, der von dem Sprungmuster abhängig ist [z.B. um einen Datenempfänger das verwendete Sprungmuster zu signalisieren].

Bei Ausführungsbeispielen ist der Frequenzoffset kleiner als ¼ einer Symbolrate.

Bei Ausführungsbeispielen ist der Datensender ausgebildet, um das Datensignal mit einem Zeitversatz zu beaufschlagen, der von dem Sprungmuster abhängig ist [z.B. um einen Datenempfänger das verwendete Sprungmuster zu signalisieren].

Bei Ausführungsbeispielen ist der Zeitversatz kleiner als ¼ einer Dauer eines Ressourcenelements,

Bei Ausführungsbeispielen ist der Zeitversatz kleiner als ¼ einer Symboldauer.

Bei Ausführungsbeispielen ist der Datensender ausgebildet, um zumindest zwei Sub-Datenpakete der Mehrzahl von Sub-Datenpaketen mit [z.B. verschiedenen] Pilotsequenzen [z.B. Präambeln] zu versehen, wobei die Pilotsequenzen von dem Sprungmuster abhängig sind [z.B. um einen Datenempfänger das verwendete Sprungmuster zu signalisieren].

Weitere Ausführungsbeispiele schaffen einen Datensender eines Kommunikationssystems, wobei der Datensender ausgebildet ist, um ein Datensignal entsprechend eines Sprungmusters [z.B. innerhalb eines zulässigen Frequenz- und/oder Zeitbereichs bzw. zulässigen Ressourcenbereichs] [z.B. in einer durch das Sprungmuster angebenden Teilmenge der zur Übertragung des Datensignals verwendbaren Ressourcenelemente des Kommunikationssystems] zu senden, wobei das Datensignal eine Mehrzahl von Sub-Datenpaketen aufweist, die entsprechend einer durch das Sprungmuster angegebenen frequenz- und/oder zeitsprungbasierten Belegung [z.B. von Ressourcenelementen] [z.B. von verwendbaren Ressourcenelementen des Kommunikationssystems] des Frequenzbands verteilt übertragen werden, wobei der Datensender ausgebildet ist, um das Sprungmuster von einem Grundsprungmuster abzuleiten, wobei die Ableitung des Sprungmusters von dem Grundsprungmuster einer Verschiebung des Grundsprungmusters in der Frequenz und/oder in der Zeit entspricht, wobei, sofern zumindest ein Sprung durch die Verschiebung des Grundsprungmusters in der Frequenz außerhalb eines zulässigen Frequenzbereichs [z.B. zulässigen Ressourcenbereichs [= zur Übertragung der Mehrzahl von Sub-Datenpaketen verwendbare Ressourcenelemente des Kommunikationssystems]] liegt, die Ableitung des Sprungmusters von dem Grundsprungmuster einer Verschiebung des Grundsprungmusters in der Frequenz und/oder in der Zeit entspricht, bei der der zumindest eine Sprung basierend auf einer [z.B. durch eine] zyklischen Verschiebung in der Frequenz in den zulässigen Frequenzbereich verschoben wird und bei der der zumindest einen Sprung zusätzlich basierend auf einer [z.B. durch eine] linearen Verschiebung [z.B. eine Verschiebung um ein Ressourcenelement; z.B. in den nachfolgenden Zeitschlitz] in der Zeit verschoben wird.

Bei Ausführungsbeispielen kommuniziert der Datensender bzw. das Kommunikationssystem in einem Frequenzband drahtlos, welches von einer Mehrzahl von Kommunikationssystemen zur Kommunikation genutzt wird.

Bei Ausführungsbeispielen entspricht, sofern zumindest ein Sprung durch die Verschiebung des Grundsprungmusters in der Zeit außerhalb eines zulässigen Zeitbereichs [z.B. zulässigen Ressourcenbereichs [= zur Übertragung der Mehrzahl von Sub-Datenpaketen verwendbare Ressourcenelemente des Kommunikationssystems]] liegt, die Ableitung des Sprungmusters von dem Grundsprungmuster einer Verschiebung des Grundsprungmusters in der Frequenz und/oder in der Zeit, bei der der zumindest Sprung basierend auf einer [z.B. durch eine] zyklischen Verschiebung in der Zeit in den zulässigen Frequenzbereich verschoben wird.

Weitere Ausführungsbeispiele schaffen einen Datenempfänger eines Kommunikationssystems, wobei der Datenempfänger ausgebildet ist, um ein Datensignal zu empfangen, wobei das Datensignal entsprechend eines Sprungmusters [z.B. innerhalb eines zulässigen Frequenz- und/oder Zeitbereichs bzw. zulässigen Ressourcenbereichs] [z.B. in einer durch das Sprungmuster angebenden Teilmenge der zur Übertragung des Datensignals verwendbaren Ressourcenelemente des Kommunikationssystems] übertragen wird, wobei das Datensignal eine Mehrzahl von Sub-Datenpaketen aufweist, die entsprechend einer durch das Sprungmuster angegebenen frequenz- und/oder zeitsprungbasierten Belegung [z.B. von Ressourcenelementen] [z.B. von verwendbaren Ressourcenelementen des Kommunikationssystems] des Frequenzbands verteilt übertragen werden, wobei zumindest zwei der Mehrzahl von Sub-Datenpaketen eine Pilotsequenz aufweisen, wobei das Sprungmuster von einem Grundsprungmuster basierend auf einer [z.B. durch eine] Verschiebung des Grundsprungmusters in der Frequenz [z.B. in Frequenzrichtung] und/oder Zeit [z.B. in Zeitrichtung] abgeleitet ist, wobei beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Frequenz [z.B. in Frequenzrichtung] außerhalb eines zulässigen Frequenzbereichs [z.B. zulässigen Ressourcenbereichs [= zur Übertragung der Mehrzahl von Sub-Datenpaketen verwendbare Ressourcenelemente des Kommunikationssystems]] liegt, der zumindest einen Sprung basierend auf einer [z.B. durch eine] zyklischen Verschiebung in der Frequenz in den zulässigen Frequenzbereich verschoben wird und der zumindest einen Sprung zusätzlich basierend auf einer [z.B. durch eine] linearen Verschiebung [z.B. eine Verschiebung um ein Ressourcenelement; z.B. in den nachfolgenden Zeitschlitz] in der Zeit verschoben wird, wobei der Datenempfänger ausgebildet ist, um die [z.B. alle] von dem Kommunikationssystem zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente [z.B. definiert durch Zeitschlitze und Frequenzkanäle des Frequenzbands] des Kommunikationssystems jeweils mit einer Referenzsequenz [z.B. die der Pilotsequenz entspricht] zu korrelieren, um für die verwendbaren Ressourcenelemente Korrelationsergebnisse zu erhalten, und um die Korrelationsergebnisse [z.B. entsprechend der Lage der verwendbaren Ressourcenelemente in der Zeit und Frequenz [z.B. nicht verwendete Frequenzkanäle und/oder Zeitschlitze werden "ausgeblendet"]] in ein zumindest ein-dimensionales Array von Korrelationsergebnissen zu überführen, wobei der Datenempfänger ausgebildet ist, um eine Korrelation des zumindest ein-dimensionalen Arrays von Korrelationsergebnissen mit einem zumindest ein-dimensionalen Array von Referenzwerten durchzuführen, wobei das zumindest ein-dimensionale Array von Referenzwerten von dem Grundsprungmuster abgeleitet ist.

Bei Ausführungsbeispielen kommuniziert der Datenempfänger bzw. das Kommunikationssystem in einem Frequenzband drahtlos, welches von einer Mehrzahl von Kommunikationssystemen zur Kommunikation genutzt wird.

Bei Ausführungsbeispielen ist der Datenempfänger ausgebildet, um die Mehrzahl von Sub-Datenpaketen basierend auf der Korrelation des zumindest ein-dimensionalen Arrays von Korrelationsergebnissen mit dem zumindest ein-dimensionalen Array von Referenzwerten zu detektieren.

Bei Ausführungsbeispielen ist das zumindest ein-dimensionale Array von Korrelationsergebnissen ein zwei-dimensionales Array von Korrelationsergebnissen, wobei das zumindest ein-dimensionale Array von Referenzwerten ein zwei-dimensionales Array von Referenzwerten ist.

Bei Ausführungsbeispielen ist der Datenempfänger ausgebildet, um eine zwei-dimensionale Korrelation des zwei-dimensionales Arrays von Korrelationsergebnissen mit dem zwei-dimensionales Array von Referenzwerten durchzuführen.

Bei Ausführungsbeispielen ist die zwei-dimensionale Korrelation eine zwei-dimensionale Kreuzkorrelation im Zeitbereich.

Bei Ausführungsbeispielen ist der Datenempfänger ausgebildet, um die zwei-dimensionale Korrelation im Frequenzbereich durchzuführen.

Bei Ausführungsbeispielen ist der Datenempfänger ausgebildet, um das zwei-dimensionale Array von Korrelationsergebnissen in den Frequenzbereich zu transformieren [z.B. mittels DFT oder FFT], um eine transformierte Version des zwei-dimensionalen Arrays von Korrelationsergebnissen zu erhalten, wobei der Datenempfänger ausgebildet sein kann, um das zwei-dimensionale Array von Referenzwerten in den Frequenzbereich zu transformieren [z.B. mittels DFT oder FFT], um eine transformierte Version des zwei-dimensionalen Arrays von Referenzwerten zu erhalten, wobei der Datenempfänger ausgebildet sein kann, um entweder das zwei-dimensionale Array von Korrelationsergebnissen oder das zwei-dimensionale Array von Referenzwerten vor der Transformation in den Frequenzbereich zu spiegeln, wobei der Datenempfänger ausgebildet sein kann, um die transformierte Version des zwei-dimensionale Arrays von Korrelationsergebnissen und die transformierte Version des zwei-dimensionalen Arrays von Referenzwerten elementweise zu multiplizieren, um ein zwei-dimensionales Multiplikationsergebnis zu erhalten, wobei der Datenempfänger ausgebildet sein kann, um das Multiplikationsergebnis in den Zeitbereich zu transformieren, um ein Gesamtkorrelationsergebnis zu erhalten.

Bei Ausführungsbeispielen ist der Datenempfänger ausgebildet, um das zwei-dimensionale Array von Korrelationsergebnissen in eine virtuelle eindimensionale Ebene von Korrelationsergebnissen zu transformieren, wobei der Datenempfänger ausgebildet sein kann, um das zwei-dimensionale Array von Referenzwerten in eine virtuelle eindimensionale Ebene von Referenzwerten zu transformieren, wobei der Datenempfänger ausgebildet sein kann, um die virtuelle eindimensionale Ebene von Korrelationsergebnissen in den Frequenzbereich zu transformieren [z.B. mittels DFT oder FFT], um eine transformierte Version der virtuellen eindimensionalen Ebene von Korrelationsergebnissen zu erhalten, wobei der Datenempfänger ausgebildet sein kann, um die virtuelle eindimensionale Ebene von Referenzwerten in den Frequenzbereich zu transformieren [z.B. mittels DFT oder FFT], um eine transformierte Version der virtuellen eindimensionalen Ebene von Referenzwerten zu erhalten, wobei der Datenempfänger ausgebildet sein kann, um entweder die virtuelle eindimensionale Ebene von Korrelationsergebnissen oder die virtuelle eindimensionale Ebene von Referenzwerten vor der Transformation in den Frequenzbereich zu spiegeln, wobei der Datenempfänger ausgebildet sein kann, um die transformierte Version der virtuellen eindimensionalen Ebene von Korrelationsergebnissen oder die transformierte Version der virtuellen eindimensionale Ebene von Referenzwerten elementarweise zu multiplizieren, um ein Multiplikationsergebnis zu erhalten, wobei der Datenempfänger ausgebildet sein kann, um das Multiplikationsergebnis in den Zeitbereich zu transformieren, um ein Gesamtkorrelationsergebnis zu erhalten.

Bei Ausführungsbeispielen weisen das zwei-dimensionale Array von Korrelationsergebnissen und das zwei-dimensionale Array von Referenzwerten die gleiche Arraygröße auf.

Bei Ausführungsbeispielen sind die verwendbaren Ressourcenelemente des Kommunikationssystems entsprechend der Lage der verwendbaren Ressourcenelemente in der Zeit und Frequenz Elementen des zwei-dimensionalen Arrays von Korrelationsergebnissen zugeordnet.

Bei Ausführungsbeispielen entspricht das zumindest ein-dimensionale Array von Referenzwerten dem Grundsprungmuster.

Bei Ausführungsbeispielen weisen die Elemente des zwei-dimensionalen Arrays von Referenzwerten, die Ressourcenelementen zugeordnet sind, die entsprechend des Grundsprungmusters ein Sub-Datenpaket aufweisen, einen [z.B. normierten] Referenzwert auf, der die Korrelationslänge der Korrelation der Pilotsequenz mit der Referenzsequenz widerspiegelt.

Bei Ausführungsbeispielen weisen die übrigen Elemente des zwei-dimensionalen Arrays von Referenzwerten Null als Referenzwert auf.

Bei Ausführungsbeispielen sind die verwendbaren Ressourcenelemente des Kommunikationssystems durch Frequenzkanäle [z.B. des Frequenzbands] und Zeitschlitze definiert.

Bei Ausführungsbeispielen ist der Datenempfänger ausgebildet, um ein Steuersignal zu senden basierend auf dem sich ein Datensender des Kommunikationssystems synchronisieren kann.

Bei Ausführungsbeispielen ist der Datenempfänger ausgebildet, um ein Steuersignal zu senden, wobei das Steuersignal eine Information über einen von dem Datensender des Kommunikationssystems zu verwendenden Frequenz- und/oder Zeitbereich aufweist.

Bei Ausführungsbeispielen ist der Datenempfänger ausgebildet, um ein Steuersignal zu senden, wobei das Steuersignal eine Information über die von dem Kommunikationssystem zur Übertragung der Mehrzahl von Sub-Datenpaketen verwendbaren Ressourcenelemente aufweist.

Bei Ausführungsbeispielen ist der Datenempfänger ausgebildet, um ein Steuersignal zu senden, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcenelementen des Frequenzbands angibt, wobei das Kanalzugriffsmuster die von dem Kommunikationssystem zur Übertragung der Mehrzahl von Sub-Datenpaketen verwendbaren Ressourcenelemente angibt, wobei das Sprungmuster ein relatives Kanalzugriffsmuster ist, wobei das relative Kanalzugriffsmuster die zu verwendende Belegung der durch das Kanalzugriffsmuster angegebenen verwendbaren frequenz- und/oder zeitsprungbasierten Belegung angibt.

Bei Ausführungsbeispielen ist der Datenempfänger eine Basisstation.

Bei Ausführungsbeispielen ist die Basistation batteriebetrieben.

Bei Ausführungsbeispielen ist das Grundsprungmuster ein erstes Grundsprungmuster, wobei das Sprungmuster von dem ersten Grundsprungmuster oder einem zweiten Grundsprungmuster basierend auf einer [z.B. durch eine] Verschiebung des jeweiligen Grundsprungmusters in der Frequenz [z.B. in Frequenzrichtung] und/oder Zeit [z.B. in Zeitrichtung] abgeleitet ist, wobei das erste Grundsprungmuster und das zweite Grundsprungmuster unterschiedlich sind.

Bei Ausführungsbeispielen weisen das erste Grundsprungmuster und das zweite Grundsprungmuster unterschiedliche Abstände in der Zeit und/oder Frequenz zwischen zumindest zwei aufeinander folgenden Sprüngen der jeweiligen Grundsprungmuster auf, wobei der Datenempfänger ausgebildet ist, um das jeweilige Grundsprungmuster basierend auf den Abständen in der Zeit und/oder Frequenz zwischen zumindest zwei aufeinander folgenden Sprüngen des Sprungmusters zu ermitteln.

Bei Ausführungsbeispielen ist das Datensignal mit einem Frequenzoffset beaufschlagt, der von dem Sprungmuster abhängig ist, wobei der Datenempfänger ausgebildet ist, um den Frequenzoffset zu ermitteln und um basierend auf dem ermittelten Frequenzoffset das Sprungmuster zu ermitteln.

Bei Ausführungsbeispielen ist das Datensignal mit einem Zeitversatz beaufschlagt, der von dem Sprungmuster abhängig ist, wobei der Datenempfänger ausgebildet ist, um den Zeitversatz zu ermitteln und um basierend auf dem ermittelten Zeitversatz das Sprungmuster zu ermitteln.

Bei Ausführungsbeispielen sind zumindest zwei Sub-Datenpakete der Mehrzahl von Sub-Datenpaketen mit Pilotsequenzen [z.B. Präambeln] versehen, wobei die Pilotsequenzen von dem Sprungmuster abhängig sind, wobei der Datenempfänger ausgebildet ist, um die Pilotsequenzen zu ermitteln und um basierend auf dem ermittelten Pilotsequenzen das Sprungmuster zu ermitteln.

Weitere Ausführungsbeispiele schaffen ein System mit einem Datensender gemäß einem der hierin beschriebenen Ausführungsbeispiele und einem Datenempfänger mit einem der hierin beschriebenen Ausführungsbeispiele.

Weitere Ausführungsbeispiele schaffen ein Verfahren zum Senden eines Datenpakets in einem Kommunikationssystem, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Ableitens eines Sprungmusters von einem Grundsprungmuster basierend auf einer Verschiebung des Grundsprungmusters in der Frequenz und/oder Zeit, wobei beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Frequenz [z.B. in Frequenzrichtung] außerhalb eines zulässigen Frequenzbereichs [z.B. zulässigen Ressourcenbereichs [= zur Übertragung der Mehrzahl von Sub-Datenpaketen verwendbare Ressourcenelemente des Kommunikationssystems]] liegt, der zumindest eine Sprung basierend auf einer [z.B. durch eine] zyklischen Verschiebung in der Frequenz in den zulässigen Frequenzbereich verschoben wird und der zumindest eine Sprung zusätzlich basierend auf einer [z.B. durch eine] linearen Verschiebung [z.B. eine Verschiebung um ein Ressourcenelement; z.B. in den nachfolgenden Zeitschlitz] in der Zeit verschoben wird. Ferner umfasst das Verfahren einen Schritt des Sendens des Datenpakets aufgeteilt auf eine Mehrzahl von Sub-Datenpaketen entsprechend des Sprungmusters, so dass die Mehrzahl von Sub-Datenpaketen entsprechend einer durch das Sprungmuster angegebenen frequenz- und/oder zeitsprungbasierten Belegung des Frequenzbands verteilt übertragen werden.

Weitere Ausführungsbeispiele schaffen ein Verfahren zum Empfangen von Daten in einem Kommunikationssystem, wobei das Kommunikationssystem in einem Frequenzband drahtlos kommuniziert, welches von einer Mehrzahl von Kommunikationssystemen zur Kommunikation genutzt wird, wobei zur Übertragung eines Datenpakets innerhalb des Kommunikationssystems das Datenpaket in eine Mehrzahl von Sub-Datenpaketen aufgeteilt wird, die jeweils kürzer sind als das Datenpaket, und wobei die Mehrzahl von Sub-Datenpaketen mittels eines Datensignals entsprechend eines Sprungmusters in einer Teilmenge von verwendbaren Ressourcenelemente des Kommunikationssystems übertragen werden, wobei zumindest zwei der Mehrzahl von Sub-Datenpaketen eine Pilotsequenz aufweisen, wobei das Sprungmuster von einem Grundsprungmuster basierend auf einer Verschiebung des Grundsprungmusters in der Frequenz und/oder Zeit abgeleitet ist, wobei beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Frequenz [z.B. in Frequenzrichtung] außerhalb eines zulässigen Frequenzbereichs [z.B. zulässigen Ressourcenbereichs [= zur Übertragung der Mehrzahl von Sub-Datenpaketen verwendbare Ressourcenelemente des Kommunikationssystems]] liegt, der zumindest eine Sprung basierend auf einer [z.B. durch eine] zyklischen Verschiebung in der Frequenz in den zulässigen Frequenzbereich verschoben wird und der zumindest eine Sprung zusätzlich basierend auf einer [z.B. durch eine] linearen Verschiebung [z.B. eine Verschiebung um ein Ressourcenelement; z.B. in den nachfolgenden Zeitschlitz] in der Zeit verschoben wird. Das Verfahren umfasst einen Schritt des Korrelierens der von dem Kommunikationssystem zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente des Kommunikationssystems jeweils mit einer Referenzsequenz, um für die verwendbaren Ressourcenelemente Korrelationsergebnisse zu erhalten. Ferner umfasst das Verfahren einen Schritt des Überführens der Korrelationsergebnisse in ein zumindest ein-dimensionales Array von Korrelationsergebnissen. Ferner umfasst das Verfahren einen Schritt des Durchführens einer Korrelation zwischen dem zumindest ein-dimensionalen Array von Korrelationsergebnissen und dem zumindest ein-dimensionalen Array von Referenzwerten, wobei das zumindest ein-dimensionale Array von Referenzwerten von dem Grundsprungmuster abgeleitet ist.

Weitere Ausführungsbeispiele schaffen einen Endpunkt eines Kommunikationssystems, wobei der Endpunkt ausgebildet ist, um ein Signal zu empfangen, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte [z.B. Frames oder Ressource-Frames] unterteilt ist [z.B. so dass die für die Kommunikation des Kommunikationssystems verwendbare frequenz- und/oder zeitsprungbasierte Belegung von Ressourcen des Frequenzbands in die zumindest zwei Abschnitte unterteilt ist], wobei der Endpunkt ausgebildet ist, um Daten unter Verwendung von einem relativen Kanalzugriffsmuster zu übertragen, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt.

Bei Ausführungsbeispielen kommuniziert der Endpunkt bzw. das Kommunikationssystem in einem Frequenzband drahtlos, welches von einer Mehrzahl von Kommunikationssystemen zur Kommunikation genutzt wird.

Bei Ausführungsbeispielen ist der Endpunkt ausgebildet, um den Abschnitt der zumindest zwei Abschnitte des netzwerkspezifischen Kanalzugriffsmusters zufällig auszuwählen.

Bei Ausführungsbeispielen ist der Endpunkt ausgebildet, um den Abschnitt der zumindest zwei Abschnitte des netzwerkspezifischen Kanalzugriffsmusters in Abhängigkeit von einem immanenten Parameter des Endpunkts auszuwählen.

Bei Ausführungsbeispielen ist der immanente Parameter des Endpunkts eine CRC (=cyclic redundancy check, dt. zyklische Redundanzprüfung), eine CMAC (=cipher-based message authentication code, dt. chiffrenbasierter Nachrichtenauthentifizierungscode) oder eine ID (= Identifikation) des Endpunkts.

Bei Ausführungsbeispielen ist dem Endpunkt der Abschnitt der zumindest zwei Abschnitte des netzwerkspezifischen Kanalzugriffsmusters durch eine Basisstation oder eine andere koordinierende Instanz des Kommunikationssystems zugewiesen.

Bei Ausführungsbeispielen ist dem Endpunkt das relative Kanalzugriffsmuster durch eine Basisstation oder eine andere koordinierende Instanz des Kommunikationssystems zugewiesen.

Bei Ausführungsbeispielen sind die zumindest zwei Abschnitte [z.B. Frames] [z.B. [z.B. unmittelbar] aufeinander folgende] zeitliche Abschnitte.

Bei Ausführungsbeispielen sind die zumindest zwei Abschnitte [z.B. Frames] [z.B. [z.B. unmittelbar] aufeinander folgende] frequenzbereichsweise Abschnitte.

Weitere Ausführungsbeispiele schaffen eine Basisstation eines Kommunikationssystems, wobei die Basisstation ausgebildet ist, um ein Signal zu senden, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte [z.B. Frames] unterteilt ist [z.B. so dass die für die Kommunikation des Kommunikationssystems verwendbare frequenz- und/oder zeitsprungbasierte Belegung von Ressourcen des Frequenzbands in die zumindest zwei Abschnitte unterteilt ist], wobei die Basisstation ausgebildet ist, um Daten von einem Endpunkt des Kommunikationssystems zu empfangen, wobei die Daten unter Verwendung von einem relativen Kanalzugriffsmuster übertragen werden, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt.

Bei Ausführungsbeispielen kommuniziert die Basisstation bzw. das Kommunikationssystem in einem Frequenzband drahtlos, welches von einer Mehrzahl von Kommunikationssystemen zur Kommunikation genutzt wird,

Bei Ausführungsbeispielen ist der Abschnitt der zumindest zwei Abschnitte des netzwerkspezifischen Kanalzugriffsmusters durch den Endpunkt zufällig ausgewählt.

Bei Ausführungsbeispielen ist der Abschnitt der zumindest zwei Abschnitte des netzwerkspezifischen Kanalzugriffsmusters durch den Endpunkt in Abhängigkeit von einem immanenten Parameter [des Endpunkts] ausgewählt.

Bei Ausführungsbeispielen ist der immanente Parameter des Endpunkts eine CRC (=cyclic redundancy check, dt. zyklische Redundanzprüfung), eine CMAC (=cipher-based message authentication code, dt. chiffrenbasierter Nachrichtenauthentifizierungscode) oder eine ID (= Identifikation) des Endpunkts ist.

Bei Ausführungsbeispielen ist die Basisstation ausgebildet, um dem Endpunkt den zu verwendenden Abschnitt der zumindest zwei Abschnitte des netzwerkspezifischen Kanalzugriffsmusters zuzuweisen.

Bei Ausführungsbeispielen ist die Basisstation ausgebildet ist, um dem Endpunkt das relative Kanalzugriffsmuster zuzuweisen.

Bei Ausführungsbeispielen sind die zumindest zwei Abschnitte [z.B. Frames] [z.B. [z.B. unmittelbar] aufeinander folgende] zeitliche Abschnitte.

Bei Ausführungsbeispielen sind die zumindest zwei Abschnitte [z.B. Frames] [z.B. [z.B. unmittelbar] aufeinander folgende] frequenzbereichsweise Abschnitte.

Weitere Ausführungsbeispiele schaffen ein Kommunikationssystem mit zumindest einem Endpunkt gemäß einem der hierin beschriebenen Ausführungsbeispiele und eine Basistation gemäß einem der hierin beschriebenen Ausführungsbeispiele.

Weitere Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Empfangens eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte [z.B. Frames] unterteilt ist [z.B. so dass die für die Kommunikation des Kommunikationssystems verwendbare frequenz- und/oder zeitsprungbasierte Belegung von Ressourcen des Frequenzbands in die zumindest zwei Abschnitte unterteilt ist]. Ferner umfasst das Verfahren einen Schritt des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt.

Weitere Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Sendens eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte [z.B. Frames] unterteilt ist [z.B. so dass die für die Kommunikation des Kommunikationssystems verwendbare frequenz- und/oder zeitsprungbasierte Belegung von Ressourcen des Frequenzbands in die zumindest zwei Abschnitte unterteilt ist]. Ferner umfasst das Verfahren einen Schritt des Empfangens von Daten von einem Endpunkt des Kommunikationssystems, wobei die Daten unter Verwendung eines relativen Kanalzugriffsmusters übertragen werden, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt.

Ausführungsbeispiele der vorliegenden Erfindung werden bezugnehmend auf die beiliegenden Figuren näher beschrieben. Es zeigen:

Fig. 1 ein schematisches Blockschaltbild einer Kommunikationsanordnung mit einem ersten Kommunikationssystem, gemäß einem Ausführungsbeispiel der vorliegenden Erfindung,

Fig. 2 ein schematisches Blockschaltbild einer Kommunikationsanordnung von zwei untereinander unkoordinierten Netzwerken mit je einer Basisstation und jeweils vier zugehörigen Endgeräten, gemäß einem Ausführungsbeispiel der vorliegenden Erfindung,

Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands, gemäß einem Ausführungsbeispiel der vorliegenden Erfindung,

Fig. 4 ein schematisches Blockschaltbild eines Kommunikationssystems mit einer Basisstation und einer Mehrzahl von Endpunkten, gemäß einem Ausführungsbeispiel der vorliegenden Erfindung,

Fig. 5 ein schematisches Blockschaltbild eines Controllers zur Erzeugung eines Kanalzugriffsmusters, gemäß einem Ausführungsbeispiel der vorliegenden Erfindung,

Fig. 6 ein schematisches Blockschaltbild eines Controllers zur Erzeugung eines Kanalzugriffsmusters, gemäß einem weiteren Ausführungsbeispiel der vorliegenden Erfindung,

Fig. 7 ein schematisches Blockschaltbild eines Ausschnitts des Controllers, gemäß einem Ausführungsbeispiel der vorliegenden Erfindung,

Fig. 8 in einem Diagramm ein auf einer Monte-Carlo-Simulation beruhendes Histogramm über die Variable $\Delta f_i$,

Fig. 9 in einem Diagramm eine durch ein Kanalzugriffsmuster definierte frequenz- und zeitsprungbasierte Belegung der Ressourcen des Frequenzbands sowie eine Projektion des Kanalzugriffsmusters auf eine Zeitachse, gemäß einem Ausführungsbeispiel der vorliegenden Erfindung,

Fig. 10 in einem Diagramm auf eine Zeitachse projizierte Ressourcenelemente eines Kanalzugriffsmusters, die in ungenutzten Zeitschlitzen resultiert, gemäß einem Ausführungsbeispiel der vorliegenden Erfindung,

Fig. 11 in einem Diagramm auf eine Zeitachse projizierte Ressourcenelemente eines Kanalzugriffsmusters mit einer Aktivitätsrate A=1/4, gemäß einem Ausführungsbeispiel der vorliegenden Erfindung,

Fig. 12 in einem Diagramm auf eine Zeitachse projizierte Ressourcenelemente eines Kanalzugriffsmusters mit einer Aktivitätsrate A=1/4 und einem vorgegebenen Mindestabstand zwischen aufeinander folgenden Zeitschlitzen des Kanalzugriffsmusters, gemäß einem Ausführungsbeispiel der vorliegenden Erfindung,

Fig. 13    eine zeitliche Aufteilung eines Kanalzugriffsmusters in Bereiche unterschiedlicher Aktivitätsrate A1, A2 und A3, gemäß einem Ausführungsbeispiel der vorliegenden Erfindung,

Fig. 14    in einem Diagramm eine durch ein Kanalzugriffsmuster definierte frequenz- und zeitsprungbasierte Belegung der Ressourcen des Frequenzbands, wobei das Kanalzugriffsmuster zusätzlich bei Bedarf aktivierbare Ressourcen aufweist, gemäß einem Ausführungsbeispiel der vorliegenden Erfindung,

Fig. 15    in einem Diagramm eine durch ein Kanalzugriffsmuster definierte frequenz- und zeitsprungbasierte Belegung der Ressourcen des Frequenzbands, wobei ein regelmäßig stärker gestörter Frequenzbereich des Frequenzbands nicht durch das Kanalzugriffsmuster belegt wird, gemäß einem Ausführungsbeispiel der vorliegenden Erfindung,

Fig. 16    in einem Diagramm eine durch ein Kanalzugriffsmuster definierte frequenz- und zeitsprungbasierte Belegung der Ressourcen des Frequenzbands, wobei Ressourcen im Frequenzbereich gebündelt werden, gemäß einem Ausführungsbeispiel der vorliegenden Erfindung,

Fig. 17    ein schematisches Blockschaltbild eines Kommunikationssystems mit einer Basisstation und zwei Endpunkten, gemäß einem Ausführungsbeispiel der vorliegenden Erfindung,

Fig. 18    in einem Diagramm eine durch ein netzwerkspezifisches Kanalzugriffsmuster angegebene frequenz- und zeitsprungbasierte verwendbare Belegung von Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach der Entfernung ungenutzter Ressourcen (z.B. Zeitschlitze), gemäß einem Ausführungsbeispiel,

Fig. 19    in einem Diagramm eine durch ein netzwerkspezifisches Kanalzugriffsmuster angegebene frequenz- und zeitsprungbasierte verwendbare Belegung von im Frequenzbereich gebündelten Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach Entfernung ungenutzter Ressourcen (z.B. Zeitschlitze), gemäß einem Ausführungsbeispiel,

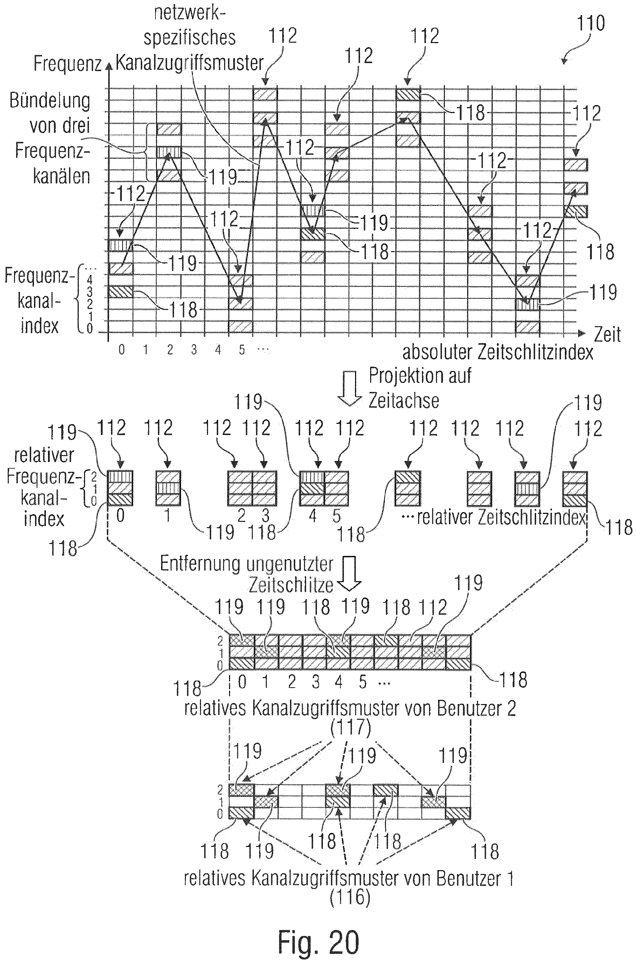

Fig. 20    in einem Diagramm eine durch ein netzwerkspezifisches Kanalzugriffsmuster angegebene frequenz- und zeitsprungbasierte verwendbare Belegung von im Frequenzbereich gebündelten Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, eine durch ein anderes relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach Entfernung ungenutzter Ressourcen (z.B. Zeitschlitze), gemäß einem Ausführungsbeispiel,

Fig. 21    in einem Diagramm eine Projektion eines netzwerkspezifischen Kanalzugriffsmusters und eines relativen Kanalzugriffsmusters auf die Zeitachse nach dem Entfernen ungenutzter Ressourcen (z.B. Frequenzkanäle und Zeitschlitze), wobei das relative Kanalzugriffsmuster in Frequenzrichtung für zumindest einen Teil der Zeitsprünge mehrere der in Frequenzrichtung verfügbare Ressourcen belegt, gemäß einem Ausführungsbeispiel,

Fig. 22    in einem Diagramm eine durch ein netzwerkspezifisches Kanalzugriffsmuster angegebene frequenz- und zeitsprungbasierte verwendbare Belegung von im Frequenzbereich zu Blöcken (oder Clustern) gebündelten Ressourcen des Frequenzbands, wobei unterschiedlichen Teilen des Blocks von zusammenhängenden Ressourcen unterschiedliche Symbolraten und/oder unterschiedliche Anzahlen von Symbolen zugeordnet sind, gemäß einem Ausführungsbeispiel,

Fig. 23    in einem Diagramm eine Projektion eines netzwerkspezifischen Kanalzugriffsmusters und eines relativen Kanalzugriffsmusters mit D Ressourcen auf die Zeitachse nach dem Entfernen ungenutzter Ressourcen (Frequenzkanäle und Zeitschlitze), gemäß einem Ausführungsbeispiel,

Fig. 24      in einer Tabelle eine Ressourcenberechnung für verschiedene exemplarische Anwendungsfälle,

Fig. 25      in einem Diagramm Simulationsergebnisse der Paketfehlerrate für verschiedene Kanalzugriffmusterlängen M in Abhängigkeit von der Anzahl gleichzeitig aktiver Endgeräte bei 360 zur Verfügung stehenden Ressourcenelementen,

Fig. 26      in einem Diagramm Simulationsergebnisse der Paketfehlerrate für verschiedene Kanalzugriffmusterlängen M in Abhängigkeit von der Anzahl gleichzeitig aktiver Endgeräte bei 60 zur Verfügung stehenden Ressourcenelementen,

Fig. 27      in einem Diagramm auf eine Zeitachse projizierte Ressourcen eines Kanalzugriffsmusters, wobei Ressourcen des Kanalzugriffsmusters zu Clustern gleicher Länge L (z.B. L=4) gruppiert werden, wobei das relative Kanalzugriffsmuster eine Belegung von einer Ressource pro Cluster angibt, gemäß einem Ausführungsbeispiel,

Fig. 28      ein schematisches Blockschaltbild eines Systems mit einem Datensender und einem Datenempfänger, gemäß einem Ausführungsbeispiel der vorliegenden Erfindung,

Fig. 29      in einem Diagramm eine durch ein Sprungmuster eines Teilnehmers angegebene Belegung von Ressourcenelementen der von dem Kommunikationssystem verwendbaren Ressourcenelemente, gemäß einem Ausführungsbeispiel der vorliegenden Erfindung,

Fig. 30      in einem Diagramm eine durch ein Sprungmuster eines Teilnehmers angegebene Belegung von Ressourcenelementen und eine durch ein anderes Sprungmuster eines anderen Teilnehmers angegebene Belegung von Ressourcenelementen der von dem Kommunikationssystem verwendbaren Ressourcenelemente, gemäß einem Ausführungsbeispiel der vorliegenden Erfindung,

Fig. 31      in einem Diagramm eine durch ein Sprungmuster angegebene Belegung von Ressourcenelementen und durch zwei andere Sprungmuster zweier anderer Teilnehmer angegebene Belegungen von Ressourcenelementen der von dem Kommunikationssystem verwendbaren Ressourcenelemente, wobei das Sprungmuster und die zwei anderen Sprungmuster von dem gleichen Grundsprungmuster abgeleitet sind, gemäß einem Ausführungsbeispiel der vorliegenden Erfindung,

Fig. 32      in einem Diagramm eine durch ein Sprungmuster angegebene Belegung von Ressourcenelementen und durch zwei andere Sprungmuster zweier anderer Teilnehmer angegebene Belegungen von Ressourcenelementen der von dem Kommunikationssystem verwendbaren Ressourcenelemente, wobei das Sprungmuster und die zwei anderen Sprungmuster von dem gleichen Grundsprungmuster abgeleitet sind, wobei ein Sprung des anderen Sprungmusters außerhalb eines zulässigen Bereichs der verwendbaren Ressourcenelemente des Kommunikationssystems liegt,

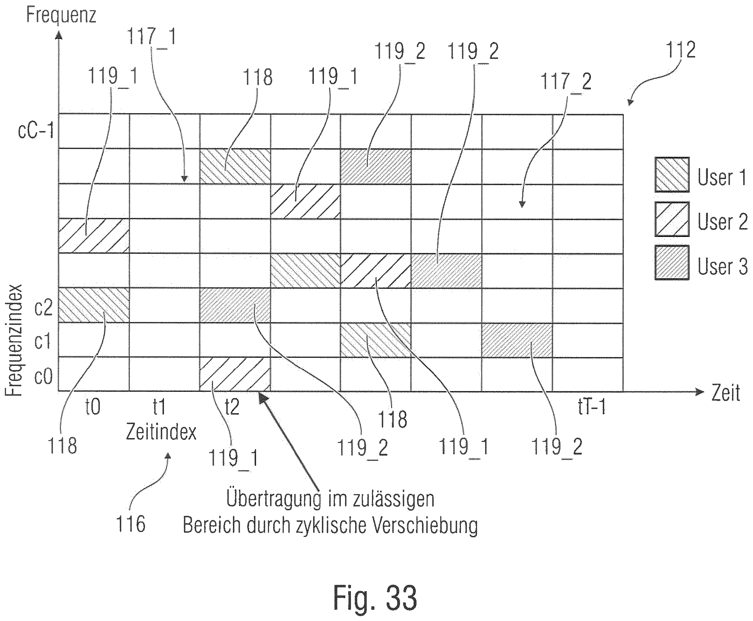

Fig. 33      in einem Diagramm eine durch ein Sprungmuster angegebene Belegung von Ressourcenelementen und durch zwei andere Sprungmuster zweier anderer Teilnehmer angegebene Belegungen von Ressourcenelementen der von dem Kommunikationssystem verwendbaren Ressourcenelemente, wobei das Sprungmuster und die zwei anderen Sprungmuster von dem gleichen Grundsprungmuster abgeleitet sind, wobei ein Sprung des anderen Sprungmusters, der durch die Verschiebung außerhalb des zulässigen Bereichs der verwendbaren Ressourcenelemente des Kommunikationssystems liegen würde, wieder in den zulässigen Bereich der verwendbaren Ressourcenelemente zyklisch verschoben ist,

Fig. 34      in einem Diagramm ein zwei-dimensionales (2D) Array von Korrelationsergebnissen, gemäß einem Ausführungsbeispiel der vorliegenden Erfindung,

Fig. 35      in einem Diagramm ein zwei-dimensionales (2D) Array von Referenzwerten, gemäß einem Ausführungsbeispiel der vorliegenden Erfindung,

Fig. 36      in einem Diagramm das Ergebnis (Amplitude) einer zwei-dimensionalen Korrelation des zwei-dimensionalen Arrays von Korrelationsergebnissen mit dem zwei-dimensionalen Array von Referenzwerten aufgetragen über die Zeit, für den Fall, dass das Sprungmuster dem Grundsprungmuster entspricht,

Fig. 37 in einem Diagramm das Ergebnis (Amplitude) einer zwei-dimensionalen Korrelation des zwei-dimensionalen Arrays von Korrelationsergebnissen mit dem zwei-dimensionalen Array von Referenzwerten aufgetragen über die Frequenz, für den Fall, dass das Sprungmuster dem Grundsprungmuster entspricht,

Fig. 38 in einem Diagramm das Ergebnis (Amplitude) einer zwei-dimensionalen Korrelation des zwei-dimensionalen Arrays von Korrelationsergebnissen mit dem zwei-dimensionalen Array von Referenzwerten aufgetragen über die Zeit, für den Fall, dass das Sprungmuster gegenüber dem Grundsprungmuster um zwei Zeitschlitze und sechs Frequenzkanäle vorschoben wurde,

Fig. 39 in einem Diagramm das Ergebnis (Amplitude) einer zwei-dimensionalen Korrelation des zwei-dimensionalen Arrays von Korrelationsergebnissen mit dem zwei-dimensionalen Array von Referenzwerten aufgetragen über die Frequenz, für den Fall, dass das Sprungmuster gegenüber dem Grundsprungmuster um zwei Zeitschlitze und sechs Frequenzkanäle vorschoben wurde,

Fig. 40 eine schematische Ansicht einer Transformation des zwei-dimensionalen Arrays von Referenzwerten aus Fig. 35 in eine virtuelle ein-dimensionale Ebene,

Fig. 41 in einem Diagramm eine durch drei Sprungmuster unterschiedlicher Teilnehmer angegebene Belegungen von Ressourcenelementen der von dem Kommunikationssystem verwendbaren Ressourcenelemente, wobei die drei Sprungmuster von dem gleichen Grundsprungmuster basierend auf einer Verschiebung des Grundsprungmusters in der Zeit und/oder Frequenz abgeleitet sind,

Fig. 42 in einem Diagramm eine durch zwei Sprungmuster unterschiedlicher Teilnehmer angegebene Belegungen von Ressourcenelementen der von dem Kommunikationssystem verwendbaren Ressourcenelemente, wobei die zwei Sprungmuster von dem gleichen Grundsprungmuster basierend auf einer Verschiebung des Grundsprungmusters in der Zeit und/oder Frequenz abgeleitet sind,

Fig. 43a eine auf eine virtuelle ein-dimensionale Ebene transformierte Darstellung der verfügbaren Ressourcenelemente des Kommunikationssystems sowie die durch zwei Sprungmuster aus Fig. 42 definierte Belegung der verfügbaren Ressourcenelemente,

Fig. 43b eine auf eine virtuelle ein-dimensionale Ebene transformierte Darstellung der verfügbaren Ressourcenelemente des Kommunikationssystems sowie die durch drei Sprungmuster aus Fig. 41 definierte Belegung der verfügbaren Ressourcenelemente,

Fig. 44 in einem Diagramm eine durch drei Sprungmuster angegebene Belegungen von Ressourcenelementen der von dem Kommunikationssystem verwendbaren Ressourcenelemente, wobei die drei Sprungmuster von dem gleichen Grundsprungmuster basierend auf einer Verschiebung des Grundsprungmusters in der Zeit und/oder Frequenz abgeleitet sind,

Fig. 45 eine auf eine virtuelle ein-dimensionale Ebene transformierte Darstellung der verfügbaren Ressourcenelemente des Kommunikationssystems sowie die durch drei Sprungmuster aus Fig. 44 definierte Belegung der verfügbaren Ressourcenelemente des Kommunikationssystems,

Fig. 46 in einem Diagramm eine Paketfehlerrate für verschiedene Größen des Ressource-Frames aufgetragen über die uncodierte Last,

Fig. 47 in einem Diagramm eine Paketfehlerrate für verschiedene Anzahlen von Sprungmustern bei einer festen Größe des Ressource-Frames aufgetragen über die Anzahl der im Ressource-Frame gleichzeitig aktiver Datensender,

Fig. 48 in einem Diagramm eine resultierende AKF eines Sprungmusters für eine Framegröße von N = 576 und einer Sprungmusterlänge von J=18,

Fig. 49 ein Flussdiagramm eines Verfahrens zum Senden eines Datenpakets in einem Kommunikationssystem, gemäß einem Ausführungsbeispiel der vorliegenden Erfindung,

Fig. 50    ein Flussdiagramm eines Verfahrens zum Empfangen eines Datenpakets in einem Kommunikationssystem, gemäß einem Ausführungsbeispiel der vorliegenden Erfindung,

Fig. 51    ein Flussdiagramm eines Verfahrens zum Betreiben eines Endpunkts eines Kommunikationssystems, gemäß einem Ausführungsbeispiel der vorliegenden Erfindung,

Fig. 52    ein Flussdiagramm eines Verfahrens zum Betreiben einer Basisstation eines Kommunikationssystems, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Es wird im Folgenden vorausgesetzt, dass es innerhalb eines jeden Netzwerks eine koordinierende Instanz (im Folgenden "Basisstation" genannt) gibt, sowie viele nichtkoordinierende Teilnehmer (im Folgenden Endgeräte oder Endpunkte genannt). Des Weiteren wird vorausgesetzt, dass die "Endgeräte" beispielsweise durch die Aussendung eines Beacon-Signals seitens der "Basisstation" bereits insoweit synchronisiert sind, dass nur noch geringe Abweichungstoleranzen (beispielsweise $\Delta t <= T/2$ in Zeitrichtung für die Symboldauer $T$ und $\Delta f <= f_{sym}/4$ in Frequenzrichtung für die Symbolrate $f_{sym}$) bei der Übertragung eines Subpakets vorliegen.

Für den Betrieb von Niedrigenergie-Weitverkehrsnetzwerken (LPWANs) hat sich die Übertragung von Nachrichten in Form des Telegrammaufteilungs-Verfahrens (Telegram Splitting) als besonders vorteilhaft erwiesen. Die Grundzüge dieses Übertragungsprinzips sind beispielhaft in [1], [3], [4] dargestellt. Hierbei wird eine kodierte Nachricht (Datenpaket) in eine Vielzahl von $J$ Teil-Datenpaketen oder Subpaketen aufgeteilt und auf unterschiedliche Zeit-/Frequenzressourcen verteilt übertragen. Die Abfolge der Aussendungen der Subpakete in Zeit und Frequenz wird als Kanalzugriffsmuster oder Sprungmuster bezeichnet.

Bei den Kanalzugriffsverfahren kommt in LPWAN Netzwerken oftmals ein "konkurrenzbasiertes Zugriffverfahren" (engl. contention based access) zum Einsatz. Hierbei stehen den Endgeräten keine exklusiv zugewiesenen Ressourcen zu Verfügung, sondern mehrere Endgeräte greifen eigeninitiativ auf ein gemeinsames Angebot an $N$ Funkressourcen zu, dem sogenannten Ressource-Frame. Dadurch kann es zu Zugriffskonflikten kommen, d.h. zur gleichzeitigen Belegung von Funkressourcen durch zwei oder mehr Teilnehmer. Um die Auswirkung solcher Zugriffskonflikte zu minimieren, steht den Endgeräten ein Vorrat von $M$ untereinander unterschiedlichen Kanalzugriffsmustern (Sprungmustern) zur Verfügung. Je mehr Sprungmuster zur Verfügung stehen, desto geringer ist die Wahrscheinlichkeit, dass zwei oder mehr Endgeräte dasselbe Sprungmuster verwenden.

Üblicherweise ist es der Basisstation innerhalb eines betrachteten Zeitraums vorab nicht bekannt, ob, wie viele und mit welchen Kanalzugriffsmustern die Endgeräte auf den Funkkanal zugreifen. Deshalb ist die richtige Detektion der ausgesendeten Datenpakete eine wichtige Funktion der Basisstation. Hierfür muss durch die Basisstation eine Absuche aller belegbaren (bzw. verfügbaren) Funkressourcen auf Datenübertragungen mit allen möglichen Sprungmustern erfolgen, was je nach Umfang des Suchraums einen z. T. erheblichen Aufwand an Rechenressourcen erfordert.

Insbesondere bei großen Netzwerken mit vergleichsweise vielen Endgeräten kommen innerhalb des Ressource-Frames sehr viele Sprungmuster zum Einsatz, damit die gegenseitige Störwahrscheinlichkeit bzgl. Vollauslöschungen minimiert wird. Alle erlaubten Sprungmuster müssen durch die Basisstation im Rahmen einer Detektion abgesucht werden, was gerade bei sehr vielen Sprungmustern einen erheblichen Rechenaufwand bedeuten kann. Zudem kommt es bei vielen Endgeräten zunehmend zu Mehrdeutigkeiten bei der Zuordnung der Sprungmuster während der Detektion.

Typischerweise geschieht die Detektion der verschiedenen Muster in mehreren Stufen. Zunächst wird eine "Korrelation" auf Basis der Pilotsequenzen in den einzelnen (Teil-) Datenpaketen durchgeführt. Das Ergebnis wird dann in einem zweiten Schritt entsprechend der definierten Sprungmuster durch eine Kombination zusammengefügt. Dieser Schritt muss für jedes verwendete Sprungmuster getrennt durchgeführt werden, die Rechenleistung steigt also linear mit der Anzahl verwendeter Sprungmuster an.

An diesem Punkt setzten Ausführungsbeispiele der vorliegenden Erfindung an, gemäß denen die Kombination der "2D-Korrelationsergebnisse" durch eine geschickte Wahl von Sprungmustern in den eindimensionalen Raum abbildet und der Rechenaufwand optimiert wird. Weitere Ausführungsbeispiele befassen sich mit dem Einfluss der Framegröße $N$ auf die TSMA-Systemperformance und liefern mit der Kaskadierung von kleineren Frames und verschiedenen Varianten des "konkurrenzbasierten Zugriffsverfahrens" entsprechende Alternativen. Weitere Ausführungsbeispiele befassen sich mit dem Einfluss der Sprungmusteranzahl $M$ auf die TSMA-Systemperformance und beschreiben entsprechende Designvorgaben zur Minimierung von Mehrdeutigkeiten sowie der Reduzierung des Detektionsaufwands.

Bevor Ausführungsbeispiele der vorliegenden Erfindung in Abschnitt C beschrieben werden, die eine Einsparung von Energie auf Seiten der Basisstation ermöglichen, insbesondere für den Fall, dass bei vergleichsweise großen Kommunikationssystemen sehr viele Endgeräte Telegramme versenden, wird zunächst in Abschnitt A erläutert, wie Kommunikationssysteme, die in dem gleichen Frequenzband kommunizieren, durch unterschiedliche Kanalzugriffsmuster voneinander getrennt werden können, und im Anschluss daran in Abschnitt B erläutert, wie ein oder mehrere Teilnehmer eines Kommunikationssystems unter Verwendung eines relativen Kanalzugriffsmusters auf eine Auswahl der durch das netzwerkspezifische Kanalzugriffsmuster für das Kommunikationssystem freigegebene Ressourcen zugreifen können.

## A. Netzwerkspezifische Kanalzugriffsmuster

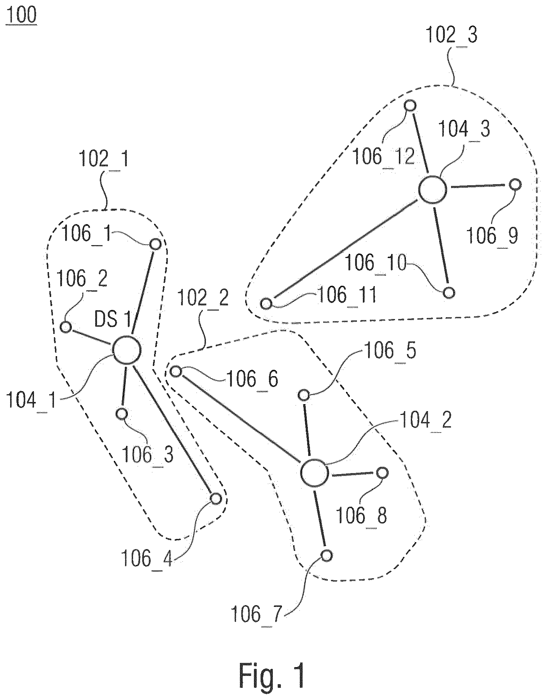

Fig. 1 zeigt ein schematisches Blockschaltbild einer Kommunikationsanordnung 100 mit einem ersten Kommunikationssystem 102_1, gemäß einem Ausführungsbeispiel der vorliegenden Erfindung.

Das erste Kommunikationssystem 102_1 kann eine Basisstation 104_1 und ein oder mehrere Endpunkte 106_1-106_n aufweisen, wobei n eine natürliche Zahl größer gleich eins ist. In dem in Fig. 1 gezeigten Ausführungsbeispiel weist das erste Kommunikationssystem 102_1 zur Veranschaulichung vier Endpunkte 106_1-106_4 auf, das erste Kommunikationssystem 104_1 kann jedoch genauso 1, 10, 100, 1.000, 10.000 oder sogar 100.000 Endpunkte aufweisen.

Das erste Kommunikationssystem 102_1 kann ausgebildet sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. Das Frequenzband kann dabei eine wesentlich größere (z.B. um zumindest den Faktor zwei größere) Bandbreite aufweisen als Empfangsfilter der Teilnehmer des ersten Kommunikationssystems 102_1.

In Reichweite des ersten Kommunikationssystems 102_1 können - wie dies in Fig. 1 angedeutet ist - beispielsweise ein zweites Kommunikationssystem 102_2 und ein drittes Kommunikationssystem 102_3 sein, wobei diese drei Kommunikationssysteme 102_1, 102_2 und 102_3 das gleiche Frequenzband zur drahtlosen Kommunikation nutzen können.

Bei Ausführungsbeispielen kann das erste Kommunikationssystem 102_1 ausgebildet sein, um basierend auf einem Kanalzugriffsmuster unterschiedliche Frequenzen oder Frequenzkanäle des Frequenzbands (z.B. in die das Frequenzband unterteilt ist) abschnittsweise (z.B. zeitschlitzweise) für die Kommunikation zu nutzen, unabhängig davon ob diese von einem anderen Kommunikationssystem (z.B. dem zweiten Kommunikationssystem 102_2 und/oder dem dritten Kommunikationssystem 102_3) verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen (z.B. dem zweiten Kommunikationssystem 102_2) auf das Frequenzband zugreift, unterscheidet.

In einer solchen Kommunikationsanordnung 100, wie sie in Fig. 1 gezeigt ist, können die Signale untereinander unkoordinierter Kommunikationssysteme (z.B. das erste Kommunikationssystem 102_1 und das zweite Kommunikationssystem 102_2) somit durch unterschiedliche Kanalzugriffsmuster voneinander getrennt werden, so dass eine wechselseitige Störung durch Interferenzen vermieden oder minimiert wird.

Beispielsweise können Teilnehmer des ersten Kommunikationssystems 102_1, wie z.B. eine Basisstation 104_1 und mehrere Endpunkte 106_1-106_4, basierend auf einem ersten Kanalzugriffsmuster (z.B. welches eine für die Kommunikation des ersten Kommunikationssystems 102_1 verwendbare frequenzsprungbasierte Belegung (z.B. von Ressourcen) des Frequenzbands angibt) drahtlos untereinander kommunizieren, während Teilnehmer des zweiten Kommunikationssystems 102_2, wie z.B. eine Basisstation 104_2 und mehrere Endpunkte 106_5-106_8, basierend auf einem zweiten Kanalzugriffsmuster (z.B. welches eine für die Kommunikation des zweiten Kommunikationssystems 102_2 verwendbare frequenzsprungbasierte Belegung (z.B. von Ressourcen) des Frequenzbands angibt) drahtlos untereinander kommunizieren, wobei das erste Kanalzugriffsmuster und das zweite Kanalzugriffsmuster unterschiedlich sind (z.B. eine Überlappung in den verwendeten Ressourcen von weniger als 20% aufweisen, im Idealfall keine Überlappung aufweisen).

Wie bereits erwähnt, sind die Kommunikationssysteme (z.B. das erste Kommunikationssystem 102_1 und das zweite Kommunikationssystem 102_2) untereinander unkoordiniert.

Dass die Kommunikationssysteme 102_1, 102_2, 102_3 untereinander unkoordiniert sind, bezieht sich hierin darauf, dass die Kommunikationssysteme untereinander (= zwischen den Kommunikationssystemen) keine Information über das jeweils verwendete Kanalzugriffsmuster austauschen, oder mit anderen Worten, dass ein Kommunikationssystem keine Kenntnis über das von einem anderen Kommunikationssystem verwendete Kanalzugriffsmuster hat. Dem ersten Kommunikationssystem 102_1 ist somit nicht bekannt, welches Kanalzugriffsmuster von einem anderen Kommunikationssystem (z.B. dem zweiten Kommunikationssystem 102_2) verwendet wird.

Ausführungsbeispiele beziehen sich somit auf eine Kommunikationsanordnung 100 von untereinander unkoordinierten und ggf. untereinander auch unsynchronisierten Funknetzwerken (oder Kommunikationssystemen) 102_1, 102_2 zur Datenübertragung, die auf ein gemeinsam genutztes Frequenzband zugreifen. Mit anderen Worten, es gibt zumindest zwei Funknetzwerke 102_1, 102_2, welche jeweils unabhängig voneinander arbeiten. Beide Netzwerke 102_1, 102_2 setzen dabei das gleiche Frequenzband ein.

Bei Ausführungsbeispielen wird davon ausgegangen, dass bei jeder einzelnen Datenübertragung jeweils nur ein (kleiner) Teil des Frequenzbandes genutzt wird, wie z.B. ein Frequenzkanal oder ein Teilfrequenzkanal. Beispielsweise kann das Frequenzband in (Teil-)Frequenzkanäle zerlegt werden, wobei ein Frequenzkanal eine echte Teilmenge des gesamten Frequenzbandes ist. Die Gesamtheit aller zur Verfügung stehenden Frequenzkanäle konstituiert dabei das genutzte Frequenzband. Die Übertragung einer Nachricht (Datenpaket) kann z.B. im Telegram-Splitting-Verfahren nacheinander über eine Folge unterschiedlicher Frequenzkanäle erfolgen. In diesem Falle sind Ausführungsbeispiele von besonderem Nutzen.

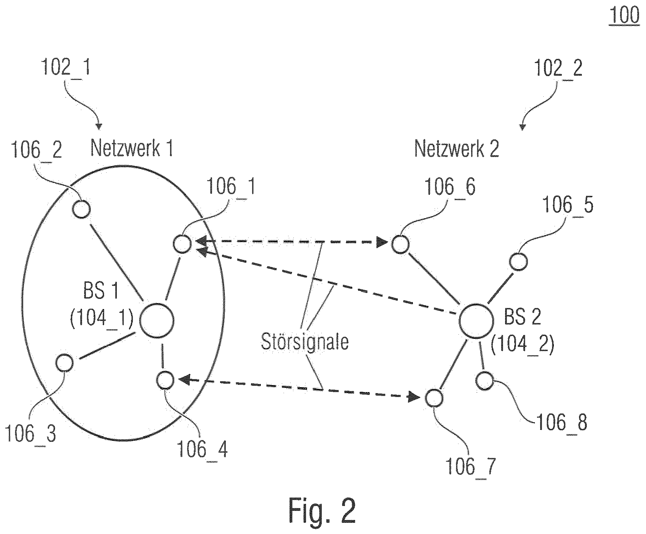

Oftmals sind Netzwerke (oder Kommunikationssysteme) 102_1, 102_2 örtlich so angeordnet, dass Sendesignale von Teilnehmern eines Netzwerks (z.B. des Kommunikationssystems 102_2) auch von Teilnehmern anderer, in der Nähe befindlicher Netzwerke (z.B. des Kommunikationssystems 102_1) empfangbar sind. Mithin treten sie dort als Störsignale (Interferenzen) auf, welche die Leistungsfähigkeit eines Funkübertragungssystems grundsätzlich erheblich beeinträchtigen können, wie dies in Fig. 2 gezeigt ist.

Im Detail zeigt Fig. 2 eine schematische Ansicht von zwei untereinander unkoordinierten Netzwerken 102_1, 102_2 mit je einer Basisstation (BS 1) 104_1, (BS 2) 104_2 und jeweils vier zugehörigen Endgeräten 106_1-106_4, 106_5-106_8. Mit anderen Worten, Fig. 2 zeigt eine beispielhafte Netzwerktopologie für zwei Netzwerke 102_1, 102_2 mit Basisstationen (BS 1) 104_1, (BS 2) 104_2 sowie jeweils vier Endgeräten 106_1-106 4, 106_5-106_8. Die rot gestrichelten Pfeile 108 symbolisieren exemplarisch potentielle Störsignale, d.h. die Funkteilnehmer können die Sendesignale der Teilnehmer aus dem jeweils anderen Netzwerk als Störsignale empfangen. Je nach Gegebenheit kann eine Vielzahl von Netzwerken untereinander in Empfangsreichweite sein, sodass die Teilenehmer (Basisstationen oder Endgeräte) ggf. einer erheblichen Zahl von Störern aus anderen Netzwerken ausgesetzt sein können.

Wird (wie oben erwähnt) das Frequenzband als gemeinsam genutzte Ressource in einzelne, nichtüberlappende Frequenzkanäle unterteilt, so kann die Auswirkung der Störsignale signifikant reduziert werden. In untereinander koordinierten Netzwerken kann jedem Netzwerk ein Teil des Frequenzbands (eine Menge an Frequenzkanälen) exklusiv zugeordnet werden, sodass die wechselseitige Störung (Interferenz) minimiert werden kann. In gänzlich unkoordinierten Netzwerken ist dies nicht möglich.

Bei Ausführungsbeispielen wird daher der Zugriff auf das physikalische Übertragungsmedium (d.h. den physikalischen Funkkanal) in jedem Netzwerk so ausgestaltet, dass zumindest eins aus

a) der Kanalzugriff, d.h. die Frequenz- und Zeitbelegung des Funkkanals, in einem Netzwerk, möglichst wenig Überlappung in Zeit und Frequenz mit dem Kanalzugriff in anderen Netzwerken desselben Standards hat (hoher Grad an "Orthogonalität"),

b) der Kanalzugriff innerhalb gewünschter Vorgaben (z.B. mittlere Zugriffshäufigkeit pro Zeit) einen (pseudo-)zufälligen Charakter hat ("Zufälligkeit"),

c) soweit nach den Vorgaben vermeidbar zwischen Netzwerken keine längeren Sequenzen von (in Zeit und Frequenz) identischem Kanalzugriff auftreten ("Vermeidung systematischer Überlappungen"),

d) alle Frequenzkanäle innerhalb des Frequenzbandes möglichst gleichmäßig genutzt werden, um eine möglichst hohe Frequenzdiversität sowie ggf. die Einhaltung behördlicher, regulatorischer Vorgaben zu erzielen ("Gleichverteilung der Frequenzkanalnutzung"),

e) die Information über Frequenz- und Zeitbelegung des Funkkanals z.B. für zu einem Netzwerk neu hinzukommende Teilnehmer mit möglichst geringem Signalisierungsaufwand übermittelt werden kann ("Reduzierung von Signalisierungsinformation"),

erfüllt ist.

Vereinfacht ausgedrückt wird bei Ausführungsbeispielen eine wechselseitige Störung zwischen mehreren Netzwerken (Inter-Netzwerk-Interferenz) dadurch reduziert, dass der Kanalzugriff auf das gemeinsam genutzte Frequenzband in Frequenz und Zeit unterschiedlich, bevorzugt möglichst "orthogonal" und mit (pseudo-)zufälligem Charakter, erfolgt.

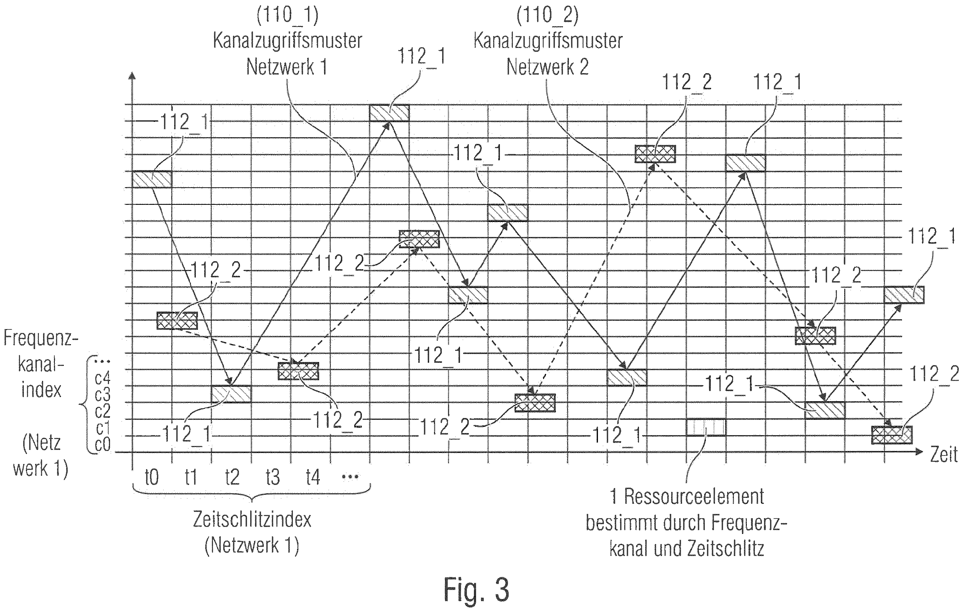

Im Folgenden wird zur Veranschaulichung davon ausgegangen, dass neben der Aufteilung des Frequenzbandes in diskrete Frequenzkanäle (Indizes c0, c1, c2,...) auch eine zeitliche Diskretisierung der Zugriffe innerhalb eines jeden Netzwerks erfolgt. Die zugehörigen zeitlichen Ressourcen werden als Zeitschlitze (engl. Timeslots) bezeichnet und sind in Fig. 3 mit den Indizes t0, t1, t2,... versehen. Beide Anforderungen (Diskretisierung in Frequenz und Zeit) sind jedoch nicht notwendige Voraussetzungen für die Anwendung von Ausführungsbeispielen.

Im Detail zeigt Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands. Dabei beschreibt die Ordinate die Frequenzkanalindizes und die Abszisse die Zeitschlitzindizes.

Beispielsweise können Teilnehmer des ersten Kommunikationssystems 102_1 basierend auf dem ersten Kanalzugriffsmuster 110_1, welches eine für die Kommunikation des ersten Kommunikationssystems 102_1 verwendbare frequenzsprungbasierte Belegung von Ressourcen des Frequenzbands angibt, drahtlos untereinander kommunizieren, während Teilnehmer des zweiten Kommunikationssystems 102_2 basierend auf dem zweiten Kanalzugriffsmuster 110_2, welches eine für die Kommunikation des zweiten Kommunikationssystems 102_2 verwendbare frequenzsprungbasierte Belegung von Ressourcen des Frequenzbands angibt, drahtlos untereinander kommunizieren, wobei das erste Kanalzugriffsmuster und das zweite Kanalzugriffsmuster unterschiedlich sind (z.B. eine Überlappung von weniger als 20% aufweisen, im Idealfall keine Überlappung aufweisen).

Mit anderen Worten, Fig. 3 zeigt in Form eines Gitterrasters eine Übersicht aller grundsätzlich verfügbaren Ressourcen in Frequenz und Zeit (schematische Darstellung der Frequenzkanäle und Zeitschlitze sowie beispielhafte Kanalzugriffsmuster), wobei ein einzelnes Ressourcenelement im ersten Kommunikationsnetzwerk 102_1 durch Zuordnung eines Frequenzkanalindex und eines Zeitschlitzindex bestimmt ist. Beispielhaft sind die durch das erste Kommunikationsnetzwerk 102_1 belegbaren Ressourcen die mit Bezugszeichen 112_1 gekennzeichneten Ressourcenelemente. Die Menge aller innerhalb eines Kommunikationsnetzwerks belegbaren Ressourcen stellt ein Kanalzugriffsmuster 110_1 dar. Für das erste Kommunikationsnetzwerk 102_1 sind dies alle durch Bezugszeichen 112_1 gekennzeichnete Ressourcenelemente, die durch Pfeile verbunden sind. In äquivalenter Weise ist das Kanalzugriffsmuster eines weiteren Kommunikationsnetzwerks (z.B. des zweiten Kommunikationsnetzwerks 102_2) in Fig. 3 beispielhaft eingetragen (alle durch Bezugszeichen 112_2 gekennzeichneten Ressourcenelemente, die durch Pfeile verbunden sind), welches nicht im selben Frequenz- und Zeitraster wie das erste Kommunikationsnetzwerk 102_1 verankert ist (Ressourcenelemente sind in Frequenz und Zeit aus dem Grundraster vom ersten Kommunikationsnetzwerk 102_1 verschoben).

Wichtig ist die Unterscheidung zwischen

- allen grundsätzlich (maximal) verfügbaren Ressourcenelementen, d.h. die Gesamtmenge aller Ressourcenelemente, aus denen das Kanalzugriffsmuster eine geeignete Untermenge auswählt (in Fig. 3 z.B. alle Elemente des Gitternetzes),
- allen in das Kanalzugriffsmuster tatsächlich aufgenommenen Ressourcenelementen (in Fig. 3 alle mit Bezugszeichen 112_1 versehenen Ressourcenelemente) und
- der Menge an Ressourcenelementen (des Kanalzugriffsmusters), die im Netzwerk tatsächlich für eine Datenübertragung belegt werden (es könnte bei geringem Datenaufkommen z.B. nur jedes dritte im Kanalzugriffsmuster vorhandene Ressourcenelement tatsächlich genutzt werden).

Die Gestaltung des Kanalzugriffsmusters bedeutet somit auch eine Festlegung des aktiv nutzbaren Ressourcenvorrats für dieses Kommunikationsnetzwerk (oder Kommunikationssystems).

Im Folgenden werden Ausführungsbeispiele von Basisstationen, Endpunkten und/oder Kommunikationssystemen beschrieben, die zur Kommunikation Kanalzugriffsmuster nutzten, die zumindest eines der oben genannten Kriterien a) bis e) erfüllen. Ferner werden im Folgenden Ausführungsbeispiele der Erzeugung solcher Kanalzugriffsmuster beschrieben.

**A.1. Basisstation, Endpunkt und Kommunikationssystem**

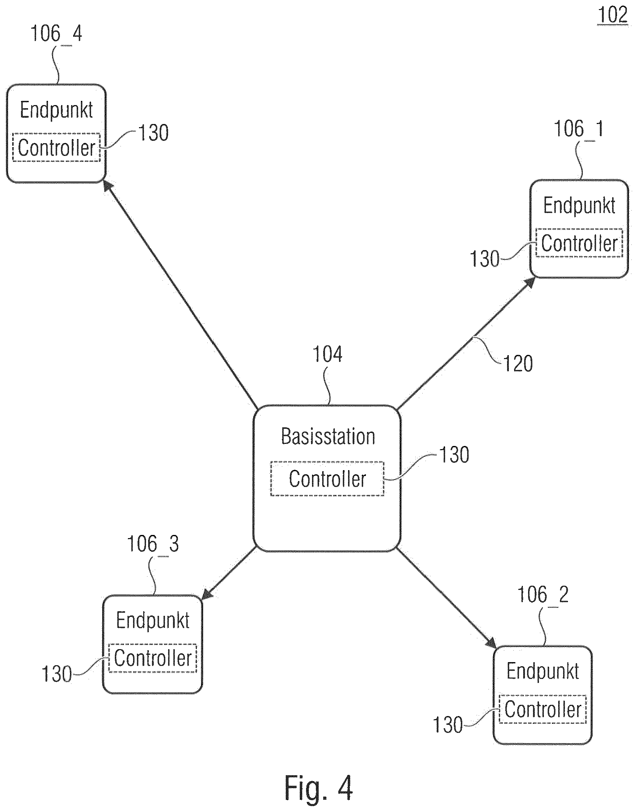

Fig. 4 zeigt ein schematisches Blockschaltbild eines Kommunikationssystems 102 mit einer Basisstation 104 und einer Mehrzahl von Endpunkten 106_1-106_4, gemäß einem Ausführungsbeispiel.

Wie in Fig. 4 gem. einem Ausführungsbeispiel gezeigt ist, kann das Kommunikationssystem 102 eine Basisstation und vier Endpunkte 106_1-106_4 aufweisen. Die vorliegende Erfindung ist jedoch nicht auf solche Ausführungsbeispiele beschränkt, vielmehr kann das Kommunikationssystem ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Die Teilnehmer (= Basisstation 104 und Endpunkte 106_1-106_4) des in Fig. 4 gezeigten Kommunikationssystems nutzen zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird, wie dies oben in Bezug auf die Fig. 1 bis 3 erläutert wird. Das Kommunikationssystem 102 arbeitet dabei unkoordiniert in Bezug auf die anderen Kommunikationssysteme, die das gleiche Frequenzband nutzen.

Bei Ausführungsbeispielen kann die Basisstation 104 ausgebildet sein, um ein Signal 120 zu senden, wobei das Signal 120 eine Information über ein Kanalzugriffsmuster 110 aufweist, wobei das Kanalzugriffsmuster eine für die Kommunikation des Kommunikationssystems 102 verwendbare frequenz- und/oder zeitsprungbasierte Belegung (z.B. von Ressourcen) des Frequenzbands angibt (z.B. eine zeitliche Abfolge von für die Kommunikation des Kommunikationssystems verwendbaren (z.B. über das Frequenzband verteilten) Frequenzressourcen), wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann der Zustand des Zahlenfolgengenerators ein innerer Zustand des Zahlenfolgengenerators sein, wobei von dem inneren Zustand des Zahlenfolgengenerators eine Zahl der Zahlenfolge abgeleitet werden kann.

Basierend auf dem inneren Zustand des Zahlenfolgengenerators können auch auf den inneren Zustand des Zahlenfolgengenerators folgende innere Zustände des Zahlenfolgengenerators ermittelt werden, von denen auch folgende Zahlen der Zahlenfolge abgeleitet werden können. Beispielsweise kann die Zahl der Zahlenfolge direkt von dem inneren Zustand des Zahlenfolgengenerators abgeleitet werden (z.B. Zustand = Zahl), z.B. bei der Implementierung des Zahlenfolgengenerators als Zähler, oder aber über eine Abbildungsfunktion, z.B. bei der Implementierung des Zahlenfolgengenerators als Schieberegister, ggf. mit Rückkoppelung.

Bei Ausführungsbeispielen kann zumindest einer der Endpunkte 106_1-106_4 ausgebildet sein, um das Signal 120 mit der Information über das Kanalzugriffsmuster 110 zu empfangen, und um das Kanalzugriffsmuster 110 basierend auf der Information über das Kanalzugriffsmuster zu ermitteln, wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann die Basisstation 104 und/oder zumindest einer der Endpunkte 106_1-106_4 ausgebildet sein, um das Kanalzugriffsmuster in Abhängigkeit von dem Zustand des Zahlenfolgengenerators pseudozufällig zu ermitteln, wie z.B. unter Verwendung einer pseudozufälligen Abbildungsfunktion.

Ferner kann die Basisstation 104 und/oder zumindest einer der Endpunkte 106_1-106_4 ausgebildet sein, um das Kanalzugriffsmuster in Abhängigkeit von einer individuellen Information des Kommunikationssystems (z.B. einer immanenten Information des Kommunikationssystems, wie z.B. einem netzwerkspezifischen Identifikator) pseudozufällig zu ermitteln.

Im Folgenden werden Ausführungsbeispiele der Erzeugung von Kanalzugriffsmustern beschrieben. Die Kanalzugriffsmuster werden hierbei durch die Basisstation 104 erzeugt und können basierend auf dem Signal mit der Information 120 über das Kanalzugriffsmuster von zumindest einem (oder allen) der in Fig. 4 gezeigten Endpunkte 106_1-106_4 ermittelt werden, beispielsweise durch jeweils einen Controller (Steuergerät, Steuereinheit) 130, der in die Basisstation 104 und/oder in die Endpunkte 106_1-106_4 implementiert ist. Die Vorgabe der Kanalzugriffsmuster erfolgt hierbei (ausschließlich) durch die Basisstation 104, während die Endpunkte 106_1-106_4 das Kanalzugriffsmuster nur "kennen", also nach derselben Methode generieren wie die Basisstation 104.

Dabei wird in der folgenden Beschreibung von einem Funkübertragungssystem (oder einer Kommunikationsanordnung) mit mehreren unabhängigen, untereinander unkoordinierten Kommunikationsnetzwerken ausgegangen, deren Teilnehmer wechselseitig in Empfangsreichweite sind, sodass Sendesignale von Teilnehmern eines Netzwerks potentiell als Störsignale für Teilnehmer anderer Netzwerke in Betracht kommen. Für die Anwendung von Ausführungsbeispielen ist es nicht nötig, dass Information (Daten oder Signalisierungsinformation) zwischen unterschiedlichen Netzwerken ausgetauscht wird. Ebenso ist es unerheblich, ob die Netzwerke untereinander zeitlich und/oder in der Frequenz synchronisiert sind.

Ferner wird vorausgesetzt, dass es innerhalb jedes Netzwerks eine koordinierende Instanz gibt (im Folgenden "Basisstation" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Diese Information kann z.B. über regelmäßig ausgesendete Baken-Signale (engl. Beacon) übertragen werden, jedoch auch in unregelmäßigen Abständen übertragen werden oder ggf. dediziert an einzelne Endgeräte oder Gruppen von Endgeräten.

Des Weiteren wird davon ausgegangen, dass das gesamte, zur Übertragung zur Verfügung stehende Frequenzband in eine Vielzahl von einzelnen Frequenzkanälen unterteilt ist, auf die jeweils einzeln oder in Teilmengen (Gruppen von Frequenzkanälen) zugegriffen werden kann.

Ohne Einschränkung der Allgemeinheit und zur besseren Veranschaulichung wird in den folgenden Ausführungen davon ausgegangen, dass innerhalb jedes Netzwerks ein festes, diskretes Zeitraster existiert, zu welchem Kanalzugriffe erfolgen können (siehe auch Fig. 3). Ein Kanalzugriff in Form von Aussendung eines Signals kann sowohl durch Endgeräte als auch durch die Basisstation erfolgen. Ein Kanalzugriff muss jedoch in einer im Kanalzugriffsmuster dafür vorgesehenen Ressource nicht notwendigerweise erfolgen, falls z.B. keine Daten oder sonstigen Informationen zur Übertragung anstehen.

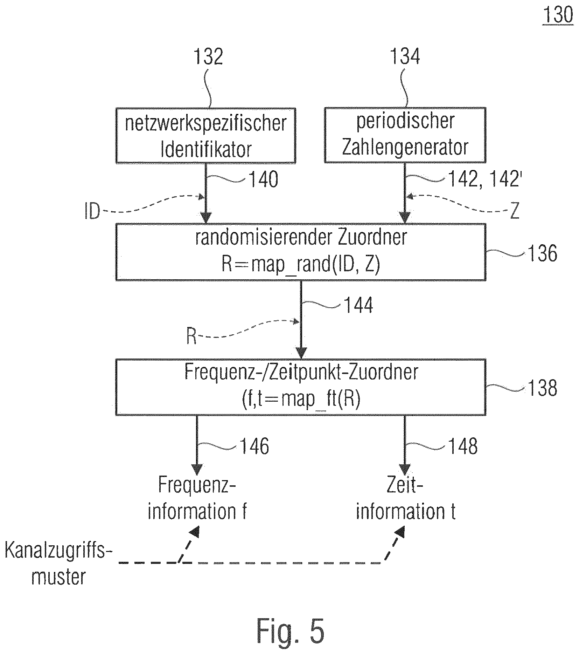

Fig. 5 zeigt ein schematisches Blockschaltbild eines Controllers 130 zur Erzeugung eines Kanalzugriffsmusters, gemäß einem Ausführungsbeispiel der vorliegenden Erfindung.

Wie in Fig. 5 zu erkennen ist, kann der Controller 130 einen Speicher 132, einen periodischen Zahlengenerator 134 zur Erzeugung einer periodischen Zahlenfolge Z, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der periodische Zahlengenerator 134 kann ausgebildet sein, um seinen Zustand 142 oder eine von seinem Zustand abgeleitete Zahl 142' der periodischen Zahlenfolge bereitzustellen. Der randomisierende Zuordner 136 kann ausgebildet sein, um in Abhängigkeit von dem Zustand 142 des Zahlenfolgengenerators 134 oder der davon abgleiten Zahl 142' der periodischen Zahlenfolge und des netzwerkspezifischen Identifikators ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Der Controller 130 kann beispielsweise - wie dies in Fig. 4 angedeutet ist - in der Basisstation 104 und/oder in dem einen oder den mehreren Endpunkt(en) 106_1-106-4 implementiert sein, um das von dem Kommunikationssystem 102 verwendete individuelle (oder Netzwerk-individuelle) Kanalzugriffsmuster zu berechnen.

Mit anderen Worten, Fig. 5 zeigt die Grundstruktur zur Erzeugung von Kanalzugriffsmustern, gemäß einem Ausführungsbeispiel der vorliegenden Erfindung.

Die Erzeugung der Kanalzugriffsmuster erfolgt iterativ, d.h. die in Fig. 5 dargestellten Blöcke werden einmal pro Erzeugung einer einzelnen Kanalzugriffsinformation aufgerufen. Durch N-maligen Aufruf wird somit ein Kanalzugriffsmuster mit N Kanalzugriffen generiert.

Die Funktion der Teilblöcke wird im Folgenden im Detail erläutert. Es wird der Begriff "Zahl" verwendet. Dabei handelt es sich allgemein um diskrete Information, welche in unterschiedlicher Darstellung (z.B. in dezimaler Form, als binäre Sequenz o.Ä.) vorliegen kann.

### Netzwerkspezifischer Identifikator "ID"

Beim netzwerkspezifischen Identifikator handelt es sich um eine feste Zahl, die von einer äußeren Instanz (z.B. bei Konfiguration des Netzwerks bzw. der koordinierenden Basisstation) festgelegt wird. Idealerweise ist sie von Netzwerk zu Netzwerk unterschiedlich. Beispielsweise könnte es sich um eine eindeutige, hinreichend lange Basisstations-ID, eindeutige Netzwerk-ID oder jeweils einen hinreichend langen Hash darüber handeln. Diese Größe ist fest und variiert als einzige in der gezeigten Anordnung nicht von Aufruf zu Aufruf.

### Periodischer Zahlengenerator "Z"

Der periodische Zahlengenerator 134 generiert eine sich periodisch mit der Periodizität P wiederholende Folge von Zahlen Z. Er besitzt einen inneren Zustand $S_n$, aus dem sich die nächste erzeugte Zahl und der nächste innere Zustand $S_{n+1}$ eindeutig bestimmen lassen. Das entscheidende Merkmal ist, dass sich bereits aus einem einzigen inneren Zustand (welcher zu einem beliebigen Zeitschritt vorliegt) die gesamte periodische Folge für jeden beliebigen Zeitschritt ableiten lässt. Ein einfaches Ausführungsbeispiel ist z.B. ein Modulo-P-Zähler, der periodisch die Zahlenfolge 0,1,2...(P-1) liefert. Ein weiteres Ausführungsbeispiel ist ein deterministischer Zufallszahlengenerator (engl. pseudo random number generator), z.B. implementiert in Form eine rückgekoppelten Schieberegisters (LFSR). Ein drittes Ausführungsbeispiel ist ein endlicher Körper (engl. Galois field) mit P Elementen.

### Randomisierender Zuordner

Der randomisierende Zuordner 136 generiert aus den beiden Eingangszahlen ID und Z eine Ausgangszahl R, d.h. R=*map_rand*(ID, Z), wobei *map_rand* die Zuordnungsfunktion darstellt. Die Zuordnung hat dabei möglichst zufälligen Charakter, d.h. eine mathematisch korrelierte Eingangssequenz (bestehend aus ID, Z) erzeugt eine möglichst in sich unkorrelierte Ausgangssequenz R.

Ausführungsbeispiele für eine randomisierende Zuordnung sind

- Verkettung der beiden Eingangszahlen
- die Anwendung einer zyklischen Redundanzprüfung (engl. cyclic redundancy check, kurz CRC) auf die Eingangsgrößen ID, Z, welche zur Zahl R führt und randomisierenden Charakter hat,
- die Anwendung einer Hash-Funktion
- die Anwendung einer Verschlüsselung, z.B. AES-Verschlüsselung, wobei der zugehörige Schlüssel dabei allen autorisierten Teilnehmern bekannt ist und was somit auch ein Verfahren zur Einbringung von "transport layer security" (kurz TLS) darstellt.

Die Folge der Elemente der Zahl R ist nach obigen Maßgaben pseudozufälliger Natur. Sie sollte von Netzwerk zu Netzwerk unterschiedlich sein, um Überlappungen der Kanalzugriffsmuster möglichst zu vermeiden.

### Frequenz-/Zeitpunkt-Zuordner

Der Frequenz-/Zeitpunkt-Zuordner 138 ordnet jeder Eingangszahl R mittels einer Abbildung ein 2-Tupel von Frequenzinformation (Funkfrequenz f) und Zeitinformation (Zugriffszeitpunkt t) zu, d.h. (f,t)=map_ft(R), wobei "*map_ft'* die Zuordnungsfunktion darstellt. Während die Abfolge der Frequenzen grundsätzlich beliebig innerhalb des vorgegebenen Frequenzbands sein kann, müssen die Zeitpunkte dabei von Aufruf zu Aufruf in monoton ansteigender Form vorliegen, da "Rücksprünge" in der Zeit nicht zulässig sind.

Von besonderer Bedeutung ist als Ausführungsbeispiel der Fall, dass der Kanalzugriff in Frequenz- und Zeitrichtung (wie weiter oben beschrieben) diskretisiert ist, d.h. in Form von diskreten Frequenzkanälen und diskreten Zeitschlitzen erfolgt. In diesem Fall ordnet der Frequenz-/Zeitpunkt-Zuordner jeder Eingangszahl R ein 2-Tupel von Frequenzkanalindex fi und Zeitschlitzindex ti zu, d.h. (fi,ti)=map_ft(R). Die Zeitschlitze werden dabei in zeitlich aufsteigender Reihenfolge indiziert, da "Rücksprünge" in der Zeit nicht zulässig sind. Weitere Ausführungen zur Belegung der Zeitschlitze finden sich in Abschnitt 3.

Die Abfolge der 2-Tupel (f,t) bzw. (fi, ti) basiert auf der Folge der Elemente von R und definiert das Kanalzugriffsmuster.

Die genaue Gestaltung des Frequenz-/Zeitpunkt-Zuordners bestimmt gemeinsam mit der Wahrscheinlichkeitsfunktion der Zahl R die Zugriffsstatistik auf den Kanal.

Zustandssignalisierung und Prädizierbarkeit

Die in Fig. 5 gezeigte Anordnung generiert ein Kanalzugriffsmuster, welches sowohl von einem zeitlich unveränderlichen, netzwerkspezifischen Identifikator als auch von einem zustandsabhängigen (und damit zeitlich veränderlichen) periodischen Zahlengenerator (Periodizität P) abhängt. Über den netzwerkspezifischen Identifikator kann sichergestellt werden, dass Netzwerke mit unterschiedlichen netzwerkspezifischen Identifikatoren stets unterschiedliche Sequenzen von R generieren, selbst wenn ihr Zahlengenerator sich im gleichen Zustand befinden sollte. Damit kann sichergestellt werden, dass unterschiedliche Netzwerke keine identischen Kanalzugriffsmuster erzeugen und somit im ungünstigsten Fall in eine "Dauerkollision" der Kanalzugriffe geraten.

Ein Endgerät benötigt zur Ermittlung des im Netzwerk angewandten Kanalzugriffsmusters sowohl den netzwerkspezifischen Identifikator als auch den jeweiligen Zustand des periodischen Zahlengenerators.

Den *netzwerkspezifischen Identifikator* erhält das Endgerät bereits bei der Erstanmeldung beim Netzwerk. Dieser wird vorteilhafterweise mittels regelmäßig von der Basisstation ausgesandter Baken-Signale (beacon) übermittelt und allen autorisierten Endgeräten zugänglich gemacht. Alternativ kann der netzwerkspezifische Identifikator dem Endgerät auch im Zuge der Erstkonfiguration (mit Auslieferung) bekannt gemacht werden, somit also vor der ersten Inbetriebnahme im Netzwerk.

Der Zustand des *periodischen Zahlengenerators* kann entweder in einem regelmäßigen Baken-Signal und/oder in eigenen, dedizierten Zustands-Signalisierungs-Ressourcen übermittelt werden. Ein Zahlengenerator mit Periodizität P hat P interne Zustände, sodass zur Übermittlung des jeweiligen Zustands $\lceil \log_2(P) \rceil$ Bits übertragen werden müssen. Die pro Zustandssignalisierung übertragene Informationsmenge (Anzahl der Bits) kann somit durch die gewählte Periodizität des Zahlengenerators nach Anforderung gesteuert werden.

Die für die Zustandssignalisierung übertragene Information kann in Form mehrerer Teilinformationen übertragen werden, wobei die Übertragung in unterschiedlicher Häufigkeit erfolgen kann. So könnten als Ausführungsbeispiel für den Fall, dass es sich bei dem periodischen Zahlengenerator (Z) um einen Zähler handelt, die höherwertigen Bits (engl. most significant bits (MSBs)) des Zählers getrennt von den niederwertigen Bits (engl. least significant bits (LSBs)) übertragen werden und auch mit einer anderen Häufigkeit (z.B. seltener). Auch wenn es sich nicht um einen Zähler handelt, könnte die gesamte Zustandsinformation in Form mehrerer Teil-Zustandsinformationen mit unterschiedlicher Übertragungshäufigkeit übertragen werden.

Durch die Periodizität des Zahlengenerators kann ein Endgerät, welchem der Zustand des Zahlengenerators zu mindestens einem Zeitpunkt bekannt ist, das gesamte Kanalzugriffsmuster für beliebige Zeitpunkte/Zeitschlitze in der Zukunft bestimmen. Damit ist es dem Endgerät möglich, in einem energiesparenden Ruhezustand z.B. die Sende-/Empfangseinheit zu deaktivieren und bei der nachfolgenden Aktivierung der Sende- /Empfangseinheit den dann gültigen Abschnitt des Kanalzugriffsmusters aus dem letzten zuvor bekannten Zustand zu prädizieren. Eine Aussendung der Zustandsinformation durch die Basisstation kann somit in vergleichsweise großen zeitlichen Abständen erfolgen.

Zusammenfassend hat das hierin beschriebene Verfahren den Vorteil, dass durch die Kombination eines netzwerkspezifischen Identifikators und eines periodischen Zahlengenerators ein vergleichsweise großer Zustandsraum für die (Pseudozufalls-)Zahl R aufgespannt wird. Damit wird verhindert, dass die Kanalzugriffsmuster von Netzwerken mit unterschiedlichen netzwerkspezifischen Identifikatoren identisch sind, womit eine systematische Kollision der Kanalzugriffe verschiedener, untereinander unkoordinierter Netzwerk minimiert werden kann. Dies erweist sich beim Telegram-Splitting-Multiple-Access (TSMA) Verfahren als besonders vorteilhaft.

Vorteilhafte Merkmale des Frequenz-Zeit-Zuordners werden in den folgenden Abschnitten detaillierter ausgeführt.

Weiteres Ausführungsbeispiel des Controllers

Gemäß Fig. 5 und obiger Beschreibung wird ein periodischer Zahlengenerator 134 benötigt. Dieser wird im folgenden Ausführungsbeispiel wie folgt ersetzt.

Reale Funknetzwerke werden oftmals mit einem Baken-Signal betrieben, welches regelmäßig ausgesendet wird. Jede Baken-Aussendung kann dabei mit einem Zähler versehen werden, welcher einem Baken-Sequenzindex entspricht. Dieser Baken-Sequenzindex wird hier als "Bakenindex" bezeichnet.

Ebenso ist es gebräuchlich, dass in einem zeitschlitzbasierten System die Zeitschlitze mit einem (in Zeitrichtung aufsteigenden) Zeitschlitzindex-Zähler versehen werden (siehe auch Fig. 3). Dieser wird hier als "Zeitschlitzindex" bezeichnet. Der Bakenindex wird in gewissen, im System vorgegebenen Abständen wieder auf null zurückgesetzt, sodass er eine Periodizität aufweist. Entsprechendes gilt für den Zeitschlitzindex (der z.B. nach einer Baken-Aussendung wieder bei null beginnt).

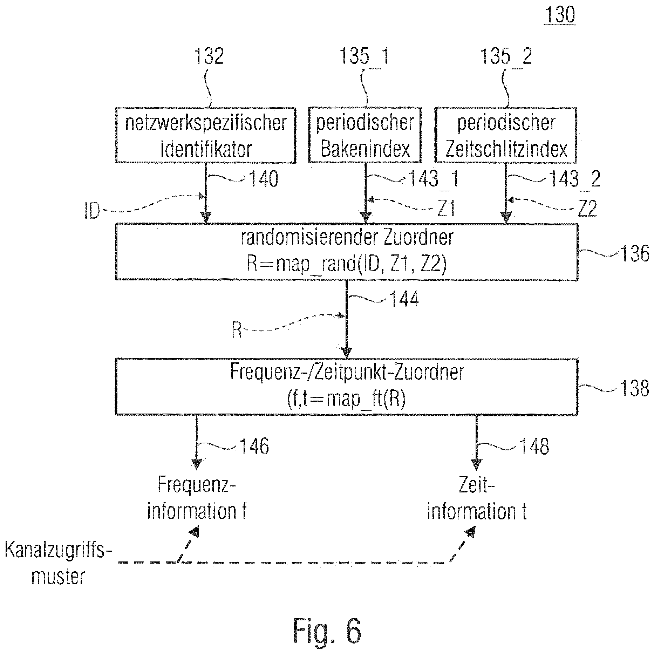

Fig. 6 zeigt ein schematisches Blockschaltbild eines Controllers 130 zur Erzeugung eines Kanalzugriffsmusters, gemäß einem Ausführungsbeispiel der vorliegenden Erfindung.

Der Controller 130 kann einen Speicher 132, einen ersten Zwischenspeicher 135_1, einen zweiten Zwischenspeicher 135_2, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der erste Zwischenspeicher (z.B. ein Register) 135_1 kann ausgebildet sein, um einen periodischen Bakenindex Z1 143_1 vorzuhalten. Der zweite Zwischenspeicher (z.B. ein Register) 135_2 kann ausgebildet sein, um einen periodischen Zeitschlitzindex Z2 143_2 vorzuhalten. Der randomisierende Zuordner 136 kann ausgebildet sein, um in Abhängigkeit von dem periodischen Bakenindex Z1 143_1, dem periodischen Zeitschlitzindex Z2 143_2 und dem netzwerkspezifischen Identifikator ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Mit anderen Worten, Fig. 6 zeigt eine modifizierte Grundstruktur zur Erzeugung von Kanalzugriffsmustern mit Bakenindex und Zeitschlitzindex. In Fig. 6 ist ein Ausführungsbeispiel dargestellt, in welchem gegenüber dem in Fig. 5 gezeigtem Ausführungsbeispiel der periodische Zahlengenerator (Ausgang Z) 134 durch die beiden Blöcke "periodischer Bakenindex" (Ausgang Z1) 135_1 und "periodischer Zeitschlitzindex" (Ausgang Z2) 135_2 ersetzt wurde. Alle weiteren Blöcke sind funktional unverändert (der Randomisierende Zuordner hat nun drei Eingänge).

Die in Fig. 5 und 6 gezeigten Controller 130 ermöglichen die Erzeugung von Netzwerkindividuellen Kanalzugriffsmustern, wobei diese zumindest eine aus folgenden Eigenschaften aufweisen:

- Die Kanalzugriffsmuster enthalten untereinander möglichst wenig überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

## A.2. Steuerung der Kanalzugriffe im Frequenzbereich

Zur Vereinfachung der folgenden Darstellung wird angenommen, dass der Frequenzbereich (oder das Frequenzband) in diskrete Frequenzkanäle unterteilt ist und dass eine Übertragung nach dem TSMA-Verfahren erfolgt.

Mobilfunkkanäle weisen i.d.R. eine über der Frequenz variierende Signaldämpfung auf. Wird gemäß dem TSMA-Verfahren ein Datenpaket in Form mehrerer Teil-Datenpakete übertragen und ist der zugrundeliegende Mobilfunkkanal im Sender nicht bekannt, so kann die Fehlerrate der Übertragung im Mittel reduziert oder sogar minimiert werden, indem die einzelnen Teil-Datenpakete möglichst über den gesamten Frequenzbereich verteilt übertragen werden (Ausnutzung der Frequenzdiversität).

Aus diesem Grund kann es (insbesondere wenn ein Datenpaket aus nur wenigen Teil-Datenpaketen besteht) vorteilhaft sein, wenn gewährleistet ist, dass die Frequenzkanäle auf denen die Teil-Datenpakete übertragen werden, relativ zueinander einen gewissen (Mindest- )Abstand im Frequenzbereich haben.

Da das Kanalzugriffsmuster innerhalb eines Netzwerks in maßgeblicher Weise das Frequenzsprungverhalten bei TSMA bestimmt, kann mit einem geeigneten Verfahren sichergestellt werden, dass zwischen zwei aufeinanderfolgenden Frequenzkanälen des Kanalzugriffsmusters ein Mindestabstand besteht.

Bei Ausführungsbeispielen kann der Frequenz-/Zeitpunkt-Zuordner 138 (siehe Fig. 5 oder 6) daher ausgebildet sein, um basierend auf der Pseudozufallszahl R eine Frequenzinformation f und eine Zeitinformation t zu ermitteln, wobei die Frequenzinformation f einen Abstand zwischen zwei aufeinanderfolgenden Frequenzkanälen angibt.

Der Frequenz-/Zeitpunkt-Zuordner 138 in Fig. 5 oder 6, der auf Basis der pseudozufälligen Zahl R absolute Frequenzkanäle von Zugriff zu Zugriff unabhängig festlegt, kann also alternativ auch Abstände zwischen zwei aufeinanderfolgenden Frequenzkanälen bestimmen.

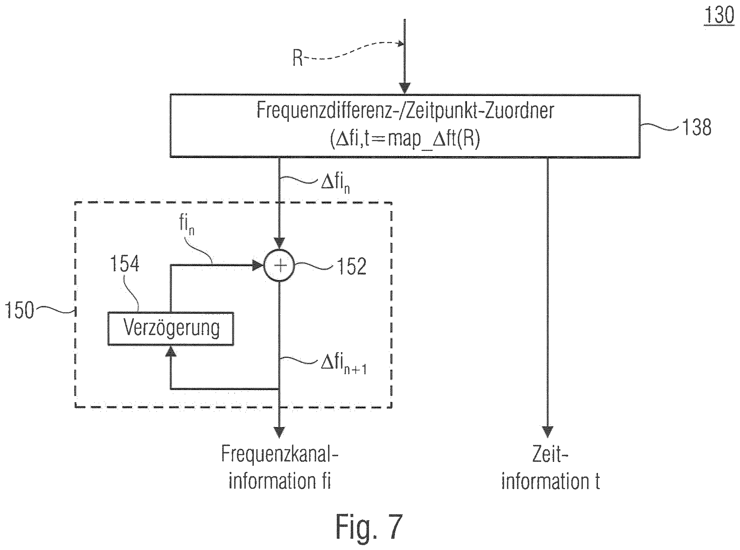

Fig. 7 zeigt ein schematisches Blockschaltbild eines Ausschnitts des Controllers 130, gemäß einem Ausführungsbeispiel. Wie in Fig. 7 zu erkennen ist, kann der Frequenz-/Zeitpunkt-Zuordner 138 (siehe Fig. 5 oder 6) ausgebildet sein, um basierend auf der Pseudozufallszahl R eine Frequenzinformation und eine Zeitinformation zu ermitteln, wobei die Frequenzinformation einen Abstand $\Delta fi_n$ zwischen zwei aufeinanderfolgenden Frequenzkanälen angibt.

Wie in Fig. 7 ferner zu erkennen ist, kann der Controller 130 einen Abbilder 150 aufweisen, der ausgebildet sein kann, um den Abstand $\Delta fi_n$ zwischen zwei aufeinanderfolgenden Frequenzkanälen auf einen Frequenzkanalindex fi abzubilden, beispielsweise durch einen Kombinierer (z.B. Addierer) 152 und ein Verzögerungsglied 154.

Mit anderen Worten, Fig. 7 zeigt die Erzeugung von Frequenzsprüngen mit Mindest- und oder Höchstsprungweite. In Fig. 7 ist dabei veranschaulicht, dass der Frequenz-/Zeitpunkt-Zuordner 138 von Fig. 5 oder 6 nunmehr durch einen Frequenzdifferenz-/Zeitpunkt-Zuordner 138 ersetzt ist, welcher an seinem unmittelbaren Ausgang keine absoluten Frequenzkanalindizes mehr liefert, sondern Frequenzkanalindex-Differenzen.

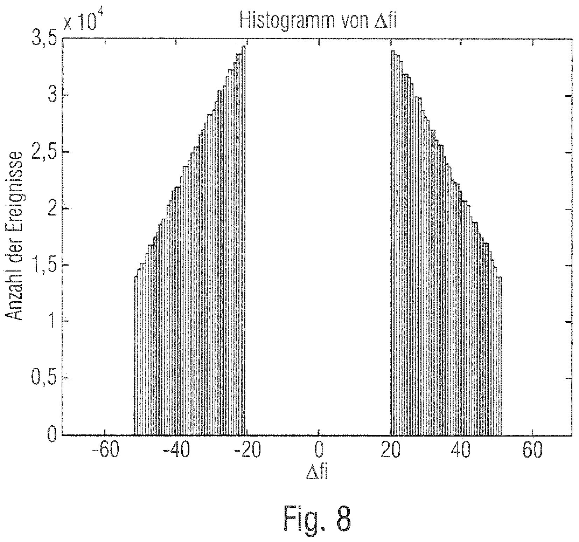

Durch eine geeignete Zuordnungsfunktion $(\Delta fi,t)=map\_\Delta ft(R)$ im Frequenzdifferenz-/Zeitpunkt-Zuordner kann sichergestellt werden, dass nur Frequenzkanalindexsprünge $\Delta fi_n=fi_{n+1}-fi_n$ (von Kanalzugriff n zu Kanalzugriff n+1) erfolgen, welche z.B. innerhalb eines gewünschten Bereichs liegen, z.B. $\Delta fi_{max} \geq \Delta fi \geq \Delta fi_{min}$ für $\Delta fi>0$ und $\Delta fi_{max} \geq (-\Delta fi) \geq \Delta fi_{min}$ für $\Delta fi<0$. Für die Implementierung einer solchen Beschränkung gibt es zahlreiche Verfahren, welche selbst nicht Gegenstand der Erfindung sind. Eine beispielhafte Implementierung in Form eines entsprechenden Programmcodes für MATLAB (mit welchem Fig. 8 erzeugt wurde) findet sich im Anhang.

Fig. 8 zeigt in einem Diagramm ein auf einer Monte-Carlo-Simulation beruhendes Histogramm über die Variable $\Delta fi$ (Differenz des Frequenzkanalindex $\Delta fi$ zwischen zeitl. benachbarten Kanalzugriffen).

Im dargestellten Beispiel stehen 72 Frequenzkanäle zur Verfügung. Die den Simulationsergebnissen zugehörigen Parameter sind $\Delta fi_{min}=21$, $\Delta fi_{max}=51$, d.h. der Betrag des Abstands zwischen zwei im Kanalzugriffsmuster aufeinanderfolgenden Zugriffen beträgt zwischen 21 und 51 Frequenzkanälen.

Durch geeignete, sich dem Fachmann leicht erschließende Modifikationen des beispielhaften Programmcodes lassen sich andere Verteilungsformen für $\Delta fi$ erzeugen (z.B. Gleichverteilung im Bereich von $-\Delta fi_{min}$ bis $-\Delta fi_{max}$ bzw. $+\Delta fi_{min}$ bis $+\Delta fi_{max}$) als in Fig. 8 gezeigt.

### A.3. Vorgabe der zeitlichen Kanalzugriffsaktivität

In einem hoch ausgelasteten System können alle verfügbaren Zeitschlitze in das Kanalzugriffsmuster mit aufgenommen werden. In weniger stark ausgelasteten Systemen muss nicht jeder Zeitschlitz für den Kanalzugriff zur Verfügung stehen. Dies ist in der folgenden Abbildung dargestellt.

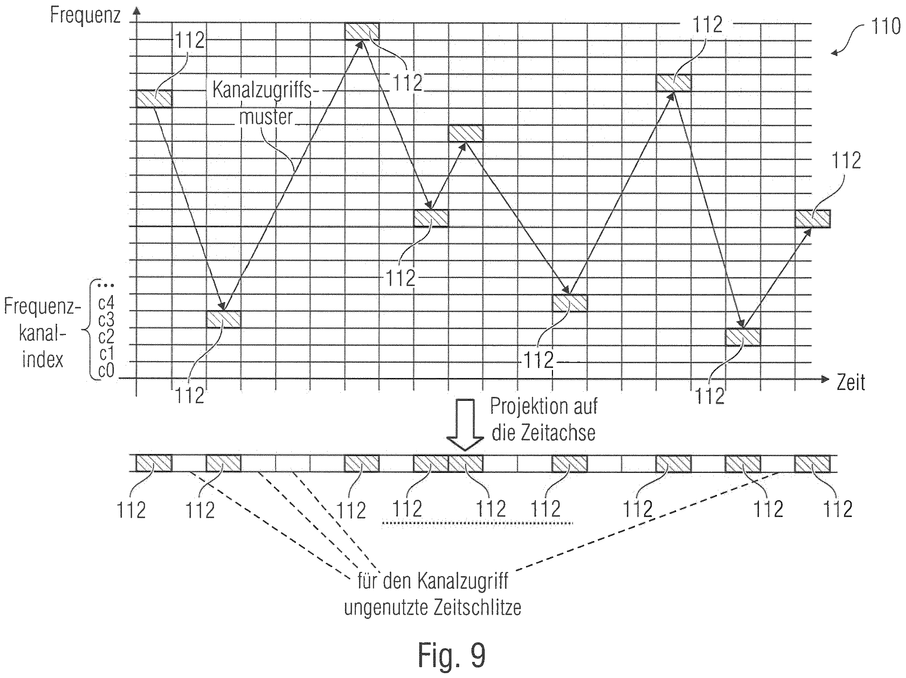

Fig. 9 zeigt in einem Diagramm eine durch ein Kanalzugriffsmuster 110 definierte frequenz- und zeitsprungbasierte Belegung der Ressourcen 112 des Frequenzbands sowie eine Projektion des Kanalzugriffsmusters 110 auf eine Zeitachse, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 9 zeigt im oberen Teil beispielhaft ein Kanalzugriffsmuster 110 in den Dimensionen Frequenz und Zeit (Ressourcenelemente 112) sowie im unteren Teil dessen Projektion auf die Zeitdimension. Es ist zu erkennen, dass nicht jeder Zeitschlitz Teil des Kanalzugriffsmusters 110 ist.

Damit steht für die Erzeugung eines pseudozufälligen Kanalzugriffsmusters 110 neben der Dimension Frequenz (in Form des Frequenzkanalindex) zusätzlich die Dimension Zeit (in Form des Zeitschlitzindex) zur Verfügung. Bei der Erzeugung eines Kanalzugriffsmusters kann somit eine mittlere Aktivitätsrate A vorgegeben werden. Diese sei hier definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen im Mittel nur jeder dritte Zeitschlitz ins Kanalzugriffsmuster aufgenommen, so beträgt die mittlere Aktivitätsrate A=1/3.

Die Aktivitätsrate bestimmt also die (zeitliche) Dichte der im Kanalzugriffsmuster 110 angebotenen Ressourcen 112.

Bei Ausführungsbeispielen können die zu einer vorgegebenen Aktivitätsrate für den Kanalzugriff ausgewählten Zeitschlitze pseudozufällig aus einem geeigneten Teil der Pseudozufallszahl R (siehe Fig. 5 oder 6) bestimmt werden.

Ausführungsbeispiel 1

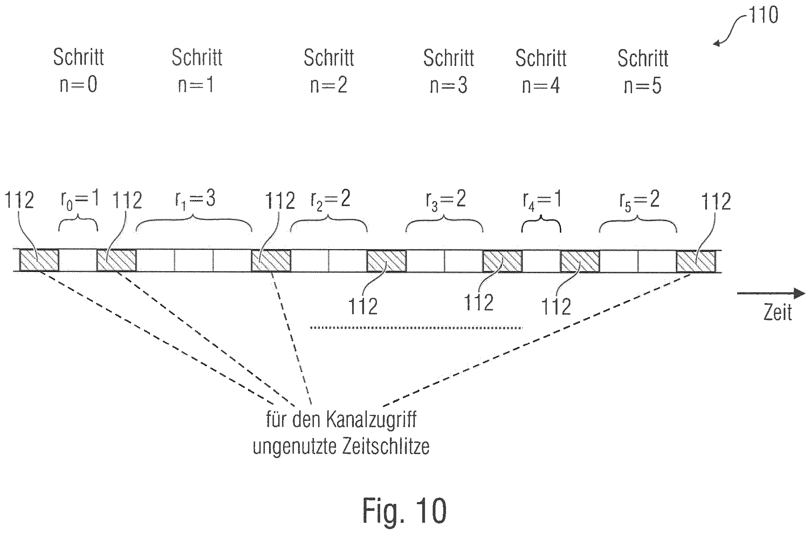

In jedem Schritt n kann aus der zugehörigen Pseudozufallszahl $R_n$ eine ganze Zahl $r_n$ abgeleitet werden, die Werte zwischen $r_{min}$ und $r_{max}$ annehmen kann, d.h. $r_{min} \leq r_n \leq r_{max}$. Nach jedem im Kanalzugriffsmuster 110 aktiven Zeitschlitz kann eine Anzahl von $r_n$ Zeitschlitzen übersprungen werden, diese werden somit nicht für den Kanalzugriff verwendet. Dieser Vorgang ist exemplarisch in Fig. 10 dargestellt.

Im Detail zeigt Fig. 10 in einem Diagramm auf eine Zeitachse projizierte Ressourcenelemente 112 eines Kanalzugriffsmusters 110, die in ungenutzten Zeitschlitzen resultiert, gemäß einem Ausführungsbeispiel.

Mit anderen Worten, Fig. 10 zeigt eine beispielhafte Abfolge von genutzten und ungenutzten Zeitschlitzen, gemäß einem Ausführungsbeispiel.

Wird die Zahl r aus der Zahl R dergestalt abgeleitet, dass die Elemente von r zwischen $r_{min}$ und $r_{max}$ mit gleicher Häufigkeit auftreten (Gleichverteilung), so ergibt sich folgende Aktivitätsrate:

$$A = 2/(2 + r_{min} + r_{max}).$$

Das im obigen Ausführungsbeispiel vorgestellte Verfahren hat den Vorteil, dass Mindest- und Höchstabstände zwischen den im Kanalzugriffsmuster 110 aktiven Zeitschlitzen vorgegeben werden können. Die Vorgabe von Mindestabständen kann insbesondere bei batteriebetriebenen Geräten vorteilhaft sein, bei denen Sendepausen einer gewissen Mindestlänge zwischen zwei aufeinanderfolgenden Aussendungen (Erholungsphase) die Batterielebensdauer erhöhen.

In vergleichbarer Vorgehensweise lässt sich vorgeben, dass eine Mindestzahl von aktiven Zeitschlitzen direkt aufeinander folgt.

Ausführungsbeispiel 2

Bei einer Implementierung gemäß Ausführungsbeispiel 1 können theoretisch längere Bereiche mit lokal deutlich höherer oder niedrigerer Aktivitätsrate als gewünscht vorkommen. Dieser Effekt wird in dem folgenden Ausführungsbeispiel vermieden.

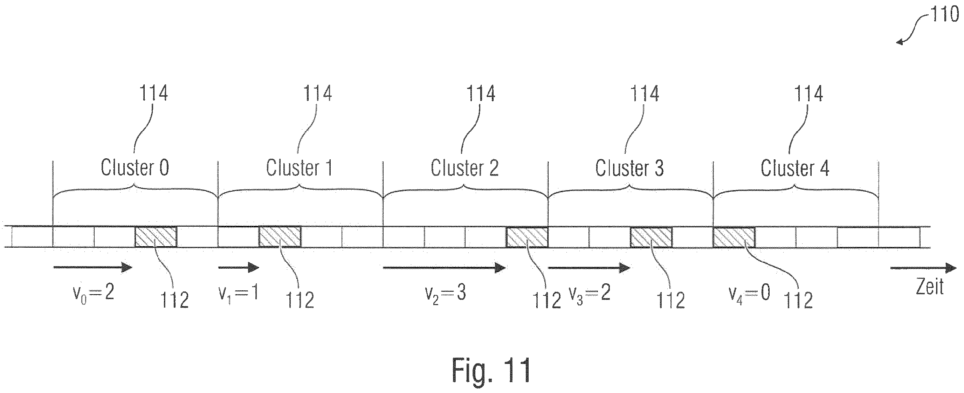

Hierbei werden periodisch Gruppen von aufeinanderfolgenden Zeitschlitzen vorgegeben, innerhalb welcher jeweils ein aktiver Zeitschlitz des Kanalzugriffsmusters platziert wird. Dies ist für eine Aktivitätsrate von 1/4 (25%) in Fig. 11 exemplarisch dargestellt.

Im Detail zeigt Fig. 11 in einem Diagramm auf eine Zeitachse projizierte Ressourcenelemente 112 eines Kanalzugriffsmusters 110 mit einer Aktivitätsrate A=1/4, gemäß einem Ausführungsbeispiel.

Mit anderen Worten, Fig. 11 zeigt eine beispielhafte Abfolge von genutzten und ungenutzten Zeitschlitzen, gemäß einem Ausführungsbeispiel.

Wie in Fig. 11 zu erkennen ist, können die Zeitschlitze zu Clustern 114 (im Beispiel von Fig. 11 der Länge 4) gruppiert werden. In jedem Cluster 114 wird genau ein Zeitschlitz des Kanalzugriffsmusters 110 platziert. Die Position der ins Kanalzugriffsmuster 110 aufgenommenen Zeitschlitze innerhalb des Clusters 114 kann durch eine Verschiebung $v_n$ bestimmt werden, welche von der Pseudozufallszahl $R_n$ abgeleitet und die ganzzahlige Werte zwischen 0 und (Clusterlänge-1) annehmen kann.

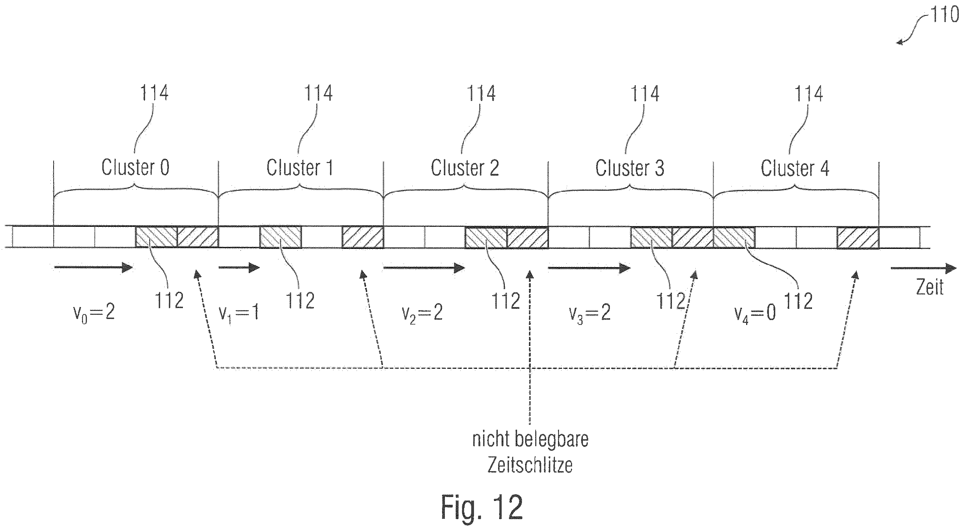

Für den Fall, dass ein Mindestabstand zwischen zwei aufeinanderfolgenden Zeitschlitzen des Kanalzugriffsmusters 110 gewährleistet werden soll, können zwischen den Clustern 114 nicht belegbare Bereiche eingebracht werden. Diese können aus einem oder mehreren Zeitschlitzen bestehen, wie dies in Fig. 12 veranschaulicht ist.

Im Detail zeigt Fig. 12 in einem Diagramm auf eine Zeitachse projizierte Ressourcenelemente 112 eines Kanalzugriffsmusters 110 mit einer Aktivitätsrate A=1/4 und einem vorgegebenen Mindestabstand zwischen aufeinander folgenden Zeitschlitzen des Kanalzugriffsmusters 110, gemäß einem Ausführungsbeispiel.

Mit anderen Worten, Fig. 12 zeigt eine beispielhafte Abfolge von genutzten und ungenutzten Zeitschlitzen mit nicht belegbaren Zeitschlitzen, gemäß einem Ausführungsbeispiel.

Wie in Fig. 12 zu erkennen ist, verringert sich aufgrund der nicht belegbaren Zeitschlitze der zulässige Bereich der Verschiebungsvariablen $v_n$ auf den Wertebereich von 0 bis (Clusterlänge-1-Länge des nicht belegbaren Bereichs).

Je nach gewählter Aktivitätsrate kann es sein, dass die Cluster 114 unterschiedliche Längen aufweisen müssen, um die gewünschte Aktivitätsrate zu erzielen. In diesem Fall variiert der Wertebereich von $v_n$ entsprechend der jeweiligen Clusterlänge. Um z.B. eine Aktivitätsrate von 40% einzustellen, können sich Cluster der Länge zwei und der Länge drei abwechseln.

**A.4. Kanalzugriffsmuster mit Bereichen unterschiedlicher Aktivitätsrate**

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate im Kanalzugriffsmuster.

Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate im Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

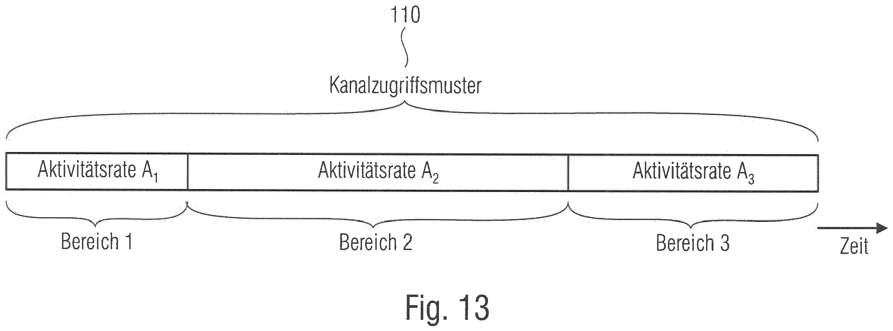

Wie oben dargestellt, kann durch geeignete Maßnahmen die Aktivitätsrate, d.h. die Frequenz des Kanalzugriffs, vorgegeben werden. Um in einem Netzwerk den ggf. unterschiedlichen Anforderungen gerecht zu werden, wird kann ein Kanalzugriffsmuster so gestaltet werden, dass es Bereiche mit unterschiedlichen Aktivitätsraten aufweist. Dies ist in Fig. 13 exemplarisch dargestellt. Je nach individueller Anforderung können Endgeräte dann z.B. in dem für sie geeigneten Bereich senden.

Im Detail zeigt Fig. 13 eine zeitliche Aufteilung eines Kanalzugriffsmusters 110 in Bereiche unterschiedlicher Aktivitätsrate $A_1$, $A_2$ und $A_3$, gemäß einem Ausführungsbeispiel.

Mit anderen Worten, Fig. 13 zeigt ein Beispiel für ein Kanalzugriffsmuster mit drei Bereichen unterschiedlicher Aktivitätsrate innerhalb des Kanalzugriffsmusters 110.

### A.5. Bedarfsabhängige (dynamische) Anpassung der Aktivitätsrate des Kanalzugriffsmusters

In Netzwerken (oder Kommunikationssystemen) 102 können zu unterschiedlichen Zeitpunkten unterschiedliche Lastsituationen vorliegen. Wie weiter oben ausgeführt, kann über die Gestaltung das Kanalzugriffsmusters 110 (d.h. dessen Aktivitätsrate bzw. mittlerer zeitlicher Dichte) eine Festlegung des aktiv nutzbaren Ressourcenvorrats für dieses Netzwerk erfolgen.

Das Bereitstellen eines hohen Ressourcenvorrats (hohe Aktivitätsrate) bei niedriger tatsächlicher Last kann insbesondere bei batteriebetriebenen Geräten nachteilig sein. Als Beispiel sei hier eine batteriebetriebene Basisstation (z.B. eines PAN-Netzwerks, ggf. im sog. Repeaterbetrieb), genannt, welche während aller aktiven Ressourcen des Kanalzugriffsmusters den Empfänger betreibt und damit Energie einsetzt.

Daher kann es sinnvoll sein, die mittlere Aktivitätsrate, also die zeitliche Dichte der durch das Kanalzugriffsmuster 110 angebotenen Ressourcen, den vorliegenden Lastverhältnissen dynamisch anzupassen. Wenn die Aktivitätsrate des Kanalzugriffsmusters 110 geändert ist, wird dies den Teilnehmern im Netzwerk entsprechend signalisiert, wofür z.B. das Baken-Signal (oder auch dedizierte Signalisierungsressourcen) in Frage kommt.

Befindet sich ein Endgerät 106 in einem längeren Ruhezustand (Energiesparmodus), so kann es vorkommen, dass es die während des Ruhezustands ausgesendete Signalisierungsinformation der Basisstation 104 über ein ggf. geändertes Kanalzugriffsmuster nicht erhält. In einem solchen Szenario kann es sinnvoll sein, dass ein Kanalzugriffsmuster 110 einen Mindestvorrat an (Grund-)Ressourcen bereitstellt, der jederzeit und ohne besondere Signalisierung zur Verfügung steht, sowie einen zusätzlichen Vorrat an Ressourcen, der lastabhängig hinzugefügt werden kann und einer entsprechenden Signalisierung unterliegt.

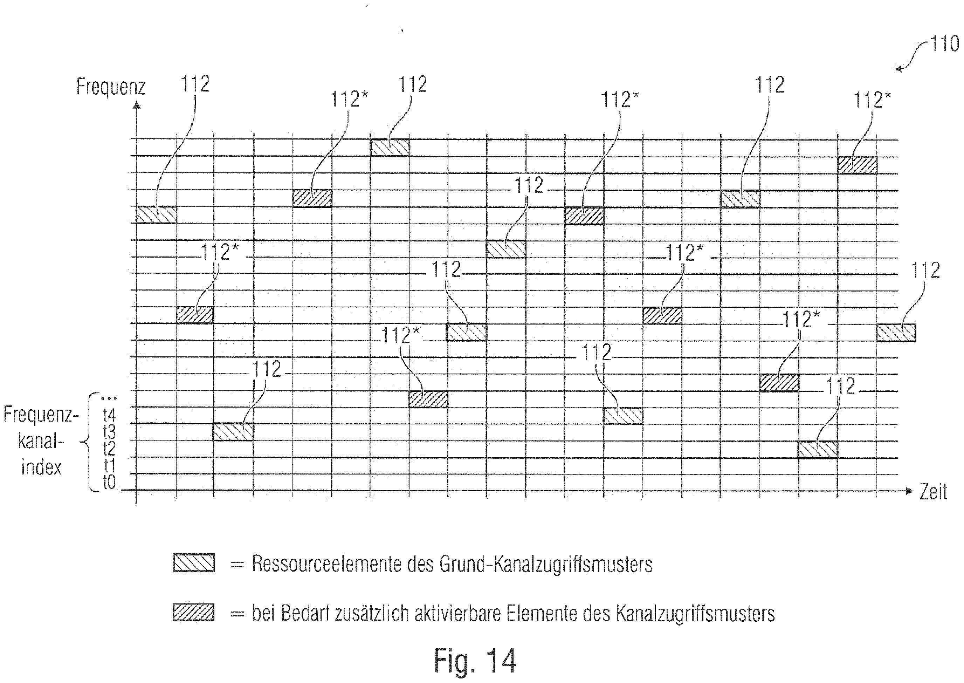

Im obigen Sinne dem Kanalzugriffsmuster zusätzlich hinzugefügte Ressourcen können z.B. zeitlich nach den Grundressourcen angeordnet sein oder auch mit diesen verschränkt im Zeit-/Frequenzraster angeordnet sein, wie dies in Fig. 14 gezeigt ist.

Im Detail zeigt Fig. 14 in einem Diagramm eine durch ein Kanalzugriffsmuster 110 definierte frequenz- und zeitsprungbasierte Belegungen der Ressourcen 112 des Frequenzbands, wobei das Kanalzugriffsmuster 110 zusätzlich bei Bedarf aktivierbare Ressourcen 112* aufweist, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 14 zeigt ein Beispiel für verschränkte Grund- und Zusatzressourcen.

### A.6. Adaptive Frequenzbereichsbelegung

In bestimmten unlizenzierten Frequenzbändern können Nutzer ohne regulatorische Einschränkungen ggf. selbst entscheiden, welche Frequenzbereiche sie innerhalb des Frequenzbands nutzen. Dies kann dazu führen, dass bestimmte Bereiche des zur Verfügung stehenden Frequenzbands stärker durch externe Nutzer belegt werden als andere und somit stärkeren Störungen ausgesetzt sind.

Wenn eine Basisstation 104 eine solche mittel- oder langfristige asymmetrische Auslastung des Frequenzbands feststellt (z.B. durch frequenzkanalweise Signal-zu-Störleistungs-Schätzungen auf Basis empfangener Signale), kann der überdurchschnittlich stark belegte Bereich des Frequenzbands für die Nutzung durch das eigene Netzwerk gemieden werden, indem die zugehörigen Frequenzkanäle nicht in das Kanalzugriffsmuster mit aufgenommen werden. Dies ist im Frequenz-/Zeitpunkt-Zuordner (siehe Fig. 5 oder 6) zu berücksichtigen und wird allen Netzwerkteilnehmern in geeigneter Weise signalisiert.

Die Gruppe der ausgeklammerten Frequenzkanäle kann z.B. durch einen entsprechenden Start- und Endfrequenzkanalindex oder durch einen Startfrequenzkanalindex und eine folgende Kanalanzahl beschrieben werden.

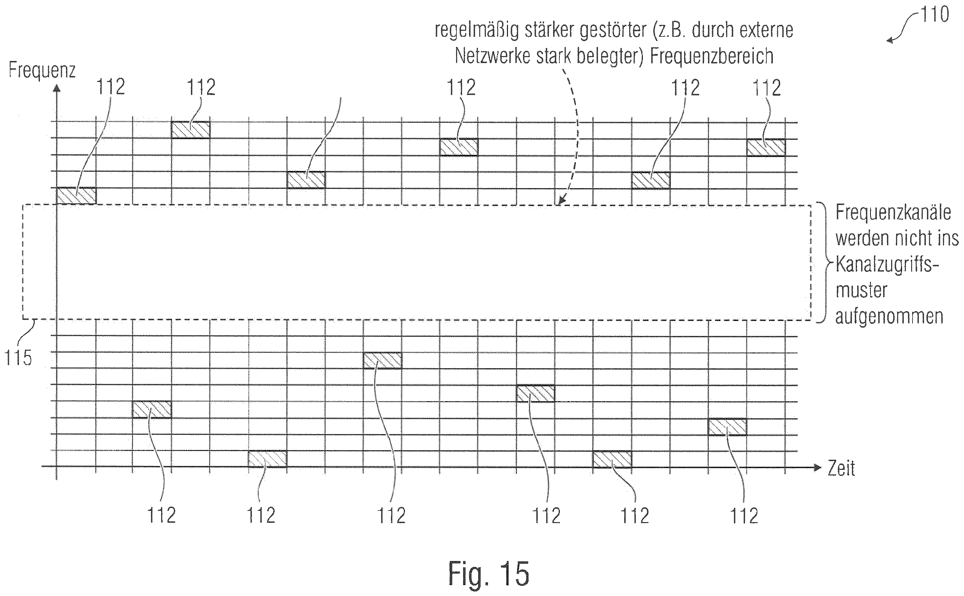

Fig. 15 zeigt in einem Diagramm eine durch ein Kanalzugriffsmuster 110 definierte frequenz- und zeitsprungbasierte Belegungen der Ressourcen 112 des Frequenzbands, wobei ein regelmäßig stärker gestörter Frequenzbereich 115 des Frequenzbands nicht durch das Kanalzugriffsmuster 110 belegt wird, gemäß einem Ausführungsbeispiel der vorliegenden Erfindung. Dabei beschreibt die Ordinate die Frequenzkanalindizes und die Abszisse die Zeitschlitzindizes.

Wie in Fig. 15 zu erkennen ist, wird bei der Erzeugung des Kanalzugriffsmusters 110 ein regelmäßig stärker gestörter (z.B. durch externe Netzwerke stark belegter) Frequenzbereich 115 berücksichtigt. Frequenzkanäle dieses Frequenzbereichs 115 werden somit nicht ins Kanalzugriffsmuster 110 aufgenommen.

Mit anderen Worten, Fig. 15 zeigt ein Beispiel für Ausklammerung stark gestörter Frequenzkanäle aus dem Kanalzugriffsmuster.

Mit der Meidung von störanfälligen Frequenzbereichen für die Datenübertragung im eigenen Netzwerk erfolgt gleichzeitig ein gewisser Lastausgleich über das Frequenzband, indem andere Netzwerke in den bereits stark ausgelasteten Frequenzbereichen keine zusätzlichen Störungen erfahren.

## A.7. Bündelung von Ressourcenelementen im Frequenzbereich (Frequenzkanalbündelung)

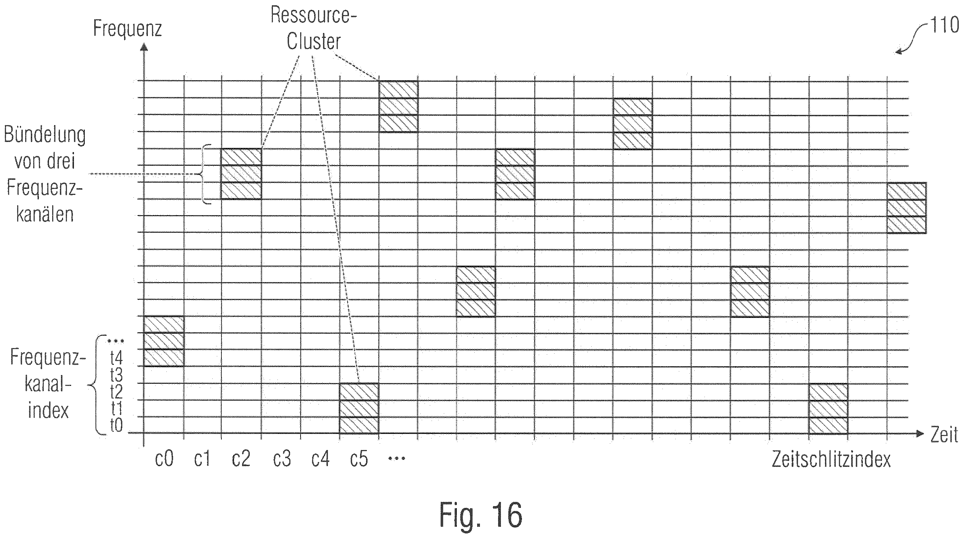

Je nach eingesetzter Hard- und Software ist es möglich, dass eine Basisstation 104 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourceelemente in der Frequenzdimension entsprechend zu erhöhen und mehrere Frequenzkanäle innerhalb eines Zeitschlitzes in das Kanalzugriffsmuster aufzunehmen, wie dies in Fig. 16 gezeigt ist.

Im Detail zeigt Fig. 16 in einem Diagramm eine durch ein Kanalzugriffsmuster 110 definierte frequenz- und zeitsprungbasierte Belegungen der Ressourcen 112 des Frequenzbands, wobei Ressourcen 112 im Frequenzbereich gebündelt werden, gemäß einem Ausführungsbeispiel. Dabei beschreibt die Ordinate die Frequenzkanalindizes und die Abszisse die Zeitschlitzindizes.

Mit anderen Worten, Fig. 16 zeigt eine beispielhafte Darstellung des Kanalzugriffsmusters 110 bei Bündelung von je drei benachbarten Frequenzkanälen zu Ressourcen-Clustern. Dabei wird in Fig. 16 beispielhaft die Bündelung von jeweils drei Frequenzkanälen dargestellt. Jede Gruppe von Ressource-Elementen eines Zeitschlitzes kann dabei als "Ressource-Cluster" bezeichnet werden. Das Kanalzugriffsmuster 110 kann hierbei ergänzt werden um die Information über die Anzahl der Frequenzkanäle, die ein Ressource-Cluster konstituieren.

Als weiteres Ausführungsbeispiel sei erwähnt, dass die zu Ressource-Clustern gruppierten Frequenzkanäle nicht notwendigerweise unmittelbar benachbart sein müssen.

Im Folgenden wird aufgezeigt, wie ein oder mehrere Teilnehmer eines Kommunikationssystems 102 unter Verwendung eines relativen Kanalzugriffsmusters auf eine Auswahl der durch das netzwerkspezifische Kanalzugriffsmuster 110 für das Kommunikationssystem 102 freigegebene Ressourcen zugreifen können.

## B. Kanalzugriff über relative Kanalzugriffsmuster

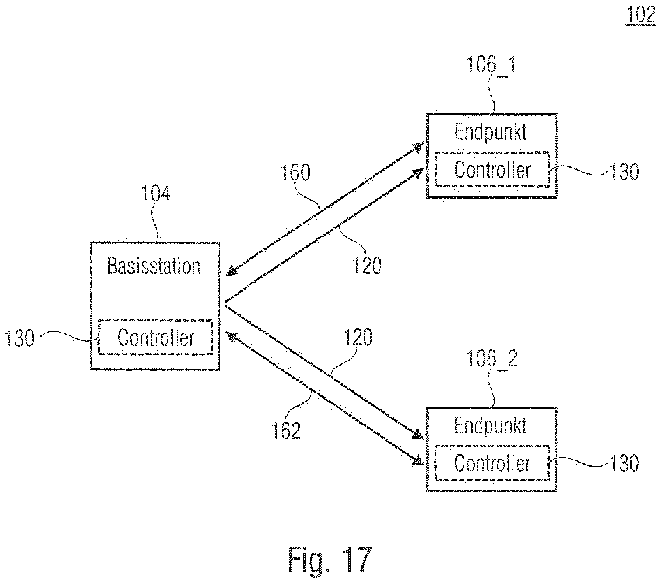

Fig. 17 zeigt ein schematisches Blockschaltbild eines Kommunikationssystems 102 mit einer Basisstation 104 und zwei Endpunkten 106_1-106_2, gemäß einem Ausführungsbeispiel der vorliegenden Erfindung.

Das in Fig. 17 gezeigte Kommunikationssystem 102 weist beispielhaft eine Basisstation 104 und zwei Endpunkte 106_1-106_2 auf. Die vorliegende Erfindung ist jedoch nicht auf solche Ausführungsbeispiele beschränkt, vielmehr kann das Kommunikationssystem 102 ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Wie dies oben bereits ausführlich erläutert wurde (vgl. z.B. Fig. 4) nutzen die Teilnehmer (= Basisstation 104 und Endpunkte 106_1-106_2) des Kommunikationssystems zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird. Das Kommunikationssystem 102 arbeitet dabei unkoordiniert in Bezug auf die anderen Kommunikationssysteme, die das gleiche Frequenzband nutzen.

Wie dies ebenfalls oben detailliert dargelegt wurde, ist die Basisstation 104 ausgebildet, um ein Signal 120 zu senden, wobei das Signal 120 eine Information über ein netzwerkspezifisches Kanalzugriffsmuster 110 aufweist, wobei das netzwerkspezifische Kanalzugriffsmuster 110 eine für die Kommunikation des Kommunikationssystems 102 verwendbare frequenz- und/oder zeitsprungbasierte Belegung von Ressourcen des Frequenzbands angibt, während die Endpunkte 106_1-106_2 ausgebildet sind, um das Signal 120 zu empfangen und um basierend auf der Information über das netzwerkspezifische Kanalzugriffsmuster das netzwerkspezifische Kanalzugriffsmuster 110 zu ermitteln (siehe z.B. Fig. 5 und 6).

Zur gegenseitigen Kommunikation, d.h. zur gegenseitigen Übertragung von Daten, können die Teilnehmer (z.B. Basisstation 104 und Endpunkt 106_1) des Kommunikationssystems 102 ein relatives Kanalzugriffsmuster verwenden, welches angibt, welche der durch das netzwerkspezifische Kanalzugriffsmuster 110 für die Kommunikation des Kommunikationssystems 102 freigegebenen oder verwendbaren Ressourcen tatsächlich für die Übertragung der Daten zu verwenden sind.

Im Detail kann die Basisstation 104 bei Ausführungsbeispielen ausgebildet sein, um Daten 160 (z.B. ein Signal mit den Daten 160) unter Verwendung von einem relativen Kanalzugriffsmuster zu übertragen (z.B. zu dem Endpunkt 106_1 zu senden und/oder von dem Endpunkt 106_1 zu empfangen), wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters 110 angibt.

Bei Ausführungsbeispielen kann der Endpunkt 106_1 ausgebildet sein, um Daten 160 (z.B. ein Signal mit den Daten 160) unter Verwendung von dem relativen Kanalzugriffsmuster zu übertragen (z.B. von der Basisstation zu empfangen und/oder zu der Basisstation 104 zu senden), wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann zur gegenseitigen Kommunikation zwischen anderen Teilnehmern (z.B. Basisstation 104 und Endpunkt 106_2) des Kommunikationssystems 102 ein anderes relatives Kanalzugriffsmuster verwendet werden, welches angibt, welche der durch das netzwerkspezifische Kanalzugriffsmuster 110 für die Kommunikation des Kommunikationssystems 102 freigegebenen oder verwendbaren Ressourcen tatsächlich für die Übertragung der Daten zu verwenden sind, wobei das relative Kanalzugriffsmuster (z.B. von Endpunkt 106_1) und das andere relative Kanalzugriffsmuster (z.B. von Endpunkt 106_2) unterschiedlich sind.

Beispielsweise kann die die Basisstation 104 bei Ausführungsbeispielen ferner ausgebildet sein, um Daten 162 (z.B. ein Signal mit den Daten 162) unter Verwendung von einem anderen relativen Kanalzugriffsmuster zu übertragen (z.B. zu dem anderen Endpunkt 106_2 zu senden und/oder von dem anderen Endpunkt 106_2 zu empfangen), wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt, wobei das relative Kanalzugriffsmuster und das andere relative Kanalzugriffsmuster unterschiedlich sind.

Der andere Endpunkt 106_2 kann ausgebildet sein, um Daten 162 (z.B. ein Signal mit den Daten 162) unter Verwendung von dem anderen relativen Kanalzugriffsmuster zu übertragen (z.B. von der Basisstation 104 zu empfangen und/oder zu der Basisstation 104 zu senden), wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt, wobei das relative Kanalzugriffsmuster und das andere relative Kanalzugriffsmuster unterschiedlich sind.

Im Folgenden werden Ausführungsbeispiele der Anwendung und Erzeugung von relativen Kanalzugriffsmustern beschrieben. Die relativen Kanalzugriffsmuster können hierbei von den Teilnehmern (z.B. der Basisstation 104 und zumindest einem der Endpunkte 106_1-106_2) ermittelt werden, beispielsweise durch den Controller 130, der in den Teilnehmern implementiert ist.

Die folgenden Ausführungsbeispiele nehmen dabei Bezug auf die in Abschnitt A beschriebenen Ausführungsbeispiele, welche bei Koexistenz mehrerer untereinander unkoordinierter Funknetzwerke (z.B. LPWAN, PAN) in wechselseitiger Empfangsreichweite der Zugriff auf ein gemeinsam genutztes Frequenzband so gestalten, dass die netzwerkübergreifenden, wechselseitigen Störungen der Teilnehmer bzw. deren nachteilige Auswirkungen auf die Übertragungssicherheit reduziert oder sogar minimiert werden.

Dabei wird in der folgenden Beschreibung von einer Kommunikationsanordnung von untereinander unkoordinierten Funknetzwerken zur Datenübertragung ausgegangen, die auf ein gemeinsam genutztes Frequenzband zugreifen. Bei manchen Ausführungsbeispielen wird vorausgesetzt, dass bei der Datenübertragung das sog. Telegram Splitting Multiple Access (TSMA) Verfahren zum Einsatz kommt, wie es z.B. in [1] beschrieben ist. Hierbei wird ein mittels Kanalkodierung geschütztes Datenpaket in mehrere Teil-Datenpakete aufgeteilt, welche in mehreren unterschiedlichen Zeit-und/oder Frequenzressourcen übertragen werden.

Ferner wird bei manchen Ausführungsbeispielen vorausgesetzt, dass es innerhalb jedes Netzwerks eine koordinierende Instanz gibt (im Folgenden "Basisstation" genannt, im Rahmen des IEEE Standards [2] "PAN coordinator" genannt), welche den nichtkoordinierenden Teilnehmern des Netzwerks (im Folgenden "Endgeräte" oder "Endpunkte" genannt) Information über das innerhalb des Netzwerks angewandte Kanalzugriffsmuster übermitteln kann. Die oben beschriebenen Kanalzugriffsmuster (siehe Abschnitt A) definieren einen Satz von Funkressourcen (Ressourceelementen), die für eine Übertragung innerhalb eines Netzwerks für einen bestimmten Zeitraum grundsätzlich zur Verfügung stehen. Sie definieren somit das (für den betrachteten Zeitraum gültige) von der Basisstation festgelegte Angebot an Ressourcen, auf welches die Endgeräte zugreifen können.

Bei Kanalzugriffsverfahren wird grundsätzlich zwischen einem "konkurrenzfreien Zugriff" (engl. contention free access) und einem "konkurrenzbasierten Zugriff" (engl. contention based access) unterschieden. Im konkurrenzfreien Zugriff werden einem Endgerät von der koordinierenden Instanz (Basisstation) eindeutig spezifizierte Funkressourcen zur exklusiven Verwendung zugewiesen. Beim konkurrenzbasierten Zugriff - auf welchen sich Ausführungsbeispiele beziehen - steht dem Endgerät ein Angebot an Funkressourcen zur Verfügung, aus welchem sich das Endgerät bei Bedarf eigeninitiativ, d.h. ohne individuelle Ressourcenzuteilung, bedient. Kennzeichnend ist hierbei, dass auch andere Endgeräte auf dasselbe Angebot zurückgreifen können, sodass es zu Konflikten im Zugriff auf die gemeinsam genutzten Funkressourcen kommen kann. Ziel ist es, diese Konflikte möglichst zu reduzieren oder sogar vermeiden.

Ausführungsbeispiele befassen sich somit mit Techniken, die die Verteilung der vorhandenen Ressourcen (welche von der Basisstation festgelegt worden) möglichst effektiv gestaltet, so dass die Störungen zwischen den Teilnehmern innerhalb des Netzwerks reduziert oder sogar minimiert werden.

Ausführungsbeispiele der vorliegenden Erfindung beziehen sich auf eine hierarchische Aufteilung des Kanalzugriffs bei Anwendung des TSMA-Verfahrens:

- Die Vorgabe eines Angebots an verfügbaren Funkressourcen durch die Basisstation in Form des netzwerkspezifischen Kanalzugriffsmusters (siehe Abschnitt A). Den Kanalzugriffsmustern kommt dabei die Aufgabe zu, den Zugriff mehrerer untereinander unkoordinierter Netzwerke auf ein gemeinsam genutztes Frequenzband so zu gestalten, dass die Teilnehmer unterschiedlicher Netzwerke sich möglichst wenig beeinträchtigen (Ziel: Trennung der Netzwerke untereinander).

- Die Auswahl und Nutzung von Funkressourcen aus dem o. g. netzwerkspezifischen Kanalzugriffsmuster ("Angebot") durch Endgeräte in Form eines relativen Kanalzugriffsmusters. Das relative Kanalzugriffsmuster steht hierarchisch unterhalb des netzwerkspezifischen Kanalzugriffsmusters und kann sich keiner Ressourcen bedienen, die außerhalb des netzwerkspezifischen Kanalzugriffsmusters liegen. Die Indizierung der Ressourcen kann daher vorteilhafterweise relativ zum netzwerkspezifischen Kanalzugriffsmuster erfolgen. Die verschiedenen relativen Kanalzugriffsmuster haben die Aufgabe, im Rahmen eines konkurrenzbasierten Zugriffs mehreren Teilnehmern innerhalb eines Netzwerks (ggf. im gleichen Zeitraum) Zugriff auf das gemeinsame Ressourcenangebot zu verschaffen, wobei sich die Teilnehmer innerhalb des Netzwerks dabei gegenseitig möglichst wenig beeinträchtigen sollen (Ziel: Trennung der Teilnehmer innerhalb eines Netzwerks).

Ausführungsbeispielen sehen vor, dass es einen sowohl der Basisstation als auch den Endgeräten des Netzwerks bekannten Vorrat an relativen Kanalzugriffsmustern gibt, aus welchem das Endgerät z.B. für jede Übertragung eines nutzt. Die Auswahl eines relativen Kanalzugriffsmusters aus dem verfügbaren Vorrat kann nach unterschiedlichen Kriterien erfolgen und wird weiter unten detaillierter beschrieben.

**B.1. Kanalzugriff über hierarchisch organisierte Kanalzugriffsmuster**

Wie oben ausgeführt wurde, beziehen sich Ausführungsbeispiele der vorliegenden Erfindung auf die hierarchische Struktur des Kanalzugriffsmusters von Netzwerk-Teilnehmern aus zwei Komponenten:

- einem netzwerkspezifischen Kanalzugriffsmuster, welches das Angebot an Funkressourcen im jeweiligen Netzwerk zum betreffenden Zeitpunkt festlegt (siehe Abschnitt A), sowie
- einem dazu relativen Kanalzugriffsmuster. Dieses legt fest, welche von den verfügbaren Ressourcen tatsächlich bei einer Datenübertragung belegt/genutzt werden.

Das aktiv genutzte relative Kanalzugriffmuster eines Netzwerkteilnehmers besteht somit aus einer Untermenge des netzwerkspezifischen Kanalzugriffsmusters.

Die Anwendung der hierin beschriebenen Ausführungsbeispiele ist besonders vorteilhaft bei Datenübertragung nach dem TSMA-Verfahren, bei welchem ein Datenpaket auf eine Anzahl von Teil-Datenpaketen aufgeteilt übertragen wird. Die folgende Darstellung geht aus Gründen der Veranschaulichung und ohne Beschränkung der Allgemeingültigkeit davon aus, dass das Frequenzband in eine Anzahl von diskreten Frequenzkanälen aufgeteilt ist sowie auch eine zeitliche Diskretisierung der Zugriffe innerhalb eines Netzwerks in Form von Zeitschlitzen (engl. (time)slots) erfolgt.

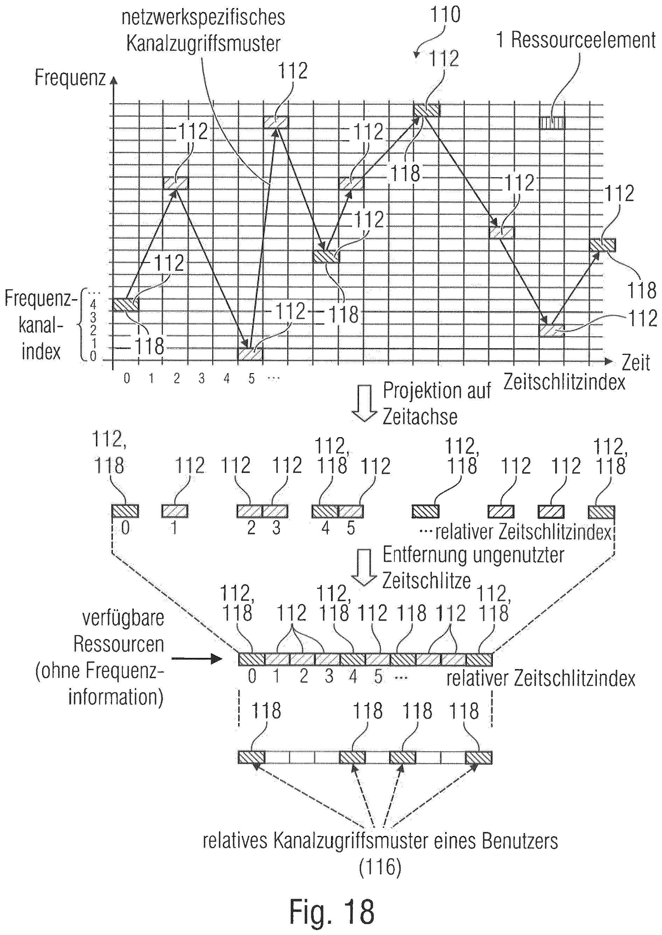

Fig. 18 zeigt in einem Diagramm eine durch ein netzwerkspezifisches Kanalzugriffsmuster 110 angegebene frequenz- und zeitsprungbasierte verwendbare Belegung von Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, sowie Projektionen der Kanalzugriffsmuster 110, 116 auf Zeitachsen vor und nach Entfernung ungenutzter Ressourcen (z.B. Zeitschlitze), gemäß einem Ausführungsbeispiel. Dabei beschreibt die Ordinate die Frequenzkanalindizes und die Abszisse die Zeitschlitzindizes.

Wie in Fig. 18 zu erkennen ist, definiert das netzwerkspezifische Kanalzugriffsmuster 110 die Verteilung der Ressourcen 112 des Frequenzbands (z.B. jeweils definiert durch Zeitschlitz und Frequenzkanal, oder Zeitschlitzindex und Frequenzkanalindex), die von dem Kommunikationssystem 102 und damit von den Teilnehmern (Basistation 104 und Endpunkte 106_1-106_2) des Kommunikationssystems 102 für die gegenseitige Kommunikation verwendet werden können, während das relative Kanalzugriffsmuster 116 diejenigen Ressourcen 118 aus den verwendbaren Ressourcen 112 angibt, die von einer Teilmenge der Teilnehmer (z.B. einer begrenzten Gruppen von Teilnehmern, z.B. von zwei Teilnehmern, wie z.B. Basistation 104 und Endpunkt 106_1) des Kommunikationssystems 102 für die gegenseitige Kommunikation tatsächlich verwendet werden.

Mit anderen Worten, Fig. 18 zeigt eine schematische beispielhafte Darstellung des netzwerkspezifischen und relativen Kanalzugriffsmusters (hierarchische Struktur des Kanalzugriffs). Dabei zeigt Fig. 18 im oberen Teil beispielhaft die Aufteilung der Funkressourcen in einem diskreten Zeit-/Frequenzraster in eine Vielzahl von Ressourcenelementen. Ein Ressourcenelement ist dabei durch einen Frequenzkanalindex sowie einen Zeitschlitzindex beschrieben. Im oberen Teil der Fig. 18 ist ein netzwerkspezifisches Kanalzugriffsmuster 110 dargestellt, welches durch Ressourcenelemente 112 hervorgehoben ist, die durch Pfeile symbolisch miteinander verbunden sind. Dieses netzwerkspezifische Kanalzugriffsmuster 110 stellt das Angebot an Ressourcenelementen 122 dar, welches von einem Netzwerk (oder Kommunikationssystem) 102 zur Verfügung gestellt wird. Eine Signalaussendung ist in diesem Beispiel in einem Zeitschlitz jeweils nur auf einem Frequenzkanal möglich.

Wird die zweidimensionale Darstellung auf die Zeitachse projiziert und werden alle im netzwerkspezifischen Kanalzugriffsmuster 110 nicht belegte Zeitschlitze entfernt, so resultieren gemäß der obigen Darstellung die "verfügbaren Ressourcen" 112. Die Zeitindizierung kann hier vorteilhafterweise durch einen relativen Zeitschlitzindex erfolgen, welcher relativ zum netzwerkspezifischen Kanalzugriffsmuster ist.

Im untersten Teil der Fig. 18 ist beispielhaft ein relatives Kanalzugriffsmuster 116 dargestellt, welches eine Teilmenge aus den verfügbaren Ressourcen (ggf. auch alle) festlegt. Das im gewählten Beispiel effektiv resultierende Kanalzugriffsmuster (d.h. die hierarchische Kombination aus netzwerkspezifischem und relativem Kanalzugriffsmuster) ist in allen Bereichen der Fig. 18 durch Ressourcenelemente 118 gekennzeichnet. Dabei lässt sich das relative Kanalzugriffsmuster mit seinem relativen Zeitschlitzindex mittels der in Abschnitt A definierten mittleren Aktivitätsrate A auf das ursprüngliche diskrete Zeitraster zurückrechnen. Diese mittlere Aktivitätsrate sei definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen, wie in Fig. 18 im oberen Teil gezeigt, im Mittel nur jeder zweite Zeitschlitz ins Kanalzugriffsmuster aufgenommen (also 10 von 20), so beträgt die mittlere Aktivitätsrate A=1/2.

### B.2. Bündelung von Ressourcenelementen im Frequenzbereich (Frequenzkanalbündelung)

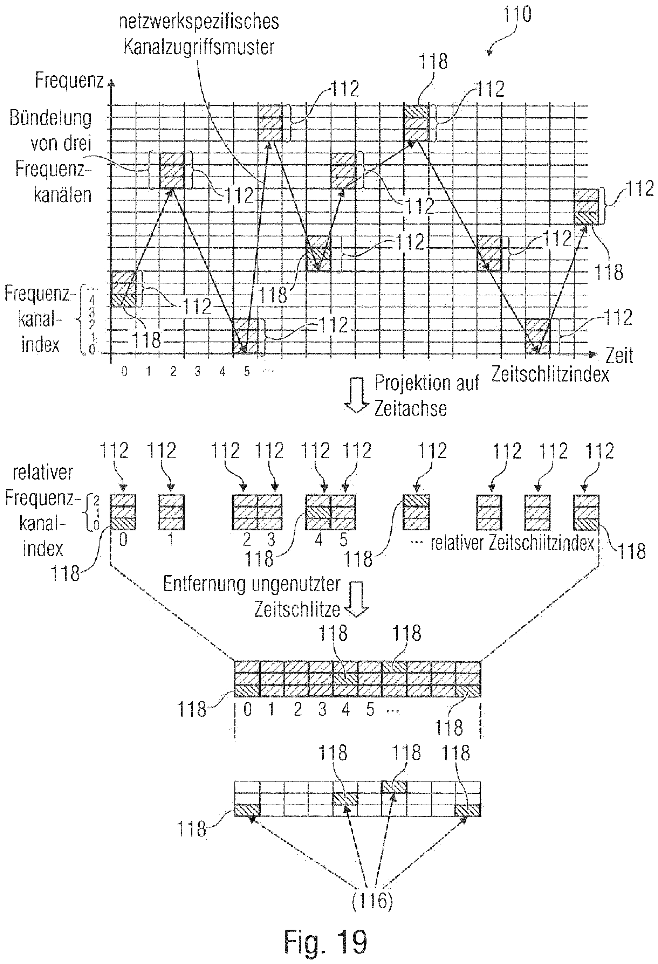

Je nach eingesetzter Hard- und Software ist es möglich, dass eine Basisstation 102 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourcenelemente in der Frequenzdimension entsprechend zu erhöhen und mehrere Frequenzkanäle innerhalb eines Zeitschlitzes in das netzwerkspezifische Kanalzugriffsmuster 110 aufzunehmen. Dies ist in Fig. 19 dargestellt.

Im Detail zeigt Fig. 19 in einem Diagramm eine durch ein netzwerkspezifisches Kanalzugriffsmuster 110 angegebene frequenz- und zeitsprungbasierte verwendbare Belegung von im Frequenzbereich gebündelten Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, sowie Projektionen der Kanalzugriffsmuster 110, 116 auf Zeitachsen vor und nach Entfernung ungenutzter Ressourcen (z.B. Zeitschlitze). Dabei beschreibt die Ordinate die Frequenzkanalindizes und die Abszisse die Zeitschlitzindizes.

Wie in Fig. 19 zu erkennen ist, gibt das netzwerkspezifische Kanalzugriffsmuster 110 in Frequenzrichtung (z.B. pro Zeitschlitz oder Zeitschlitzindex) eine Bündelung von Ressourcen 112, d.h. eine Mehrzahl von benachbarten Ressourcen 112 (z.B. Frequenzkanälen oder Frequenzkanalindizes) des Frequenzbands an, wobei das relative Kanalzugriffmuster 116 in Frequenzrichtung höchstens eine Teilmenge (z.B. höchstens eine Ressource, d.h. eine oder keine Ressource) der Mehrzahl von benachbarten Ressourcen 112 des netzwerkspezifischen Kanalzugriffsmusters 110 angibt.

Mit anderen Worten, Fig. 19 zeigt eine schematische beispielhafte Darstellung des netzwerkspezifischen Kanalzugriffmusters 110 und des relativen Kanalzugriffsmusters 116 bei lückenloser Frequenzkanalbündelung.

Dabei zeigt Fig. 19 exemplarisch eine Bündelung von drei jeweils zusammenhängenden Frequenzkanälen pro belegtem Zeitschlitz. Entsprechend steht beim relativen Kanalzugriffsmuster 116 neben der zeitlichen Dimension auch die Belegung der (im Beispiel: drei) Frequenzkanäle als Freiheitsgrad zur Verfügung.

In entsprechender, wie oben beschriebener Weise kann auch verfahren werden, wenn die innerhalb eines Zeitschlitzes verfügbaren, mehreren Frequenzkanälen nicht als (lückenlos) zusammenhängender Bereich vorliegen, sondern in anderer Weise über die verfügbaren Frequenzkanäle verteilt sind, wie dies in Fig. 20 gezeigt ist.

Fig. 20 zeigt in einem Diagramm eine durch ein netzwerkspezifisches Kanalzugriffsmuster 110 angegebene frequenz- und zeitsprungbasierte verwendbare Belegung von im Frequenzbereich voneinander beabstandeten Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, eine durch ein anderes relatives Kanalzugriffsmuster 117 angegebene für die Übertragung zu verwendende Belegung von Ressourcen 119 aus der verwendbaren Belegung von Ressourcen 112 des netzwerkspezifischen Kanalzugriffsmusters 110, sowie Projektionen der Kanalzugriffsmuster 110, 116, 117 auf Zeitachsen vor und nach Entfernung ungenutzter Zeitschlitze bzw. Frequenzkanäle, gemäß einem Ausführungsbeispiel. Dabei beschreibt die Ordinate die Frequenzkanalindizes und die Abszisse die Zeitschlitzindizes.

Wie in Fig. 20 zu erkennen ist, gibt das netzwerkspezifische Kanalzugriffsmuster 110 in Frequenzrichtung (z.B. pro Zeitschlitz oder Zeitschlitzindex) eine Bündelung von Ressourcen 112, d.h. eine Mehrzahl von voneinander beabstandeten Ressourcen 112 (z.B. Frequenzkanälen oder Frequenzkanalindizes) des Frequenzbands an, wobei das relative Kanalzugriffmuster 116 in Frequenzrichtung höchstens eine Teilmenge (z.B. höchstens eine Ressource, d.h. eine oder keine Ressource) der Mehrzahl von voneinander beabstandeten Ressourcen 112 des netzwerkspezifischen Kanalzugriffsmusters 110 angibt, und wobei das andere relative Kanalzugriffmuster 117 in Frequenzrichtung höchstens eine Teilmenge (z.B. höchstens eine Ressource, d.h. eine oder keine Ressource) der Mehrzahl von voneinander beabstandeten Ressourcen 112 des netzwerkspezifischen Kanalzugriffsmusters 110 angibt, wobei das relative Kanalzugriffsmuster 116 und das andere relative Kanalzugriffsmuster 117 unterschiedlich sind.

Mit anderen Worten, Fig. 20 zeigt eine schematische beispielhafte Darstellung des netzwerkspezifischen Kanalzugriffsmusters 110 und des relativen Kanalzugriffsmusters 116 bei lückenbehafteter Frequenzkanalbündelung.

Vorteilhaft bei dieser Frequenzkanalbündelung ist, dass wie anhand des in Fig. 20 zusätzlich gezeigten relativen Kanalzugriffsmusters 117 eines zweiten Teilnehmers (z.B. Benutzers) deutlich weniger Nachbarkanalstörung (die Kanaltrennung zweier direkt benachbarter Kanäle ist aufgrund der begrenzten Filterwirkung immer problematisch, insbesondere dann wenn der eine Kanal mit einer deutlich stärkeren Empfangsleistung wie der benachbarte Kanal empfangen wird) wie in Fig. 19 auftritt.

Der Vorteil der in den Fig. 19 und 20 beschriebenen Bündelung besteht darin, mehr Endgeräten innerhalb des Netzwerks und innerhalb eines gegebenen Zeitraums Zugriff auf die Funkressourcen zu gewähren (höhere Last). Alternativ kann bei gegebener Last durch Kanalbündelung die Wahrscheinlichkeit für Kanalzugriffskollisionen verringert werden, da ein gegebenes Zugriffsaufkommen auf mehr potentielle Ressourcenelemente verteilt wird (reduzierte wechselseitige Störungen der Teilnehmer innerhalb des Netzwerks). Vorteil der Frequenzkanalbündelung gegenüber einer Benutzung von mehr Zeitschlitzen besteht auch in mehr Energieeffizienz, da der Empfänger bei gleichem Angebot an Ressourcenelementen den Empfänger für weniger Zeitschlitze einschaltet.

Wenn ein Endgerät die Fähigkeit hat, auf mehreren Frequenzkanälen gleichzeitig zu senden, so kann dies im relativen Kanalzugriffsmuster vorgesehen werden. Dies ist in der folgenden Abbildung veranschaulicht, die sich nur auf das relative Kanalzugriffsmuster beschränkt (entsprechend dem unteren Teilen von Fig. 19 und 20).

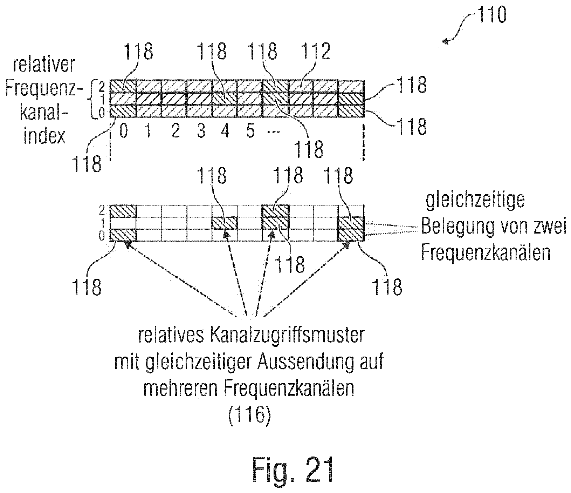

Fig. 21 zeigt in einem Diagramm eine Projektion eines netzwerkspezifischen Kanalzugriffsmusters 110 und eines relativen Kanalzugriffsmusters 116 auf die Zeitachse nach dem Entfernen ungenutzter Frequenzkanäle und Zeitschlitze, wobei das relative Kanalzugriffsmuster 116 in Frequenzrichtung für zumindest einen Teil der Zeitsprünge mehrere der in Frequenzrichtung verfügbare Ressourcen 112 belegt. Dabei beschreibt die Ordinate die relativen Frequenzkanalindizes, und die Abszisse die relativen Zeitschlitzindizes.

Mit anderen Worten, Fig. 21 zeigt in einem Diagramm ein relatives Kanalzugriffsmuster 116 bei Frequenzkanalbündelung mit gleichzeitiger Übertragung (z.B. Aussendung) auf mehreren Frequenzkanälen.

## B.3. Belegung der Ressourcen mit Kanalzugriffen in unterschiedlichen Symbolraten

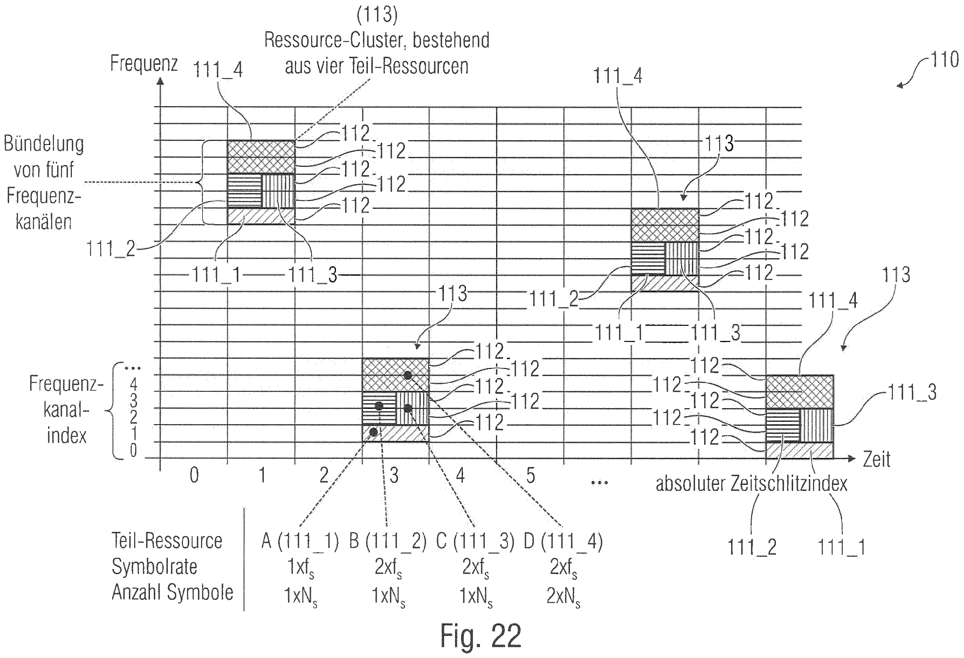

In den obigen Ausführungen wurde beispielhaft davon ausgegangen, dass das Signal auf jedem Frequenzkanal mit einer identischen Symbolrate erzeugt wird. Sollte jedoch, wie oben beschrieben, ein Bereich aus mehreren, unmittelbar benachbarten Frequenzkanälen verfügbar sein, so kann dieser im Folgenden als "Ressource-Cluster" bezeichnete Bereich in mehrere Teil-Ressourcen aufgeteilt werden. Diesen Teil-Ressourcen können unterschiedliche Symbolraten und/oder eine unterschiedliche Anzahl von Symbolen zugeordnet werden, wie dies in Fig. 22 veranschaulicht ist.

Fig. 22 zeigt in einem Diagramm eine durch ein netzwerkspezifisches Kanalzugriffsmuster 110 angegebene frequenz- und zeitsprungbasierte verwendbare Belegung von im Frequenzbereich zu Blöcken (oder Clustern) 113 gebündelten Ressourcen 112 des Frequenzbands, wobei unterschiedlichen Teilen 111_1-111_4 des Blocks 113 von zusammenhängenden Ressourcen 112 unterschiedliche Symbolraten und/oder unterschiedliche Anzahlen von Symbolen zugeordnet sind, gemäß einem Ausführungsbeispiel. Dabei beschreibt die Ordinate die Frequenzkanalindizes und die Abszisse die Zeitschlitzindizes.

Mit anderen Worten, Fig. 22 zeigt eine Bildung von Ressource-Clustern 113 mit Teil-Ressourcen 111_1-111_4 von unterschiedlicher Symbolrate und Symbolanzahl pro Zeitschlitz (Beispiel).

Dabei zeigt Fig. 22 exemplarisch einen Ausschnitt aus einem Kanalzugriffsmuster mit einer Abfolge von Ressource-Clustern 113, die durch Bündelung von je fünf Frequenzkanälen konstituiert werden. Jedes Ressource-Cluster 113 ist dabei im Beispiel in vier unabhängige Teil-Ressourcen "A" (111_1), "B" (111_2), "C" (111_3), "D" (111_4) aufgeteilt, in welchen unterschiedliche Vielfache der Symbolrate $f_s$ und der Anzahl der Symbole $N_s$ zur Anwendung kommen. Bei einer doppelten Symbolrate und gegebener Anzahl von Symbolen können z.B. aufgrund der verkürzten Symboldauer in einem Zeitschlitz zwei aufeinanderfolgende Zugriffe durch zwei unterschiedliche Teilnehmer erfolgen. Dies ist in Fig. 22 für die zeitlich aufeinanderfolgenden Teil-Ressourcen "B" (111_2) und "C" (111_3) der Fall.

Der Vorteil dieser Vorgehensweise besteht darin, dass innerhalb des netzwerkspezifischen Kanalzugriffsmusters 110 Ressourcen je nach Bedarf mit unterschiedlichen Symbolraten und damit Übertragungsbandbreiten belegt werden können.

Es ist für den Fachmann leicht ersichtlich, dass die Aufteilung von durch Frequenzkanalbündelung gebildeten Ressource-Clustern 113 in einzelne Teil-Ressourcen in vielfältiger Weise vorgenommen werden kann. Die dabei eingesetzten Symbolraten müssen dabei nicht notwendigerweise (wie im gewählten Beispiel) ganzzahlige Vielfache einer Grundsymbolrate sein. Entsprechendes gilt für die Anzahl der Symbole in den Teil-Ressourcen.

**B.4 Kriterien zur Erzeugung relativer Kanalzugriffsmuster**

Aus unterschiedlichen Übertragungsszenarien können unterschiedliche Anforderungen an das relative Kanalzugriffsmuster 116 resultieren.

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate A im netzwerkspezifischen Kanalzugriffsmuster, wie in Abschnitt A beschrieben. Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate A im netzwerkspezifischen Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

Es ist daher vorteilhaft, den Satz von verfügbaren relativen Kanalzugriffsmustern so zu gestalten, dass für unterschiedliche Szenarien bedarfsgerechte Kanalzugriffsmuster mit gewünschten Eigenschaften zur Verfügung stehen.

Die entscheidenden Designparameter für einen Satz von $K$ relativen Kanalzugriffsmustern sind

- in Frequenzrichtung die Anzahl der $F$ vorgegebenen Frequenzkanäle innerhalb eines Zeitschlitzes,
- in Zeitrichtung die Anzahl der $Z$ verfügbaren Zeitschlitze mit vorgegebener Zeitdauer $T_{RE}$, wobei pro Zeitindexelement nur ein Ressourcenelement in $Z$ eingeht,
- die aus Abschnitt A vorgegebene mittlere Aktivitätsrate $A$, mit deren Hilfe sich aus der relativen Zeitschlitzlänge eine absolute Zeitschlitzlänge $Z/A$ ergibt. Daraus kann dann bei vorgegebener Zeitdauer $T_{RE}$ eines Ressourcenelements die Gesamtframedauer $T_{Frame} = T_{RE} \cdot (Z / A)$ in Sekunden angeben werden,
- die Anzahl der $D$ Teil-Datenpakete, in die ein Datenpaket zerlegt wird, sowie der beim Datenpaket verwendete Fehlerkorrekturcode, was beispielsweise ein Block- oder Faltungscode mit vorgegebener Coderate $R$ sein kann. Üblicherweise ist die Anzahl der Teil-Datenpakete deutlich kleiner als die Anzahl der in Zeitrichtung zur Verfügung stehenden Ressourcenelemente, also $D \ll Z$.

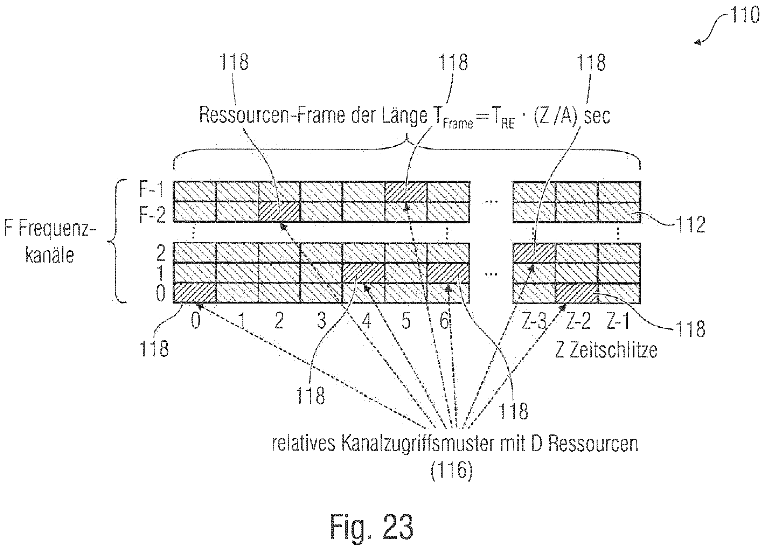

Fig. 23 zeigt in einem Diagramm eine Projektion eines netzwerkspezifischen Kanalzugriffsmusters 110 und eines relativen Kanalzugriffsmusters 116 mit D Ressourcen 112 auf die Zeitachse nach dem Entfernen ungenutzter Ressourcen (Frequenzkanäle und Zeitschlitze), gemäß einem Ausführungsbeispiel. Dabei beschreibt die Ordinate die relativen Frequenzkanalindizes, und die Abszisse die relativen Zeitschlitzindizes.

Fig. 23 zeigt dabei eine Darstellung eines Ressourcen-Frames mit $F$ x $Z$ Ressourcen und einer absoluten Gesamtlänge von $T_{RE} \cdot (Z / A)$ Sekunden.

In einem ersten Designschritt gilt es ausgehend von der Gesamtframedauer $T_{Frame}$ und der netzwerkspezifischen Aktivitätsrate A aus Abschnitt A sowie der Zeitdauer $T_{RE}$ für ein Ressourcenelement die Anzahl der verfügbaren Ressourcenelemente zu bestimmen.

Bei der Festlegung der Gesamtframedauer $T_{Frame} = T_{RE} \cdot (Z / A)$ kommt es auf den Anwendungsfall an. Bei einer Anwendung mit der Anforderung einer kurzen Latenzzeit wie beispielsweise einem drahtlosen Lichtschalter, einer Türklingel oder einem Türöffner, sollte $T_{Frame}$ nicht größer als 500 ms sein. Bei latenzunkritischen Anwendungen, bei denen mehr die Robustheit gegen externe Störer im Vordergrund steht, kann die Zeitdauer eines Ressourcen-Frames durchaus Werte von 5 bis 10 sec annehmen.

Auch die netzwerkspezifische Aktivitätsrate A aus Abschnitt A wird vom Anwendungsfall beeinflusst. Bei latenzkritischen Anwendungen sollte die Aktivitätsrate relativ hoch sein, also zwischen $A=0.33$ und 1 liegen. Bei einem Wert von 0.33 wird im Mittel nur jeder dritte Zeitschlitz ins netzwerk-spezifische Kanalzugriffsmuster 110 aufgenommen, während die 2 anderen Zeitschlitze in diesem Netzwerk nicht genutzt werden. Bei latenzunkritischen Anwendungsfällen, insbesondere bei batteriebetriebenen Endgeräten, können die Werte für die Aktivitätsrate durchaus bis auf $A=0.1$ absinken.

Schlussendlich gilt es noch die Zeitdauer $T_{RE}$ eines Teil-Datenpakets bzw. Ressourcenelements festzulegen. Bei einer Symbolrate $f_S$ von beispielsweise rund 2500 Sym/s und einer Anzahl von 30 bis 80 Symbolen pro Teil-Datenpaket ergeben sich Werte von 12 bis 32 ms für $T_{RE}$.

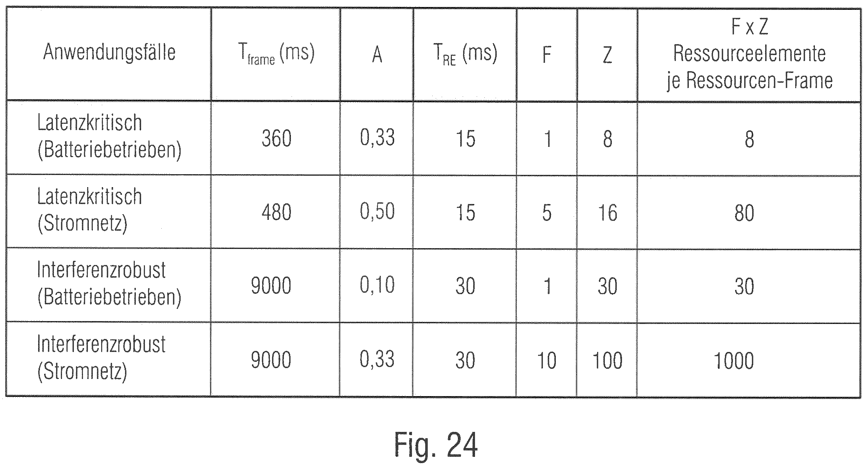

Aus den anwendungsspezifischen Vorgaben für $T_{Frame}$, $T_{RE}$ und $A$ lässt sich die Anzahl $Z$ der in Zeitrichtung zur Verfügung stehenden Ressourcen bestimmen. Zusammen mit den $F$ vorgegebenen Frequenzkanälen ergeben sich dann die insgesamt zur Verfügung stehenden Ressourcen je Ressourcen-Frame. Wie in der in Fig. 24 gezeigten Tabelle dargestellt, können sich diese Werte je nach Anwendungsfall deutlich unterscheiden.

Im Detail zeigt Fig. 24 in einer Tabelle eine Ressourcenberechnung für verschiedene exemplarische Anwendungsfälle.

Wurden anhand des ersten Design-Schrittes die Anzahl der im Ressourcen-Frame zur Verfügung stehenden $F$ x $Z$ Ressourcenelemente ermittelt, so gilt es im zweiten Design-Schritt ausgehend von der Länge $D$ eines jeden Kanalzugriffmusters sowie den zur Verfügung stehenden $F$ x $Z$ Ressourcenelementen, die Anzahl $M$ der verschiedenen Kanalzugriffsmuster zu bestimmen.

In Abhängigkeit von den $F \times Z$ zur Verfügung stehenden Ressourcenelementen gibt es

$$M_{max} = (Z! \cdot F^D) / ( (Z - D)! \cdot D! ) \qquad (1)$$

verschiedene Kanalzugriffsmuster der Länge $D$, die sich in mindestens einem Ressourcenelement unterscheiden. In Gl. (1) wurde unterstellt, dass ein Muster je Zeitschlitzindex nur ein Ressourcenelement aus allen F Frequenzkanälen nutzen darf, siehe Fig. 20. Für das erste Beispiel aus der in Fig. 24 gezeigten Tabelle und einem $D=4$ ergibt sich nach Gleichung (1) ein $M_{max}$ = 70 und für den letzten Fall ein $M_{max}$ = $8 \times 10^{46}$ bei einem unterstellten $D = 24$. Wäre eine gleichzeitige Aussendung mehrerer Teil-Datenpakete auf mehreren Frequenzkanälen erlaubt, so wie Fig. 21 gezeigt, dann würde $M_{max}$ nochmals massiv zunehmen.

Vorteilhafterweise sollte die Anzahl $D$ der Teilpakete möglichst groß gewählt werden, da dann die Robustheit gegenüber Störungen durch andere Teilnehmer, unabhängig davon, ob sie aus dem eigenen oder aus fremden Netzwerken stammen, am größten ist. Üblicherweise erfolgt bei IOT-basierter TSMA-Übertragung die Zerlegung eines Datenpakets in 10 bis 30 Teil-Datenpakete. Steht eine dieser Zahl von Teil-Datenpaketen entsprechende Übertragungszeit, wie beispielsweise bei manchen latenzkritischen Anwendungen, nicht zur Verfügung, kann der Wert von $D$ auch kleiner ausfallen.

Generell gilt, dass je größer die Anzahl $M$ der zur Verfügung stehenden Kanalzugriffmuster gewählt wird, umso geringer die Wahrscheinlichkeit einer Vollkollision ausfällt. Von einer Vollkollision wird gesprochen, wenn zwei Endgeräte zufällig beide das gleiche Kanalzugriffmuster für ihre Übertragung wählen. Stehen beispielsweise $M = 128$ verschiedene Muster zur Verfügung, so liegt die Wahrscheinlichkeit einer Vollkollision bei *0.78125% (1/128),* wenn davon ausgegangen wird, dass jedes Endgerät sein Kanalzugriffmuster zufällig aus den $M$ zur Verfügung stehenden Mustern auswählt. Bei einem $M = 1024$ sinkt diese Kollisionswahrscheinlichkeit auf 0.0977%. Im Falle einer Vollkollision kann davon ausgegangen werden, dass je nach Empfangspegelverhältnis mindestens der Datenpaketinhalt des schwächer empfangenen Endgeräts nicht mehr fehlerfrei dekodiert werden kann, bei ähnlichen bzw. gleichen Empfangspegeln können sogar die Datenpakete beider Nutzer verlustig gehen. Der Vorteil des in [1] beschriebenen Telegrammaufteilungsverfahrens besteht darin, dass durch die verschiedenen Kanalzugriffmuster immer nur einige wenige Teil-Datenpakete kollidieren, welche sich durch den verwendeten Fehlerkorrekturcode jedoch wieder rekonstruieren lassen.

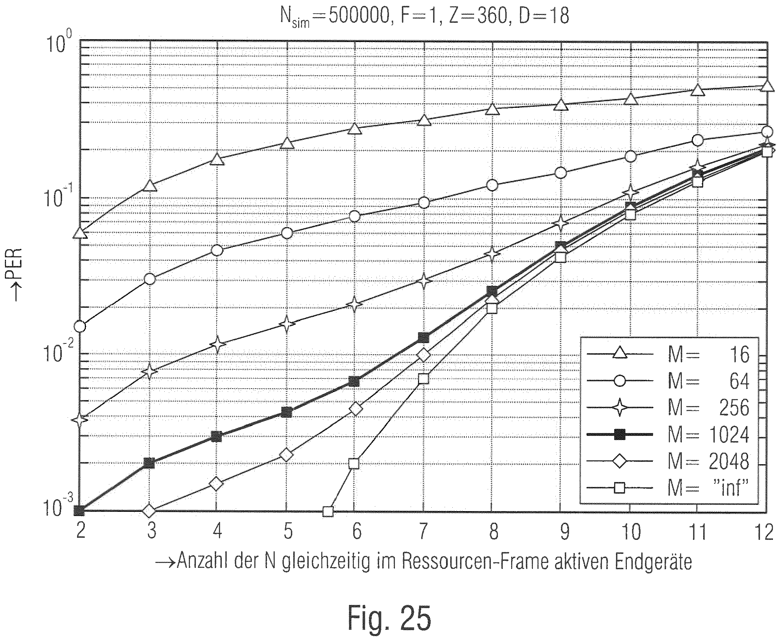

Fig. 25 zeigt in einem Diagramm Simulationsergebnisse der Paketfehlerrate für verschiedene Kanalzugriffmusterlängen $M$ in Abhängigkeit von der Anzahl gleichzeitig aktiver Endgeräte bei 360 Ressourcenelementen. Dabei beschreibt die Ordinate die Paketfehlerrate PER und die Abszisse die Anzahl der $N$ gleichzeitig im Ressourcen-Frame aktiven Endgeräte (z.B. Endpunkte).

Im Detail zeigen die Simulationsergebnisse aus Fig. 25 den Verlauf der Paketfehlerrate PER für verschiedene Längen $M$ von Kanalzugriffmustern über die Anzahl $N$ der gleichzeitig im Ressourcen-Frame aktiven Endgeräte, wobei als Fehlerschutz ein Faltungscode mit Rate $R=1/3$ verwendet wurde. Weiterhin wurden ein $F = 1$ und $Z = 360$ vorausgesetzt und die Kanalzugriffmusterlänge belief sich auf $D = 18$.

Bei $N = 2$ Endgeräten können die verschiedenen Vollkollisions-Wahrscheinlichkeiten in Abhängigkeit von $M$ erkannt werden. Je größer das vorgegebene $M$, desto niedriger liegen die Ausfallwahrscheinlichkeiten der PER-Kurven der verschiedenen Kanalzugriffmusterlängen. Bei einem $M = 1024$ werden *1024* verschiedene Kanalzugriffmuster zufällig aus den $M_{max}$ möglichen ausgewählt und die N Endgeräte (z.B. Endpunkte) wählen ihr verwendetes (relatives) Kanalzugriffmuster für die 500.000 Übertragungsversuche ebenfalls immer nach dem Zufallsprinzip aus. Bei $M =$ ‚*inf*' werden für jeden Übertragungsversuch immer neue Kanalzugriffmuster für jedes einzelne Endgerät (z.B. Endpunkt) heraus gewürfelt. Die Vollkollisions-Wahrscheinlichkeiten bei $N = 2$ ist in diesem Fall dann 0%, da nach Gl. (1) nahezu unendlich viele Kanalzugriffmuster möglich sind. Wächst die Anzahl $N$ der gleichzeitig aktiven Endgeräte, so steigt die Kollisionswahrscheinlichkeit der einzelnen Teil-Datenpakete und die Paketfehlerrate wächst dadurch an. Bei $N = 10$ Endgeraten beträgt die Paketfehlerrate für alle Kurven von $M = 256$ bis $M = ,inf'$ ungefähr 10%.

Wie aus Fig. 25 ersichtlich, liefert die Wahl von $M = ,inf'$ die beste Performance. Allerdings ist auf Seiten der Basisstation das Erkennen der verschiedenen Kanalzugriffmuster bei $M = ,inf'$ nahezu unmöglich. Insofern muss $M$ auf ein realistisches Maß reduziert werden. Für ein $M_{max} > 10^{14}$ dürfte eine Vorgabe von $M = 1024$ sinnvoll sein. Beeinflusst wird diese Wahl auch von der auf Empfängerseite zur Verfügung stehenden Rechenleistung. Es ist erkennbar, dass der Performanceverlust gegenüber der Version mit $M = ,inf'$ bei der Wahl von $M = 1024$ nicht besonders groß ist.

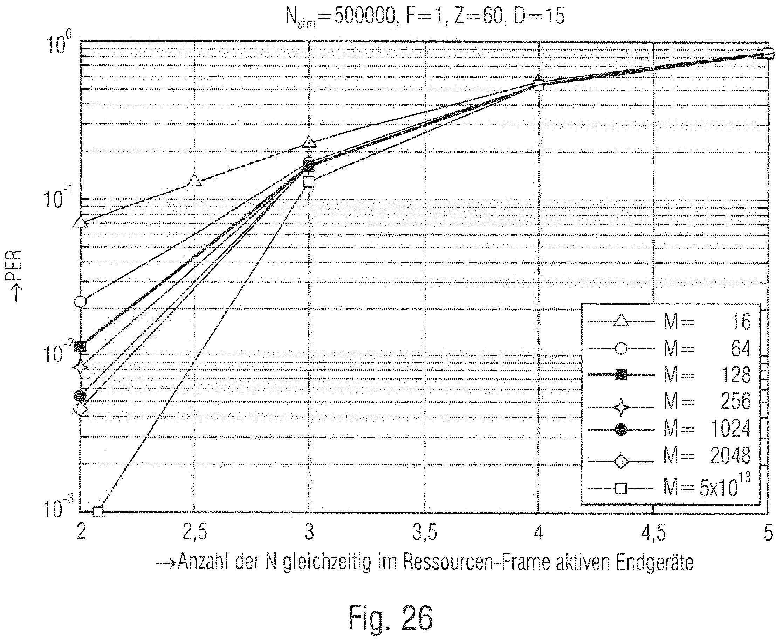

Bei kleineren Werten von $M_{max}$ können auch die Längen der Kanalzugriffmuster abnehmen, ohne dass deutliche Performanceverluste bei der PER in Kauf genommen werden müssen. Dies ist in Fig. 26 für ein $Z = 60$ und $D = 15$ veranschaulicht. Die Performancekurven für die Längen $M = 128$ bis $M = 2048$ unterscheiden sich lediglich bei $N = 2$ geringfügig.

Fig. 26 zeigt in einem Diagramm Simulationsergebnisse der Paketfehlerrate für verschiedene Kanalzugriffmusterlängen M in Abhängigkeit von der Anzahl gleichzeitig aktiver Endgeräte bei 60 Ressourcenelementen. Dabei beschreibt die Ordinate die Paketfehlerrate PER und die Abszisse die Anzahl der N gleichzeitig im Ressourcen-Frame aktiven Endgeräte (z.B. Endpunkte).

Zusammenfassend gilt festzuhalten, dass die Bestimmung der Anzahl M verschiedener Kanalzugriffsmuster abhängig von $M_{max}$ und damit eine Funktion von F, Z und D ist. Für $M_{max} > 10^{14}$ erweist sich beispielsweise ein M = 1024 als sinnvoll. Sinkt der Wert von $M_{max}$ unter die Schwelle von $10^{14}$, so kann M entsprechend verkleinert werden, wobei mit Simulationen zu überprüfen ist, inwieweit die PER-Performance noch den Anforderungen genügt. Für sehr große Werte von $M_{max}$ kann M durchaus Werte annehmen die noch größer wie 1024 sind. Dies kann durch entsprechende Simulationen bestimmt werden.

Im zweiten Design-Schritt wurde die Anzahl M der verschiedenen Kanalzugriffsmuster und deren Länge D festgelegt. Idealerweise werden die einzelnen Kanalzugriffsmuster mittels Zufallsgenerator bestimmt, wodurch zwischen den M einzelnen Mustern möglichst wenig Zusammenhang oder Ähnlichkeit besteht. Auf Empfängerseite bedeutet dies in der Regel einen sehr großen Detektionsaufwand. Um diesen Detektionsaufwand zu reduzieren, wird im dritten Design-Schritt versucht, den Kanalzugriffsmustern strukturelle Eigenschaften, wie Clusterung oder wiederholende Muster zu geben, um die Rechenkomplexität auf Empfängerseite deutlich zu reduzieren. Die PER-Performance, wie beispielsweise in den Fig. 25 und 26 gezeigt, soll sich dadurch möglichst nicht verschlechtern.

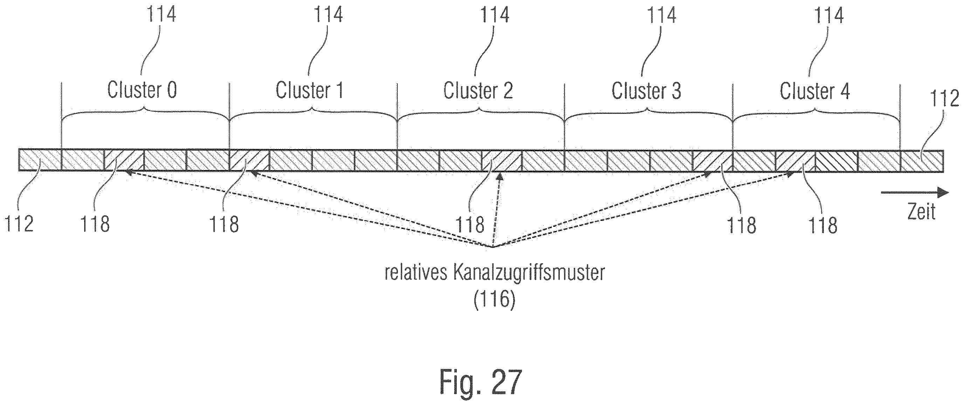

Eine Möglichkeit ist die Unterteilung des Ressourcen-Frames in Cluster 114 gleicher Länge L, wie dies in Fig. 27 gezeigt ist.

Im Detail zeigt Fig. 27 in einem Diagramm auf eine Zeitachse projizierte Ressourcen 112 eines Kanalzugriffsmusters 110, wobei Ressourcen 112 des Kanalzugriffsmusters 110 zu Clustern 114 gleicher Länge L (z.B. L=4) gruppiert werden, wobei das relative Kanalzugriffsmuster eine Belegung von einer Ressource 118 pro Cluster 114 angibt, gemäß einem Ausführungsbeispiel. Mit anderen Worten, Fig. 27 zeigt ein Kanalzugriffsmuster mit jeweils einem Element je Cluster der Länge L = 4

Eine Clustervariante wäre, die Länge Z des Ressourcen-Frames durch die Anzahl der D Teil-Datenpakete zu teilen. Dadurch ergibt sich eine maximale Clusterlänge von $L = floor(R/D)$. In dem Beispiel von Fig. 25 ergäbe sich dann eine Clusterlänge von $L = 20 (360/18)$ Ressourcenelementen.

Die Clusterlänge kann auch kleiner als $L = floor(R/D)$ gewählt werden und die dann noch verbleibenden Ressourcenelemente dazu genutzt werden, das aus den kleineren Cluster generierte Grundmuster anschließend um jeweils einen Zeitindexschritt, also um ein Ressourcenelement weiterzuschieben, um dadurch weitere Muster zu generieren, die alle die gleiche Grundform haben.

Im Beispiel Fig. 26 kann beispielsweise $L = 10$ vorgegeben werden. Aus den $L \times D (= 180)$ Ressourcenelementen wird dann ein einziges Kanalzugriffsmuster ausgewürfelt, welches anschließend $R - L \times D$ mal, also 180-mal, jeweils um einen Zeitindexschritt verschoben, weiterverwendet werden kann. Dadurch werden 181 verschiedene Kanalzugriffsmuster erhalten, die aber alle das gleiche Grundmuster aufweisen. Beispielsweise lässt sich die Kanalzugriffsmusterlänge $M = 1024$ aus Fig. 25 mit lediglich 7 verschiedenen Grundmustern erzeugen, wobei jede dieser Grundmuster im Mittel 145 in der Zeitachse verschoben wird. Die Performance wird dabei nur unwesentlich schlechter.

insgesamt wird durch die obige Vorgehensweise der empfängerseitige Detektionsaufwand deutlich reduziert. Es gilt aber immer wieder zu überprüfen, dass die Performance gegenüber der mit reinen Zufallsfolgen gewonnen Performance nicht leidet.

## C. Reduktion der erforderlichen Rechenleistung der Basistation

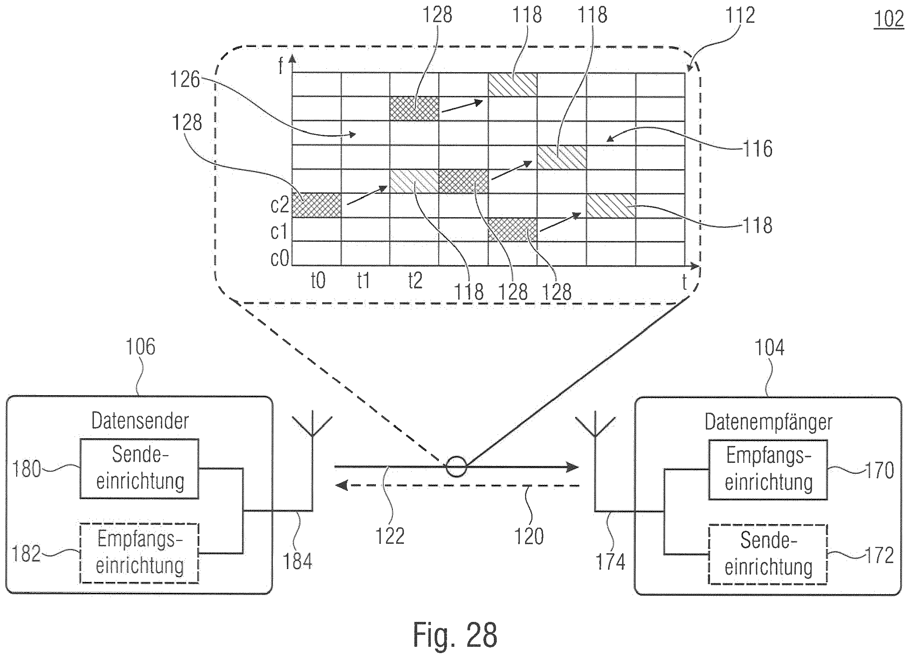

Fig. 28 zeigt ein schematisches Blockschaltbild eines Systems 102 mit einem Datensender 106 und einem Datenempfänger 104, gemäß einem Ausführungsbeispiel der vorliegenden Erfindung. Der Datensender 106 kann beispielsweise ein Datensender 106_1 einer Vielzahl von Datensendern 106_1 bis 106_n des Kommunikationssystems 102 sein (vgl. Abschnitte A und B).

Das Kommunikationssystem 102 kann ausgebildet sein, um in einem Frequenzband drahtlos zu kommunizieren, welches von einer Mehrzahl von Kommunikationssystemen zur Kommunikation genutzt wird.

Zur Übertragung von Daten steht den Teilnehmern (z.B. Datensendern und/oder Datenempfängern) des Kommunikationssystems 102 ein Satz von verwendbaren Ressourcenelementen 112 zur Verfügung. Bei den verwendbaren Ressourcenelementen 112, beispielsweise definiert durch Zeitschlitze t0, t1, t2, ..., und Frequenzkanäle c0, c1, c2, ..., in die das Frequenzband unterteilt ist, kann es sich um einen in Frequenz- und/oder Zeitrichtung zusammenhängenden Bereich von Ressourcenelementen handeln, wie dies beispielhaft in Fig. 28 gezeigt ist, oder aber auch, um in Frequenz- und/oder Zeitrichtung verteilte (z.B. voneinander beabstandete) Ressourcenelemente oder Bereiche von Ressourcenelementen. Optional können die Teilnehmer des Kommunikationssystems 102 zur Übertragung von Daten ein Kanalzugriffsmuster 110 nutzen, wie dies in den Abschnitten A und B erläutert wurde, wobei in diesem Fall die verwendbaren / belegbaren Ressourcenelemente 112 durch das Kanalzugriffsmuster 110 festgelegt sein können.

Der Datensender 106 kann ausgebildet sein, um ein Datensignal 122 entsprechend eines Sprungmusters 116 in einer Teilmenge der verwendbaren Ressourcenelemente 112 des Kommunikationssystems 102 verteilt zu übertragen (= in Fig. 28 in den mit Bezugszeichen 118 gekennzeichneten Ressourcenelementen), wobei das Datensignal 122 eine Mehrzahl von Sub-Datenpaketen aufweist, die entsprechend der durch das Sprungmuster 122 angegebenen frequenz- und/oder zeitsprungbasierten Belegung der verwendbaren Ressourcenelemente 112 des Kommunikationssystems 102 verteilt übertragen werden.

Bei Ausführungsbeispielen kann der Datensender 106 ausgebildet sein, um Daten, wie z.B. ein Datenpaket oder Telegramm, entsprechend des Telegramm Splitting Verfahrens verteilt zu übertragen. Beispielsweise kann der Datensender 106 ausgebildet sein, um ein zum Senden anstehendes Datenpaket/Telegramm (z.B. der Bitübertragungsschicht im OSI-Modell) in eine Mehrzahl von Sub-Datenpaketen aufzuteilen, die jeweils kürzer sind als das Datenpaket/Telegramm, und um die Mehrzahl von Sub-Datenpaketen mittels des Datensignals 122 entsprechend des Sprungmusters 116 in einer Teilmenge der verwendbaren Ressourcenelemente 112 des Kommunikationssystems verteilt zu übertragen (= in den mit Bezugszeichen 118 gekennzeichneten Ressourcenelementen).

Der Datensender 106 ist dabei ausgebildet, um das Sprungmuster 116 von einem Grundsprungmuster 126 basierend auf einer Verschiebung des Grundsprungmusters 126 in der Frequenz (z.B. in Frequenzrichtung) und/oder Zeit (z.B. in Zeitrichtung) abzuleiten.

Wie dies in Fig. 28 gemäß einem Ausführungsbeispiel angedeutet ist, kann das Grundsprungmuster 126 angeben, dass die Ressourcenelemente 128 der verwendbaren Ressourcenelemente 112 zur Übertragung von Daten zu verwenden / belegen sind, d.h. Sub-Datenpakete, die entsprechend des Grundsprungmusters 126 gesendet werden, werden in den durch das Grundsprungmuster 126 angegebenen Ressourcenelementen 128 übertragen. Zur Übertragung von Daten (oder eines Datenpakets, das in die Mehrzahl von Sub-Datenpaketen aufgeteilt ist) nutzt der Datensender 106 ein von dem Grundsprungmuster 126 durch Verschiebung des Grundsprungmusters 126 abgeleitetes Sprungmuster 116, gemäß dem die Ressourcenelemente 118 der verwendbaren Ressourcenelemente 112 zur Übertragung der Daten zu verwenden / belegen sind, d.h. Sub-Datenpakete, die entsprechend des Sprungmusters 116 gesendet werden, werden in den durch das Sprungmuster 116 angegebenen Ressourcenelementen 118 übertragen. Jeder Sprung des Sprungmusters 116 definiert somit ein für die Übertragung (z.B. eines Sub-Datenpakets) zu verwendendes Ressourcenelement 118 der verwendbaren Ressourcenelemente 112 des Kommunikationssystems 102.

Die Verschiebung des Grundsprungmusters 126 in der Zeit und/oder Frequenz kann jedoch dazu führen, dass ein Sprung des Sprungmusters 116, oder mit anderen Worten, ein durch das Sprungmuster 116 definiertes Ressourcenelement 118, außerhalb der verwendbaren Ressourcenelemente 112 des Kommunikationssystems 102, d.h. außerhalb eines zulässigen Ressourcenbereichs (z.B. außerhalb eines zulässigen Frequenzbereichs in Frequenzrichtung und/oder außerhalb eines zulässigen Zeitbereichs in Zeitrichtung) liegt.

Bei manchen Ausführungsbeispielen kann der Datensender 106 daher ausgebildet sein, um beim Ableiten des Sprungmusters 116 von dem Grundsprungmuster 126 einen bedingt durch die Verschiebung des Grundsprungmusters 126 in der Zeit und/oder Frequenz außerhalb der verwendbaren Ressourcenelemente 112 des Kommunikationssystems 102 liegenden Sprung des Sprungmusters 116 basierend auf einer zyklischen Verschiebung in den zulässigen Ressourcenbereich 112 zu verschieben, wie dies unten in Abschnitt C.1 ausführlich erläutert wird.

Bei anderen Ausführungsbeispielen kann der Datensender 106 ausgebildet sein, um beim Ableiten des Sprungmusters 116 von dem Grundsprungmuster 126 einen bedingt durch die Verschiebung des Grundsprungmusters 126 in der Frequenz (z.B. in Frequenzrichtung) außerhalb der verwendbaren Ressourcenelemente 112 des Kommunikationssystems 102 liegenden Sprung des Sprungmusters 116 basierend auf einer zyklischen Verschiebung in der Frequenz in den zulässigen Ressourcenbereich 112 zu verschieben und um den Sprung zusätzlich basierend auf einer linearen Verschiebung in der Zeit zu verschieben, und/oder um einen bedingt durch die Verschiebung des Grundsprungmusters 126 in der Zeit (z.B. in Zeitrichtung) außerhalb der verwendbaren Ressourcenelemente 112 liegenden Sprung des Sprungmusters 116 basierend auf einer zyklischen Verschiebung in der Zeit in bzw. innerhalb den zulässigen Ressourcenbereichs 112 zu verschieben, wie dies weiter unten z.B. in Abschnitt C.3 ausführlich erläutert wird.

Bei Ausführungsbeispielen kann die Verschiebung des Grundsprungmusters 126, basierend auf der der Datensender 106 das Sprungmuster 116 von dem Grundsprungmuster 126 ableitet, von einer Verschiebung des gleichen Grundsprungmusters 126, basierend auf der ein anderer Datensender des Kommunikationssystems ein anderes Sprungmuster von dem gleichen Grundsprungmuster 126 ableitet, unterscheiden, z.B. so dass sich die mit dem Datensignal 122 entsprechend des Sprungmusters 116 ausgesendeten Sub-Datenpakete und von dem anderen Datensender entsprechend des anderen Sprungmusters ausgesendeten Sub-Datenpakete nicht oder nur teilweise überlagern bzw. kollidieren.

Beispielsweise kann dies erreicht werden, indem das Sprungmuster 116 von dem Grundsprungmuster 126 basierend auf einer zufälligen Verschiebung des Grundsprungmusters 126 in der Frequenz und/oder Zeit abgeleitet wird. Alternativ kann das Sprungmuster 116 von dem Grundsprungmuster 126 auch basierend auf einer pseudozufälligen Verschiebung des Grundsprungmusters 126 in der Frequenz und/oder Zeit abgeleitet werden, wobei die pseudozufällige Verschiebung auf einem immanenten Parameter basiert, wie z.B. CRC (=cyclic redundancy check, dt. zyklische Redundanzprüfung), CMAC (=cipher-based message authentication code, dt. chiffrenbasierter Nachrichtenauthentifizierungscode ) oder eine ID (= Identifikation) des Datensenders 106.

Bei Ausführungsbeispielen ist der Datenempfänger 104 ausgebildet, um die verwendbaren Ressourcenelemente 112 jeweils mit einer Referenzsequenz (z.B. die der Pilotsequenz, mit denen die Sub-Datenpakete versehen sind, entspricht) zu korrelieren, um für die verwendbaren Ressourcenelemente 112 Korrelationsergebnisse zu erhalten, und um die Korrelationsergebnisse entsprechend der Lage der verwendbaren Ressourcenelemente in der Zeit und Frequenz in ein zumindest ein-dimensionales Array (z.B. zwei-dimensionales Array) von Korrelationsergebnissen zu überführen, wobei der Datenempfänger 104 ausgebildet ist, um eine Korrelation des zumindest ein-dimensionale Arrays (z.B. zwei-dimensionalen Arrays) von Korrelationsergebnissen mit einem zumindest ein-dimensionalen Array (z.B. zwei-dimensionalen Array) von Referenzwerten durchzuführen, wobei das zumindest ein-dimensionale Array (z.B. zwei-dimensionale Array) von Referenzwerten von dem Grundsprungmuster 126 abgeleitet ist.

Bei Ausführungsbeispielen kann der Datenempfänger 104 ausgebildet sein, um die Mehrzahl von Sub-Datenpaketen basierend auf der Korrelation des zumindest ein-dimensionalen Arrays von Korrelationsergebnissen mit dem zumindest ein-dimensionalen Array von Referenzwerten zu detektieren.

Wie bereits angedeutet wurden, können der Datensender 106 und der Datenempfänger 104 optional ausgebildet sein, um zur Übertragung von Daten ein Kanalzugriffsmuster 110 zu nutzen, wie dies in den Abschnitten A und B erläutert wurde. In diesem Fall kann der Datenempfänger 104 ausgebildet sein, um das Steuersignal 120 (oder Baken-Signal) zu senden, wobei das Steuersignal 120 eine Information über das Kanalzugriffsmuster 110 aufweist, wobei das Kanalzugriffsmuster 110 die für die Kommunikation des Kommunikationssystems 102 verwendbare frequenz- und/oder zeitsprungbasierte Belegung von Ressourcenelementen des Frequenzbands angibt, d.h. das Kanalzugriffsmuster 110 gibt die von dem Kommunikationssystem 102 zur Übertragung der Mehrzahl von Sub-Datenpaketen verwendbaren / belegbaren Ressourcenelementen 112 an. Der Datensender 106 kann in diesem Fall ausgebildet sein, um das Steuersignal 120 mit der Information über das Kanalzugriffsmuster 110 zu empfangen, und um das Kanalzugriffsmuster 110 basierend auf der Information über das Kanalzugriffsmuster 110 zu ermitteln, und um das Datensignal 122 mit der Mehrzahl von Sub-Datenpaketen in einer durch das Sprungmuster 116 (=relatives Kanalzugriffsmuster) angegebenen Teilmenge der durch das Kanalzugriffsmuster 110 angegebenen verwendbaren / belegbaren Ressourcenelementen 112 des Frequenzbands zu senden.

Wie in Fig. 28 beispielhaft gezeigt ist, kann der Datenempfänger 104 eine Sendeeinrichtung (oder Sender, oder Sendemodul, oder Transmitter) 172 aufweisen, die ausgebildet ist, um Signale, wie z.B. das Steuersignal 120, zu senden. Die Sendeeinrichtung 172 kann mit einer Antenne 174 des Datenempfängers 104 verbunden sein. Der Datenempfänger 104 kann ferner eine Empfangseinrichtung (oder Empfänger, oder Empfangsmodul, oder Receiver) 170 aufweisen, die ausgebildet ist, um Signale, wie z.B. das Datensignal 124, zu empfangen. Die Empfangseinrichtung 170 kann mit der Antenne 174 oder einer weiteren (separaten) Antenne des Datenempfängers 104 verbunden sein. Der Datenempfänger 104 kann auch eine kombinierte Sendeempfangseinrichtung (Transceiver) aufweisen.

Der Datensender 106 kann eine Empfangseinrichtung (oder Empfänger, oder Empfangsmodul, oder Receiver) 182 aufweisen, die ausgebildet ist, um Signale, wie z.B. das Steuersignal 120, zu empfangen. Die Empfangseinrichtung 182 kann mit einer Antenne 184 des Datensenders 106 verbunden sein. Ferner kann der Datensender 106 eine Sendeeinrichtung (oder Sender, oder Sendemodul, oder Transmitter) 180 aufweisen, die ausgebildet ist, um Signale, wie z.B. das Datensignal 124, zu senden. Die Sendeeinrichtung 180 kann mit der Antenne 184 oder einer weiteren (separaten) Antenne des Datensenders 106 verbunden sein. Der Datensender 106 kann auch eine kombinierte Sendeempfangseinrichtung (Transceiver) aufweisen.

Bei Ausführungsbeispielen kann der Datensender 106 ein Endpunkt des Kommunikationssystems 102 sein. Der Datensender 106 kann batteriebetrieben sein.

Bei Ausführungsbeispielen kann der Datenempfänger 104 eine Basisstation des Kommunikationssystems 102 sein. Der Datenempfänger 104 kann batteriebetrieben sein.

Im Folgenden werden weitere Ausführungsbeispiele des Datensenders 106 und des Datenempfängers 104 beschrieben.

**C.1 Zirkulare Sprungmuster**

Im Folgenden wird zur Veranschaulichung ohne Einschränkung der Allgemeingültigkeit davon ausgegangen, dass der zur Übertragung zur Verfügung stehenden Frequenzbereich in einzelne, diskrete Frequenzkanäle unterteilt ist, welche durch einen Frequenzkanalindex gekennzeichnet sind. Ebenso erfolgt eine Unterteilung der zeitlichen Ressourcen in diskrete Elemente, welche als Zeitschlitze (engl. timeslots) bezeichnet werden, die entsprechend mit einem Zeitschlitzindex versehen sind.

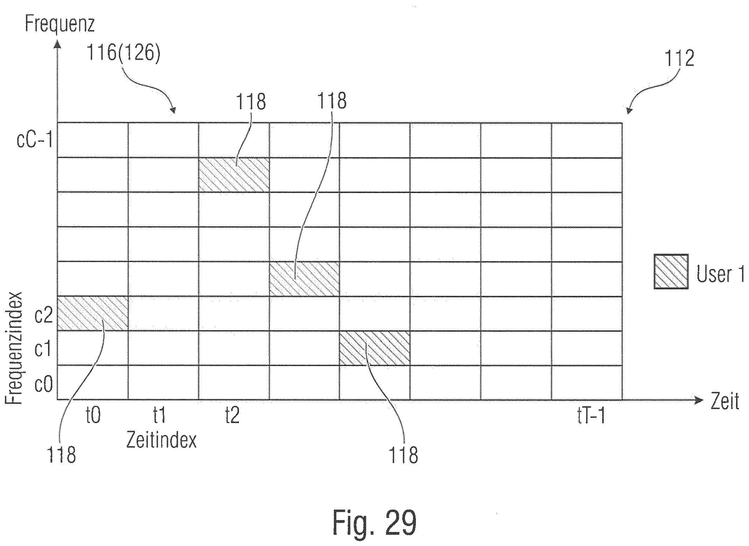

Durch die Unterteilung der Datenübertragungsbereiche in sog. Ressourcenelemente, besteht die Definition eines Sprungmusters aus einem Zeitschlitzindex und einem Frequenzkanalindex. Dies ist beispielhaft für ein System in Fig. 29 zu sehen.

Im Detail zeigt Fig. 29 in einem Diagramm eine durch ein Sprungmuster 116 eines Teilnehmers angegebene Belegung von Ressourcenelementen 118 der von dem Kommunikationssystem 102 verwendbaren Ressourcenelemente 112, gemäß einem Ausführungsbeispiel der vorliegenden Erfindung. In Fig. 29 beschreibt die Ordinate die Frequenz in Frequenzkanälen und die Abszisse die Zeit in Zeitschlitzen. Mit anderen Worten, Fig. 29 zeigt eine Übersicht über die verfügbaren Ressourcenelemente 112 eines Funkkommunikationssystems mit einem Teilnehmer, welcher Daten unter Verwendung eines Sprungmusters 116 überträgt.

Wie in Fig. 29 angedeutet ist, stehen dem System T Zeitschlitze und C Frequenzelemente zur Verfügung, was in Summe T*C Ressourcenelementen 112 entspricht. Weiterhin ist in Fig. 29 ein Teilnehmer (User 1) gezeigt, welcher unter Verwendung eines Sprungmusters 116 Daten in insgesamt vier Ressourcenelementen 118 überträgt.

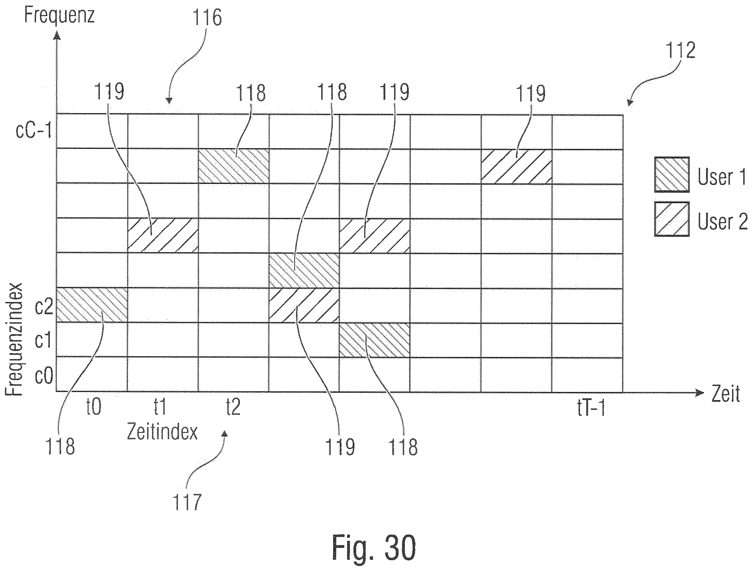

Greifen nun weitere Nutzer auf das Angebot an Ressource-Elementen zu, wurde in bisherigen Systemen (siehe z.B. Abschnitt B) zur Trennung dieser Nutzer weitere Sprungmuster 117 definiert, wie dies in Fig. 30 gezeigt ist. Diese Sprungmuster 117 wurden so designt, dass sie sich gegenseitig möglichst wenig stören, also die Kreuzkorrelationsfunktion möglichst kleine Maxima besitzt.

Fig. 30 zeigt in einem Diagramm eine durch ein Sprungmuster 116 eines Teilnehmers angegebene Belegung von Ressourcenelementen 118 und eine durch ein anderes Sprungmuster 117 eines anderen Teilnehmers angegebene Belegung von Ressourcenelementen 119 der von dem Kommunikationssystem 102 verwendbaren Ressourcenelemente 112, gemäß einem Ausführungsbeispiel der vorliegenden Erfindung. In Fig. 30 beschreibt die Ordinate die Frequenz in Frequenzkanälen und die Abszisse die Zeit in Zeitschlitzen. Mit anderen Worten, Fig. 30 zeigt die verfügbaren Ressourcenelemente 112 des Systems aus Fig. 29, wobei zwei Teilnehmer (User 1 und User 2) mit unterschiedlichen Sprungmustern 116, 117 auf das Angebot von Ressourcenelementen 112 zugreifen.

In Kontrast zu Fig. 30 werden bei Ausführungsbeispielen nun nicht mehrere möglichst orthogonale Sprungmuster verwendet, sondern ein Grundsprungmuster, welches in Zeit und Frequenz verschoben wird.

Dies ermöglicht es dem Empfänger 104 alle möglichen Zeitschlitze und Frequenzkanäle mit vereinfachten Verfahren für die Detektion abzusuchen (siehe hierzu Unterabschnitt C.2).

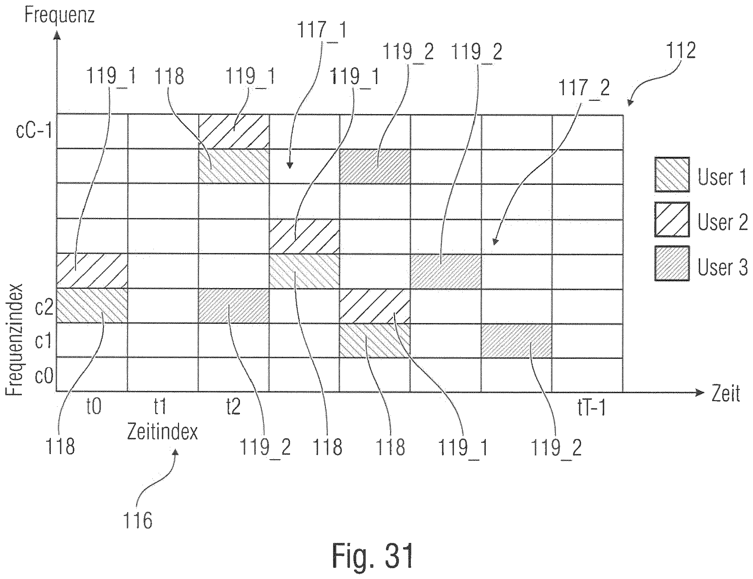

Fig. 31 zeigt in einem Diagramm eine durch ein Sprungmuster 116 angegebene Belegung von Ressourcenelementen 118 und durch zwei andere Sprungmuster 117_1, 117_2 zweier anderer Teilnehmers angegebene Belegungen von Ressourcenelementen 119_1, 119_2 der von dem Kommunikationssystem 102 verwendbaren Ressourcenelemente 112, wobei das Sprungmuster 116 und die zwei anderen Sprungmuster 117_1, 117_2 von dem gleichen Grundsprungmuster abgeleitet sind, gemäß einem Ausführungsbeispiel der vorliegenden Erfindung. In Fig. 31 beschreibt die Ordinate die Frequenz in Frequenzkanälen und die Abszisse die Zeit in Zeitschlitzen. In Fig. 31 wird beispielhaft davon ausgegangen, dass das in Fig. 29 gezeigte Sprungmuster das Grundsprungmuster 126 ist, wobei das Sprungmuster 116 und die zwei anderen Sprungmuster 117_1, 117_2 von dem in Fig. 29 gezeigtem Grundsprungmuster 126 abgeleitet sind. Das Sprungmuster 116 kann von dem Grundsprungmuster 126 basierend auf einer Verschiebung des Grundsprungmusters 126 von Null Zeitschlitzen und Null Frequenzkanälen (= keine Verschiebung) abgeleitet sein, d.h. das Sprungmuster 116 entspricht dem Grundsprungmuster 126. Das erste andere Sprungmuster 117_1 kann von dem Grundsprungmuster 126 basierend auf einer Verschiebung des Grundsprungmusters 126 von Null Zeitschlitzen und einem (+1) Frequenzkanal abgeleitet sein. Das zweite andere Sprungmuster 117_2 kann von dem Grundsprungmuster 126 basierend auf einer Verschiebung des Grundsprungmusters 126 von zwei (+2) Zeitschlitzen und Null Frequenzkanälen abgeleitet sein.

Mit anderen Worten, Fig. 31 zeigt eine Anwendung eines Zeit- und Frequenzoffsets auf das Sprungmuster (=Grundsprungmuster 126) aus Fig. 29 zur Trennung verschiedener Teilnehmer. In Fig. 31 wurde das aus Fig. 29 gezeigte Sprungmuster 116 (=Grundsprungmuster 126) von dem ersten Teilnehmer (User 1) auf zwei weitere Teilnehmer (User 2 und User 3) angewandt, wobei der zweite Teilnehmer (User 2) einen Frequenzoffset von einem Kanal und der dritte Teilnehmer (User 3) einen Zeitoffset von zwei Zeitschlitzen erfahren hat.

Grundsätzlich kann ein Zeitschlitzoffset auch mit einem Frequenzkanaloffset kombiniert werden. Ausgehend von dem in Fig. 31 gezeigten Angebot an Ressourcenelementen 112 und dem definierten Sprungmuster, gibt es in diesem beispielhaften System drei mögliche Frequenzkanäle und vier mögliche Zeitschlitzoffsets, so dass alle (Teil-)Pakete noch innerhalb der verfügbaren Ressourcenelemente 112 liegen.

Es werden somit virtuell 12 Sprungmuster erzeugt, die alle die gleiche Grundstruktur haben und somit verhältnismäßig einfach im Empfänger 104 detektiert werden können.

Anders als bei dem Design der vielen Sprungmuster und der Optimierung der Kreuzkorrelationsfunktion zwischen den Sprungmustern (siehe Abschnitt B), ist es hier wichtig, dass die 2D-Autokorrelationsfunktion möglichst kleine Nebenpeaks besitzt, wobei sich die zwei Achsen auf die Zeit- und Frequenzrichtung beziehen.

Bei Ausführungsbeispielen gibt es nur ein Grundsprungmuster 126, welches in Zeit und/oder Frequenz verschoben wird, um mehrere Teilnehmer voneinander zu trennen.

Durch die Definition der koordinierenden Instanz der Ressourcenelemente 112, können die Teilnehmer nur exakt innerhalb der zur Verfügung stehenden Ressourcenelemente 112 Daten übertragen. Durch die Koordination ist ebenfalls gewährleistet, dass jeder Nutzer genau auf das vorgegebene Zeit- Frequenz-Muster (z.B. Kanalzugriffsmuster 110) zugreift. Durch diesen Aspekt ist es dem Empfänger 104 möglich, die notwendige 2D-Detektion der Basissequenz (=Grundsprungmuster 126) in eine vereinfachte 2D-DFT (DFT = Diskrete Fourier-Transformation) bzw. 2D-FFT (FFT = Schnelle Fourier-Transformation) zu überführen. Der genaue Ablauf wird in Unterabschnitt C.2 näher beschrieben.

Eine zyklische Faltung kann in eine DFT bzw. FFT überführt werden. Das heißt im Umkehrschluss, wird eine DFT oder FFT zur Detektion der Basissequenz 126 eingesetzt, wird eine zyklische oder zirkulare Faltung mit der erwarteten Sequenz durchgeführt. Es gibt zwar auch Techniken, mit denen sich eine lineare Faltung mittels FFT durchführen lässt, diese Techniken seien hier aber außen vorgestellt und werden hier nicht angewandt.

Im Gegensatz zur linearen Faltung ist es bei der zirkularen Faltung möglich, (Teil-)Datenpakete, welcher bei einer Zeit- oder Frequenzverschiebung, die aus dem zulässigen Bereich der Ressourcenelemente 112 fallen zyklisch wieder am anderen Ende des zulässigen Bereichs anzustellen.

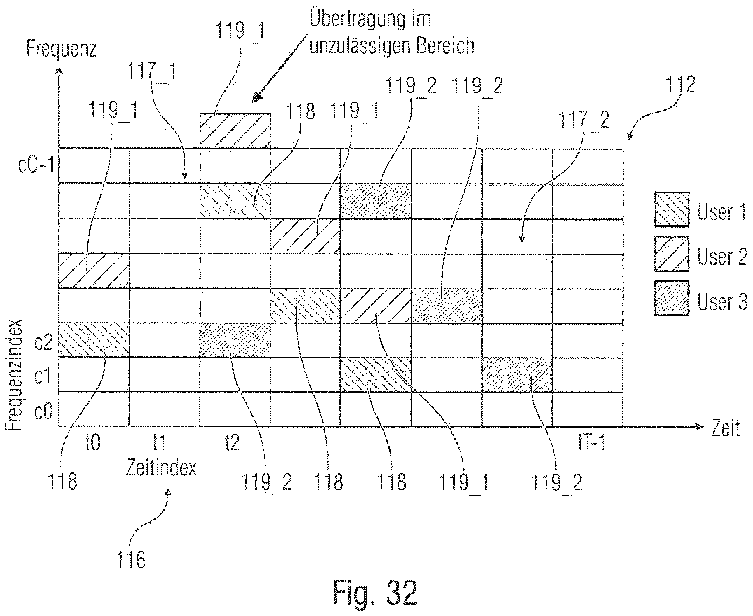

Fig. 32 zeigt das Szenario aus Fig. 31, wobei der zweite Teilnehmer (User 2) nun einen Frequenzkanaloffset von zwei Kanälen erfahren hat. Dadurch liegt eines der (Teil-)Datenpakete außerhalb des zulässigen Bereichs des Ressourcen-Frames.

Im Detail zeigt Fig. 32 zeigt in einem Diagramm eine durch ein Sprungmuster 116 angegebene Belegung von Ressourcenelementen 118 und durch zwei andere Sprungmuster 117_1, 117_2 zweier anderer Teilnehmers angegebene Belegungen von Ressourcenelementen 119_1, 119_2 der von dem Kommunikationssystem 102 verwendbaren Ressourcenelemente 112, wobei das Sprungmuster 116 und die zwei anderen Sprungmuster 117_1, 117_2 von dem gleichen Grundsprungmuster abgeleitet sind, wobei ein Sprung des anderen Sprungmusters 117_1 außerhalb eines zulässigen Bereichs der verwendbaren Ressourcenelemente 112 des Kommunikationssystems 102 liegt. In Fig. 32 beschreibt die Ordinate die Frequenz in Frequenzkanälen und die Abszisse die Zeit in Zeitschlitzen. Im Gegensatz zu Fig. 31, wird das erste andere Sprungmuster 117_1 von dem Grundsprungmuster 126 basierend auf einer Verschiebung des Grundsprungmusters 126 von Null Zeitschlitzen und zwei (+2) Frequenzkanälen abgeleitet, was dazu führt, dass ein Sprung außerhalb der verwendbaren Ressourcenelemente 112 des Kommunikationssystems 102 liegt.

Mit anderen Worten, Fig. 32 zeigt das Szenario aus Fig. 31 wobei auf den zweiten Teilnehmer (User 2) ein Frequenzkanaloffset, so dass eine der durch das Sprungmuster 117_1 angegebenen Ressourcenelemente 119_1 (oder der (Teil-)Datenpakete) außerhalb des zulässigen Ressourcen-Frames liegt.

Bei Anwendung ohne zyklische Verschiebung wäre ein solcher Frequenzkanaloffset nicht möglich gewesen, da durch die lineare 2D-Detektion diese Verschiebung in Frequenzrichtung nicht abgedeckt und auch die Aussendung des einen (Teil-)Datenpakets nicht möglich wäre.

Wird nun eine zyklische Verschiebung angewandt, wird das eine Ressourcenelement 119_1 (oder das eine (Teil-)Datenpaket), welches außerhalb des zulässigen Bereichs liegt, bei gleichem Zeitindex unten wieder angestellt, wodurch sich Fig. 33 ergibt.

Im Detail zeigt Fig. 33 zeigt in einem Diagramm eine durch ein Sprungmuster 116 angegebene Belegung von Ressourcenelementen 118 und durch zwei andere Sprungmuster 117_1, 117_2 zweier anderer Teilnehmers angegebene Belegungen von Ressourcenelementen 119_1, 119_2 der von dem Kommunikationssystem 102 verwendbaren Ressourcenelemente 112, wobei das Sprungmuster 116 und die zwei anderen Sprungmuster 117_1, 117_2 von dem gleichen Grundsprungmuster abgeleitet sind, wobei ein Sprung des anderen Sprungmusters 117_1, der durch die Verschiebung außerhalb des zulässigen Bereichs der verwendbaren Ressourcenelemente 112 des Kommunikationssystems 102 liegen würde (siehe Fig. 32), wieder in den zulässigen Bereich der verwendbaren Ressourcenelemente 112 zyklisch verschoben wird. In Fig. 32 beschreibt die Ordinate die Frequenz in Frequenzkanälen und die Abszisse die Zeit in Zeitschlitzen. Im Gegensatz zu Fig. 31, wird das erste andere Sprungmuster 117_1 von dem Grundsprungmuster 126 basierend auf einer Verschiebung des Grundsprungmusters 126 von Null Zeitschlitzen und zwei (+2) Frequenzkanälen abgeleitet, was dazu führt, dass ein Sprung außerhalb der verwendbaren Ressourcenelemente 112 des Kommunikationssystems 102 liegt. Mit anderen Worten, Fig. 33 zeigt das Szenario aus Fig. 32 mit zyklischer Verschiebung der (Teil-)Datenpakete, welche nicht im gültigen Bereich des Ressourcen-Frames liegen.

Wie in Fig. 33 zu erkennen ist, liegt das zweite Teil-Datenpaket nun nicht mehr bei Frequenzindex cC + 1, sondern bei Index c0 und ist somit wieder im gültigen Bereich.

Durch die zyklische Verschiebung des (Teil-)Datenpakets in Frequenzrichtung kann ein (Teil-)Datenpaket, welches in der Basis-Sequenz einen größeren Frequenzkanalindex als ein anderes (Teil-)Datenpaket hat, nun einen kleineren Frequenzkanalindex besitzen. Die aufgezeigte zyklische Verschiebung aus Fig. 33 gilt analog für die Zeitachse, eine Verschiebung in Zeitschlitzen wird deshalb hier nicht weiter erläutert.

Bei Ausführungsbeispielen werden alle (Teil-)Datenpakete (oder alle durch ein Sprungmuster angegebene Ressourcenelemente), welche bei einer Verschiebung in Zeit- oder Frequenzrichtung aus dem zulässigen Ressourcen-Frame fallen, zyklisch wieder in den zulässigen Bereich verschoben.

Durch die zyklische Verschiebung stehen jedem Nutzer in dem genannten Beispiel nun nicht mehr nur die 12 möglichen Sprungmuster, welche durch die Verschiebung der Basissequenz (= Grundsprungmuster 126) generiert werden, zu Verfügung, sondern insgesamt stehen nun tT * cC virtuelle Sprungmuster bereit. Im Beispiel sind dies 8*8 = 64 Sprungmuster.

Der Ablauf in einem Sender 106 könnte beispielhaft folgendermaßen realisiert werden.

1. Wahl der Basissequenz (= Grundsprungmuster) (falls mehr als eine zur Verfügung steht)
2. (Zufällige) Auswahl eines Zeitschlitzoffsets
3. (Zufällige) Auswahl eines Frequenzkanaloffsets
4. Zyklische Verschiebung aller (Teil-)Datenpakete (oder aller durch ein Sprungmuster angegebene Ressourcenelemente), welche außerhalb des zulässigen Bereichs liegen

Bei der zyklischen Verschiebung wird für jedes (Teil-)Datenpaket (oder angegebenes Ressourcenelement) geprüft, ob es innerhalb des gültigen Bereichs des Ressourcen-Frames liegt.

Eine einfachere Methode dies sicherzustellen, ist es auf jeden berechneten Zeitschlitzindex, welcher durch nach aufbringen des Zeitschlitzoffsets berechnet wurde, eine Modulo tT Operation anzuwenden, somit wird sichergestellt, dass jeder Index innerhalb des zulässigen Bereichs liegt. In ähnlicher Weise kann dies für die Frequenzkanalindizes erfolgen.

Bei Ausführungsbeispielen kann nach dem Aufbringen eines Zeitschlitz- und Frequenzkanaloffsets in beiden Dimensionen eine Modulo-Operation durchgeführt werden, um die zyklische Verschiebung zu erreichen.

Ein wichtiges Designkriterium bei der Wahl der Sprungmuster ist es, dass neben den guten Autokorrelations- und Kreuzkorrelationseigenschaften eine möglichst gleichmäßige Auslastung aller Ressourcenelemente zu erhalten.

Unter der Annahme, dass zumindest so viele Frequenzkanäle wie (Teil-)Datenpakete vorliegen, wurde in den bisherigen Systemen immer versucht jedem Frequenzkanal nur maximal ein (Teil-)Datenpaket zuzuweisen.

Durch die Aufbringung eines Frequenzkanaloffsets und der zyklischen Verschiebung ist es nun jedem (Teil-)Datenpaket möglich, jeden zulässigen Frequenzkanalindex anzunehmen.

Damit besteht die Möglichkeit einen Frequenzkanal mehrfach zu belegen. Unter der Annahme, dass alle möglichen Frequenzkanaloffsets gleich häufig eingesetzt werden, ergibt sich in Summe wieder eine gleiche Auslastung aller Frequenzkanäle.

Bei Ausführungsbeispielen kann die Verteilung der (Teil-)Datenpakete der Basissequenz auf die Frequenzkanäle muss nicht gleichmäßig erfolgen.

**C.2 Vereinfachte Detektion im Empfänger mittels einer 2D-DFT / 2D-FFT**

Die folgenden Ausführungsbeispiele beziehen sich auf den Datenempfänger 106 eines Funkkommunikationssystems 102, wobei eine koordinierende Instanz die zur Verfügung stehenden Ressourcenelemente 112 definiert und an die Teilnehmer (User), wie z.B. Datensender 106, mitteilt.

Weiterhin wird vorausgesetzt, dass die Teilnehmer (User) durch ein vorheriges Ereignis (z.B. durch die Aussendung eines Beacon-Signals oder Steuersignals 120) bereits soweit synchronisiert sind, dass folgende Toleranzen bei der Übertragung eines (Teil-)Datenpakets in einem Ressourcenelement eingehalten werden:

$$\Delta t <= T/2$$

$$\Delta f <= f_{sym}/4$$

Wobei T der Symboldauer und $f_{sym}$ der Symbolrate entspricht.

Außerdem wird davon ausgegangen, dass in zumindest zwei (Teil-)Datenpaketen (der Mehrzahl von Teil-Datenpaketen, in die das Datenpaket unterteilt ist) eine Pilotsequenz eingebracht ist, was jedoch im Allgemeinen keine Einschränkung bedeutet, da diese aus Synchronisationszwecken typischerweise bereits vorhanden ist.

Die Detektion eines Telegramms oder Datenpakets mit verteilter Pilotsequenz in den (Teil-)Datenpaketen läuft typischerweise in folgenden Schritten ab:

1. Symbolrückgewinnung
2. Korrelation auf die (Teil-)Pilotsequenzen in den (Teil-)Datenpaketen
3. Kombination der Ergebnisse der Korrelation auf den (Teil-)Pilotsequenzen entsprechend dem Sprungmuster zu einem Gesamtkorrelationsergebnis
4. Detektion aller Zeitpunkte, an denen das Gesamtkorrelationsergebnis einen definierten Schwellwert übersteigt

Dieser Prozess wird bei Verwendung eines Sprungmusters 116 exakt einfach durchlaufen. Wird nun ein weiteres Sprungmuster 117 definiert, können die Ergebnisse der Symbolrückgewinnung und die Ergebnisse der Korrelation auf den Pilotsequenzen wiederverwendet werden, jedoch muss die Kombination entsprechend dem Sprungmuster für das weitere Sprungmuster erneut berechnet werden. Ebenfalls muss eine weitere Detektion der Zeitpunkte, welche über dem Schwellwert liegen, durchgeführt werden.

Mit ansteigender Anzahl an Sprungmustern 116,117, müssen somit immer mehr Kombinationen zu den Gesamtergebnissen nach Schritt 3 und mehrere Detektionen nach Schritt 4 parallel laufen, was den Rechenaufwand erheblich steigert.

In Unterabschnitt C.1 wurde gezeigt, wie aus einer Basissequenz (=Grundsprungmuster 126) mehrere Sprungmuster 116,117_1,117_2 erzeugt werden können, in dem ein Zeitschlitz- und Frequenzkanaloffset auf die jeweiligen angegebenen Ressourcenelemente 118,119_1,119_2 (z.B. (Teil-)Datenpakete) addiert wird. Mit dem oben beschriebenen Verfahren müsste für jedes virtuell erzeugte Sprungmuster 116,117_1,117_2 durch Zeit- und/oder Frequenzoffset eine weitere Kombination und Detektion gerechnet werden, so als wenn es unabhängige Sprungmuster wären.

Mit einem Standard-Empfänger lässt sich somit durch den Einsatz von zirkularen Sprungmustern nach der Grundidee kein Performancegewinn (aber auch kein Verlust) hinsichtlich der Rechenleistung erzielen.

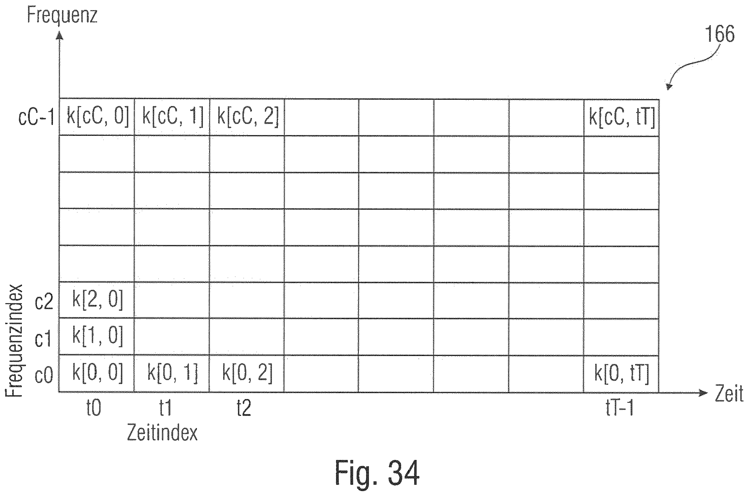

Die in Schritt zwei beschriebene Korrelation auf den Pilot-Sequenzen wird für jedes Ressourcenelement 112 in jedem Zeitschlitz und jedem Frequenzkanal durchgeführt. Als Ergebnis dieser Korrelation erhält man somit für jedes Ressourcenelement in Zeit- und Frequenz ein Korrelationsergebnis. Mit andern Worten, man erhält einen 2D-Array (166) mit Korrelationsergebnissen k[t, c], welches, für das Beispielsystem aus Unterabschnitt C.1, in Fig. 34 gezeigt ist.

Im Detail zeigt Fig. 34 in einem Diagramm ein zwei-dimensionales (2D) Array (166) von Korrelationsergebnissen, gemäß einem Ausführungsbeispiel der vorliegenden Erfindung. In Fig. 34 beschreibt die Ordinate die Frequenz in Frequenzkanälen und die Abszisse die Zeit in Zeitschlitzen. Mit anderen Worten, Fig. 34 zeigt ein Beispiel eines 2D-Arrays (166) mit Korrelationsergebnissen aus der Korrelation auf den Pilot-Sequenzen in den (Teil-)Datenpaketen.

Wie in Fig. 34 zu erkennen ist, sind den Elementen des zwei-dimensionalen Arrays (166) von Korrelationsergebnissen die verwendbaren Ressourcenelemente 112 des Kommunikationssystems 102 entsprechend der Lage der verwendbaren Ressourcenelemente 112 in der Zeit und Frequenz zugeordnet. Bei der Überführung der Korrelationsergebnisse in das zwei-dimensionale Array (166) von Korrelationsergebnissen können Frequenzkanäle und/oder Zeitschlitze, die nicht Teil der verwendbaren Ressourcenelemente 112 des Kommunikationssystems sind, ausgeblendet werden, d.h. Lücken in der Zeit und/oder Frequenz zwischen den verwendbaren Ressourcenelementen können ausgespart werden. Dies ist beispielsweise insbesondere dann der Fall, wenn die verwendbaren Ressourcenelemente 112 durch ein Kanalzugriffsmuster 110 angegeben sind.

Ausführungsbeispielen liegt die Idee zugrunde, dass die Kombination der Korrelationsergebnisse aus der Korrelation auf den Pilotsequenzen in Grunde wieder einer Korrelation entspricht. Hierfür stellt die Basissequenz (=Grundsprungmuster 126) im 2D-Raster die Referenzsequenz dar. Typischerweise ist die Kohärenz zwischen den (Teil-)Datenpaketen aufgrund von Reduktion des Stromverbrauchs im Sender 106 nicht gegeben, so dass die Ergebnisse der Korrelation auf den Pilotsequenzen nicht kohärent gespeichert werden (z. B. durch Betragsbildung). Somit handelt es sich bei der Kombination der Ergebnisse der Korrelation auf die Pilotsequenzen um eine rein reelwertige Operation, wodurch bei Überführung der Kombination in eine Korrelation die Eingangsdaten ebenfalls reelwertig sind.

Zur Erzeugung der Referenzsequenz für die Korrelation über das Sprungmuster wird ein 2D-Array (168) erstellt werden, welches die gleiche Größe wie das 2D-Array (166) mit den Ergebnissen der Korrelation auf den Pilotsequenzen hat (entspricht der Größe des Ressourcen-Frames).

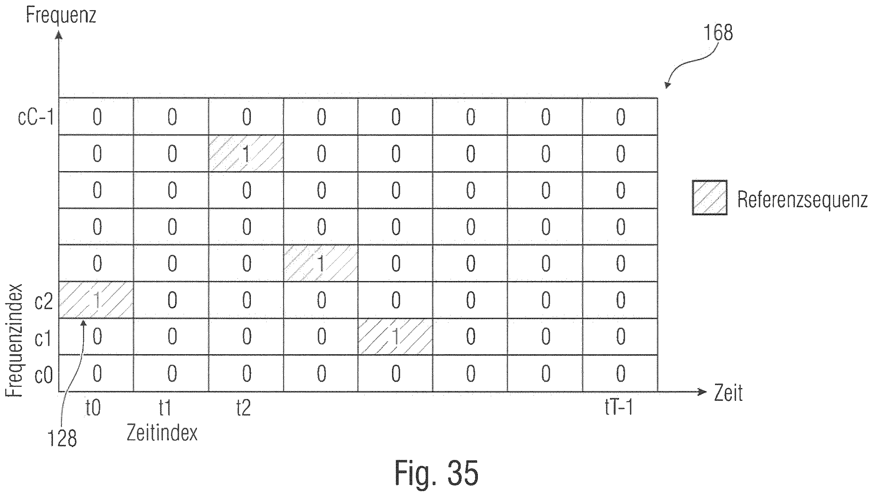

An allen Frequenz- / Zeitslots, an welchen in der Basissequenz ein (Teil-)Datenpaket eingebracht ist, wird eine reellwertige Zahl eingebracht werden, welche die Korrelationslänge der vorherigen Stufe wiederspiegelt (und somit normiert). Wird in allen (Teil-)Datenpaketen die gleiche Sequenz eingebracht, ist die Zahl für alle Einträge gleich und kann zur Vereinfachung auf eins gesetzt werden. Die verbleibenden Ressourcenelemente, in denen in der Basissequenz (=Grundsprungmuster 126) kein (Teil-)Datenpaket eingebracht wird, werden zu Null gesetzt. Dies ist anhand des Beispiels aus Abschnitt C.1 in Fig. 35 grafisch dargestellt.

Im Detail zeigt Fig. 35 in einem Diagramm ein zwei-dimensionales (2D) Array (168) von Referenzwerten, gemäß einem Ausführungsbeispiel der vorliegenden Erfindung. In Fig. 35 beschreibt die Ordinate die Frequenz in Frequenzkanälen und die Abszisse die Zeit in Zeitschlitzen. Mit anderen Worten, Fig. 35 zeigt eine Referenzsequenz der Basissequenz bei Überführung der Kombination über die (Teil-) Datenpakete in eine 2D-Korrelation.

Wie in Fig. 35 zu erkennen ist, weisen das zwei-dimensionale Array (166) von Korrelationsergebnissen (siehe Fig. 34) und das zwei-dimensionale Array (168) von Referenzwerten die gleiche Arraygröße auf. Wie in Fig. 35 ferner zu erkennen ist, entspricht das eindimensionale Array (168) von Referenzwerten dem Grundsprungmuster 126, d.h. Einträge des zwei-dimensionalen Arrays (168) von Referenzwerten, die den durch das Grundsprungmuster 126 angegebenen Ressourcenelementen 128 entsprechen, wird ein auf die Korrelation normierter Referenzwert zugeordnet (im Beispiel von Fig. 35 Eins (1)), während allen anderen Einträgen des zwei-dimensionalen Arrays (168) von Referenzwerten, also die Einträge, die nicht den durch das Grundsprungmuster 126 angegebenen Ressourcenelementen 128 entsprechen, auf einen festen Wert, wie z.B. Null, gesetzt werden.

Mit dem zweidimensionalen Ergebnis der Korrelation über die (Teil-)Pilotsequenzen in den (Teil-)Datenpaketen und der zweidimensionalen Referenzsequenz (= zwei-dimensionales Array (168) von Referenzwerten), welche mit Hilfe der Basissequenz (= Grundsprungmuster 126) erstellt wurde, lässt sich nun die 2D-Korrelation über das Sprungmuster durchführen.

Wird eine zirkulare 2D-Korrelation durchgeführt, ist die Größe am Ausgang gleich der Größe am Eingang.

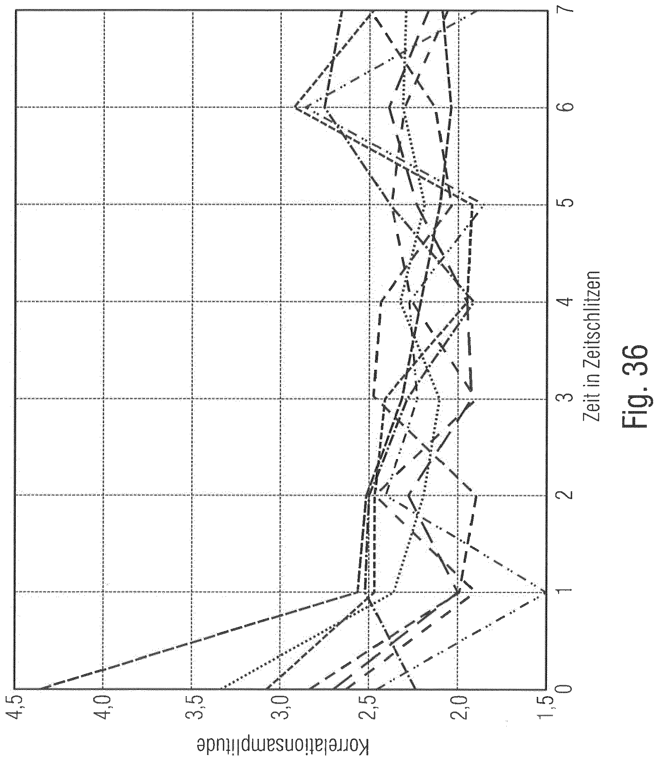

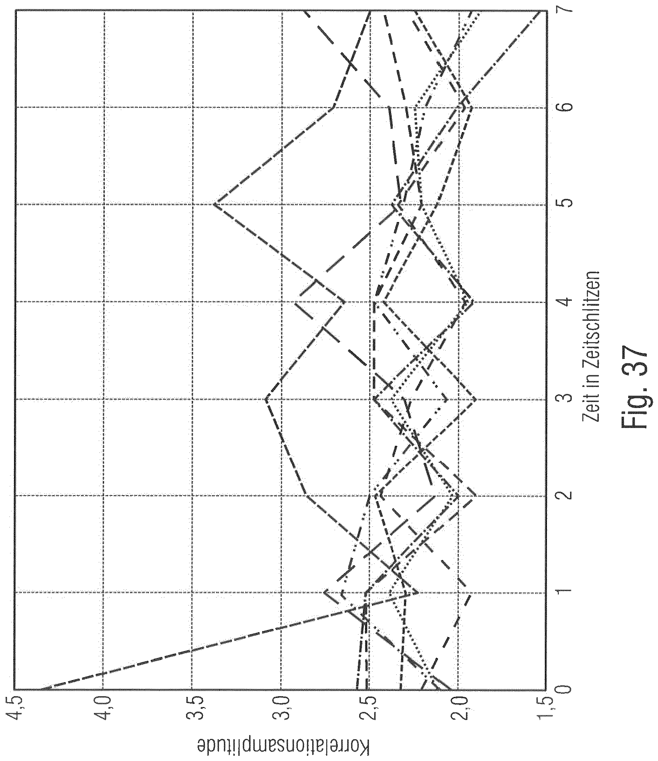

Im Falle, dass das gewählte Sprungmuster gleich der Basissequenz ist, liegt das Maximum der 2D-Korrelation in Zeitrichtung beim Index t0. In Frequenzrichtung beträgt der Index in diesem Fall c0. Zur Verifikation wurde ein Sprungmuster auf Basis der Basissequenz aus dem vorherigen Beispiel ohne Zeit und Frequenzoffset erzeugt. Auf Basis dieses Sprungmusters wurde eine Aussendung erzeugt, welche im Empfänger verrauscht (Es/N0 = 10 dB) empfangen wurde. Fig. 36 und 37 zeigen das Ergebnis der 2D-Korrelation sowohl in Zeit- als auch in Frequenzrichtung.

Im Detail zeigt Fig. 36 in einem Diagramm das Ergebnis (Amplitude) einer zweidimensionalen Korrelation des zwei-dimensionalen Arrays (166) von Korrelationsergebnissen mit dem zwei-dimensionalen Array (168) von Referenzwerten aufgetragen über die Zeit, für den Fall, dass das Sprungmuster dem Grundsprungmuster entspricht. Mit anderen Worten, Fig. 36 zeigt das Ergebnis der 2D-Korrelation in Zeitrichtung aus dem vorherigen Beispiel, wobei das Sprungmuster gleich der Basissequenz gewählt wurde.

Fig. 37 zeigt in einem Diagramm das Ergebnis (Amplitude) einer zwei-dimensionalen Korrelation des zwei-dimensionalen Arrays (166) von Korrelationsergebnissen mit dem zweidimensionalen Array (168) von Referenzwerten aufgetragen über die Frequenz, für den Fall, dass das Sprungmuster dem Grundsprungmuster entspricht. Mit anderen Worten, Fig. 37 zeigt das Ergebnis der 2D-Korrelation in Frequenzrichtung aus dem vorherigen Beispiel, wobei das Sprungmuster gleich der Basissequenz gewählt wurde.

Wie in Fig. 36 und 37 zu erkennen ist, liegt das Maximum sowohl in Zeit- als auch in Frequenzrichtung beim Index 0, was dem Index t0 bzw. c0 entspricht.

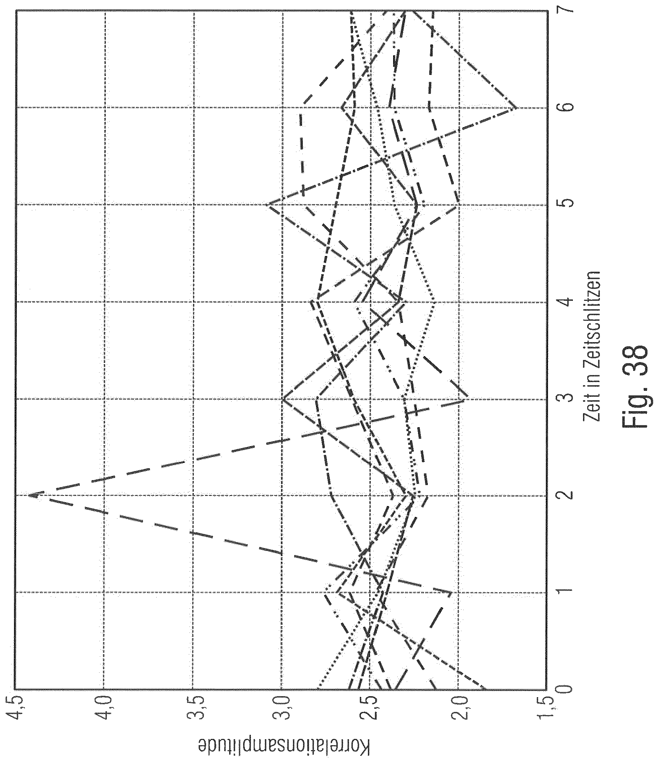

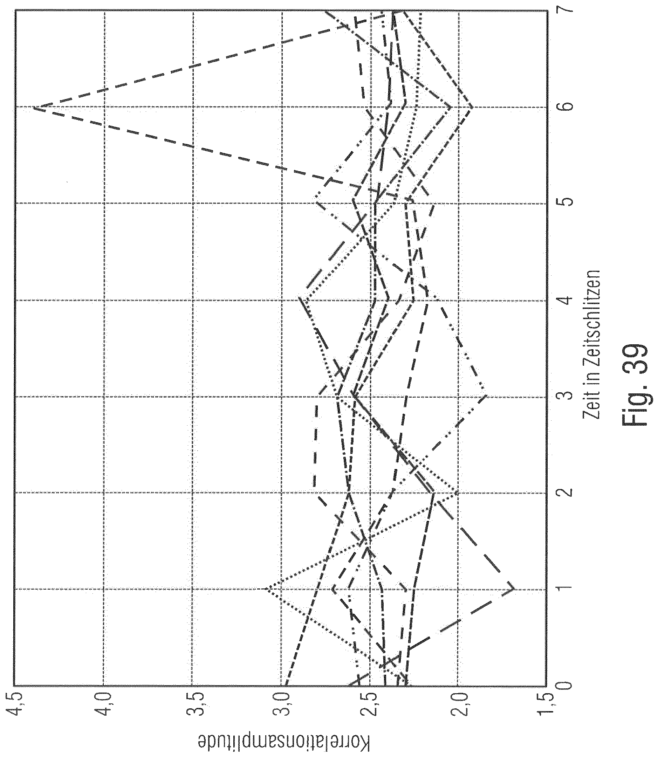

Im nächsten Schritt wurde aus das vorherige Beispiel bei der Generierung des Sprungmusters nun ein Zeitoffset von zwei Zeitslots und ein Frequenzoffset von sechs Kanälen auf die Basissequenz addiert. Alle Teilpakete, welche durch die Zeit- und Frequenzverschiebung aus dem Ressourcen-Frame gefallen sind, wurden zyklisch wieder am anderen Ende angefügt (wie in Abschnitt C.1 beschrieben). Am Empfänger 104 wurde das Signal wieder mit Rauschen (Es/N0 = 10 dB) empfangen und die 2D-Korrelation mit der Referenzsequenz berechnet. Das Ergebnis ist in Fig. 38 und 39 für die Zeit- und Frequenzachse zu sehen.

Im Detail zeigt Fig. 38 in einem Diagramm das Ergebnis (Amplitude) einer zweidimensionalen Korrelation des zwei-dimensionalen Arrays (166) von Korrelationsergebnissen mit dem zwei-dimensionalen Array (168) von Referenzwerten aufgetragen über die Zeit, für den Fall, dass das Sprungmuster gegenüber dem Grundsprungmuster um zwei Zeitschlitze und sechs Frequenzkanäle vorschoben wurde. Mit anderen Worten, Fig. 38 zeigt das Ergebnis der 2D-Korrelation in Zeitrichtung aus dem vorherigen Beispiel, wobei das Sprungmuster zur Basissequenz um zwei Zeitschlitze und sechs Frequenzkanäle vorschoben wurde.

Fig. 39zeigt in einem Diagramm das Ergebnis (Amplitude) einer zweidimensionalen Korrelation des zwei-dimensionalen Arrays (166) von Korrelationsergebnissen mit dem zweidimensionalen Array (168) von Referenzwerten aufgetragen über die Frequenz, für den Fall, dass das Sprungmuster gegenüber dem Grundsprungmuster um zwei Zeitschlitze und sechs Frequenzkanäle vorschoben wurde. Mit anderen Worten, Fig. 39 zeigt das Ergebnis der 2D-Korrelation in Frequenzrichtung aus dem vorherigen Beispiel, wobei das Sprungmuster zur Basissequenz um zwei Zeitschlitze und sechs Frequenzkanäle vorschoben wurde.

Im Vergleich zu Fig. 36 und 38 zeigt sich, dass die Höhe des Maximums (nahezu, Einfluss durch Rauschen) unverändert ist. Die Zeit- und Frequenzlage des Maximums ist entsprechend den im Sender eingefügten Offsets von zwei Zeitschlitzen und sechs Frequenzkanälen verschoben.

Mit Hilfe einer 2D-Korrelation auf den Ergebnissen der Pilotsequenzkorrelation in den (Teil-)Datenpaketen lässt sich somit die Kombination der Ergebnisse entsprechend des Sprungmusters effektiv gestalten, falls alle gewählten Sprungmuster auf der gleichen Basissequenz (siehe Grundidee) beruhen. Durch Extraktion des Zeit- und Frequenzindex aus der Korrelation lässt sich der respektive Zeit- und Frequenzoffset des verwendeten Sprungmusters extrahieren.

Bei Ausführungsbeispielen wird anstelle einer Kombination der Ergebnisse der Korrelation auf der Pilotsequenz in den (Teil-)Datenpaketen entsprechend dem Sprungmuster eine 2D-Korrelation durchgeführt.

Aus der Signaltheorie ist bekannt, dass sich eine Faltung im Zeitbereich durch eine Multiplikation im Frequenzbereich darstellen lässt [6]. Hierbei werden beide Signale der Faltung in den Frequenzbereich transformiert. Dies geschieht typischerweise mit Hilfe einer DFT oder FFT.

Eine Korrelation ist der Faltung sehr ähnlich, wobei eine Korrelation in eine Faltung überführt werden kann, wenn entweder das Referenzsignal oder das zu untersuchende Signal gespiegelt werden. Für die Durchführung einer Korrelation im Frequenzbereich gilt somit folgender Zusammenhang:

$$Corr = IDFT(\ DFT(In) \cdot DFT(\ mirror(Ref)^*\ )\ )$$

Bei hinreichend großen Größen für die (I)DFT reduziert dies den Rechenaufwand im Vergleich zur Korrelation im Zeitbereich.

Der oben gezeigte Zusammenhang gilt ebenfalls bei mehrdimensionalen Signalen. Im Beispiel eines zweidimensionalen Signals, wie es nach der Korrelation auf den Pilotsequenzen vorliegt, wird anstelle der eindimensionalen (I)DFT eine zweidimensionale (I)DFT durchgeführt, der Zusammenhang lautet wie folgt:

$$Corr = IDFT2(\ DFT2(In) \cdot DFT2(\ mirror(Ref)^*\ )\ )$$

Es gilt zu beachten, dass die Spiegelung der Referenzsequenz an allen (im Beispiel beiden) Achsen erfolgt.

Ein weiterer Aspekt wrid bei der Durchführung der Korrelation im Frequenzbereich beachtet. Bei der DFT/FFT handelt es sich um zyklische Operationen und somit entspricht die Ausgangsgröße, anders als bei der linearen Korrelation/Faltung, genau der Größe der Eingangsdaten. Es gibt jedoch Techniken mit denen die zyklische Faltung im Frequenzbereich in eine lineare Faltung überführt werden kann.

Durch die Definition der zyklischen Sprungmuster aus Unterabschnitt C.1 ist eine zyklische Korrelation jedoch gerade von Vorteil, da so mit einer Transformation in den Frequenzbereich, dortiger Multiplikation im Frequenzbereich und anschließender Rücktransformation in den Zeitbereich alle möglichen Zeit- und Frequenzoffsets untersucht werden können. Dies ist gerade bei großen Größen des Ressourcen-Frames von Vorteil, da sehr viel Rechenleistung gespart werden kann.

Bei Ausführungsbeispielen wird die 2D-Korrelation im Frequenzbereich durchgeführt. Hierfür werden das zu untersuchende Signal und die gespiegelte Referenzsequenz mittels DFT/FFT transformiert und anschließend multipliziert. Das Ergebnis der Korrelation erhält man durch Anwenden einer IDFT/IFFT auf dem Multiplikationsergebnis.

Häufig sind in den Empfängern sog. DSP (DSP = digital signal processors, dt. digitale Signalprozessoren) verbaut. Diese Signalprozessoren stellen Bibliotheken zur effektiven Signalverarbeitung zur Verfügung. Darunter befindet sich im Normalfall auch eine DFT/FFT. In den wenigsten Fällen wird es jedoch eine mehrdimensionale FFT geben. Eine Ausnahme stellen hierbei die Signalprozessoren für die Bildverarbeitung dar.

Steht auf dem DSP keine optimierte Bibliothek zur Verfügung, welche eine mehrdimensionale DFT/FFT besitzt, muss für das oben beschriebene Verfahren die DFT/FFT "zu Fuß" gerechnet werden. Somit können die Optimierungen des Signalprozessors nicht genutzt werden.

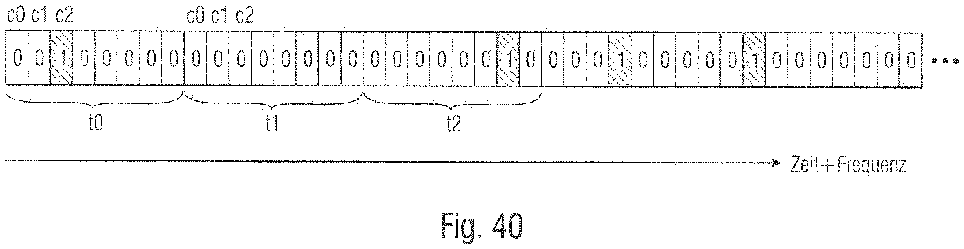

Dieses Problem kann umgangen werden, indem die Ressourcenelemente (zweidimensional, Zeit- und Frequenzebene) virtuell in eine eindimensionale Ebene überführt werden. Zusätzlich zur Transformation der zu untersuchenden Ressourcenelemente wird natürlich auch das zweidimensionale Referenz-Array transformiert. Für das Beispiel aus Unterabschnitt C.1 mit 8x8 Ressourcenelementen ist dies in Fig. 40 skizziert.

Im Detail zeigt Fig. 40 eine schematische Ansicht einer Transformation des zwei-dimensionalen Arrays (168) von Referenzwerten aus Fig. 35 in eine virtuelle ein-dimensionale Ebene. Mit anderen Worten, Fig. 40 zeigt eine Transformation der Referenzsequenz aus Fir. 36 auf eine virtuelle eindimensionale Ebene.

Ähnlich zu Fig. 40 erfolgt dies auch für das zu untersuchende Array (166) mit den Ressourcenelementen (zweidimensionale Array (166) von Korrelationsergebnissen (siehe Fig. 34)). Anschließend können beide eindimensionalen Arrays mit Hilfe einer eindimensionalen DFT/FFT in den Frequenzbereich transformiert und dort multipliziert werden. Vor der Transformation der Referenzsequenz mittels DFT/FFT ist zu beachten, dass die Sequenz wieder gespiegelt wird, da die Multiplikation im Frequenzbereich weiterhin einer Faltung entspricht.

Nach der Multiplikation kann das Ergebnis mit Hilfe einer IDFT/IFFT wieder zurück in den Zeitbereich transformiert werden. Das zweidimensionale Ergebnis wird durch Rücktransformation auf zwei Ebenen erhalten (Umkehroperation zu Fig. 40).

Bei Ausführungsbeispielen wird die zweidimensionale DFT/FFT und IDFT/IFFT in eine eindimensionale DFT/FFT umgewandelt in dem sowohl die Referenzsequenz (zwei-dimensionale Array von Referenzwerten) als auch das zu untersuchende 2D-Array (zwei-dimensionale Array von Korrelationsergebnissen) auf eine virtuelle eindimensionale Ebene transformiert werden. Nach der Rücktransformation des eindimensionalen Ergebnisses der Multiplikation wird das virtuelle eindimensionale Array wieder auf die ursprünglichen zwei Ebenen transformiert,

### C.3 Einsatz von zyklisch geschobenen Grundmustern zur Detektionsratenoptimierung

Im Folgenden wird zur Veranschaulichung ohne Einschränkung der Allgemeingültigkeit davon ausgegangen, dass der zur Verfügung stehende Übertragungs-Frequenzbereich in C einzelne, diskrete Frequenzkanäle unterteilt wird, welche durch einen Frequenzkanalindex $\{c_0, c_1, ..., c_{C-1}\}$ gekennzeichnet sind. Ebenso erfolgt eine Unterteilung der zeitlichen Ressourcen in T diskrete Elemente, welche im Folgenden als Zeitschlitze (engl. Timeslots) bezeichnet werden, die entsprechend mit einem Zeitschlitzindex $\{t_0, t_1, ..., t_{T-1}\}$ versehen sind. Ein Zeitschlitz (oder Sub-Datenpaket) beinhaltet dabei sowohl die Nutzdaten wie auch eine Präambel (auch Referenz-, Trainings- oder Pilotsequenz genannt).

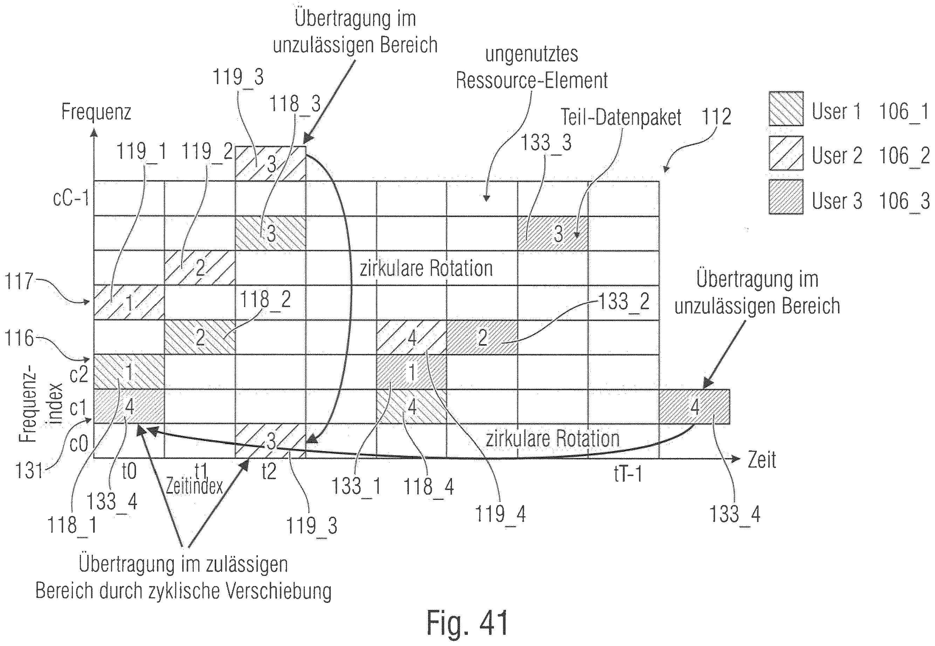

Durch die Unterteilung der Datenübertragungsbereiche in sog. Ressourcenelemente, besteht die Definition eines Sprungmusters, welches aus J einzelnen Sub-Datenpaketen besteht, aus einer Abfolge von Zeitschlitzindizes und Frequenzkanalindizes. Dies ist beispielhaft für das System in Fig. 41 zu sehen.

Im Detail zeigt Fig. 41 in einem Diagramm eine durch drei Sprungmuster 116, 117 und 131 unterschiedlicher Teilnehmer 106_1, 106_2, 106_3 angegebene Belegungen von Ressourcenelementen 118_1 bis 118_4, 119_1 bis 119_4 und 133_1 bis 133_4 der von dem Kommunikationssystem 102 verwendbaren Ressourcenelemente 112, wobei die drei Sprungmuster 116, 117 und 131 von dem gleichen Grundsprungmuster basierend auf einer Verschiebung des Grundsprungmusters in der Zeit und/oder Frequenz abgeleitet sind. Dabei beschreibt in Fig. 41 die Ordinate die Frequenz in Frequenzkanälen (Frequenzindizes) und die Abszisse die Zeit in Zeitschlitzen (Zeitschlitzindizes).

Wie Abschnitt C.1 bereits ausführlich erläutert wurde und in Fig. 41 beispielhaft gezeigt ist, kann ein Sprung eines Sprungmuster (z.B. der Sprung 119_3 des zweiten Teilnehmers 106_2), der bedingt durch die Verschiebung des Grundsprungmusters in der Frequenz (in Frequenzrichtung) außerhalb des durch die verwendbaren Ressourcenelemente 112 definierten zulässigen Frequenzbereichs liegt, basierend auf einer zyklischen Verschiebung (zirkularen Rotation) in den zulässigen Frequenzbereich (Ressourcenbereich 112) verschoben werden. Ferner kann ein Sprung eines Sprungmusters (z.B. der Sprung 133_4 des dritten Teilnehmers 106_3), der bedingt durch die Verschiebung des Grundsprungmusters in der Zeit (in Zeitrichtung) außerhalb des durch die verwendbaren Ressourcenelemente 112 definierten zulässigen Zeitbereichs liegt, basierend auf einer zyklischen Verschiebung (zirkularen Rotation) in den zulässigen Zeitbereich (Ressourcenbereich 112) verschoben werden.

Mit anderen Worten, Fig. 41 zeigt ein Szenario nach Abschnitt C.1 mit drei Sprungmustern 116, 117 und 131 basierend auf einem Grundsprungmuster mit unterschiedlichen Offsets zyklischer Verschiebung derjenigen (Teil-)Datenpakete, die nicht im gültigen Frequenz- bzw. Zeitbereich des Ressource-Frames 112 (verwendbare Ressourcenelemente 112 des Kommunikationssystems 102) liegen.

Wie in Fig. 41 zu erkennen ist, stehen dem System $T$ Zeitschlitze und C Frequenzelemente zur Verfügung, was in Summe einem Ressource-Frame 112 mit $N = T*C$ Ressourcenelementen entspricht. Weiterhin werden in Fig. 41 beispielhaft drei Teilnehmer (engl. User, z.B. Endpunkte) 106_1, 106_2 und 106_3 gezeigt, welche unter Verwendung eines einzigen Grundsprungmusters (der Länge $J=4$) Daten in jeweils vier Ressourcenelementen (gekennzeichnet durch die Bezugszeichen 118_1 bis 118_4 für den ersten Teilnehmer 106_1, Bezugszeichen 119_1 bis 119_4 für den zweiten Teilnehmer 106_2, und Bezugszeichen 133_1 bis 133_4 für den dritten Teilnehmer 106_3 in Fig. 41) übertragen. Die Sprungmuster 116, 117 und 131 aller drei Teilnehmer 106_1, 106_2 und 106_3 sind dabei identisch und unterscheiden sich lediglich durch die unterschiedlichen Zeit- und/oder Frequenzoffsets. Das Sprungmuster 117 von dem zweiten Teilnehmer 106_2 weist gegenüber dem Sprungmuster 116 von dem ersten Teilnehmer 106_1 einen Frequenzoffset von zwei Frequenzkanälen auf, während das Sprungmuster 131 von dem dritten Teilnehmer 106_3 gegenüber dem Sprungmuster 116 von dem ersten Teilnehmer 106_1 einen Zeitoffset von vier Zeitschlitzen aufweist.

Die Verwendung eines Grundsprungmusters, aus dem die einzelnen Sprungmuster 116, 117, 131 lediglich durch dessen Verschiebung in Zeit- und/oder Frequenzrichtung abgeleitet sind, ermöglichen es dem Datenempfänger 104, den Ressource-Frame 112 mit vereinfachten Detektions-Verfahren abzusuchen. Damit sich eine möglichst große Anzahl M von maximal $M = N = T*C$ verschiedenen Sprungmustern ergibt, wurde in Abschnitt C.1 erstmals eine zirkulare Rotation vorgeschlagen, die wie in Fig. 41 dargestellt, sowohl in Frequenz- und/oder Zeitrichtung stattfinden kann. Würde durch eine Zeit- und/oder Frequenzverschiebung des Grundsprungmusters ein Sub-Datenpaket einem Ressourcenelement außerhalb des zulässigen Ressource-Frames 112 zugeordnet werden, so wird das Sub-Datenpaket in der gleichen Spalte (im Beispiel: zweiter Teilnehmer 106_2, drittes Sub-Datenpaket 119_3) bzw. gleichen Zeile (im Beispiel: dritter Teilnehmer 106_3, viertes Sub-Datenpaket 133_4) über eine Modulo-Operation wieder dem zulässigen Ressourcenbereich 112 zugeordnet. Alle Sub-Datenpakete, welche bei einer Verschiebung des Grundsprungmusters in Zeit- oder Frequenzrichtung aus dem zulässigen Ressource-Frame 112 herausfallen, werden somit zyklisch wieder in den zulässigen Bereich "rückrotiert".

Typischerweise geschieht die Detektion der verschiedenen Sprungmuster in mehreren Schritten. Zunächst erfolgt eine "Korrelation" des Empfangssignals mit den Trainingssymbolen der Präambel in jedem einzelnen Zeitschlitz eines Ressource-Frames 112. Für jedes Ressourcelement ergibt sich anhand der Korrelation mit nachfolgender Betragsbildung ein reeller Wert, der entsprechend seiner Zeit-/Frequenzposition in eine neue Matrix $CM_{TC}$ der Dimension $C \times T$ eingetragen wird. Das zweidimensionale Auffinden der von den in einem Ressource-Frame aktiven (sendenden) Datensendern (z.B. Endgeräten) 106_1 bis 106_n verwendeten Sprungmuster erfolgt anschließend durch eine erneute 2D-Korrelation der Matrix $CM_{TC}$ mit dem Grundsprungmuster. Dem Datenempfänger (z.B. Basisstation) 104 ist dabei sowohl die Anzahl der in einem Ressource-Frame 112 aktiven Datensender (z.B. Endgeräte oder Endpunkte) 106_1 bis 106_n als auch die von den Datensendern 106_1 bis 106_n verwendeten Sprungmuster, d.h. der jeweilige Offset des Grundsprungmusters im Zeit- und/oder Frequenzbereich unbekannt. Die 2D-Detektion kann dabei durch $N=T*C$ Korrelationen mit jeweils dem Grundsprungmuster der Länge $J$ direkt über $CM_{TC}$ im Originalbereich erfolgen oder, wie in Abschnitt C.2 beschrieben, mittels einer 2D-DFT Hin- und Rücktransformation im Spektralbereich, wobei die Korrelation dann im Frequenzbereich durch eine Multiplikation mit der 2D-Transformierten des Grundsprungmusters erfolgt. Welche der beiden Vorgehensweisen in Abhängigkeit verschiedener Parameter aufwandsgünstiger ist, wird an späterer Stelle noch eingehender analysiert. Hierin wird, wenn von der Diskreten Fourier Transformierten (DFT) gesprochen wird, immer die schnelle aufwandsreduzierte Variante der Fast Fourier Transformierten (FFT) unterstellt, insbesondere bei Aufwandsabschätzungen.

Die Grundsprungmustererzeugung nach Fig. 41 und damit auch das nach Abschnitt C.1 beschriebene Verfahren, haben den Nachteil, dass eine "echte" 2D-DFT durchgeführt werden muss. Das bedeutet, dass zuerst jede der $C$ Zeilen von $CM_{TC}$ mit jeweils einer eindimensionalen DFT der Länge $T$ zu transformieren ist und anschließend alle transformierten Zeilen spaltenweise mit $T$ eindimensionalen DFTs der Länge $C$ transformiert werden. Insgesamt benötigt man also ($T+C$) eindimensionale DFTs der Länge $C$ bzw. $T$ sowohl für die Hin- wie auch für die Rücktransformation.

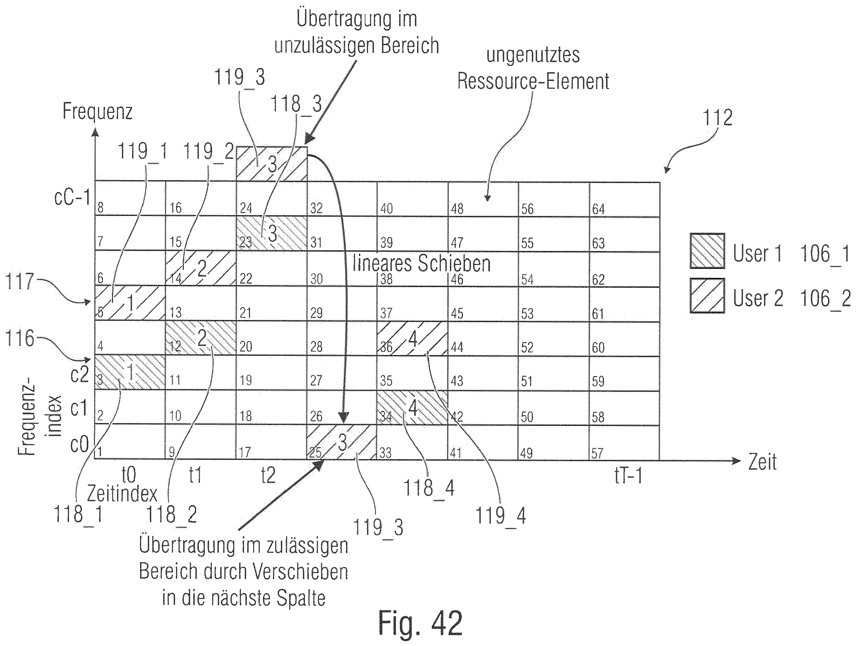

Eine Aufwandsreduzierung im Vergleich zu Abschnitt C.1 ist erzielbar, wenn die in Fig. 42 dargestellte Sprungmustererzeugung verwendet wird.

Im Detail zeigt Fig. 42 in einem Diagramm eine durch zwei Sprungmuster 116 und 117 unterschiedlicher Teilnehmer 106_1 und 106_2 angegebene Belegungen von Ressourcenelementen 118_1 bis 118_4 und 119_1 bis 119_4 der von dem Kommunikationssystem 102 verwendbaren Ressourcenelemente 112, wobei die zwei Sprungmuster 116 und 117 von dem gleichen Grundsprungmuster basierend auf einer Verschiebung des Grundsprungmusters in der Zeit und/oder Frequenz abgeleitet sind. Dabei beschreibt in Fig. 42 die Ordinate die Frequenz in Frequenzkanälen (Frequenzindizes) und die Abszisse die Zeit in Zeitschlitzen (Zeitschlitzindizes).

Wie in Fig. 42 angedeutet ist, kann bei Ausführungsbeispielen ein Sprung eines Sprungmusters (z.B. der Sprung 119_3 des zweiten Sprungmusters 117 des zweiten Teilnehmers 106_2), der bedingt durch die Verschiebung des Grundsprungmusters in der Frequenz außerhalb des durch die verwendbaren Ressourcenelemente 112 definierten zulässigen Frequenzbereichs liegt, basierend auf einer zyklischen Verschiebung in Frequenzrichtung und zusätzlich basierend auf einer linearen Verschiebung in Zeitrichtung (z.B. um plus ein Zeitschlitz (Zeitindex) in Fig. 42) in den zulässigen Ressourcenbereich 112 verschoben werden.

Mit anderen Worten, Fig. 42 zeigt ein Szenario mit zwei Sprungmustern 116 und 117 basierend auf einem Grundsprungmuster mit unterschiedlichen Offsets. Wie in Fig. 42 zu erkennen ist, erfolgt ein lineares Schieben der (Teil-)Datenpakete in die nächste Spalte, welche nicht im gültigen Frequenzbereich des Ressource-Frames 112 liegen.

Die empfängerseitige zweidimensionale Verarbeitung (Transformation) lässt sich mit der in Fig. 42 gezeigten Sprungmustererzeugung auf eine einfachere eindimensionale Verarbeitung (Transformation) reduzieren, wo nur noch jeweils eine DFT der Länge N sowohl für die Hin- wie auch die Rücktransformation benötigt wird. Falls ein (z.B. von dem Sprungmuster definiertes) Ressourcenelement aus dem gültigen Frequenzbereich herausgeschoben wird, erfolgt wie in Fig. 42 mit dem dritten Teil-Datenpaket vom zweiten Teilnehmer 106_2 dargestellt, keine Abbildung des Ressourcenelements über eine Modulo-Operation in die gleiche Spalte (d.h. auf denselben Zeitindex), sondern das Ressourcenelement wird mit dem entsprechenden Versatz immer in die darauffolgend nächste Spalte (d.h. mit einem um eins höheren Zeitindex) geschoben.

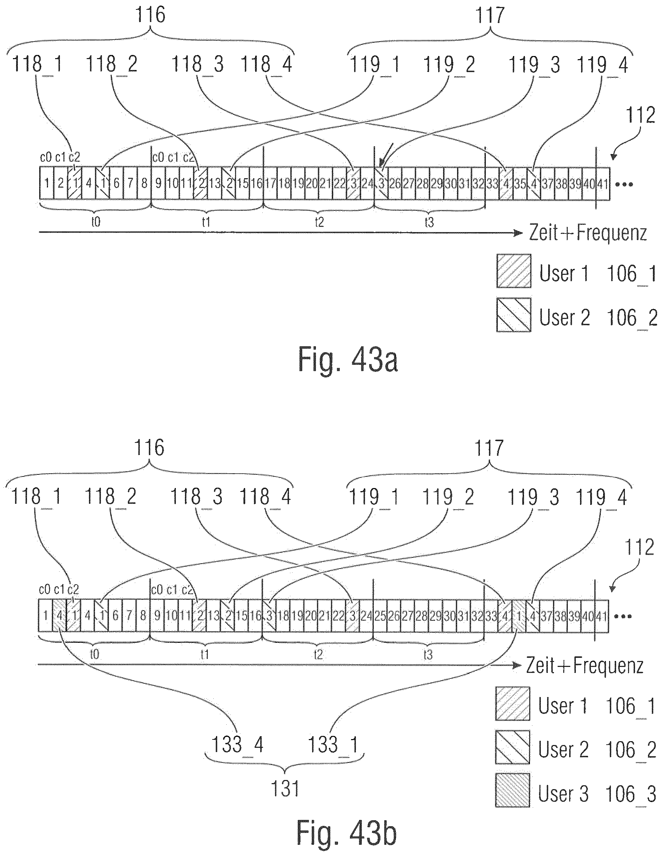

Der Unterschied zwischen dem Vorgehen aus Fig. 41 (nach Abschnitt C.1) und dem Vorgehen nach Fig. 42 wird besonders offensichtlich bei Betrachtung von Fig. 43a und 43b.

Fig. 43a zeigt eine auf eine virtuelle ein-dimensionale Ebene transformierte Darstellung der verfügbaren Ressourcenelemente 112 des Kommunikationssystems 102 sowie die durch zwei Sprungmuster 116 und 117 aus Fig. 42 definierte Belegung der verfügbaren Ressourcenelemente 112. In Fig. 43a wurden die in Fig. 42 gezeigten verfügbaren Ressourcenelemente 112 mit den durch die zwei Sprungmuster 116 und 117 belegten Ressourcenelementen 118_1 bis 118_4 und 119_1 bis 119_4 zeitschlitzweise/zeitindexweise (=spaltenweise) auf eine virtuelle ein-dimensionale Ebene projiziert und die so projizierten Versionen der Zeitschlitze/Zeitindexe in Zeitrichtung aneinandergereiht. Mit anderen Worten, bei Fig. 43a erfolgte eine Transformation der zwei Sprungmuster 116 und 117 aus Fig. 42 durch Umklappen der Spalten nach rechts in Zeitrichtung. Dabei beschreibt die Abszisse sowohl die Zeit als auch die Frequenz.

Fig. 43b zeigt eine auf eine virtuelle ein-dimensionale Ebene transformierte Darstellung der verfügbaren Res-

sourceelemente 112 des Kommunikationssystems 102 sowie die durch drei Sprungmuster 116, 117 und 131 aus Fig. 41 definierte Belegung der verfügbaren Ressourcenelemente 112. In Fig. 43b wurden die in Fig. 41 gezeigten verfügbaren Ressourcenelemente 112 mit den durch die drei Sprungmuster 116, 117 und 131 belegten Ressourcenelementen 118_1 bis 118_4, 119_1 bis 119_4 und 133_1 bis 133_4 zeitschlitzweise/zeitindexweise (=spaltenweise) auf eine virtuelle ein-dimensionale Ebene projiziert und die so projizierten Versionen der Zeitschlitze/Zeitindexe in Zeitrichtung aneinandergereiht. Mit anderen Worten, bei Fig. 43b erfolgte eine Transformation der drei Sprungmuster 116, 117 und 131 aus Fig. 41 durch Umklappen der Spalten nach rechts in Zeitrichtung. Dabei beschreibt die Abszisse sowohl die Zeit als auch die Frequenz.

In Fig. 43a wurden die einzelnen Spalten von Fig. 42 bildlich gesprochen also jeweils nach "rechts gekippt" und dann aneinandergereiht, was einer Umformung der Matrix zu einem Vektor entspricht, welcher aus einer Abfolge der einzelnen Spalten der Matrix konstituiert wird. (Aufgrund der hier gewählten Indizierung - c0, c1, c2... von "unten nach oben" - werden die Elemente der einzelnen Spalten in jeweils umgekehrter Reihenfolge zu ihrem Zeilenindex angeordnet.) Dadurch verschmelzen die Zeit- und Frequenzachse zu einer gemeinsamen 1D-Achse. Die vormals zwei-dimensionalen 64 Ressourcenelemente aus Fig. 42 sind nun in einem gleichlangen Zeilenvektor angeordnet. Nach Abschnitt C.1 müsste das dritte Teil-Datenpaket vom zweiten Teilnehmer 106_2 auf das Ressourcenelement mit dem Index 17 rotiert werden (siehe Fig. 43b) und nicht wie in den Fig. 42 und 43a gezeigt nach Indexelement 25 wandern. Durch die in Fig. 42 gezeigte Vorschrift behalten die Sprungmuster 116 und 117 auch in der eindimensionalen Darstellung ihr in sich gleiches Aussehen (entsprechend einem einzigen Grundsprungmuster) und unterscheiden sich lediglich durch die unterschiedlichen anfänglichen Zeit- und/oder Frequenzoffsets.

Ein Nachteil einer Grundsprungmusterimplementierung, bei der kein zirkulares Schieben von Teil-Datenpaketen über das Ende des zulässigen Ressource-Frames 112 hinaus vorgesehen ist, ist das ein Rotieren eines Sub-Datenpakets von beispielsweise Ressourcenelement 64 nach Ressourcenelement 1 nicht möglich ist, womit sich deutlich weniger geschobene Sprungmuster als im Fall von dem in Abschnitt C.1 beschriebenen Ansatz ergeben.

## C.3.1 In Frequenzrichtung linear geschobene und in Zeitrichtung zyklisch rotierte zwei-dimensionale Sprungmuster

Hinsichtlich des Designs von Sprungmustern bestehen folgende Anforderungen:

1) Entwurf möglichst vieler Sprungmuster, die sich lediglich durch unterschiedliche Anfangsoffsets eines einzelnen Grundsprungmusters unterscheiden.
2) Innerhalb eines jeden Zeitschlitzindexes ist es einem Datensender 106 (z.B. Endgerät) nur möglich, ein einziges Teil-Datenpaket auf einem diskreten Frequenzkanal auszusenden.
3) Möglichst aufwandsgünstige Detektion der Grundsprungmuster.
4) Möglichst gute Performance-Eigenschaften der Sprungmusterschar.

Auch für den Fall, dass nur zwei Datensender 106_1 bis 106_n (n=2) (z.B. Endgeräte) ihre Nachricht in Form des Telegrammaufteilungs-Verfahrens innerhalb eines Ressource-Frames 112 der Größe mit N = T*C aussenden, ist die Anzahl M der verschiedenen Sprungmuster von großer Bedeutung. Existieren z.B. nur zehn verschiedene Sprungmuster, dann ist die Wahrscheinlichkeit genau 10%, dass es zu einer Vollkollision und damit zu erwartbaren Paketfehlern kommt. Gibt es hingegen 100 verschiedene Sprungmuster, dann sinkt diese Vollkollisions-Wahrscheinlichkeit auf 1% und bei 1000 verschiedenen Sprungmustern entsprechend auf 0,1%. Um bei zwei unkoordinierten Datensendern 106_1 bis 106_n (n=2) (z.B. Nutzern) eine Paketfehlerrate von $10^{-3}$ zu ermöglichen, sollte die Anzahl von M immer in einer Größenordnung von mindestens circa 1000 sein. Vollständig zueinander orthogonale Sprungmuster (d.h. Sprungmuster, in der jedes Ressourcenelement nur exklusiv von einem einzigen Sprungmuster verwendet wird) gibt es nur für eine geringe Anzahl von Sprungmustern, nämlich genau N/J, wenn J die Anzahl der Ressourcenelemente eines Sprungmusters ist und N die Größe des Ressource-Frames 112. Da die Teil-Datenpakete kodiert sind, kann der Ausfall einer bestimmten Anzahl von Sub-Datenpaketen (Teil-Datenpaketen) durch wechselseitige Störungen toleriert werden und trotzdem kann die Nachricht immer noch fehlerfrei dekodiert werden.

Die erste Forderung (siehe oben), dass sich die Sprungmuster lediglich durch unterschiedliche Anfangsoffsets unterscheiden, ist besonders für die Minimierung des empfängerseitigen Detektionsaufwands im Spektralbereich von großer Bedeutung. Hierauf wird noch an späterer Stelle eingegangen.

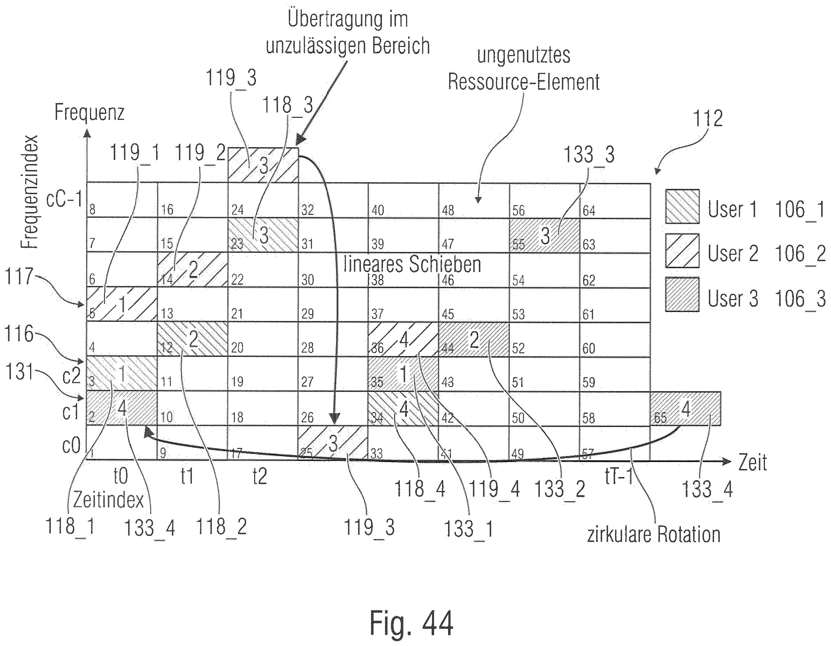

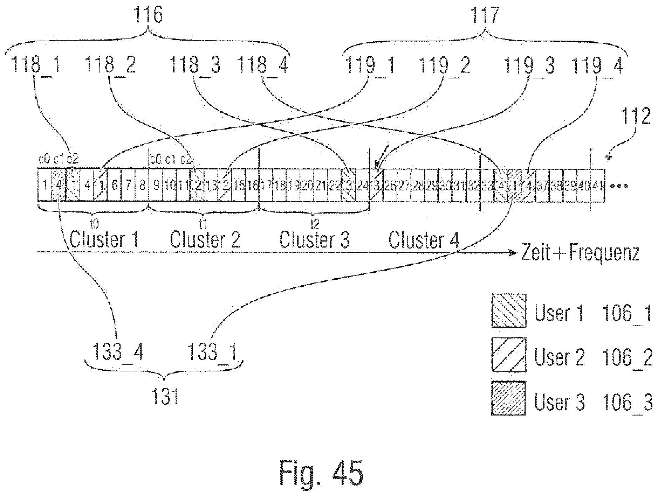

Die Maximalanzahl von *M = N* Sprungmustern, die durch reine Verschiebung aus nur einem Grundsprungmuster erzeugt werden, ist nur realisierbar, wenn ein zyklisches Schieben über die Ränder des Ressource-Frames 112 hinaus erlaubt ist. Damit das 2D-Detektionsproblem sowohl im Originalbereich (mittels Korrelationen) wie auch im Spektralbe-reich (mittels DFTs) besonders vorteilhaft auf ein eindimensionales Problem reduziert werden kann, darf in Frequenzrichtung keine zyklische Rotation (Modulo-Operation auf den Frequenzindex) durchgeführt werden, sondern es wird lediglich ein lineares Weiterschieben erlaubt. Das Vorgehen ist in Fig. 44 und 45 veranschaulicht. Insbesondere bei der eindimensionalen Transformation nach Fig. 45 wird das Vorgehen deutlich. Die Frequenzrichtung wird durch das "Umklappen" der Matrix in einen Vektor aufgelöst, das Grundsprungmuster behält seine Form und wird einfach weitergeschoben. Lediglich dann, wenn ein Ressourcenelement über den "rechten" Frame-Rand hinausgeschoben wird, erfolgt über eine Modulo-Operation eine Spiegelung in die "linke" Seite zurück in den gültigen Ressourcenbereich 112. Dies ist in den Fig. 44 und 45 exemplarisch für das vierte Sub-Datenpaket vom dritten Teilnehmer 106_3 dargestellt.

Im Detail zeigt Fig. 44 in einem Diagramm eine durch drei (M=3) Sprungmuster 116, 117 und 131 unterschiedlicher Teilnehmer 106_1, 106_2 und 106_3 angegebene Belegungen von Ressourcenelementen 118_1 bis 118_4, 119_1 bis 119_4 und 133_1 bis 133_4 der von dem Kommunikationssystem 102 verwendbaren Ressourcenelemente 112, wobei die drei Sprungmuster 116, 117 und 131 von dem gleichen Grundsprungmuster basierend auf einer Verschiebung des Grundsprungmusters in der Zeit und/oder Frequenz abgeleitet sind. Dabei beschreibt in Fig. 44 die Ordinate die Frequenz in Frequenzkanälen (Frequenzindizes) und die Abszisse die Zeit in Zeitschlitzen (Zeitschlitzindizes). Mit anderen Worten, Fig. 44 zeigt ein Szenario mit drei Sprungmustern 116, 117 und 131 basierend auf einem Grundsprungmuster mit unterschiedlichen Offsets. In Fig. 44 erfolgt ein lineares Schieben der Sub-Datenpakete in die nächste Spalte, welche nicht im gültigen Frequenzbereich liegen, und eine zyklische Rotation derjenigen Sub-Datenpakete, die nicht im gültigen Zeitbereich des Ressource-Frames 112 liegen.

Wie in Fig. 44 angedeutet ist, kann bei Ausführungsbeispielen ein Sprung eines Sprungmusters (z.B. der Sprung 119_3 des zweiten Sprungmusters 117 des zweiten Teilnehmers 106_2), der bedingt durch die Verschiebung des Grundsprungmusters in der Frequenz außerhalb des durch die verwendbaren Ressourcenelemente 112 definierten zulässigen Frequenzbereichs liegt, basierend auf einer zyklischen Verschiebung in Frequenzrichtung und zusätzlich basierend auf einer linearen Verschiebung in Zeitrichtung (z.B. um plus ein Zeitschlitz (Zeitindex) in Fig. 44) in den zulässigen Ressourcenbereich 112 verschoben werden.

Wie in Fig. 44 ferner angedeutet ist, kann bei Ausführungsbeispielen ein Sprung eines Sprungmusters (z.B. der Sprung 133_4 des dritten Sprungmusters 131 des dritten Teilnehmers 106_3), der bedingt durch die Verschiebung des Grundsprungmusters in der Zeit außerhalb des durch die verwendbaren Ressourcenelemente 112 definierten zulässigen Frequenzbereichs liegt, basierend auf einer zyklischen Verschiebung in Zeitrichtung in den zulässigen Ressourcenbereich 112 verschoben werden.

Fig. 45 zeigt eine auf eine virtuelle ein-dimensionale Ebene transformierte Darstellung der verfügbaren Ressourcenelemente 112 des Kommunikationssystems 102 sowie die durch drei Sprungmuster 116, 117 und 131 aus Fig. 44 definierte Belegung der verfügbaren Ressourcenelemente 112. In Fig. 45 wurden die in Fig. 44 gezeigten verfügbaren Ressourcenelemente 112 mit den durch die drei Sprungmuster 116, 117 und 131 belegten Ressourcenelementen 118_1 bis 118_4, 119_1 bis 119_4 und 133_1 bis 133_4 zeitschlitzweise/zeitindexweise (=spaltenweise) auf eine virtuelle ein-dimensionale Ebene projiziert und die so projizierten Versionen der Zeitschlitze/Zeitindexe in Zeitrichtung aneinandergereiht. Mit anderen Worten, bei Fig. 45 erfolgte eine Transformation der drei Sprungmuster 116, 117 und 131 aus Fig. 44 durch Umklappen der Spalten nach rechts in Zeitrichtung. Dabei beschreibt die Abszisse sowohl die Zeit als auch die Frequenz.

Durch dieses Vorgehen werden die jeweiligen Vorteile in Kombination genutzt: Maximalanzahl von *N* gleichen, aber verschobenen Sprungmustern einerseits sowie eine aufwandsgünstigere Detektion, speziell im Spektralbereich, andererseits. Falls aufgrund der geringen Größe des Ressource-Frames 112 die Anzahl *N* noch nicht ausreicht, können weitere Grundsprungmuster eingeführt werden, deren Formen sich vom ersten Grundsprungmuster unterscheiden und die wie das erste Grundsprungmuster entsprechend verschoben werden. Auf diese Art lässt sich immer eine gewünschte Anzahl von *M (auch M>N)* verschiedenen Sprungmustern realisieren.

Die zweite Forderung lässt sich wie folgt erfüllen. Liegen entsprechend Fig. 44 *C Frequenzindizes* vor, so ergibt sich nach Fig. 45 ein Mindestabstand von *C* Ressourcenelementen zwischen zwei benachbarten Teil-Datenpaketen in der Vektordarstellung. So wird sichergestellt, dass sich immer nur ein Teil-Datenpaket eines Grundsprungmusters in einer Frequenzspalte nach Fig. 44 oder einem Cluster der Länge *C* nach Fig. 45 befindet.

Nachfolgend noch ein Vergleich des Aufwands, der erforderlich ist, die Kombination der Korrelationsergebnisse der (Teil-)Pilotsequenzen entsprechend der geschobenen Sprungmuster zu einem Gesamtkorrelationsergebnis über den Ressource-Frame 112 der Größe *N=T*C* zusammenzufassen.

Basieren alle *M* Sprungmuster mit der Länge *J* (wobei unterstellt wird, dass *M* gleich der Ressourcenlänge *N* ist) auf demselben Grundsprungmuster und unterscheiden sich nur in ihrem durch einen Offset verschobenen Startpunkt, dann ergibt sich ein Aufwand von

$$N * J \qquad \text{reellen Multiplikationen (rM) im Originalbereich.} \qquad (1)$$

Wird die Berechnung entsprechend im Spektralbereich über eine 1D reelle FFT der Länge *N* durchgeführt, so werden insgesamt zwei reelle 1D-FFTs (jeweils für die Hin- und Rücktransformation) sowie N/2 komplexe Multiplikationen im Spektralbereich mit der vorab berechneten und tabellarisch abgespeicherten Transformierten des Grundsprungmusters benötigt. Wird bei der FFT-Berechnung eine reelle Radix-2 FFT unterstellt, dann kann diese effizient über eine komplexe Radix-2 FFT halber Länge, also N/2, realisiert werden. Dafür werden in etwa $N/4*log_2(N)$ komplexe Multiplikationen benötigt. Aufwandsgünstigere Transformationen (wie Radix-4 FFT oder Split-Radix-FFT) sowie die Berücksichtigung von Sonderfällen bei den FFT-Drehfaktoren bleiben in dieser Betrachtung unberücksichtigt, ebenso wie die Berücksichtigung von Mixed-Radix-FFTs für andere Transformationslängen von $N$. Wird berücksichtigt, dass sich eine komplexe Multiplikation in vier reelle Multiplikationen zerlegen lässt, so sind in Summe

$$2N*(1+log_2(N)) \qquad \text{reelle Multiplikationen (rM) im Spektralbereich} \qquad (2)$$

für die Berechnung der Korrelationsergebnisse erforderlich. Der Vergleich zwischen (1) und (2) lässt erkennen, dass nur (1) von der Grundsprungmusterlänge $J$ abhängt, die in einem praktischen Übertragungssystem üblicherweise je nach Kodierung im Bereich zwischen 8 und 24 liegt.

Die nachfolgende Tabelle zeigt eine tabellarische Darstellung der erforderlichen Anzahl reeller Multiplikationen (rM) zur Auswertung des Korrelationsergebnis-Vektors für unterschiedliche Ressource-Framelängen N, Anzahl der Sprungmuster M=N sowie der Anzahl J von Subpaketen im Grundsprungmuster.

| *N=M* | Originalbereich | | | Spektralbereich |
|---|---|---|---|---|
| | *J=12* | *J=18* | *J=24* | |
| 64 | 768 rM | 1.152 rM | 1.536 rM | 896 rM |
| 256 | 3.072 rM | 4.608 rM | 6.144 rM | 4.608 rM |
| 512 | 6.144 rM | 9.216 rM | 12.288 rM | 10.240 rM |
| 1024 | 12.288 rM | 18.432 rM | 24.576 rM | 22.528 rM |
| 4096 | 49.152 rM | 73.728 rM | 98.308 rM | 106.496 rM |

Wie sich der obigen Tabelle, welche die benötigten multiplikativen Aufwand für verschiedene Längen von N und J zeigt, entnehmen lässt, ist je nach gewählten Parametern einmal die eine oder andere Variante aufwandsgünstiger.

Bei Ausführungsbeispielen gibt es (nur) ein Grundsprungmuster welches in Zeit und/oder Frequenz verschoben wird, um mehrere Teilnehmer (User) voneinander zu trennen. Die Verschiebung des Grundsprungmusters erfolgt in Frequenzrichtung linear und in Zeitrichtung zyklisch.

### C.3.2 Einfluss der Ressource-Framegröße N und zur Kaskadierung von Frames

Die Größe $N$ des Ressource-Frames 112 ($N$ = Anzahl an Ressourcenelementen des Ressource-Frames 112) hat einen großen Einfluss auf die Systemperformance, d.h. auf die mögliche Auslastung des Systems 102 bei gegebener Paketfehlerrate. Je mehr $N$ anwächst, desto besser wird die Systemperformance, allerdings mit zunehmend beschränkter Zuwachsrate. Zwischen großen Werten von $N$, beispielsweise zwischen $N = 6000$ und $N = 10000$ ist nur noch wenig Performance-Unterschied erkennbar. Es ist auch weniger der Rechenaufwand (siehe obige Tabelle von Abschnitt C.3.1) der gegen sehr große Framegrößen spricht, als vielmehr der extrem anwachsende Speicherbedarf. Das Empfangssignal in jedem potentiell belegten Ressourcenelement sollte mit mindestens $T/2$ in Zeitrichtung abgetastet werden, was bei einer Sub-Datenpaketlänge von beispielsweise 70 Symbolen einen Speicherbedarf von 280 Byte je Ressourcenelement erfordert. Insofern sind sehr große Framegrößen wegen des sehr hohen Speicherbedarfs zu vermeiden. Je nach Grundsprungmusterlänge $J$ haben sich Werte von $N = 256$ bis $N = 2048$ als sinnvoll erwiesen. Kleinere Framegrößen zeigen dagegen deutliche Performanceverluste, d.h. die mögliche Auslastbarkeit des Systems (Anzahl aktiver Datensender (Nutzer)) bei gegebener Fehlerrate sinkt.

Um den Einfluss verschiedener Ressource-Framegrößen $N$ miteinander vergleichen zu können, kann eine verfügbare Gesamtzahl von $S$ Ressourcenelementen angenommen werden, z.B. im Folgenden $S=6000$. Diese Gesamtmenge $S$ wird derart in $K$ Ressource-Frames der jeweiligen Länge $N$ unterteilt, sodass $K*N=S$ gilt. Es werden also $K$ Ressource-Frames kaskadiert. Ein Vergleich verschiedener Framegrößen $N$ ist für $S=6000$ dargestellt.

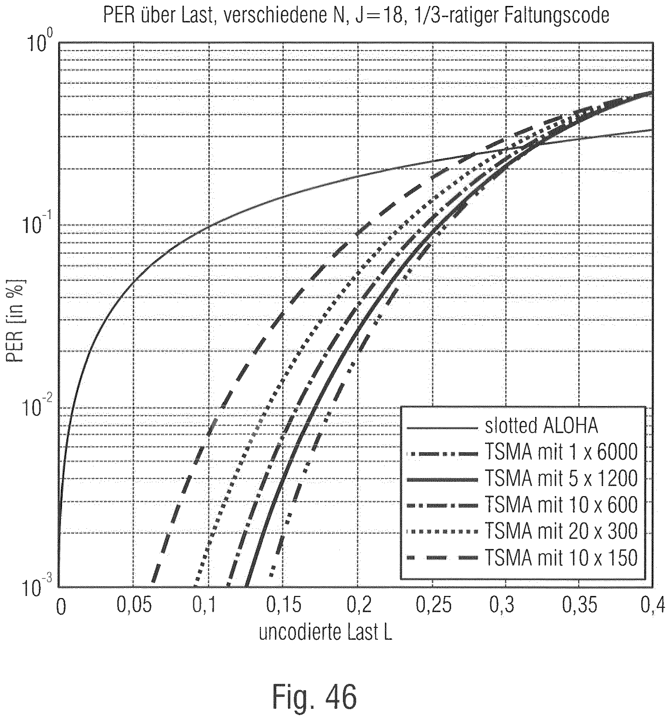

Im Detail zeigt Fig. 46 in einem Diagramm eine Paketfehlerrate für verschiedene Größen des Ressource-Frames (K=1, N=6000; K=5, N=1200; K=10, N=600; K = 20, N=300; K=40, N=150) aufgetragen über die uncodierte Last. Zum Vergleich ist in Fig. 46 noch die Paketfehlerrate bei slotted ALOHA gezeigt. Dabei beschreibt die Ordinate die Paketfehlerrate (PER) in Prozent und die Abszisse die uncodierte Last (L). Mit anderen Worten, Fig. 46 zeigt in einem Diagramm die Paketfehlerrate (PER) in Abhängigkeit von verschiedenen Ressource-Framegrößen N und einer Gesamtanzahl von S=6000 Ressource-Elementen.

Es zeigt sich, dass die größtmögliche Framegröße mit $S = N = 6000$ Ressourcenelementen (ohne Kaskadierung, d.h. $K=1$) die niedrigste Paketfehlerrate (PER) zeigt, gefolgt von den Kaskadierungen mit $K=5$ Frames mit je $N=1200$ Ressourcenelementen sowie $K=10$ Frames mit je $N=600$, u.s.w. Bei den Kaskadierungsvarianten nach Fig. 46 bestimmt der Datensender (Endgerät) nach einem (pseudo-)Zufallsprinzip zuerst einen der $K$ verfügbaren Kaskadenframes aus und wählt anschließend (pseudo-)zufällig eines der Sprungmuster aus. Der Detektionsalgorithmus wurde in Fig. 46 als idealisiert angenommen und die Zahl der zur Verfügung stehenden Sprungmuster $M$ als genügend groß angenommen. Gerade Letzteres stellt für kleine Framegrößen ein Problem dar, da die Anzahl verschiedener Sprungmuster $M,$ die auf einem Grundsprungmuster basieren, nie größer als die Länge $N$ des Ressource-Frames werden kann, d.h. $M \leq N$. Wie sich trotzdem eine entsprechend großer Anzahl von Grundsprungmustern erreichen lässt, wird im nächsten Abschnitt erläutert.

Eine geeignete Wahl von $N$ wird von vielen Parametern beeinflusst: Anzahl der Datensender 106_1 bis 106_n (z.B. Endgeräte) im Kommunikationssystem 102, verfügbare Rechen- und Speicherkapazität im Datenempfänger 104 (z.B. Basisstation), geforderte Latenzzeiten, Anzahl der gleichzeitig zu empfangenden Frequenzen, um nur einige zu nennen. Falls die Framegrößen N aufgrund einer der obigen Restriktionen nicht den Wünschen entsprechend groß gewählt werden kann, kann eine Kaskadierung der Ressource-Frames erfolgen. Diese Kaskadierung kann sowohl in Frequenz- wie auch in Zeitrichtung geschehen. Dabei können verschiedene Varianten des "konkurrenzbasierten Zugriffsverfahrens" zum Einsatz kommen:

a) Ein "vollständiges konkurrenzbasiertes Zugriffverfahren" (engl. fully contention based access) wie bei Fig. 46 angewandt. Der Datensender 106 (z.B. Endgerät) wählt den Ressource-Frame und das Sprungmuster aus dem jeweils verfügbaren Vorrat zufällig aus.

b) Ein "partiell koordiniertes konkurrenzbasiertes Zugriffverfahren" (engl. partly coordinated contention based access). Hier weist entweder der Datenempfänger (z.B. Basisstation) 104 (beispielsweise bei der Registrierung des Datensenders 106 im System) dem Datensender 106 einen festen Ressource-Frame zu oder der Datensender 106 wählt entsprechend einer fest vergebenen ID-Nummer einen entsprechenden Ressource-Frame aus. Die Zuweisung des Sprungmusters erfolgt wie bei a) zufällig.

c) Ein "voll koordiniertes konkurrenzbasiertes Zugriffverfahren" (engl. fully coordinated contention based access). Hier erfolgt sowohl die Ressource-Frame - wie auch Sprungmuster-Zuweisung entweder direkt durch den Datenempfänger (z.B. Basisstation) 104 oder via ID-Nummer oder einem vergleichbaren Identifikator. Da die Sprungmuster in der Regel nicht zueinander orthogonal sind, können trotzdem noch Übertragungskonflikte auf Ressource-Element-Ebene (daher immer noch konkurrenzbasiert) auftreten.

Gerade bei der Variante c) kann der Datenempfänger (z.B. Basisstation) 104 die Zuteilungen vorteilhaft steuern. Dem Datenempfänger 104 kann bekannt sein, welche Ressource-Frames belegt sind und welche Grundsprungmuster vergeben sind. Dieses Wissen kann der Datenempfänger (z.B. Basisstation) 104 auf Empfängerseite zur Aufwandsreduzierung vorteilhaft nutzen. Durch eine geschickte Zuteilung kann der Datenempfänger (z.B. Basisstation) 104 damit Paketfehler verhindern (zumindest bis zu einer bestimmten Last) oder minimieren.

### C.3.3 Verwendung von Sprungmustern basierend auf mehreren unterschiedlichen Grundmustern

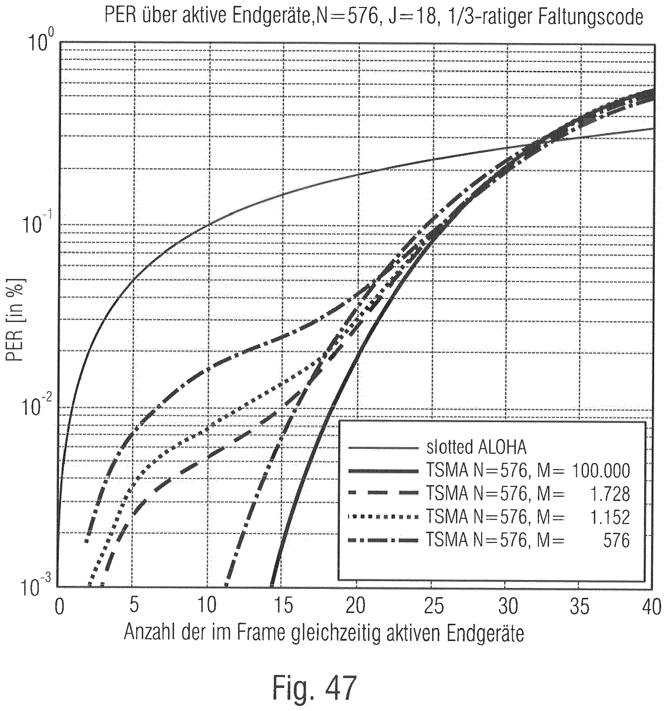

Fig. 47 zeigt in einem Diagramm eine Paketfehlerrate für verschiedene Anzahlen M von Sprungmustern bei einer festen Größe des Ressource-Frames (N=576, M=100000; N=576, M=1728; N=576, M=1152; N=576, M=576;) aufgetragen über die Anzahl der im Ressource-Frame gleichzeitig aktiver Datensender (Endgeräte). Zum Vergleich ist in Fig. 47 noch die Paketfehlerrate bei slotted ALOHA gezeigt. Dabei beschreibt die Ordinate die Paketfehlerrate (PER) in Prozent und die Abszisse die Anzahl der im Ressource-Frame gleichzeitig aktiver Datensender (Endgeräte). Mit anderen Worten, Fig. 47 zeigt in einem Diagramm die Paketfehler-Performance in Abhängigkeit von der verwendeten Anzahl von Sprungmustern bei einer Framegröße von N = 576.

Fig. 47 zeigt also die Paketfehlerrate (PER) bei einer festen Framegröße von $N=576$ und der Verwendung einer unterschiedlichen Anzahl $M$ von Sprungmustern. Dabei gilt es zwei Bereiche zu unterscheiden: oberhalb einer aktiven Endgeräteanzahl von etwa 26 (dies entspricht einer uncodierten Auslastung von 27%) in jedem Frame hat die Verwendung einer unterschiedlichen Anzahl von Sprungmustern wenig Einfluss auf die Fehlerrate. Für 26 aktive Datensender 106_1 bis 106_n (n=26) (z.B. Endgeräte) liegen alle Kurven in etwa bei einer Paketfehlerrate (PER) von 10%. Bei 26 aktiven Datensendern 106_1 bis 106_n (n=26) (z.B. Endgeräten) sind von den 576 vorhandenen Ressourcenelementen 486 (=26x18) Ressourcenelemente belegt. Es ist dabei naheliegend, dass einige Ressourcenelemente von mehreren Sprungmustern gleichzeitig belegt sind, bei 10% der Datensender (z.B. Endgeräte) sind sogar mindestens 12 der J=18 Teil-Datenpakete durch Doppel- oder Mehrfachbelegungen von Ressourcenelementen gestört und das jeweilige Teil-Datenpaket kann trotz z.B. 1/3-ratigem Faltungscode nicht mehr fehlerfrei dekodiert werden.

Bei nur zwei aktiven Datensendern 106_1 bis 106_n (n=2) (z.B. Endgeräten), also einer vergleichsweise niedrigen Auslastung, ist hingegen die Anzahl M der verschiedenen Sprungmuster von entscheidender Bedeutung. Liegen nur *M=N=576* Sprungmuster basierend auf einem Grundsprungmuster vor, so ist die Wahrscheinlichkeit einer Vollauslöschung (zwei Datensender besitzen identische Anfangsoffsets) exakt 1/576 = 0,174% (siehe auch Fig. 47). Liegen dagegen z.B. 3*576=1728 Sprungmuster vor, so sinkt diese Wahrscheinlichkeit um den Faktor drei auf 0,058% und bei 100.000 Sprungmustern sind es entsprechend nur noch 0,001%. Ausgehend von diesen minimalen Anfangswerten (bei genau zwei aktiven Datensendern 106_1 bis 106_n (n=2)) steigen die Fehlerwahrscheinlichkeiten aufgrund linear wachsender Vollauslöschungswahrscheinlichkeiten mit zunehmender Zahl der aktiven Datensender (z.B. Endgeräte) an. Danach kommt ein Übergangsbereich, wo der Einfluss der reinen Vollauslöschungen auf die Gesamt-Paketfehlerrate abnimmt und die vergleichsweise große Anzahl von Datensendern zu immer mehr gegenseitigen Störungen führt, bis sie sich tangential der Referenzkurve für M → ∞ (hier: *M = 100.000*) annähern.

Da der am meisten interessierende Arbeitsbereich in der Regel im Bereich einer Paketfehlerrate zwischen 1 und 20% liegt, ist es wünschenswert, eine Gesamtanzahl von *M>1024* verschiedenen Sprungmustern zu haben, und zwar unabhängig von der Größe des Ressource-Frames *N*. Wird der Ressource-Frame *N* entsprechend groß gewählt, beispielsweise zu *N =2000,* dann kann ein dafür optimales Grundsprungmuster entworfen werden, welches *M=N* mal entsprechend Abschnitt C.3.1 verschoben bzw. rotiert wird. Muss *N* kleiner gewählt werden, wie beispielsweise mit *N=576* in Fig. 47, dann sollten mehrere Grundsprungmuster gewählt werden. Bei *M=1728* sind es dann *G=3* verschiedene Grundsprungmuster, die entsprechend der Framegröße jeweils 576-mal geschoben werden.

Durch die Wahl von G Grundsprungmustern mit G>1 (anstelle von nur einem) erhöht sich auch der Aufwand nach den Formeln (1) und (2) sowie obiger Tabelle aus Abschnitt C.3.2. Im Originalbereich geht der Faktor G direkt linear ein, während er im Spektralbereich nur zu etwa 60% eingeht, da dort die Hin-Transformation, unabhängig von *G,* immer nur einmal durchgeführt werden muss.

Beim Entwurf eines Grundsprungmusters *SM1* nach Abschnitt C.3.1 sind folgende Aspekte zu beachten:

1) Der Abstand zwischen zwei Sub-Datenpaketen sollte mindestens *C* Ressourcenelemente betragen. Dadurch wird sichergestellt, dass trotz Verschiebung des Grundsprungmusters immer nur ein Sub-Datenpaket pro Zeitschlitzindex auftritt, d.h. ein Datensender (z.B. Endgerät) nicht gleichzeitig auf zwei oder mehr Frequenzkanälen sendet.

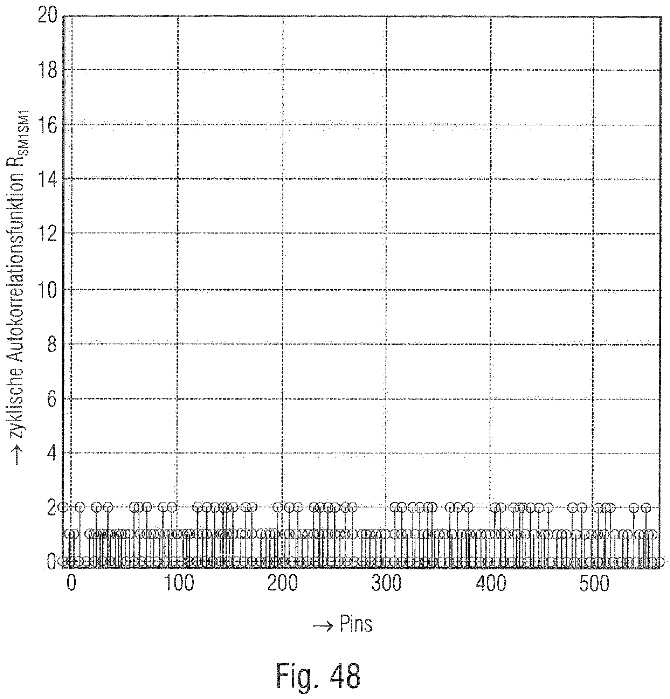

2) Die zyklische Pseudo-Autokorrelierte von *SM1* sollte möglichst unkorreliert sein. Bis auf das grundsätzlich auftretende Maximum $R_{SM1\ SM1}[0]=J$ sollten alle anderen AKF-Werte möglichst kleine Werte annehmen, wie beispielsweise für ein exemplarisch gewähltes Grundsprungmuster in Fig. 48 dargestellt, welche die resultierende AKF von Sprungmuster SM1 für eine Framegröße von N = 576 und einer Sprungmusterlänge von J=18 zeigt. Wenn das Grundsprungmuster *SM1 J* Elemente hat, dann treffen sich die Sprungmuster aufgrund der zyklischen Rotation von *SM1* an genau *J\*J* Positionen. Bei *J=18* wären dies *342* "Treffer". Diese 342 Treffer verteilen sich über *N* Positionen, in diesem Beispiel also 576 Stellen. Wenn man somit wie in Fig. 48 dargestellt, maximal Werte von zwei in den Nebenmaximas bekommt, dann ist das Sprungmuster sehr gut geeignet. Auch die anderen *G-1* Grundsprungmuster *SM2, .... SMG* sollten ähnlich gute AKF-Eigenschaften haben.

3) Analog zu den G Autokorrelationsfunktionen sollten auch sämtliche Kreuzkorrelationskombinationen untereinander möglichst unkorreliert sein.

4) Den Grundsprungmustern kann in mehrfacher Hinsicht eine Zusatzinformation aufgeprägt werden. Beispielsweise ist es vorteilhaft, den in Punkt 1) angesprochenen Mindestabstand zwischen den *J* Teil-Datenpaketen nicht gleichabständig (äquidistant) zu verteilen, da es signifikante Nebenmaxima in Fig. 48 erzeugen würde. Sind beispielsweise alle *J-1* Ressourcen-Abstände zwischen den Sub-Datenpaketen nach Fig. 45 mit jeweils verschiedenen zeitlichen Abständen vorgegeben, so kann (z.B. der Datenempfänger) schon anhand einiger weniger Sub-Datenpakete, an derer einzigartigen Abständen auf die anderen eventuell gestörten Pakete zurückschließen. Dies hilft Mehrdeutigkeiten aufzulösen, die durch Überlagerungen vieler Sub-Datenpakete entstehen. Insbesondere dann, wenn zur Performancesteigerung an interferenzreduzierende Verfahren wie SIC oder PIC gedacht wird, kann eine derartige Zusatzinformation sehr hilfreich sein.

### C.3.4 Übermittlung von Zusatzinformation über das angewandte Sprungmuster

In der Regel ist es dem Datenempfänger (z.B. Basisstation) 104 nicht bekannt, welche Datensender (z.B. Endgeräte) 106_1 bis 106_n mit welchen Sprungmustern im Ressource-Frame auf den Funkkanal zugreifen. Besonders bei einem großen Vorrat an möglichen Sprungmustern, welche den Datensendern 106_1 bis 106_n zur Verfügung stehen, kann es in dem Datenempfänger 104 eine verarbeitungs- und damit energieintensive Aufgabe sein, die gesendeten Datenpakete anhand ihrer bei der Übertragung der Teil-Datenpakete eingesetzten Sprungmuster zu detektieren. Bei einer Ressource-Framegröße von beispielsweise N =1200 senden bei einer Paketfehlerrate (PER) von 10% 54 Datensender 106_1 bis 106_n (n=54) gleichzeitig innerhalb eines einzigen Ressource-Frames, wodurch insgesamt 972 Sub-Datenpakete (oder Teil-Datenpakete) ausgesendet werden. Bei derartig vielen Datensendern 106_1 bis 106_n kommt es zunehmend zu Mehrdeutigkeiten bei der Zuordnung der Sprungmuster während der Detektion. Um diese Mehrdeutigkeiten leichter auflösen zu können ist es hilfreich, noch weitere Zusatzinformationen während der Aussendung der Sprungmuster mit zu übertragen.

Bei Ausführungsbeispielen kann (z.B. von dem Datensender 106_1 dem Sendesignal 122) ein dedizierter Frequenzoffset aufgeprägt werden.

Beispielsweise kann dem Sendesignal 122 vom jeweiligen Datensender 106_1 bewusst ein vom jeweiligen Sprungmuster abhängiger, dedizierter Frequenzoffset von beispielsweise $\Delta f_{ded} = \pm\ f_{sym}/4$ aufgebracht werden. Der Datenempfänger 104 ist typischerweise so ausgebildet, dass der Datenempfänger 104 den Frequenzoffset des empfangenen Signals schätzen kann. Aus der Abfolge der Schätzwerte des Frequenzoffsets kann dann eine Information über das Sprungmuster bzw. das einzelne Teil-Datenpaket im Ressource-Frame gewonnen werden.

Bei Ausführungsbeispielen kann (z.B. von dem Datensender 106_1 dem Sendesignal 122) eine dedizierte Zeitverschiebung aufgeprägt werden.

Beispielsweise kann entsprechend der Aufbringung eines Frequenzoffsets dem Sendesignal 122 vom jeweiligen Datensender (z.B. Datensender 106_1) bewusst eine vom jeweiligen Sprungmuster (z.B. Sprungmuster 116) abhängige, dedizierte Zeitverschiebung $\Delta t_{ded}$ zugefügt werden. Diese kann z.B. in der Größenordnung von einzelnen Symbolintervallen liegen.

Bei Ausführungsbeispielen können unterschiedliche Präambeln verwendeten werden.

Beispielsweise kann das Signal (Sendesignal 122) eine vom jeweiligen Sprungmuster (z.B. von dem Sprungmuster 116) abhängige Präambel (auch Referenz-, Trainings- oder Pilotsequenz genannt) enthalten, um eine eventuelle Signalüberlagerung der Teil-Datenpakete mehrerer Datensender 106_1 bis 106_n in einem Ressourcenelement zu erkennen. Diese Präambeln sollten zueinander möglichst orthogonal sein, damit eine möglichst gute Trennung bei der Detektion möglich ist.

Bei Ausführungsbeispielen kann eine Kombination obiger Merkmale erfolgen, z.B. eine Kombination von zumindest zwei aus (1) der Aufprägung eines dedizierten Frequenzoffsets, (2) der Aufprägung einer dedizierten Zeitverschiebung, und (3) der Verwendung unterschiedlicher Präambeln.

Beispielsweise können die o.g. Merkmale auch beliebig miteinander kombiniert werden, um für die Detektion mit einem möglichst hohen Informationsgehalt hinsichtlich des verwendeten Sprungmusters bereitzustellen.

Das Aufprägen einer derartigen Zusatzinformation verursacht aber einen gewissen Mehraufwand auf Seiten der Detektion. Der Einsatz von beispielsweise drei verschiedenen Präambeln erfordert sowohl bei den Pilotsequenz-Korrelationen in den einzelnen (Teil-)Datenpaketen einen dreifachen Aufwand und auch beim zweiten Schritt, bei der Sprungmuster-Korrelation, muss dieser Schritt für jede verwendete Präambel getrennt durchgeführt werden. Insofern sollte zuerst das System mit der Framegröße N und der Grundsprungmusteranzahl M entworfen werden und erst dann, wenn die Detektionsperformance durch zu viele Mehrdeutigkeiten schlechter wird, sollte über die Einführung von Zusatzinformation nachgedacht werden.

## D. Weitere Ausführungsbeispiele

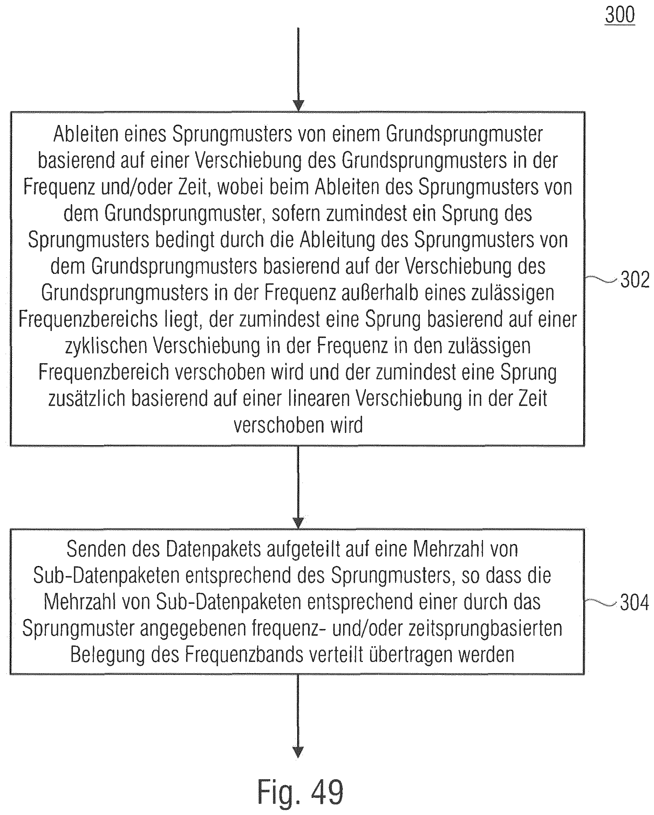

Fig. 49 zeigt ein Flussdiagramm eines Verfahrens 300 zum Senden eines Datenpakets in einem Kommunikationssystem, gemäß einem Ausführungsbeispiel der vorliegenden Erfindung. Das Verfahren 300 umfasst einen Schritt 302 des Ableitens eines Sprungmusters von einem Grundsprungmuster basierend auf einer Verschiebung des Grundsprungmusters in der Frequenz und/oder Zeit, wobei beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Frequenz außerhalb eines zulässigen Frequenzbereichs liegt, der zumindest eine Sprung basierend auf einer zyklischen Verschiebung in der Frequenz in den zulässigen Frequenzbereich verschoben wird und der zumindest eine Sprung zusätzlich basierend auf einer linearen Verschiebung in der Zeit verschoben wird. Ferner umfasst das Verfahren 300 einen Schritt 304 des Sendens des Datenpakets aufgeteilt auf eine Mehrzahl von Sub-Datenpaketen entsprechend des Sprungmusters, so dass die Mehrzahl von Sub-Datenpaketen entsprechend einer durch das Sprungmuster angegebenen frequenz- und/oder zeitsprungbasierten Belegung des Frequenzbands verteilt übertragen werden.

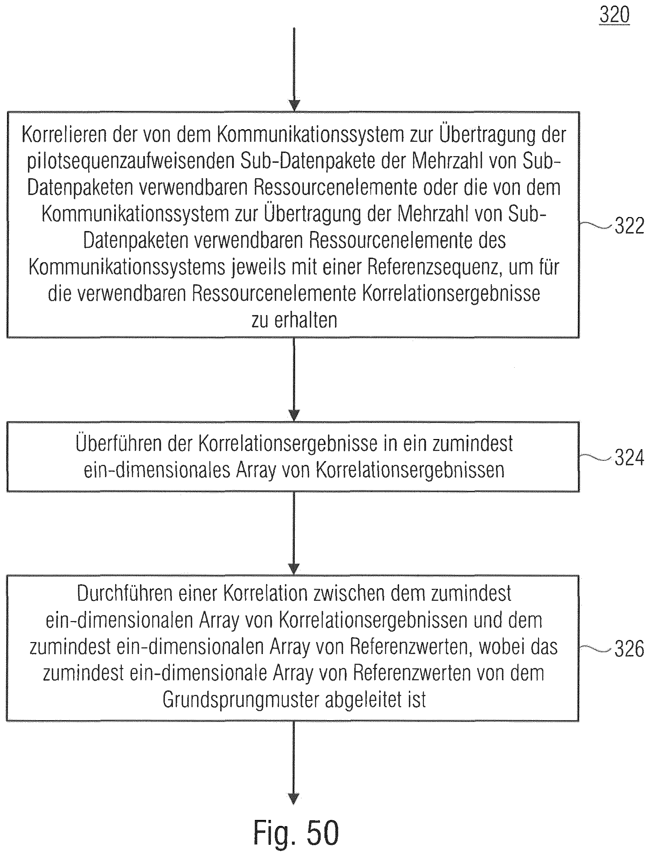

Fig. 50 zeigt ein Flussdiagramm eines Verfahrens 320 zum Empfangen eines Datenpakets in einem Kommunikationssystem, gemäß einem Ausführungsbeispiel der vorliegenden Erfindung. Zur Übertragung des Datenpakets innerhalb des Kommunikationssystems wird das Datenpaket in eine Mehrzahl von Sub-Datenpaketen aufgeteilt, die jeweils kürzer sind als das Datenpaket, und wobei die Mehrzahl von Sub-Datenpaketen mittels eines Datensignals entsprechend eines Sprungmusters in einer Teilmenge von verwendbaren Ressourcenelemente des Kommunikationssystems übertragen werden, wobei zumindest zwei der Mehrzahl von Sub-Datenpaketen eine Pilotsequenz aufweisen, wobei das Sprungmuster von einem Grundsprungmuster basierend auf einer Verschiebung des Grundsprungmusters in der Frequenz und/oder Zeit abgeleitet ist, wobei beim Ableiten des Sprungmusters von dem Grundsprungmuster, sofern zumindest ein Sprung des Sprungmusters bedingt durch die Ableitung des Sprungmusters von dem Grundsprungmusters basierend auf der Verschiebung des Grundsprungmusters in der Frequenz außerhalb eines zulässigen Frequenzbereichs liegt, der zumindest eine Sprung basierend auf einer zyklischen Verschiebung in der Frequenz in den zulässigen Frequenzbereich verschoben wird und der zumindest eine Sprung zusätzlich basierend auf einer linearen Verschiebung in der Zeit verschoben wird. Das Verfahren 320 umfasst einen Schritt 322 des Korrelierens der von dem Kommunikationssystem zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente des Kommunikationssystems jeweils mit einer Referenzsequenz, um für die verwendbaren Ressourcenelemente Korrelationsergebnisse zu erhalten. Ferner umfasst das Verfahren 320 einen Schritt 324 des Überführens der Korrelationsergebnisse in ein zumindest ein-dimensionales Array von Korrelationsergebnissen. Ferner umfasst das Verfahren 320 einen Schritt 326 des Durchführens einer Korrelation zwischen dem zumindest ein-dimensionalen Array von Korrelationsergebnissen und dem zumindest ein-dimensionalen Array von Referenzwerten, wobei das zumindest ein-dimensionale Array von Referenzwerten von dem Grundsprungmuster abgeleitet ist.

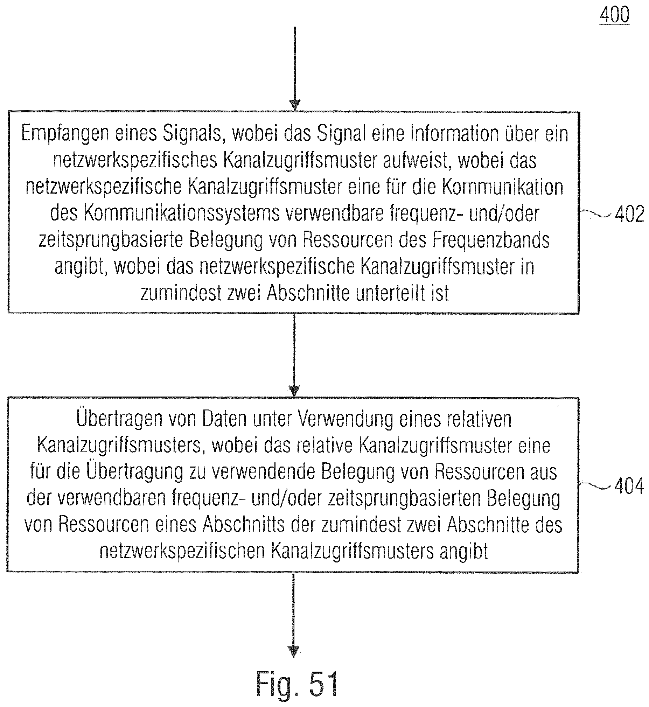

Fig. 51 zeigt ein Flussdiagramm eines Verfahrens 400 zum Betreiben eines Endpunkts eines Kommunikationssystems, gemäß einem Ausführungsbeispiel der vorliegenden Erfindung. Das Verfahren 400 umfasst einen Schritt 402 des Empfangens eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte unterteilt ist. Das Verfahren 400 umfasst ferner einen Schritt des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt.

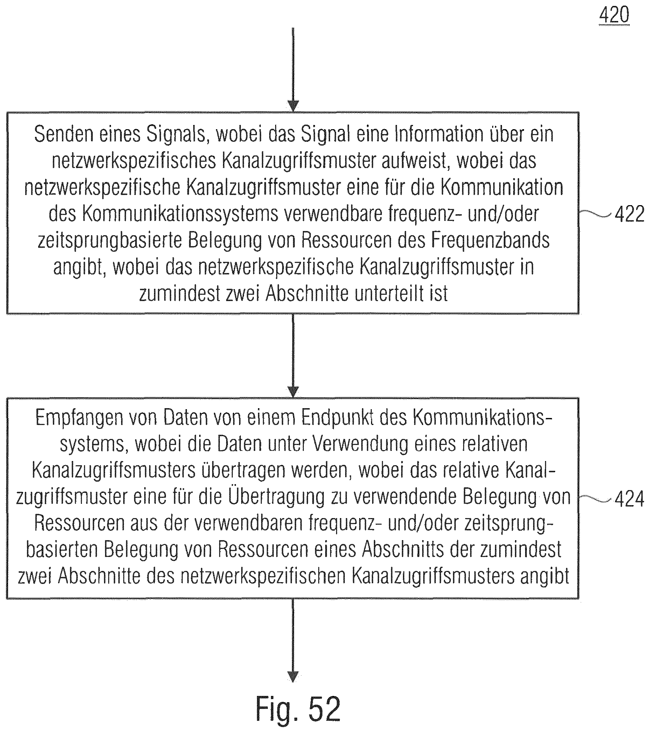

Fig. 52 zeigt ein Flussdiagramm eines Verfahrens 420 zum Betreiben einer Basisstation eines Kommunikationssystems, gemäß einem Ausführungsbeispiel der vorliegenden Erfindung. Das Verfahren 420 umfasst einen Schritt 422 des Sendens eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte unterteilt ist. Das Verfahren 420 umfasst ferner einen Schritt 424 des Empfangens von Daten von einem Endpunkt des Kommunikationssystems, wobei die Daten unter Verwendung eines relativen Kanalzugriffsmusters übertragen werden, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt.

Ausführungsbeispiele schaffen ein Sprungmusterdesign mit besonders aufwandsgünstiger Detektion im Spektralbereich. Da die Verschiebung des Grundsprungmustermusters in Frequenzrichtung linear und in Zeitrichtung zyklisch erfolgt, kann das eigentliche 2D-Problem über 1D-FFTs aufwandsgünstig realisiert werden.

Ausführungsbeispiele schaffen eine Kaskadierung von Ressource-Frames. Falls die Framegrößen N aufgrund von geringer Rechen- oder Speicherkapazität nicht den Wünschen entsprechend groß gewählt werden kann, kann eine Kaskadierung der Ressource-Frames erfolgen. Dabei kommen verschiedene Varianten des "konkurrenzbasierten Zugriffsverfahrens" zum Einsatz.

Ausführungsbeispiele schaffen Sprungmuster, die auf mehreren unterschiedlichen Grundmustern basieren sowie einen Einbau von Zusatzinformation.

Ausführungsbeispiele finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle ab, in welchen eine Nachricht (Datenpaket) in mehreren Teil-Datenpaketen mittels des sogenannten Telegrammaufteilungs-Verfahrens (engl. Telegram-Splitting-Multiple-Access, TSMA) übertragen wird. Besonders vorteilhaft ist die Anwendung für den Fall, dass die Basisstation batteriebetrieben ist, sodass der Betrieb des Basisstationsempfängers unter dem Aspekt des Energieverbrauchs optimiert wird.

Ausführungsbeispiele können in einem System eingesetzt werden, in welchen eine kodierte Nachricht (Datenpaket) in mehreren Teil-Datenpaketen übertragen wird, die kleiner sind als die eigentliche Information die übertragen werden soll (das so genannte Telegram Splitting, TSMA, siehe z.B. [1]). Ein Telegramm wird dabei auf mehrere Teil-Datenpakete, häufig auch als Sub-Datenpakete bezeichnet, aufgeteilt. Die Sub-Datenpakete werden beim Telegramm Splitting auf einer Frequenz oder aber über mehrere Frequenzen verteilt, dem sog. Frequency Hopping, gesendet. Zwischen den Sub-Datenpaketen gibt es zeitliche Pausen, in denen nicht gesendet wird.

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basisstation zum Endpunkt, oder vom Endpunkt zur Basisstation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Bei der Übertragung von Daten basierend auf dem Telegram-Splitting-Verfahren, können die Sub-Datenpakete in einer Teilmenge (z.B. einer Auswahl) der verfügbaren Ressourcen des netzwerkspezifischen Kanalzugriffsmusters verteilt übertragen werden. Im Detail können die Sub-Datenpaketen basierend auf dem relativen Kanalzugriffsmuster, d.h. in den Ressourcen des relativen Kanalzugriffsmusters, übertragen werden. Beispielsweise kann pro Ressource ein Sub-Datenpaket übertragen werden.

Weitere Ausführungsbeispiele schaffen eine Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei die Basisstation ausgebildet ist, um ein Signal [z.B. ein Baken-Signal] zu senden, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt.

Bei Ausführungsbeispielen kann sich das Kanalzugriffsmuster von einem anderen Kanalzugriffsmuster unterscheiden, basierend auf dem zumindest ein anderes Kommunikationssystem der Mehrzahl von anderen Kommunikationssystemen auf das Frequenzband zugreift.

Bei Ausführungsbeispielen kann die Basisstation ausgebildet sein, um unkoordiniert zu den anderen Kommunikationssystemen zu arbeiten.

Bei Ausführungsbeispielen kann die Basisstation ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann die Basisstation ausgebildet sein, um das Signal mit der Information über das Kanalzugriffsmuster mehrfach [z.B. periodisch] auszusenden, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben.

Bei Ausführungsbeispielen kann die mit den Aussendungen des Signals übertragenen Informationen nur eine Teilemenge der Zustände des Zahlenfolgengenerators oder der Zahlen der Zahlenfolge beschreiben [z.B. werden nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann die Basisstation ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei die Basisstation ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann die Basisstation ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann die Basisstation ausgebildet ist, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres von der Basistation gesendetes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann die Basisstation ausgebildet sein, um die Aktivitätsrate dynamisch in Abhängigkeit von einer aktuellen oder prädizierten Lastsituation des Kommunikationssystems anzupassen.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation eine Bündelung von Frequenzressourcen des Frequenzbands beschreiben, die zumindest zwei unmittelbar benachbarte oder voneinander beabstandete Frequenzkanäle oder Frequenzkanalindizes umfasst.

Bei Ausführungsbeispielen kann die Basisstation ausgebildet sein, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann die Basisstation ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen einen Endpunkt eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei der Endpunkt ausgebildet ist, um ein Signal [z.B. ein Baken-Signal] zu empfangen, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei der Endpunkt ausgebildet ist, um das Kanalzugriffsmuster basierend auf der Information über das Kanalzugriffsmuster zu ermitteln, wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt.

Bei Ausführungsbeispielen kann sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheiden.

Bei Ausführungsbeispielen kann der Endpunkt ausgebildet sein, um unkoordiniert zu den anderen Kommunikationssystemen zu arbeiten.

Bei Ausführungsbeispielen kann der Endpunkt ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann der Endpunkt ausgebildet sein, um das Signal mit der Information über das Kanalzugriffsmuster mehrfach [z.B. periodisch oder sporadisch] zu empfangen, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben, wobei der Endpunkt ausgebildet sein kann, um das Kanalzugriffsmuster basierend auf den Informationen über das Kanalzugriffsmuster [z.B. basierend auf den unterschiedlichen Zuständen des Zahlenfolgengenerators oder den unterschiedlichen Zahlen der Zahlenfolge] zu ermitteln.

Bei Ausführungsbeispielen können die mit den Aussendungen des Signals übertragenen Informationen nur eine Teilmenge der Zustände des Zahlenfolgengenerators oder der Zahlen der Zahlenfolge beschreiben [z.B. wird nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann der Endpunkt ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei der Endpunkt ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Endpunkt ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann der Endpunkt ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres empfangenes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann das Signal eine Information über die Aktivitätsraten des Kommunikationssystems aufweisen.

Bei Ausführungsbeispiele kann der Endpunkt ausgebildet sein, um ein weiteres Signal zu empfangen, wobei das weitere Signal eine Information über die Aktivitätsraten des Kommunikationssystems aufweist.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation zumindest zwei unmittelbar benachbarte oder voneinander beabstandete Frequenzkanäle oder Frequenzkanalindizes beschreiben.

Bei Ausführungsbeispielen kann der Endpunkt ausgebildet seib, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Endpunkt ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen ein Kommunikationssystem mit einer der oben beschriebenen Basisstationen und zumindest einem der oben beschriebenen Endpunkte.

Weiter Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Sendens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

Weiter Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Empfangens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren einen Schritt des Ermittelns des Kanalzugriffsmusters basierend auf der Information über das Kanalzugriffsmuster, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

Weitere Ausführungsbeispiele schaffen einen Controller für einen Teilnehmer eines Kommunikationssystems, wobei das Kommunikationssystem in einem Frequenzband drahtlos kommuniziert, welches von einer Mehrzahl von Kommunikationssystemen zur Kommunikation genutzt wird, wobei der Controller ausgebildet ist, um ein Kanalzugriffsmuster zu ermitteln, wobei das Kanalzugriffsmuster eine für die Kommunikation des Kommunikationssystems verwendbare frequenz- und/oder zeitsprungbasierte Belegung des Frequenzbands angibt, wobei der Controller ausgebildet ist, um das Kanalzugriffsmuster in Abhängigkeit von einem Zustand eines Zahlenfolgengenerators zur Erzeugung einer Zahlenfolge oder einer Zahl einer Zahlenfolge zu ermitteln.

Bei Ausführungsbeispielen kann der Controller ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei Controller ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Controller ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann der Controller ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems

unter Verwendung einer Abbildungsfunktion auf eine Zeitinformation und eine Frequenzinformation abzubilden, wobei die Zeitinformation und die Frequenzinformation eine Ressource des Kanalzugriffsmusters beschreiben.

Bei Ausführungsbeispielen kann der Controller ausgebildet sein um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Controller ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Weitere Ausführungsbeispiele schaffen ein Verfahren zum Erzeugen eines Kanalzugriffsmusters. Das Verfahren umfasst einen Schritt des Erzeugens des Kanalzugriffsmusters, wobei das Kanalzugriffsmuster eine für eine Kommunikation eines Kommunikationssystems verwendbare frequenz- und/oder zeitsprungbasierte Belegung des Frequenzbands angibt, wobei das Kommunikationssystem in einem Frequenzband drahtlos kommuniziert, welches von einer Mehrzahl von Kommunikationssystemen zur Kommunikation genutzt wird, wobei das Kanalzugriffsmuster in Abhängigkeit von einem Zustand eines Zahlenfolgengenerators zur Erzeugung einer Zahlenfolge oder einer Zahl einer Zahlenfolge erzeugt wird.

Weitere Ausführungsbeispiele schaffen ein Kommunikationssystem, wobei das Kommunikationssystem ausgebildet ist, um in einem Frequenzband [z.B. einem lizenzfreien und/oder genehmigungsfreien Frequenzband; z.B. ISM Band], welches von einer Mehrzahl von Kommunikationssystemen zur Kommunikation genutzt wird, drahtlos zu kommunizieren, wobei das Kommunikationssystem ausgebildet ist, um basierend auf einem Kanalzugriffsmuster unterschiedliche Frequenzen oder Frequenzkanäle des Frequenzbands [z.B. in die das Frequenzband unterteilt ist] abschnittsweise [z.B. zeitschlitzweise] für die Kommunikation zu nutzen, unabhängig davon ob diese von einem anderen Kommunikationssystem verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheidet.

Bei Ausführungsbeispielen kann das Kanalzugriffsmuster eine für die Kommunikation des Kommunikationssystems verwendbare frequenz- und/oder zeitsprungbasierte Belegung [z.B. von Ressourcen] des Frequenzbands angeben [z.B. eine zeitliche Abfolge von für die Kommunikation des Kommunikationssystems verwendbare (z.B. über das Frequenzband verteilte) Frequenzressourcen].

Bei Ausführungsbeispielen kann das Kommunikationssystem ausgebildet sein, um unkoordiniert zu den anderen Kommunikationssystemen in dem Frequenzband zu kommunizieren.

Bei Ausführungsbeispielen kann das Kommunikationssystem ausgebildet sein, um das Kanalzugriffsmuster zu ermitteln.

Bei Ausführungsbeispielen kann das Kanalzugriffsmuster von einer individuellen [z.B. immanenten] Information des Kommunikationssystems abhängig sein.

Bei Ausführungsbeispielen können sich das Kanalzugriffsmuster und das andere Kanalzugriffsmuster in weniger als 20 % der darin festgelegten Ressourcen überlappen.

Bei Ausführungsbeispielen können Teilnehmer des Kommunikationssystems Daten untereinander basierend auf dem Kanalzugriffsmuster abschnittsweise in den unterschiedlichen Kanälen des Frequenzbands übertragen.

Bei Ausführungsbeispielen kann eine Empfangsbandbreite von Teilnehmern des Kommunikationssystems schmaler sein als eine Bandbreite des Frequenzbands.

Weitere Ausführungsbeispiele schaffen ein Verfahren zum Betreiben eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Übertragens von Daten zwischen Teilnehmern des Kommunikationssystems basierend auf einem Kanalzugriffsmuster abschnittsweise in unterschiedlichen Kanälen des Frequenzbands, unabhängig davon ob diese oder eine Untermenge davon von anderen Kommunikationssystemen verwendet werden, wobei sich das Kanalzugriffsmuster von einem anderen Kanalzugriffsmuster basierend auf dem zumindest ein anderes Kommunikationssystem der Mehrzahl von anderen Kommunikationssystemen auf das Frequenzband zugreift, unterscheidet.

Weitere Ausführungsbeispiele schaffen eine Kommunikationsanordnung mit einem ersten Kommunikationssystem und einem zweiten Kommunikationssystem, wobei das erste Kommunikationssystem und das zweite Kommunikationssystem ausgebildet sind, um in dem gleichen Frequenzband [z.B. einem lizenzfreien I und/oder genehmigungsfreien Frequenzband; z.B. ISM Band] [z.B. welches von einer Mehrzahl von Kommunikationssystemen zur Kommunikation genutzt wird] drahtlos zu kommunizieren, wobei das erste Kommunikationssystem ausgebildet ist, um unter Verwendung eines ersten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das zweite Kommunikationssystem ausgebildet ist, um unter Verwendung eines zweiten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das erste Kanalzugriffsmuster und das zweite Kanalzugriffsmuster unterschiedlich sind.

Bei Ausführungsbeispielen können das erste Kommunikationssystem und das zweite Kommunikationssystem untereinander nicht koordiniert sein.

Bei Ausführungsbeispielen können Teilnehmer des ersten Kommunikationssystems Daten untereinander basierend auf dem ersten Kanalzugriffsmuster abschnittsweise in den unterschiedlichen Kanälen des Frequenzbands übertragen.

Bei Ausführungsbeispielen können Teilnehmer des zweiten Kommunikationssystems Daten untereinander basierend auf dem zweiten Kanalzugriffsmuster abschnittsweise in den unterschiedlichen Kanälen des Frequenzbands übertragen.

Bei Ausführungsbeispielen können das erste Kommunikationssystem und das zweite Kommunikationssystem untereinander nicht kommunizieren.

Weitere Ausführungsbeispiele schaffen ein Verfahren zum Betreiben von zwei Kommunikationssystemen in einem Frequenzband, welches von einer Mehrzahl von Kommunikationssystemen zur drahtlosen Kommunikation genutzt wird. Das Verfahren umfasst einen Schritt des Übertragens von Daten zwischen Teilnehmern des ersten Kommunikationssystems basierend auf einem ersten Kanalzugriffsmuster abschnittsweise in unterschiedlichen Kanälen des Frequenzbands, unabhängig davon ob diese oder eine Untermenge davon von anderen Kommunikationssystemen verwendet werden. Ferner umfasst das Verfahren einen Schritt des Übertragens von Daten zwischen Teilnehmern des zweiten Kommunikationssystems basierend auf einem zweiten Kanalzugriffsmuster abschnittsweise in unterschiedlichen Kanälen des Frequenzbands, unabhängig davon ob diese oder eine Untermenge davon von anderen Kommunikationssystemen verwendet werden, wobei das erste Kanalzugriffsmuster und das zweite Kanalzugriffsmuster unterschiedlich sind.

Weitere Ausführungsbeispiele schaffen einen Endpunkt eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei der Endpunkt ausgebildet ist, um ein Signal [z.B. ein Baken-Signal] zu empfangen, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen], wobei der Endpunkt ausgebildet ist, um Daten unter Verwendung von einem relativen Kanalzugriffsmuster zu übertragen [z.B. zu senden oder zu empfangen], wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch den Endpunkt zu verwenden sind].

Bei Ausführungsbeispielen kann die für die Übertragung zu verwendende Belegung von Ressourcen des relativen Kanalzugriffsmusters eine Teilmenge der verwendbaren frequenz- und/oder zeitsprungbasierten Belegung von Ressourcen des netzwerkspezifischen Kanalzugriffsmusters sein [z.B. wobei das relative Kanalzugriffsmuster nur eine Teilmenge der Ressourcen des netzwerkspezifischen Kanalzugriffsmusters aufweist].

Bei Ausführungsbeispielen kann sich das relative Kanalzugriffsmuster von einem anderen relativen Kanalzugriffsmuster, basierend auf dem ein anderer Teilnehmer [z.B. Endpunkt und/oder Basisstation; z.B. Basisstation an einen anderen Teilnehmer] des Kommunikationssystems Daten überträgt [z.B. sendet und/oder empfängt], unterscheiden, wobei das andere relative Kanalzugriffsmuster eine für die Übertragung durch den anderen Teilnehmer zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann das netzwerkspezifische Kanalzugriffsmuster die für die Kommunikation des Kommunikationssystems verwendbare frequenz- und/oder zeitsprungbasierte Belegung von Ressourcen des Frequenzbands in Frequenzkanälen [z.B. in die das Frequenzband unterteilt ist] und zugeordneten Zeitschlitzen oder in Frequenzkanalindizes und zugordneten Zeitschlitzindizes angeben.

Bei Ausführungsbeispielen kann das netzwerkspezifische Kanalzugriffsmuster in Frequenzrichtung [z.B. pro Zeitschlitz oder Zeitschlitzindex] eine Mehrzahl von benachbarten oder voneinander beabstandeten Ressourcen [z.B. Frequenzkanälen oder Frequenzkanalindizes] des Frequenzbands angeben.

Bei Ausführungsbeispielen kann das relative Kanalzugriffsmuster in Frequenzrichtung höchstens eine Teilmenge [z.B. höchstens eine Ressource, d.h. eine oder keine Ressource] der Mehrzahl von benachbarten oder voneinander beabstandeten Ressourcen des netzwerkspezifischen Kanalzugriffsmusters angeben.

Bei Ausführungsbeispielen kann das relative Kanalzugriffsmuster für zumindest einen Zeitsprung [z.B. für zumindest einen Zeitschlitz oder Zeitschlitzindex] in Frequenzrichtung eine andere Ressource der Mehrzahl von benachbarten oder voneinander beabstandeten Ressourcen des netzwerkspezifischen Kanalzugriffsmusters angeben als ein anderes relatives Kanalzugriffsmuster, basierend auf dem ein anderer Teilnehmer [z.B. Endpunkt und/oder Basisstation; z.B. Basisstation an einen anderen Teilnehmers] des Kommunikationssystems Daten überträgt [z.B. sendet und/oder empfängt], wobei das andere relative Kanalzugriffsmuster eine für die Übertragung durch den anderen Teilnehmer zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen können zumindest zwei Ressourcen [z.B. Frequenzkanälen oder Frequenzkanalindizes] der Mehrzahl von benachbarten oder voneinander beabstandeten Ressourcen in Frequenzrichtung unterschiedliche Symbolraten und/oder unterschiedliche Anzahlen an Symbolen zugeordnet sein.

Bei Ausführungsbeispielen kann die Mehrzahl von benachbarten Ressourcen in Frequenzrichtung einen Block [z.B. Cluster] von zusammenhängenden Ressourcen bilden, wobei unterschiedlichen Teilen des Blocks von zusammenhängenden Ressourcen unterschiedliche Symbolraten und/oder unterschiedliche Anzahlen von Symbolen zugeordnet sind.

Bei Ausführungsbeispielen kann der Endpunkt ausgebildet sein, um das relative Kanalzugriffsmuster aus einem Satz [z.B. Vorrat] von M relativen Kanalzugriffsmustern auszuwählen, wobei die M relativen Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angeben, wobei die M relativen Kanalzugriffsmuster unterschiedlich sind [z.B. sich in zumindest der Belegung von einer Ressource unterscheiden].

Bei Ausführungsbeispielen kann der Endpunkt ausgebildet sein, um das relative Kanalzugriffsmuster zufällig aus dem Satz von M relativen Kanalzugriffsmustern auszuwählen.

Bei Ausführungsbeispielen kann der Endpunkt ausgebildet sein, um das relative Kanalzugriffsmuster auf Basis eines immanenten Parameters aus dem Satz von M relativen Kanalzugriffsmustern auszuwählen.

Bei Ausführungsbeispielen kann der immanente Parameter eine digitale Signatur des Telegramms [z. B. CMAC (One-key MAC)] oder ein Codewort für die Detektion von Übertragungsfehlern [z. B. eine CRC] sein.

Bei Ausführungsbeispielen kann der Endpunkt ausgebildet sein, um das relative Kanalzugriffsmuster in Abhängigkeit von Anforderungen der zu übertragenen Daten an Übertragungseigenschaften [z.B. Latenz, oder Robustheit gegen Interferenzen] aus einem Satz von relativen Kanalzugriffsmustern mit unterschiedlichen Übertragungseigenschaften [z.B. unterschiedlicher Latenz, oder unterschiedlicher Robustheit gegen Interferenzen] auszuwählen.

Bei Ausführungsbeispielen kann der Endpunkt ausgebildet sein, um als Daten ein Datenpaket, welches in eine Mehrzahl von Sub-Datenpaketen aufgeteilt ist, entsprechend des relativen Kanalzugriffsmuster zu übertragen [z.B. zu senden oder zu empfangen], wobei die Mehrzahl von Sub-Datenpaketen jeweils nur einen Teil des Datenpakets aufweisen.

Bei Ausführungsbeispielen kann die Information einen Zustand eines Zahlenfolgengenerators [z.B. eines periodischen Zahlenfolgengenerators oder eines deterministischen Zufallszahlengenerators] zur Erzeugung einer Zahlenfolge beschreiben, wobei die Zahlenfolge das Kanalzugriffsmuster bestimmt.

Bei Ausführungsbeispielen kann die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreiben, wobei die Zahlenfolge das Kanalzugriffsmuster bestimmt.

Weitere Ausführungsbeispiele schaffen eine Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei die Basisstation ausgebildet ist, um ein Signal [z.B. ein Baken-Signal] zu senden, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen], wobei die Basisstation ausgebildet ist, um Daten unter Verwendung von einem relativen Kanalzugriffsmuster zu übertragen [z.B. zu senden oder zu empfangen], wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch die Basisstation zu verwenden sind].

Bei Ausführungsbeispielen kann die für die Übertragung zu verwendende Belegung von Ressourcen des relativen Kanalzugriffsmusters eine Teilmenge der verwendbaren frequenz- und/oder zeitsprungbasierten Belegung von Ressourcen des netzwerkspezifischen Kanalzugriffsmusters sein [z.B. wobei das relative Kanalzugriffsmuster nur eine Teilmenge der Ressourcen des netzwerkspezifischen Kanalzugriffsmusters aufweist].

Bei Ausführungsbeispielen ist der Basisstation vorab nicht bekannt, welches relative Sprungmuster von einem Endpunkt verwendet wird.

Bei Ausführungsbeispielen kann die Basisstation ausgebildet sein, um das verwendete relative Sprungmuster mittels einer Detektion [z. B. durch Korrelation und Schwellwertentischeidung] zu ermitteln.

Bei Ausführungsbeispielen kann sich das relative Kanalzugriffsmuster von einem anderen relativen Kanalzugriffsmuster, basierend auf dem die Basisstation andere Daten überträgt [z.B. sendet und/oder empfängt, z.B. zu einem anderen Teilnehmer sendet und von einem anderen Teilnehmer empfängt], unterscheiden, wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann das netzwerkspezifische Kanalzugriffsmuster die für die Kommunikation des Kommunikationssystems verwendbare frequenz- und/oder zeitsprungbasierte Belegung von Ressourcen des Frequenzbands in Frequenzkanälen [z.B. in die das Frequenzband unterteilt ist] und zugeordneten Zeitschlitzen oder in Frequenzkanalindizes und zugeordneten Zeitschlitzindizes angeben.

Bei Ausführungsbeispielen kann das netzwerkspezifische Kanalzugriffsmuster in Frequenzrichtung [z.B. pro Zeitschlitz oder Zeitschlitzindex] eine Mehrzahl von benachbarten oder voneinander beabstandeten Ressourcen [z.B. Frequenzkanälen oder Frequenzkanalindizes] des Frequenzbands angeben.

Bei Ausführungsbeispielen kann das relative Kanalzugriffsmuster in Frequenzrichtung höchstens eine Teilmenge [z.B. höchstens eine Ressource, d.h. eine oder keine Ressource] der Mehrzahl von benachbarten oder voneinander beabstandeten Ressourcen des netzwerkspezifischen Kanalzugriffsmusters angeben.

Bei Ausführungsbeispielen kann das relative Kanalzugriffsmuster für zumindest einen Zeitsprung [z.B. für zumindest einen Zeitschlitz oder Zeitschlitzindex] in Frequenzrichtung eine andere Ressource der Mehrzahl von benachbarten oder voneinander beabstandeten Ressourcen des netzwerkspezifischen Kanalzugriffsmusters angeben als ein anderes relatives Kanalzugriffsmuster, basierend auf dem die Basisstation andere Daten überträgt [z.B. sendet und/oder empfängt, z.B. zu einem anderen Teilnehmer sendet und von einem anderen Teilnehmer empfängt], wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen können zumindest zwei Ressourcen [z.B. Frequenzkanälen oder Frequenzkanalindizes] der Mehrzahl von benachbarten oder voneinander beabstandeten Ressourcen in Frequenzrichtung unterschiedliche Symbolraten und/oder eine unterschiedliche Anzahl an Symbolen zugeordnet sein.

Bei Ausführungsbeispielen können die Mehrzahl von benachbarten Ressourcen in Frequenzrichtung einen Block [z.B. Cluster] von zusammenhängenden Ressourcen bilden, wobei unterschiedlichen Teilen des Blocks von zusammenhängenden Ressourcen unterschiedliche Symbolraten und/oder unterschiedliche Anzahlen von Symbolen zugeordnet sind.

Bei Ausführungsbeispielen kann die Basisstation ausgebildet sein, um das relative Kanalzugriffsmuster aus einem Satz [z.B. Vorrat] von M relativen Kanalzugriffsmustern auszuwählen, wobei die M relativen Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angeben, wobei die M relativen Kanalzugriffsmuster unterschiedlich sind [z.B. sich in zumindest der Belegung von einer Ressource unterscheiden].

Bei Ausführungsbeispielen kann die Basisstation ausgebildet sein, um das relative Kanalzugriffsmuster zufällig aus dem Satz von M relativen Kanalzugriffsmustern auszuwählen.

Bei Ausführungsbeispielen kann die Basisstation ausgebildet sein, um das relative Kanalzugriffsmuster auf Basis eines immanenten Parameters aus dem Satz von M relativen Kanalzugriffsmustern auszuwählen.

Bei Ausführungsbeispielen kann der immanente Parameter eine digitale Signatur des Telegramms [z. B. CMAC (One-key MAC)] oder ein Codewort für die Detektion von Übertragungsfehlern [z. B. eine CRC] sein.

Bei Ausführungsbeispielen kann die Basisstation ausgebildet sein, um das relative Kanalzugriffsmuster in Abhängigkeit von Anforderungen der zu übertragenen Daten an Übertragungeigenschaften [z.B. Latenz, oder Robustheit gegen Interferenzen] aus einem Satz von relativen Kanalzugriffsmustern mit unterschiedlichen Übertragungeigenschaften [z.B. unterschiedlicher Latenz, oder unterschiedlicher Robustheit gegen Interferenzen] auszuwählen.

Bei Ausführungsbeispielen kann die Basisstation ausgebildet sein, um das relative Kanalzugriffsmuster in Abhängigkeit von Anforderungen der zu übertragenen Daten an Übertragungeigenschaften [z.B. Latenz, oder Robustheit gegen Interferenzen] zu erzeugen.

Bei Ausführungsbeispielen kann die Basisstation ausgebildet sein, um als Daten ein Datenpaket, welches in eine Mehrzahl von Sub-Datenpaketen aufgeteilt ist entsprechend des relativen Kanalzugriffsmuster zu übertragen [z.B. zu senden oder zu empfangen], wobei die Mehrzahl von Sub-Datenpaketen jeweils nur einen Teil des Datenpakets aufweisen.

Bei Ausführungsbeispielen kann die Information einen Zustand eines Zahlenfolgengenerators [z.B. eines periodischen Zahlenfolgengenerators oder eines deterministischen Zufallszahlengenerators] zur Erzeugung einer Zahlenfolge beschreiben, wobei die Zahlenfolge das Kanalzugriffsmuster bestimmt.

Bei Ausführungsbeispielen kann die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreiben, wobei die Zahlenfolge das Kanalzugriffsmuster bestimmt.

Weitere Ausführungsbeispiele schaffen ein Kommunikationssystem mit zumindest einem der oben beschriebenen Endpunkte und einer der oben beschriebenen Basisstationen.

Weitere Ausführungsbeispiele schaffen ein Verfahren zum Betreiben eines Endpunkts eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Empfangens eines Signals [z.B. ein Baken-Signals], wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen]. Das Verfahren umfasst ferner einen Schritt des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch den Endpunkt zu verwenden sind].

Weitere Ausführungsbeispiele schaffen ein Verfahren zum Betreiben einer Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Sendens eines Signals [z.B. eines Baken-Signals], wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen]. Das Verfahren umfasst ferner einen Schritt des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch die Basisstation zu verwenden sind].

Weitere Ausführungsbeispiele schaffen einen Controller für einen Teilnehmer eines Kommunikationssystems, wobei das Kommunikationssystem in einem Frequenzband drahtlos kommuniziert, welches von einer Mehrzahl von Kommunikationssystemen zur Kommunikation genutzt wird, wobei der Controller ausgebildet ist, um ein netzwerkspezifisches Kanalzugriffsmuster zu ermitteln, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei der Controller ausgebildet ist, um ein relatives Kanalzugriffsmuster zu ermitteln, wobei das relative Kanalzugriffsmuster eine für eine Übertragung von Daten des Teilnehmers zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann die für die Übertragung zu verwendende Belegung von Ressourcen des relativen Kanalzugriffsmusters eine Teilmenge der verwendbaren frequenz- und/oder zeitsprungbasierten Belegung von Ressourcen des netzwerkspezifischen Kanalzugriffsmusters sein [z.B. wobei das relative Kanalzugriffsmuster nur eine Teilmenge der Ressourcen des netzwerkspezifischen Kanalzugriffsmusters aufweist].

Bei Ausführungsbeispielen kann sich das relative Kanalzugriffsmuster von einem anderen relativen Kanalzugriffsmuster, basierend auf dem der Teilnehmer andere Daten überträgt [z.B. sendet und/oder empfängt] oder basierend auf dem ein anderer Teilnehmer [z.B. Endpunkt und/oder Basisstation] des Kommunikationssystems Daten überträgt [z.B. sendet und/oder empfängt], unterscheiden, wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann das netzwerkspezifische Kanalzugriffsmuster die für die Kommunikation des Kommunikationssystems verwendbare frequenz- und/oder zeitsprungbasierte Belegung von Ressourcen des Frequenzbands in Frequenzkanälen [z.B. in die das Frequenzband unterteilt ist] und zugeordneten Zeitschlitzen oder in Frequenzkanalindizes und zugordneten Zeitschlitzindizes angiben.

Bei Ausführungsbeispielen kann das netzwerkspezifische Kanalzugriffsmusters in Frequenzrichtung [z.B. pro Zeitschlitz oder Zeitschlitzindex] eine Mehrzahl von benachbarten oder voneinander beabstandeten Ressourcen [z.B. Frequenzkanälen oder Frequenzkanalindizes] des Frequenzbands angeben.

Bei Ausführungsbeispielen kann das relative Kanalzugriffsmuster in Frequenzrichtung höchstens eine Teilmenge [z.B. höchstens eine Ressource, d.h. eine oder keine Ressource] der Mehrzahl von benachbarten oder voneinander beabstandeten Ressourcen des netzwerkspezifischen Kanalzugriffsmusters angeben.

Bei Ausführungsbeispielen kann das relative Kanalzugriffsmuster in Frequenzrichtung eine andere Ressource der Mehrzahl von benachbarten oder voneinander beabstandeten Ressourcen des netzwerkspezifischen Kanalzugriffsmusters angeben als ein anderes relatives Kanalzugriffsmuster, basierend auf dem der Teilnehmer andere Daten überträgt [z.B. sendet und/oder empfängt] oder basierend auf dem ein anderer Teilnehmer [z.B. Endpunkt und/oder Basisstation] des Kommunikationssystems Daten überträgt [z.B. sendet und/oder empfängt], wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen können zumindest zwei Ressourcen [z.B. Frequenzkanälen oder Frequenzkanalindizes] der Mehrzahl von benachbarten oder voneinander beabstandeten Ressourcen in Frequenzrichtung unterschiedliche Symbolraten und/oder unterschiedliche Anzahlen an Symbolen zugeordnet sein.

Bei Ausführungsbeispielen können die Mehrzahl von benachbarten Ressourcen in Frequenzrichtung einen Block [z.B. Cluster] von zusammenhängenden Ressourcen bilden, wobei unterschiedlichen Teilen des Blocks von zusammenhängenden Ressourcen unterschiedliche Symbolraten und/oder unterschiedliche Anzahlen von Symbolen zugeordnet sind.

Bei Ausführungsbeispielen kann der Controller ausgebildet sein, um das relative Kanalzugriffsmuster in Abhängigkeit von Anforderungen der zu übertragenen Daten an Übertragungseigenschaften [z.B. Latenz, oder Robustheit gegen Interferenzen] aus einem Satz von relativen Kanalzugriffsmustern mit unterschiedlichen Übertragungseigenschaften [z.B. unterschiedlicher Latenz, oder unterschiedlicher Robustheit gegen Interferenzen] auszuwählen.

Bei Ausführungsbeispielen kann der Controller ausgebildet sein, um das relative Kanalzugriffsmuster in Abhängigkeit von Anforderungen der zu übertragenen Daten an Übertragungseigenschaften [z.B. Latenz, oder Robustheit gegen Interferenzen] zu erzeugen.

Bei Ausführungsbeispielen kann der Controller ausgebildet sein, um das Kanalzugriffsmuster in Abhängigkeit von einem Zustand eines Zahlenfolgengenerators zur Erzeugung einer Zahlenfolge oder einer Zahl einer Zahlenfolge pseudozufällig zu ermitteln.

Bei Ausführungsbeispielen kann der Controller ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei Controller ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Controller ausgebildet, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann der Controller ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems

unter Verwendung einer Abbildungsfunktion auf eine Zeitinformation und eine Frequenzinformation abzubilden, wobei die Zeitinformation und die Frequenzinformation eine Ressource des Kanalzugriffsmusters beschreiben.

Bei Ausführungsbeispielen kann der Controller ausgebildet sein, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Controller ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Weitere Ausführungsbeispiele schaffen ein Verfahren zum Betreiben eines Teilnehmers eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Ermittelns eines netzwerkspezifischen Kanalzugriffsmusters, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt. Das Verfahren umfasst ferner einen Schritt des Ermittelns eines relativen Kanalzugriffsmusters, wobei das relative Kanalzugriffsmuster eine für eine Übertragung von Daten des Teilnehmers zu verwendende Belegung von Ressourcen aus der verwendbaren frequenz- und/oder zeitsprungbasierten Belegung von Ressourcen des netzwerkspezifischen Kanalzugriffsmusters angibt.

Ausführungsbeispiele schaffen einen Datensender eines Kommunikationssystems, wobei der Datensender ausgebildet ist, um ein zum Senden anstehendes Datenpaket [z.B. der Bitübertragungsschicht im OSI-Modell] in eine Mehrzahl von Sub-Datenpaketen aufzuteilen, die jeweils kürzer sind als das Datenpaket, wobei der Datensender ausgebildet ist, um ein Datensignal, das die Mehrzahl von Sub-Datenpaketen aufweist, entsprechend eines Sprungmusters [z.B. innerhalb eines zulässigen Frequenz- und/oder Zeitbereichs] zu senden, um die Mehrzahl von Sub-Datenpaketen entsprechend einer durch das Sprungmuster angegebenen frequenz- und/oder zeitsprungbasierten Belegung [z.B. entsprechend den durch das Sprungmuster angegebenen Ressourcenelementen; z.B. entsprechend des Sprungmusters in einer Teilmenge der durch das Sprungmuster angebenden Ressourcenelemente der zur Übertragung des Datensignals verwendbaren Ressourcenelemente des Kommunikationssystems] des Frequenzbands verteilt zu übertragen, wobei der Datensender ausgebildet ist, um das Sprungmuster von einem Grundsprungmuster basierend auf einer [z.B. durch eine] Verschiebung des Grundsprungmusters in der Frequenz und/oder Zeit abzuleiten.

Bei Ausführungsbeispielen kann das Kommunikationssystem in einem Frequenzband drahtlos kommunizieren, welches von einer Mehrzahl von Kommunikationssystemen zur Kommunikation genutzt wird.

Bei Ausführungsbeispielen kann sich die Verschiebung des Grundsprungmusters, basierend auf der der Datensender das Sprungmuster von dem Grundsprungmuster ableitet, von einer Verschiebung des gleichen Grundsprungmusters, basierend auf der ein anderer Datensender des Kommunikationssystems ein anderes Sprungmuster von dem gleichen Grundsprungmuster ableitet, unterscheiden [z.B. so dass sich die mit dem Datensignal entsprechend des Sprungmusters ausgesendeten Sub-Datenpakete und von dem anderen Datensender entsprechend des anderen Sprungmusters ausgesendeten Sub-Datenpakete nicht oder nur teilweise überlagern bzw. kollidieren].

Bei Ausführungsbeispielen kann der Datensender ausgebildet sein, um beim Ableiten des Sprungmusters von dem Grundsprungmuster einen außerhalb eines zulässigen Frequenz- und/oder Zeitbereichs liegenden Sprung des Sprungmusters basierend auf einer [z.B. durch eine] zyklischen Verschiebung [z.B. des Sprungs] in den zulässigen Frequenz- und/oder Zeitbereich zu verschieben.

Bei Ausführungsbeispielen kann bei der zyklischen Verschiebung der ausgehend von einer Grenze des zulässigen Frequenz- und/oder Zeitbereichs um einen Zeit- und/oder Frequenzwert [z.B. Anzahl von Frequenzkanälen oder Zeitschlitzen] außerhalb des zulässigen Frequenz- und/oder Zeitbereichs liegende Sprung des Sprungmusters um den gleichen Zeit- und/oder Frequenzwert [z.B. gleiche Anzahl von Frequenzkanälen oder Zeitschlitzen] ausgehend von einer gegenüberliegenden Grenze des Frequenz- und/oder Zeitbereichs in den zulässigen Frequenz- und/oder Zeitbereich verschoben werden.

Bei Ausführungsbeispielen kann die zyklische Verschiebung des außerhalb des zulässigen Frequenz- und/oder Zeitbereichs liegenden Sprung des Sprungmusters in den zulässigen Frequenz- und/oder Zeitbereich basierend auf einer Modulo-Operation erfolgen.

Bei Ausführungsbeispielen kann der zulässige Frequenzbereich innerhalb von Bandgrenzen des Frequenzbands liegen [z.B. wobei der zulässige Frequenzbereich von Bandgrenzen des Frequenzbands begrenzt ist].

Bei Ausführungsbeispielen kann ein Zugriff des Kommunikationssystems auf das Frequenzband basierend auf [z.B. periodisch] aufeinander folgenden Zeitabschnitten erfolgen, wobei der zulässige Zeitbereich innerhalb eines der Zeitabschnitte liegt [z.B. wobei der zulässige Zeitbereich von dem Zeitabschnitt begrenzt wird, oder wobei der zulässige Zeitbereich ein Datenübertragungsabschnitt des Zeitabschnitts ist [z.B. der auf einen Signalisierungsabschnitt] folgt].

Bei Ausführungsbeispielen kann der zulässige Frequenzbereich [oder das Frequenzband] in Frequenzkanäle unterteilt sein, wobei der Frequenzwert eine Anzahl von Frequenzkanälen ist.

Bei Ausführungsbeispielen kann der zulässige Zeitbereich in Zeitschlitze unterteilt sein, wobei der Zeitwert eine Anzahl von Zeitschlitzen ist.

Bei Ausführungsbeispielen kann das Grundsprungmuster eine ungleichmäßige Belegung von Frequenzkanälen, in die das Frequenzband unterteilt ist, angeben [z.B. so dass zumindest ein Frequenzkanal eine andere Anzahl von Belegungen aufweist als ein anderer Frequenzkanal; Beispielsweise kann Frequenzkanal 12 entsprechend 3 Mal belegt sein, während Kanal 23 und Kanal 6 nicht belegt sind, wobei die Kanäle 23 und 6 durch die zyklische Verschiebung trotzdem belegt werden können].

Bei Ausführungsbeispielen kann der Datensender ausgebildet sein, um das Sprungmuster von dem Grundsprungmuster basierend auf einer zufälligen oder pseudozufälligen Verschiebung des Grundsprungmusters in der Frequenz und/oder Zeit abzuleiten.

Bei Ausführungsbeispielen kann der pseudozufälligen Verschiebung des Grundsprungmusters ein immanenter Parameter des Datensenders zugrunde liegen, wie z.B. eine CRC (=cyclic redundancy check, dt. zyklische Redundanzprüfung), einen CMAC (=cipher-based message authentication code, dt. chiffrenbasierter Nachrichtenauthentifizierungscode) oder eine ID (= Identifikation) des Datensenders.

Bei Ausführungsbeispielen kann der Datensender ausgebildet sein, um zumindest zwei der Mehrzahl von Sub-Datenpaketen mit Pilotsequenzen zu versehen.

Bei Ausführungsbeispielen kann der Datensender ausgebildet sein, um ein Steuersignal [z.B. von einer Basisstation] des Kommunikationssystems zu empfangen, wobei das Steuersignal eine Information über das Grundsprungmuster aufweist.

Bei Ausführungsbeispielen kann der Datensender ausgebildet sein, um sich in der Zeit und/oder Frequenz auf das Steuersignal zu synchronisieren.

Bei Ausführungsbeispielen kann der Datensender ausgebildet sein, um ein Steuersignal [z.B. von einer Basisstation] des Kommunikationssystems zu empfangen, wobei das Steuersignal eine Information über einen zulässigen Frequenz- und/oder Zeitbereich zur Übertragung des Datensignals mit der Mehrzahl von Sub-Datenpaketen aufweist, wobei der Datensender ausgebildet sein kann, um das Datensignal mit der Mehrzahl von Sub-Datenpaketen innerhalb des zulässigen Frequenz- und/oder Zeitbereichs zu übertragen.

Bei Ausführungsbeispielen kann der Datensender ausgebildet sein, um ein Steuersignal [z.B. von einer Basisstation des Kommunikationssystems] zu empfangen, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei der Datensender ausgebildet sein kann, um das Kanalzugriffsmuster basierend auf der Information über das Kanalzugriffsmuster zu ermitteln, wobei das Sprungmuster ein relatives Kanalzugriffsmuster ist, wobei das relative Kanalzugriffsmuster die zu verwendende Belegung der durch das Kanalzugriffsmuster angegebenen verwendbaren frequenz- und/oder zeitsprungbasierten Belegung angibt, wobei der Datensender ausgebildet sein kann, um mittels des Datensignals die Mehrzahl von Sub-Datenpaketen in zumindest einer durch das relative Kanalzugriffsmuster angegebenen Teilmenge der durch das Kanalzugriffsmuster angegebenen verwendbaren frequenz- und/oder zeitsprungbasierten Belegung des Frequenzbands zu senden.

Bei Ausführungsbeispielen kann der Datensender ein Endpunkt des Kommunikationssystems sein.

Bei Ausführungsbeispielen kann der Endpunkt batteriebetrieben sein.

Weitere Ausführungsbeispiele schaffen einen Datenempfänger eines Kommunikationssystems, wobei zur Übertragung eines Datenpakets innerhalb des Kommunikationssystems das Datenpaket in eine Mehrzahl von Sub-Datenpaketen aufgeteilt wird, die jeweils kürzer sind als das Datenpaket, und wobei die Mehrzahl von Sub-Datenpaketen mittels eines Datensignals entsprechend eines Sprungmusters in einer Teilmenge von verwendbaren Ressourcenelemente des Kommunikationssystems übertragen werden, wobei zumindest zwei der Mehrzahl von Sub-Datenpaketen eine Pilotsequenz aufweisen, wobei das Sprungmuster von einem Grundsprungmuster basierend auf einer Verschiebung des Grundsprungmusters in der Frequenz und/oder Zeit abgeleitet ist, wobei der Datenempfänger ausgebildet ist, um die [z.B. alle] von dem Kommunikationssystem zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente [z.B. definiert durch Zeitschlitze und Frequenzkanäle des Frequenzbands] des Kommunikationssystems jeweils mit einer Referenzsequenz [z.B. die der Pilotsequenz entspricht] zu korrelieren, um für die verwendbaren Ressourcenelemente Korrelationsergebnisse zu erhalten, und um die Korrelationsergebnisse [z.B. entsprechend der Lage der verwendbaren Ressourcenelemente in der Zeit und Frequenz [z.B. nicht verwendete Frequenzkanäle und/oder Zeitschlitze werden "ausgeblendet"]] in ein zumindest ein-dimensionales Array von Korrelationsergebnissen zu überführen, wobei der Datenempfänger ausgebildet ist, um eine Korrelation des zumindest ein-dimensionale Arrays von Korrelationsergebnissen mit einem zumindest ein-dimensionalen Array von Referenzwerten durchzuführen, wobei das zumindest ein-dimensionale Array von Referenzwerten von dem Grundsprungmuster abgeleitet ist.

Bei Ausführungsbeispielen kann das Kommunikationssystem in einem Frequenzband drahtlos kommunizieren, welches von einer Mehrzahl von Kommunikationssystemen zur Kommunikation genutzt wird.

Bei Ausführungsbeispielen kann der Datenempfänger ausgebildet sein, um die Mehrzahl von Sub-Datenpaketen basierend auf der Korrelation des zumindest ein-dimensionalen Arrays von Korrelationsergebnissen mit dem zumindest ein-dimensionalen Array von Referenzwerten zu detektieren.

Bei Ausführungsbeispielen kann das zumindest ein-dimensionale Array von Korrelationsergebnissen ein zwei-dimensionales Array von Korrelationsergebnissen sein, wobei das zumindest ein-dimensionale Array von Referenzwerten ein zwei-dimensionales Array von Referenzwerten ist.

Bei Ausführungsbeispielen kann der Datenempfänger ausgebildet sein, um eine zwei-dimensionale Korrelation des zwei-dimensionales Arrays von Korrelationsergebnissen mit dem zwei-dimensionales Array von Referenzwerten durchzuführen.

Bei Ausführungsbeispielen kann die zwei-dimensionale Korrelation eine zwei-dimensionale Kreuzkorrelation im Zeitbereich sein.

Bei Ausführungsbeispielen kann der Datenempfänger ausgebildet sein, um die zwei-dimensionale Korrelation im Frequenzbereich durchzuführen.

Bei Ausführungsbeispielen kann der Datenempfänger ausgebildet sein, um das zwei-dimensionale Array von Korrelationsergebnissen in den Frequenzbereich zu transformieren [z.B. mittels DFT oder FFT], um eine transformierte Version des zwei-dimensionalen Arrays von Korrelationsergebnissen zu erhalten, wobei der Datenempfänger ausgebildet sein kann, um das zwei-dimensionale Array von Referenzwerten in den Frequenzbereich zu transformieren [z.B. mittels DFT oder FFT], um eine transformierte Version des zwei-dimensionalen Arrays von Referenzwerten zu erhalten, wobei der Datenempfänger ausgebildet sein kann, um entweder das zwei-dimensionale Array von Korrelationsergebnissen oder das zwei-dimensionale Array von Referenzwerten vor der Transformation in den Frequenzbereich zu spiegeln, wobei der Datenempfänger ausgebildet sein kann, um die transformierte Version des zwei-dimensionale Arrays von Korrelationsergebnissen und die transformierte Version des zwei-dimensionalen Arrays von Referenzwerten elementweise zu multiplizieren, um ein zwei-dimensionales Multiplikationsergebnis zu erhalten, wobei der Datenempfänger ausgebildet sein kann, um das Multiplikationsergebnis in den Zeitbereich zu transformieren, um ein Gesamtkorrelationsergebnis zu erhalten.

Bei Ausführungsbeispielen kann der Datenempfänger ausgebildet sein, um das zwei-dimensionale Array von Korrelationsergebnissen in eine virtuelle eindimensionale Ebene von Korrelationsergebnissen zu transformieren, wobei der Datenempfänger ausgebildet sein kann, um das zwei-dimensionale Array von Referenzwerten in eine virtuelle eindimensionale Ebene von Referenzwerten zu transformieren, wobei der Datenempfänger ausgebildet sein kann, um die virtuelle eindimensionale Ebene von Korrelationsergebnissen in den Frequenzbereich zu transformieren [z.B. mittels DFT oder FFT], um eine transformierte Version der virtuellen eindimensionalen Ebene von Korrelationsergebnissen zu erhalten, wobei der Datenempfänger ausgebildet sein kann, um die virtuelle eindimensionale Ebene von Referenzwerten in den Frequenzbereich zu transformieren [z.B. mittels DFT oder FFT], um eine transformierte Version der virtuellen eindimensionalen Ebene von Referenzwerten zu erhalten, wobei der Datenempfänger ausgebildet sein kann, um entweder die virtuelle eindimensionale Ebene von Korrelationsergebnissen oder die virtuelle eindimensionale Ebene von Referenzwerten vor der Transformation in den Frequenzbereich zu spiegeln, wobei der Datenempfänger ausgebildet sein kann, um die transformierte Version der virtuellen eindimensionalen Ebene von Korrelationsergebnissen oder die transformierte Version der virtuellen eindimensionale Ebene von Referenzwerten elementarweise zu multiplizieren, um ein Multiplikationsergebnis zu erhalten, wobei der Datenempfänger ausgebildet sein kann, um das Multiplikationsergebnis in den Zeitbereich zu transformieren, um ein Gesamtkorrelationsergebnis zu erhalten.

Bei Ausführungsbeispielen kann das zwei-dimensionale Array von Korrelationsergebnissen und das zwei-dimensionale Array von Referenzwerten die gleiche Arraygröße aufweisen.

Bei Ausführungsbeispielen können die verwendbaren Ressourcenelemente des Kommunikationssystems entsprechend der Lage der verwendbaren Ressourcenelemente in der Zeit und Frequenz Elementen des zwei-dimensionalen Arrays von Korrelationsergebnissen zugeordnet sein.

Bei Ausführungsbeispielen kann das zumindest ein-dimensionale Array von Referenzwerten dem Grundsprungmuster entsprechen.

Bei Ausführungsbeispielen können die Elemente des zwei-dimensionalen Arrays von Referenzwerten, die Ressourcenelementen zugeordnet sind, die entsprechend des Grundsprungmusters ein Sub-Datenpaket aufweisen, einen [z.B. normierten] Referenzwert aufweisen, der die Korrelationslänge der Korrelation der Pilotsequenz mit der Referenzsequenz widerspiegelt.

Bei Ausführungsbeispielen können die übrigen Elemente des zwei-dimensionalen Arrays von Referenzwerten Null als Referenzwert aufweisen.

Bei Ausführungsbeispielen können die verwendbaren Ressourcenelemente des Kommunikationssystems durch Frequenzkanäle [z.B. des Frequenzbands] und Zeitschlitze definiert sein.

Bei Ausführungsbeispielen kann der Datenempfänger ausgebildet sein, um ein Steuersignal zu senden basierend auf dem sich ein Datensender des Kommunikationssystems synchronisieren kann.

Bei Ausführungsbeispielen kann der Datenempfänger ausgebildet sein, um ein Steuersignal zu senden, wobei das Steuersignal eine Information über einen von dem Datensender des Kommunikationssystems zu verwendenden Frequenz- und/oder Zeitbereich aufweist.

Bei Ausführungsbeispielen kann der Datenempfänger ausgebildet sein, um ein Steuersignal zu senden, wobei das Steuersignal eine Information über die von dem Kommunikationssystem zur Übertragung der Mehrzahl von Sub-Datenpaketen verwendbaren Ressourcenelemente aufweist.

Bei Ausführungsbeispielen kann der Datenempfänger ausgebildet sein, um ein Steuersignal zu senden, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcenelementen des Frequenzbands angibt, wobei das Kanalzugriffsmuster die von dem Kommunikationssystem zur Übertragung der Mehrzahl von Sub-Datenpaketen verwendbaren Ressourcenelemente angibt, wobei das Sprungmuster ein relatives Kanalzugriffsmuster ist, wobei das relative Kanalzugriffsmuster die zu verwendende Belegung der durch das Kanalzugriffsmuster angegebenen verwendbaren frequenz- und/oder zeitsprungbasierten Belegung angibt.

Bei Ausführungsbeispielen kann der Datenempfänger eine Basisstation sein.

Bei Ausführungsbeispielen kann die Basisstation batteriebetrieben sein.

Weitere Ausführungsbeispiele schaffen ein Verfahren zum Senden eines Datenpakets in einem Kommunikationssystem. Das Verfahren umfasst einen Schritt des Aufteilens eines zum Senden anstehenden Datenpakets [z.B. der Bitübertragungsschicht im OSI-Modell] in eine Mehrzahl von Sub-Datenpaketen, die jeweils kürzer sind als das Datenpaket. Ferner umfasst das Verfahren einen Schritt des Ableitens eines Sprungmusters von einem Grundsprungmuster basierend auf einer [z.B. durch eine] Verschiebung des Grundsprungmusters in der Frequenz und/oder Zeit. Ferner umfasst das Verfahren einen Schritt des Sendens eines Datensignals mit der Mehrzahl von Sub-Datenpaketen entsprechend des Sprungmusters [z.B. innerhalb eines zulässigen Frequenz- und/oder Zeitbereichs], so dass die Mehrzahl von Sub-Datenpaketen entsprechend einer durch das Sprungmuster angegebenen frequenz- und/oder zeitsprungbasierten Belegung des Frequenzbands verteilt übertragen werden.

Weitere Ausführungsbeispiele schaffen ein Verfahren zur Übertragung von Daten zwischen Teilnehmern eines Kommunikationssystems. Das Verfahren umfasst einen Schritt des Sendens eines ersten Datensignals mit einer ersten Mehrzahl von Sub-Datenpakten entsprechend eines ersten Sprungmusters durch einen ersten Teilnehmer des Kommunikationssystems [z.B. um die erste Mehrzahl von Sub-Datenpaketen entsprechend einer durch das erste Sprungmuster angegebenen ersten frequenz- und/oder zeitsprungbasierten Belegung des Frequenzbands verteilt zu übertragen]. Ferner umfasst das Verfahren einen Schritt des Sendens eines zweiten Datensignals mit einer zweiten Mehrzahl von Sub-Datenpaketen entsprechend eines zweiten Sprungmusters durch einen zweiten Teilnehmer des Kommunikationssystems [z.B. um die zweite Mehrzahl von Sub-Datenpaketen entsprechend einer durch das zweite Sprungmuster angegebenen zweiten frequenz- und/oder zeitsprungbasierten Belegung des Frequenzbands verteilt zu übertragen], wobei das erste Sprungmuster und das zweite Sprungmuster von dem gleichen Grundsprungmuster abgeleitet sind, wobei das erste Sprungmuster basierend auf einer ersten Verschiebung des Grundsprungmusters in der Frequenz und/oder Zeit abgeleitet ist, wobei das zweite Sprungmuster basierend auf einer zweiten Verschiebung des Grundsprungmusters in der Frequenz und/oder Zeit abgeleitet ist, wobei die erste Verschiebung und die zweite Verschiebung unterschiedlich sind [z.B. so dass sich die mit dem ersten Datensignal entsprechend des ersten Sprungmusters ausgesendeten Sub-Datenpakete und die von dem zweiten Datensender entsprechend des zweiten Sprungmusters ausgesendeten Sub-Datenpakete nicht oder nur teilweise überlagern bzw. kollidieren].

Weitere Ausführungsbeispiele schaffen ein Verfahren zum Empfangen von Daten in einem Kommunikationssystem, wobei zur Übertragung eines Datenpakets innerhalb des Kommunikationssystems das Datenpaket in eine Mehrzahl von Sub-Datenpaketen aufgeteilt wird, die jeweils kürzer sind als das Datenpaket, und wobei die Mehrzahl von Sub-Datenpaketen mittels eines Datensignals entsprechend eines Sprungmusters in einer Teilmenge von verwendbaren Ressourcenelemente des Kommunikationssystems übertragen werden, wobei zumindest zwei der Mehrzahl von Sub-Datenpaketen eine Pilotsequenz aufweisen, wobei das Sprungmuster von einem Grundsprungmuster basierend auf einer Verschiebung des Grundsprungmusters in der Frequenz und/oder Zeit abgeleitet ist. Das Verfahren umfasst einen Schritt des Korrelierens der von dem Kommunikationssystem zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente [z.B. definiert durch Zeitschlitze und Frequenzkanäle des Frequenzbands] des Kommunikationssystems jeweils mit einer Referenzsequenz [z.B. die der Pilotsequenz entspricht], um für die verwendbaren Ressourcenelemente Korrelationsergebnisse zu erhalten. Ferner umfasst das Verfahren einen Schritt des Überführens der Korrelationsergebnisse [z.B. entsprechend der Lage der verwendbaren Ressourcenelemente in der Zeit und Frequenz [z.B. nicht verwendete Frequenzkanäle und/oder Zeitschlitze werden "ausgeblendet"]] in ein zumindest ein-dimensionales Array von Korrelationsergebnissen. Ferner umfasst das Verfahren einen Schritt des Durchführens einer Korrelation zwischen dem zumindest ein-dimensionalen Array von Korrelationsergebnissen und dem zumindest ein-dimensionalen Array von Referenzwerten, wobei das zumindest ein-dimensionale Array von Referenzwerten von dem Grundsprungmuster abgeleitet ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] DE 10 2011 082 098 B4

[2] IEEE Std. 802.15.4 - 2015 - IEEE Standard for Low-Rate Wireless Networks, 2015

[3] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[4] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015

[5] http://www.aip.de/groups/soe/local/numres/bookcpdf/c13-2.pdf

Abkürzungsverzeichnis

| | |
|---|---|
| CRC: | Cyclic Redundancy Check |
| LPWAN: | Low Power Wide Area Network |
| LSB: | Least Significant Bit(s) |
| MSB: | Most Significant Bit(s) |
| PAN: | Personal Area Network |
| TLS: | Transport Layer Security |
| TSMA: | Telegram-Splitting-Multiple-Access |
| FFT: | Fast Fourier Transformation (Schnelle Fourier Transformation), redundanzmindernder Algorithmus der DFT (Diskrete Fourier Transformation) |
| J: | Anzahl der Teil-Datenpakete in die eine Nachricht aufgeteilt wird, bzw. Anzahl der benötigten Ressourcenelemente eines Sprungmusters |
| M: | Anzahl aller zur Verfügung stehender Sprungmuster |
| N: | Größe des Ressource-Frames mit N = T*C, mit C Frequenzelementen und T Zeitschlitzen |
| PER: | Packet Error Rate, Paketfehlerrate |
| PIC: | Parallel Interference Cancellation |
| SIC: | Successive Interference Cancellation |

**Patentansprüche**

1. Datensender (106) eines Kommunikationssystems (102),

   wobei das Kommunikationssystem (102) in einem Frequenzband drahtlos kommuniziert, welches von einer Mehrzahl von Kommunikationssystemen zur Kommunikation genutzt wird,
   wobei der Datensender (106) ausgebildet ist, um ein Datensignal (122) entsprechend eines Sprungmusters (116) zu senden, wobei das Datensignal (122) eine Mehrzahl von Sub-Datenpaketen aufweist, die entsprechend einer durch das Sprungmuster (116) angegebenen frequenz- und/oder zeitsprungbasierten Belegung (118_1-118_4) des Frequenzbands verteilt übertragen werden,
   wobei der Datensender (106) ausgebildet ist, um das Sprungmuster (116) von einem Grundsprungmuster (126) basierend auf einer Verschiebung des Grundsprungmusters in der Frequenz und/oder Zeit abzuleiten,
   wobei der Datensender (106) ausgebildet ist, um beim Ableiten des Sprungmusters (116) von dem Grundsprungmuster, sofern zumindest ein Sprung des Sprungmusters (116) bedingt durch die Ableitung des Sprungmusters (116) von dem Grundsprungmusters basierend auf der Verschiebung des Grundsprungmusters in der Frequenz außerhalb eines zulässigen Frequenzbereichs (112) liegt, nur den zumindest einen Sprung, der bedingt durch die Ableitung des Sprungmusters (116) von dem Grundsprungmusters außerhalb des zulässigen Frequenzbereichs (112) liegt,

      - basierend auf einer zyklischen Verschiebung in der Frequenz in den zulässigen Frequenzbereich (112) zu verschieben, und
      - zusätzlich basierend auf einer linearen Verschiebung in der Zeit zu verschieben.

2. Datensender (106) nach dem vorangehenden Anspruch,
   wobei der Datensender (106) ausgebildet ist, um beim Ableiten des Sprungmusters (116) von dem Grundsprungmuster, sofern zumindest ein Sprung des Sprungmusters (116) bedingt durch die Ableitung des Sprungmusters (116) von dem Grundsprungmusters basierend auf der Verschiebung des Grundsprungmusters in der Zeit außerhalb eines zulässigen Zeitbereichs (112) liegt, den zumindest einen Sprung durch eine zyklische Verschiebung in der Zeit in den zulässigen Zeitbereich (112) zu verschieben.

3. Datensender (106) nach einem der vorangehenden Ansprüche,
wobei bei der linearen Verschiebung der Sprung des Sprungmusters (116) um genau plus einen Zeitwert verschoben wird.

4. Datensender (106) nach einem der vorangehenden Ansprüche,
wobei bei der zyklischen Verschiebung der ausgehend von einer Grenze des zulässigen Frequenz- und/oder Zeitbereichs (112) um einen Zeit- und/oder Frequenzwert außerhalb des zulässigen Frequenz- und/oder Zeitbereichs (112) liegende zumindest eine Sprung des Sprungmusters (116) um den gleichen Zeit- und/oder Frequenzwert ausgehend von einer gegenüberliegenden Grenze des Frequenz- und/oder Zeitbereichs (112) in den zulässigen Frequenz- und/oder Zeitbereich verschoben wird.

5. Datensender (106) nach einem der vorangehenden Ansprüche,

wobei der Datensender (106) ausgebildet ist, um ein Steuersignal (120) des Kommunikationssystems (102) zu empfangen, wobei das Steuersignal (120) eine Information über einen zulässigen Frequenz- und/oder Zeitbereich (112) zur Übertragung des Datensignals (122) mit der Mehrzahl von Sub-Datenpaketen aufweist,
wobei der Datensender (106) ausgebildet ist, um das Datensignal (122) mit der Mehrzahl von Sub-Datenpaketen innerhalb des zulässigen Frequenz- und/oder Zeitbereichs (112) zu übertragen.

6. Datensender (106) nach einem der vorangehenden Ansprüche,

wobei der Datensender (106) ausgebildet ist, um ein Steuersignal (120) zu empfangen, wobei das Steuersignal (120) eine Information über ein Kanalzugriffsmuster (110) aufweist, wobei das Kanalzugriffsmuster (110) eine für die Kommunikation des Kommunikationssystems (102) verwendbare frequenz- und/oder zeitsprungbasierte Belegung des Frequenzbands angibt,
wobei der Datensender (106) ausgebildet ist, um das Kanalzugriffsmuster (110) basierend auf der Information über das Kanalzugriffsmuster (110) zu ermitteln, wobei das Sprungmuster (116) ein relatives Kanalzugriffsmuster (116) ist, wobei das relative Kanalzugriffsmuster (116) die zu verwendende Belegung der durch das Kanalzugriffsmuster (110) angegebenen verwendbaren frequenz- und/oder zeitsprungbasierten Belegung angibt,
wobei der Datensender (106) ausgebildet ist, um mittels des Datensignals (122) die Mehrzahl von Sub-Datenpaketen in zumindest einer durch das relative Kanalzugriffsmuster (1169 angegebenen Teilmenge der durch das Kanalzugriffsmuster angegebenen verwendbaren frequenz- und/oder zeitsprungbasierten Belegung des Frequenzbands zu senden.

7. Datenempfänger eines Kommunikationssystems,

wobei das Kommunikationssystem (102) in einem Frequenzband drahtlos kommuniziert, welches von einer Mehrzahl von Kommunikationssystemen zur Kommunikation genutzt wird,
wobei der Datenempfänger ausgebildet ist, um ein Datensignal (122) zu empfangen, wobei das Datensignal (122) entsprechend eines Sprungmusters (116) übertragen wird, wobei das Datensignal (122) eine Mehrzahl von Sub-Datenpaketen aufweist, die entsprechend einer durch das Sprungmuster (116) angegebenen frequenz- und/oder zeitsprungbasierten Belegung (118_1-118_4) des Frequenzbands verteilt übertragen werden, wobei zumindest zwei der Mehrzahl von Sub-Datenpaketen eine Pilotsequenz aufweisen, wobei das Sprungmuster (116) von einem Grundsprungmuster (126) basierend auf einer Verschiebung des Grundsprungmusters (126) in der Frequenz und/oder Zeit abgeleitet ist, wobei beim Ableiten des Sprungmusters (116) von dem Grundsprungmuster (126), sofern zumindest ein Sprung des Sprungmusters (116) bedingt durch die Ableitung des Sprungmusters (116) von dem Grundsprungmusters (126) basierend auf der Verschiebung des Grundsprungmusters (126) in der Frequenz außerhalb eines zulässigen Frequenzbereichs (112) liegt, nur der zumindest einen Sprung, der bedingt durch die Ableitung des Sprungmusters (116) von dem Grundsprungmusters außerhalb des zulässigen Frequenzbereichs (112) liegt,

- basierend auf einer zyklischen Verschiebung in der Frequenz in den zulässigen Frequenzbereich (112) verschoben wird, und
- zusätzlich basierend auf einer linearen Verschiebung in der Zeit verschoben wird,

wobei der Datenempfänger (104) ausgebildet ist, um die von dem Kommunikationssystem (102) zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente des Kommunikationssystems jeweils mit einer Referenzsequenz zu korrelieren, um für die verwendbaren Ressourcenelemente Korrelationsergebnisse zu erhalten, und um die Korrelationsergebnisse in ein zumindest ein-dimensionales Array von Korrelationsergebnissen zu überführen, wobei der Datenempfänger ausgebildet ist, um eine Korrelation des zumindest ein-dimensionalen Arrays von Korrelationsergebnissen mit einem zumindest ein-dimensionalen Array von Referenzwerten durchzuführen, wobei das zumindest ein-dimensionale Array von Referenzwerten von dem Grundsprungmuster (126) abgeleitet ist.

8. Datenempfänger (104) nach dem vorangehenden Anspruch,
wobei der Datenempfänger (104) ausgebildet ist, um die Mehrzahl von Sub-Datenpaketen basierend auf der Korrelation des zumindest ein-dimensionalen Arrays von Korrelationsergebnissen (166) mit dem zumindest ein-dimensionalen Array von Referenzwerten (168) zu detektieren.

9. Datenempfänger (104) nach einem der vorangehenden Ansprüche,

wobei das zumindest ein-dimensionale Array von Korrelationsergebnissen (166) ein zwei-dimensionales Array von Korrelationsergebnissen (166) ist,
wobei das zumindest ein-dimensionale Array von Referenzwerten (168) ein zwei-dimensionales Array von Referenzwerten (168) ist.

10. Datenempfänger (104) nach dem vorangehenden Anspruch,
wobei der Datenempfänger (104) ausgebildet ist, um eine zwei-dimensionale Korrelation des zwei-dimensionales Arrays von Korrelationsergebnissen (166) mit dem zwei-dimensionales Array von Referenzwerten (168) durchzuführen.

11. Datenempfänger (104) nach einem der vorangehenden Ansprüche,
wobei der Datenempfänger (104) ausgebildet ist, um ein Steuersignal (120) zu senden, wobei das Steuersignal (120)

- eine Information über einen von dem Datensender (106) des Kommunikationssystems (102) zu verwendenden Frequenz- und/oder Zeitbereich aufweist,
- oder eine Information über die von dem Kommunikationssystem (102) zur Übertragung der Mehrzahl von Sub-Datenpaketen verwendbaren Ressourcenelemente (112) aufweist,
- oder eine Information über ein Kanalzugriffsmuster (110) aufweist, wobei das Kanalzugriffsmuster (110) eine für die Kommunikation des Kommunikationssystems (102) verwendbare frequenz- und/oder zeitsprungbasierte Belegung von Ressourcenelementen des Frequenzbands angibt, wobei das Kanalzugriffsmuster (110) die von dem Kommunikationssystem (102) zur Übertragung der Mehrzahl von Sub-Datenpaketen verwendbaren Ressourcenelemente (112) angibt, wobei das Sprungmuster (116) ein relatives Kanalzugriffsmuster (116) ist, wobei das relative Kanalzugriffsmuster (116) die zu verwendende Belegung der durch das Kanalzugriffsmuster (110) angegebenen verwendbaren frequenz- und/oder zeitsprungbasierten Belegung angibt.

12. System (102), mit folgenden Merkmalen:

zumindest einem Datensender (106) nach einem der Ansprüche 1 bis 6, und
einem Datenempfänger (104) nach einem der Ansprüche 7 bis 11.

13. Verfahren (300) zum Senden eines Datenpakets in einem Kommunikationssystem (102), wobei das Kommunikationssystem in einem Frequenzband drahtlos kommuniziert, welches von einer Mehrzahl von Kommunikationssystemen zur Kommunikation genutzt wird, wobei das Verfahren aufweist:

Ableiten (302) eines Sprungmusters (116) von einem Grundsprungmuster (126) basierend auf einer Verschiebung des Grundsprungmusters (126) in der Frequenz und/oder Zeit, wobei beim Ableiten des Sprungmusters (116) von dem Grundsprungmuster, sofern zumindest ein Sprung des Sprungmusters (116) bedingt durch die Ableitung des Sprungmusters (116) von dem Grundsprungmusters (126) basierend auf der Verschiebung des Grundsprungmusters (126) in der Frequenz außerhalb eines zulässigen Frequenzbereichs liegt, nur der zumindest eine Sprung, der bedingt durch die Ableitung des Sprungmusters (116) von dem Grundsprungmusters außerhalb des zulässigen Frequenzbereichs (112) liegt,

- basierend auf einer zyklischen Verschiebung in der Frequenz in den zulässigen Frequenzbereich verschoben wird, und
- zusätzlich basierend auf einer linearen Verschiebung in der Zeit verschoben wird,

Senden (304) des Datenpakets aufgeteilt auf eine Mehrzahl von Sub-Datenpaketen entsprechend des Sprungmusters (116), so dass die Mehrzahl von Sub-Datenpaketen entsprechend einer durch das Sprungmuster angegebenen frequenz- und/oder zeitsprungbasierten Belegung des Frequenzbands verteilt übertragen werden.

14. Verfahren (320) zum Empfangen von Daten in einem Kommunikationssystem (102), wobei das Kommunikationssystem (102) in einem Frequenzband drahtlos kommuniziert, welches von einer Mehrzahl von Kommunikationssystemen zur Kommunikation genutzt wird, wobei zur Übertragung eines Datenpakets innerhalb des Kommunikationssystems das Datenpaket in eine Mehrzahl von Sub-Datenpaketen aufgeteilt wird, die jeweils kürzer sind als das Datenpaket, und wobei die Mehrzahl von Sub-Datenpaketen mittels eines Datensignals (122) entsprechend eines Sprungmusters (116) in einer Teilmenge von verwendbaren Ressourcenelemente des Kommunikationssystems übertragen werden, wobei zumindest zwei der Mehrzahl von Sub-Datenpaketen eine Pilotsequenz aufweisen, wobei das Sprungmuster (116) von einem Grundsprungmuster (126) basierend auf einer Verschiebung des Grundsprungmusters (126) in der Frequenz und/oder Zeit abgeleitet ist, wobei beim Ableiten des Sprungmusters (116) von dem Grundsprungmuster, sofern zumindest ein Sprung des Sprungmusters (116) bedingt durch die Ableitung des Sprungmusters (116) von dem Grundsprungmusters (126) basierend auf der Verschiebung des Grundsprungmusters (126) in der Frequenz außerhalb eines zulässigen Frequenzbereichs liegt, nur der zumindest eine Sprung, der bedingt durch die Ableitung des Sprungmusters (116) von dem Grundsprungmusters außerhalb des zulässigen Frequenzbereichs (112) liegt,

- basierend auf einer zyklischen Verschiebung in der Frequenz in den zulässigen Frequenzbereich verschoben wird, und
- zusätzlich basierend auf einer linearen Verschiebung in der Zeit verschoben wird,

wobei das Verfahren aufweist:

Korrelieren (322) der von dem Kommunikationssystem zur Übertragung der pilotsequenzaufweisenden Sub-Datenpakete der Mehrzahl von Sub-Datenpaketen verwendbaren Ressourcenelemente oder die von dem Kommunikationssystem zur Übertragung der Mehrzahl von Sub-Datenpaketen verwendbaren Ressourcenelemente des Kommunikationssystems jeweils mit einer Referenzsequenz, um für die verwendbaren Ressourcenelemente Korrelationsergebnisse zu erhalten,
Überführen (324) der Korrelationsergebnisse in ein zumindest ein-dimensionales Array von Korrelationsergebnissen,
Durchführen (326) einer Korrelation zwischen dem zumindest ein-dimensionalen Array von Korrelationsergebnissen und dem zumindest ein-dimensionalen Array von Referenzwerten, wobei das zumindest ein-dimensionale Array von Referenzwerten von dem Grundsprungmuster (126) abgeleitet ist.

15. Computerprogramm zur Durchführung des Verfahrens nach einem der vorangehenden Ansprüche.

**Claims**

1. Data transmitter (106) of a communication system (102),

wherein the communication system (102) communicates in a wireless manner in a frequency band used for communication by a plurality of communication systems,
wherein the data transmitter (106) is configured to transmit a data signal (122) according to a hopping pattern (116), wherein the data signal (122) comprises a plurality of sub-data packets transmitted in a distributed way according to a frequency hop-based and/or time hop-based occupancy (118_1-118_4) of the frequency band, indicated by the hopping pattern (116),
wherein the data transmitter (106) is configured to derive the hopping pattern (116) from a base hopping pattern (126) on the basis of a shift of the base hopping pattern in frequency and/or time,

wherein the data transmitter (106) is configured to, when deriving the hopping pattern (116) from the base hopping pattern, if at least one hop of the hopping pattern (116), due to deriving the hopping pattern (116) from the base hopping pattern, is outside of the admissible frequency range (112) on the basis of the shift of the base hopping pattern in frequency, shift only the at least one hop that is outside of the admissible frequency range (112) due to deriving the hopping pattern (116) from the base hopping pattern,

- into the admissible frequency range (112) on the basis of a cyclic shift in frequency, and
- additionally shift the same in time on the basis of a linear shift.

2. Data transmitter (106) according to the preceding claim,
wherein the data transmitter (106) is configured to, when deriving the hopping pattern (116) from the base hopping pattern, if at least one hop of the hopping pattern (116), due to deriving the hopping pattern (116) from the base hopping pattern, is outside of an admissible time range (112) on the basis of the shift of the base hopping pattern in time, shift into the admissible time range (112) the at least one hop by a cyclical shift in time.

3. Data transmitter (106) according to any of the preceding claims,
wherein the hop of the hopping pattern (116) is shifted by exactly plus one temporal value during the linear shift.

4. Data transmitter (106) according to any of the preceding claims,
wherein, in the cyclical shift, the at least one hop of the hopping pattern (116) outside of the admissible frequency range and/or time range (112) by one time value and/or frequency value, assuming a boundary of the admissible frequency range and/or time range (112), is shifted into the admissible frequency range and/or time range by the same time value and/or frequency value, assuming an opposite boundary of the frequency range and/or time range (112).

5. Data transmitter (106) according to any of the preceding claims,

wherein the data transmitter (106) is configured to receive a control signal (120) of the communication system (102), wherein the control signal (120) comprises information about an admissible frequency range and/or time range (112) for transmitting the data signal (122) with the plurality of sub-data packets,
wherein the data transmitter (106) is configured to transmit the data signal (122) with the plurality of sub-data packets within the admissible frequency and/or time range (112).

6. Data transmitter (106) according to any of the preceding claims,

wherein the data transmitter (106) is configured to receive a control signal (120), wherein the control signal (120) comprises information about a channel access pattern (110), wherein the channel access pattern (110) indicates a frequency hop-based and/or time hop-based occupancy of the frequency band, usable for the communication of the communication system (102),
wherein the data transmitter (106) is configured to determine the channel access pattern (110) on the basis of the information about the channel access pattern (110), wherein the hopping pattern (116) is a relative channel access pattern (116), wherein the relative channel access pattern (116) indicates the occupancy to be used with respect to the usable frequency and/or time hop-based occupancy indicated by the channel access pattern (110),
wherein the data transmitter (106) is configured to transmit by means of the data signal (122) the plurality of sub-data packets at least in a subset, indicated by the channel access pattern, of the usable frequency and/or time hop-based occupancy of the frequency band, indicated by the relative channel access pattern (116).

7. Data receiver of a communication system,

wherein the communication system (102) communicates in a wireless manner in a frequency band used for communication by a plurality of communication systems,
wherein the data receiver is configured to receive a data signal (122), wherein the data signal (122) is transmitted according to a hopping pattern (116), wherein the data signal (122) comprises a plurality of sub-data packets transmitted in a distributed way according to a frequency and/or time hop-based occupancy (118_1-118_4) of the frequency band, indicated by the hopping pattern (116), wherein at least two of the plurality of sub-data packets comprise a pilot sequence, wherein the hopping pattern (116) is derived from a base hopping pattern (126) on the basis of a shift of the base hopping pattern (126) in frequency and/or time, wherein, when deriving

70

the hopping pattern (116) from the base hopping pattern (126), if at least one hop of the hopping pattern (116), due to deriving the hopping pattern (116) from the base hopping pattern (126), is outside of an admissible frequency range (112) on the basis of the shift of the base hopping pattern (126) in frequency, shift only the at least one hop that is outside of the admissible frequency range (112) due to deriving the hopping pattern (116) from the base hopping pattern,

- into the admissible frequency range (112) on the basis of a cyclic shift in frequency, and
- additionally shift the same in time on the basis of a linear shift.

wherein the data receiver (104) is configured to correlate the resource elements usable by the communication system (102) for transmitting the pilot sequence-comprising sub-data packets of the plurality of sub-data packets or the resource elements of the communication system usable by the communication system for transmitting the plurality of sub-data packets each with a reference sequence so as to obtain correlation results for the usable resource elements and so as to transport the correlation result into an at least one-dimensional array of correlation results, wherein the data receiver is configured to perform a correlation of the at least one-dimensional array of correlation results and the at least one-dimensional array of reference values, wherein the at least one-dimensional array of reference values is derived from the base hopping pattern (126).

8. Data receiver (104) according to the preceding claim,
wherein the data receiver (104) is configured to detect a plurality of sub-data packets on the basis of the correlation of the at least one-dimensional array of correlation results (166) with the at least one-dimensional array of reference values (168).

9. Data receiver (104) according to any of the preceding claims,

wherein the at least one-dimensional array of correlation result (166) is a two-dimensional array of correlation results (166),
wherein the at least one-dimensional array of reference values (168) is a two-dimensional array of reference values (168).

10. Data receiver (104) according to the preceding claim,
wherein the data receiver (104) is configured to perform a two-dimensional correlation of the two-dimensional array of correlation results (166) with the two-dimensional array of reference values (168).

11. Data receiver (104) according to any of the preceding claims,
wherein the data receiver (104) is configured to transmit a control signal (120), wherein the control signal (120)

- comprises information about a frequency range and/or time range to be used by the data transmitter (106) of the communication system (102),
- or comprises information about the resource elements (112) to be used by the communication system (102) so as to transmit the plurality of sub-data packets,
- or comprises information about a channel access pattern (110), wherein the channel access pattern (110) indicates a frequency hop-based and/or time hop-based occupancy of resource elements of the frequency band, usable for the communication of the communication system (102), wherein the channel access pattern (110) indicates the resource elements (112) usable by the communication system (102) for transmitting the plurality of sub-data packets, wherein the hopping pattern (116) is a relative channel access pattern (116), wherein the relative channel access pattern (116) indicates the occupancy to be used of the usable frequency hop-based and/or time hop-based occupancy indicated by the channel access pattern (110).

12. System (102), comprising:

at least one data transmitter (106) according to any of claims 1 to 6, and
a data receiver (104) according to any of claims 7 to 11.

13. Method (300) for transmitting a data packet in a communication system (102), wherein the communication system communicates in a wireless manner in a frequency band used for communication by a plurality of communication systems, the method comprising:

deriving (302) a hopping pattern (116) from a base hopping pattern (126) on the basis of a shift of the base hopping pattern (126) in frequency and/or time, wherein, when deriving the hopping pattern (116) from the base hopping pattern, if at least one hop of the hopping pattern (116), due to deriving the hopping pattern (116) from the base hopping pattern (126), is outside of the admissible frequency range on the basis of the shift of the base hopping pattern (126) in frequency, only the at least one hop that is outside of the admissible frequency range (112) due to deriving the hopping pattern (116) from the base hopping pattern,

- is shifted into the admissible frequency range on the basis of a cyclic shift in frequency, and
- is additionally shifted same in time on the basis of a linear shift,

transmitting (304) the data packet distributed onto a plurality of sub-data packets according to the hopping pattern (116) so that the a plurality of sub-data packets is transmitted in a distributed manner according to a frequency hop-based and/or time hop-based occupancy of the frequency band, indicated by the hopping pattern.

14. Method (320) for receiving data in a communication system (102), wherein the communication system (102) communicates in a wireless manner in a frequency band used for communication by a plurality of communication systems, wherein, for transmitting a data packet with the communication system, the data packet is distributed into a plurality of sub-data packets each being shorter than the data packet, and wherein the plurality of sub-data packets is transmitted by means of a data signal (122) according to a hopping pattern (116) in a subset of the usable resource elements of the communication system, wherein at least two of the plurality of sub-data packets comprise a pilot sequence, wherein the hopping pattern (116) is derived from a base hopping pattern (126) on the basis of a shift of the base hopping pattern (126) in frequency and/or time, wherein, when deriving the hopping pattern (116) from the base hopping pattern (126), if at least one hop of the hopping pattern (116), due to deriving the hopping pattern (116) from the base hopping pattern, is outside of an admissible frequency range on the basis of the shift of the base hopping pattern (126) in frequency, only the at least one hop that is outside of the admissible frequency range (112) due to deriving the hopping pattern (116) from the base hopping pattern,

- is shifted into the admissible frequency range on the basis of a cyclic shift in frequency, and
- is additionally shifted in time on the basis of a linear shift,

the method comprising

correlating (322) the resource elements usable by the communication system for transmitting the pilot sequence-comprising sub-data packets of the plurality of sub-data packets or the resource elements of the communication system usable by the communication system for transmitting the plurality of sub-data packets each with a reference sequence so as to obtain correlation results for the usable resource elements,

transporting (324) the correlation result into an at least one-dimensional array of correlation results,

performing (326) a correlation of the at least one-dimensional array of correlation results and the at least one-dimensional array of reference values, wherein the at least one-dimensional array of reference values is derived from the base hopping pattern (126).

15. Computer program for performing a method according to any of the preceding claims.

**Revendications**

1. Emetteur de données (106) d'un système de communication (102),

dans lequel le système de communication (102) communique sans fil dans une bande de fréquences qui est utilisée par une pluralité de systèmes de communication pour la communication,

dans lequel l'émetteur de données (106) est conçu pour envoyer un signal de données (122) selon un modèle de saut (116), dans lequel le signal de données (122) présente une pluralité de sous-paquets de données qui sont transmis de manière répartie selon une occupation (118_1 à 118_4) de la bande de fréquences basée sur le saut en fréquence et/ou dans le temps indiqué par le modèle de saut (116),

dans lequel l'émetteur de données (106) est conçu pour dériver le modèle de saut (116) à partir d'un modèle de saut de base (126) sur base d'un décalage du modèle de saut de base en fréquence et/ou dans le temps,

dans lequel l'émetteur de données (106) est conçu pour, lors de la dérivation du modèle de saut (116) à partir du modèle de saut de base, pour autant qu'au moins un saut du modèle de saut (116) se situe, par suite de la dérivation du modèle de saut (116) à partir du modèle de saut de base sur base du décalage du modèle de saut de base en fréquence, en dehors d'une plage de fréquences admissible (112), décaler uniquement l'au moins un saut qui se situe, par suite de la dérivation du modèle de saut (116) à partir du modèle de saut de base, en-dehors de la plage de fréquences admissible (112),

- sur base d'un décalage cyclique en fréquence dans la plage de fréquences admissible (112), et
- en outre sur base d'un décalage linéaire dans le temps.

2. Emetteur de données (106) selon la revendication précédente, dans lequel l'émetteur de données (106) est conçu pour décaler vers la plage de temps admissible (112), lors de la dérivation du modèle de saut (116) à partir du modèle de saut de base, pour autant qu'au moins un saut du modèle de saut (116) se situe, par suite de la dérivation du modèle de saut (116) à partir du modèle de saut de base sur base du décalage du modèle de saut de base dans le temps, en-dehors d'une plage de temps admissible (112), l'au moins un saut par un décalage cyclique dans le temps.

3. Emetteur de données (106) selon l'une des revendications précédentes,
dans lequel, lors du décalage linéaire, le saut du modèle de saut (116) est déplacé d'exactement plus une valeur de temps.

4. Emetteur de données (106) selon l'une des revendications précédentes,
dans lequel, lors du décalage cyclique, l'au moins un saut du modèle de saut (116) situé, en partant d'une limite de la plage de fréquence et/ou de temps admissible (112), d'une valeur de temps et/ou de fréquence en-dehors de la plage de fréquence et/ou de temps admissible (112) est déplacé de la même valeur de temps et/ou de fréquence, en partant d'une limite opposée de la plage de fréquence et/ou de temps (112), vers la plage de fréquence et/ou de temps admissible.

5. Emetteur de données (106) selon l'une des revendications précédentes,

dans lequel l'émetteur de données (106) est conçu pour recevoir un signal de commande (120) du système de communication (102), dans lequel le signal de commande (120) présente une information sur une plage de fréquences et/ou de temps admissible (112) pour la transmission du signal de données (122) avec la pluralité de sous-paquets de données,
dans lequel l'émetteur de données (106) est conçu pour transmettre le signal de données (122) avec la pluralité de sous-paquets de données dans la plage de fréquences et/ou de temps admissible (112).

6. Emetteur de données (106) selon l'une des revendications précédentes,

dans lequel l'émetteur de données (106) est conçu pour recevoir un signal de commande (120), dans lequel le signal de commande (120) présente une information sur un modèle d'accès au canal (110), dans lequel le modèle d'accès au canal (110) indique une occupation de la bande de fréquences basée sur le saut en fréquence et/ou dans le temps pouvant être utilisée pour la communication du système de communication (102),
dans lequel l'émetteur de données (106) est conçu pour déterminer le modèle d'accès au canal (110) sur base de l'information sur le modèle d'accès au canal (110), dans lequel le modèle de saut (116) est un modèle d'accès au canal relatif (116), dans lequel le modèle d'accès au canal relatif (116) indique l'occupation à utiliser de l'occupation sur base du saut en fréquence ou dans le temps pouvant être utilisée indiquée par le modèle d'accès au canal (110),
dans lequel l'émetteur de données (106) est conçu pour envoyer, à l'aide du signal de données (122), la pluralité de sous-paquets de données dans au moins une quantité partielle, indiquée par le modèle d'accès au canal relatif (1169), de l'occupation de la bande de fréquences sur base du saut en fréquence et/ou dans le temps pouvant être utilisée indiquée par le modèle d'accès au canal.

7. Récepteur de données d'un système de communication,

dans lequel le système de communication (102) communique sans fil dans une bande de fréquences qui est utilisée par une pluralité de systèmes de communication pour la communication,
dans lequel le récepteur de données est conçu pour recevoir un signal de données (122), dans lequel le signal de données (122) est transmis selon un modèle de saut (116), dans lequel le signal de données (122) présente une pluralité de sous-paquets de données qui sont transmis de manière répartie selon une occupation (118_1 à 118_4) de la bande de fréquences basée sur le saut en fréquence et/ou dans le temps indiqué par le modèle de saut (116), dans lequel au moins deux de la pluralité de sous-paquets de données présentent une séquence pilote, dans lequel le modèle de saut (116) est dérivé à partir d'un modèle de saut de base (126) sur base d'un décalage du modèle de saut de base (126) en fréquence et/ou dans le temps, dans lequel, lors de la dérivation du modèle de saut (116) à partir du modèle de saut de base (126), pour autant qu'au moins un saut du modèle de saut (116) se situe, par suite de la dérivation du modèle de saut (116) à partir du modèle de saut de base sur base du décalage du modèle de saut de base (126) en fréquence, en dehors d'une plage de fréquences admissible (112), seul l'au moins un saut qui, par suite de la dérivation du modèle de saut (116) à partir du modèle de saut de base, se situe en-dehors de la plage de fréquences admissible (112),

- est décalé vers la plage de fréquences admissible (112) sur base d'un décalage cyclique en fréquence, et
- est en outre décalé sur base d'un décalage linéaire dans le temps,

dans lequel le récepteur de données (104) est conçu pour corréler les éléments de ressource utilisables par le système de communication (102) pour la transmission des sous-paquets de données présentant la séquence pilote parmi la pluralité de sous-paquets de données ou les éléments de ressource du système de communication pouvant être utilisés par le système de communication pour la transmission de la pluralité de sous-paquets de données avec chaque fois une séquence de référence pour obtenir des résultats de corrélation pour les éléments de ressources pouvant être utilisés, et pour transférer les résultats de corrélation à un réseau au moins unidimensionnel de résultats de corrélation, dans lequel le récepteur de données est conçu pour effectuer une corrélation du réseau au moins unidimensionnel de résultats de corrélation avec un réseau au moins unidimensionnel de valeurs de référence, dans lequel le réseau au moins unidimensionnel de valeurs de référence est dérivé à partir du modèle de saut de base (126).

8. Récepteur de données (104) selon la revendication précédente,
dans lequel le récepteur de données (104) est conçu pour détecter la pluralité de sous-paquets de données sur base de la corrélation du réseau au moins unidimensionnel de résultats de corrélation (166) avec le réseau au moins unidimensionnel de valeurs de référence (168).

9. Récepteur de données (104) selon l'une des revendications précédentes,
dans lequel le réseau au moins unidimensionnel de résultats de corrélation (166) est un réseau bidimensionnel de résultats de corrélation (166), dans lequel le réseau au moins unidimensionnel de valeurs de référence (168) est un réseau bidimensionnel de valeurs de référence (168).

10. Récepteur de données (104) selon la revendication précédente,
dans lequel le récepteur de données (104) est conçu pour effectuer une corrélation bidimensionnelle du réseau bidimensionnel de résultats de corrélation (166) avec le réseau bidimensionnel de valeurs de référence (168).

11. Récepteur de données (104) selon l'une des revendications précédentes,
dans lequel le récepteur de données (104) est conçu pour envoyer un signal de commande (120), dans lequel le signal de commande (120)

- présente une information sur une plage de fréquences et/ou de temps à utiliser par l'émetteur de données (106) du système de communication (102),
- ou présente une information sur les éléments de ressource (112) pouvant être utilisés par le système de communication (102) pour la transmission de la pluralité de sous-paquets de données,
- ou présente une information sur un modèle d'accès au canal (110), où le modèle d'accès au canal (110) indique une occupation basée sur le saut en fréquence et/ou dans le temps d'éléments de ressource de la bande de fréquences pouvant être utilisée pour la communication du système de communication (102), où le modèle d'accès au canal (110) indique les éléments de ressource (112) pouvant être utilisés par le système de communication (102) pour la transmission de la pluralité de sous-paquets de données, où le modèle de saut (116) est un modèle d'accès au canal relatif (116), où le modèle d'accès au canal relatif (116) indique l'occupation à utiliser de l'occupation sur base du saut en fréquence et/ou dans le temps pouvant être utilisée indiquée par le modèle d'accès au canal (110).

12. Système (102), aux caractéristiques suivantes:

au moins un émetteur de données (106) selon l'une des revendications 1 à 6, et
un récepteur de données (104) selon l'une des revendications 7 à 11.

**13.** Procédé (300) permettant d'envoyer un paquet de données dans un système de communication (102), dans lequel le système de communication communique sans fil dans une bande de fréquences qui est utilisée par une pluralité de systèmes de communication pour la communication, dans lequel le procédé présente le fait de:

dériver (302) un modèle de saut (116) d'un modèle de saut de base (126) sur base d'un décalage du modèle de saut de base (126) en fréquence et/ou dans le temps, où, lors de la dérivation du modèle de saut (116) à partir du modèle de saut de base, pour autant qu'au moins un saut du modèle de saut (116) se situe, par suite de la dérivation du modèle de saut (116) à partir du modèle de saut de base sur base du décalage du modèle de saut de base en fréquence, en dehors d'une plage de fréquences admissible (112), est décalé uniquement l'au moins un saut qui se situe, par suite de la dérivation du modèle de saut (116) à partir du modèle de saut de base, en-dehors de la plage de fréquences admissible (112),

- sur base d'un décalage cyclique en fréquence dans la plage de fréquences admissible (112), et
- en outre sur base d'un décalage linéaire dans le temps,

envoyer (304) le paquet de données divisé en une pluralité de sous-paquets de données selon le modèle de saut (116), de sorte que la pluralité de sous-paquets de données soient transmis de manière répartie selon une occupation de la bande de fréquence basée sur le saut en fréquence et/ou dans le temps indiquée par le modèle de saut.

**14.** Procédé (320) permettant de recevoir des données dans un système de communication (102), dans lequel le système de communication (102) communique sans fil dans une bande de fréquence qui est utilisée par une pluralité de systèmes de communication pour la communication, dans lequel le paquet de données est divisé, pour la transmission d'un paquet de données dans le système de communication, en une pluralité de sous-paquets de données qui sont, chacun, plus courts que le paquet de données, et dans lequel la pluralité de sous-paquets de données sont transmis au moyen d'un signal de données (122) selon un modèle de saut (116) dans une quantité partielle d'éléments de ressources pouvant être utilisés du système de communication, dans lequel au moins deux de la pluralité de sous-paquets de données présentent une séquence pilote, dans lequel le modèle de saut (116) est dérivé à partir d'un modèle de saut de base (126) sur base d'un décalage du modèle de saut de base (126) en fréquence et/ou dans le temps, dans lequel, lors de la dérivation du modèle de saut (116) à partir du modèle de saut de base, pour autant qu'au moins un saut du modèle de saut (116) se situe, par suite de la dérivation du modèle de saut (116) à partir du modèle de saut de base (126) sur base du décalage du modèle de saut de base (126) en fréquence, en dehors d'une plage de fréquences admissible, est décalé uniquement l'au moins un saut qui se situe, par suite de la dérivation du modèle de saut (116) à partir du modèle de saut de base, en-dehors de la plage de fréquences admissible (112),

- sur base d'un décalage cyclique en fréquence vers la plage de fréquences admissible, et
- en outre sur base d'un décalage linéaire dans le temps,

dans lequel le procédé présente le fait de:

corréler (322) les éléments de ressources du système de communication pouvant être utilisés par le système de communication pour la transmission des sous-paquets de données présentant une séquence pilote parmi la pluralité de sous-paquets de données ou les éléments de ressources du système de communication pouvant être utilisés par le système de communication pour la transmission de la pluralité de sous-paquets de données avec chaque fois une séquence de référence, pour obtenir, pour les éléments de ressources pouvant être utilisés, des résultats de corrélation,
transférer (324) les résultats de corrélation vers un réseau au moins unidimensionnel de résultats de corrélation,
effectuer (326) une corrélation entre le réseau au moins unidimensionnel de résultats de corrélation et le réseau au moins unidimensionnel de valeurs de référence, où le réseau au moins unidimensionnel de valeurs de référence est dérivé à partir du modèle de saut de base (126).

**15.** Programme d'ordinateur pour mettre en oeuvre le procédé selon l'une des revendications précédentes.

Fig. 1

Fig. 2

Fig. 3

Fig. 4

<u>130</u>

132                         134

| netzwerkspezifischer Identifikator | periodischer Zahlengenerator |
|---|---|

140                         142, 142'

ID                              Z

randomisierender Zuordner
$R = map\_rand(ID, Z)$     136

144

R

Frequenz-/Zeitpunkt-Zuordner
$(f,t = map\_ft(R)$     138

146                         148

Frequenzinformation f                       Zeitinformation t

Kanalzugriffsmuster

Fig. 5

130

132          135_1          135_2

| netzwerkspezifischer Identifikator | periodischer Bakenindex | periodischer Zeitschlitzindex |
|---|---|---|

140          143_1          143_2

ID          Z1          Z2

randomisierender Zuordner
$R = map\_rand(ID, Z1, Z2)$     136

144

R

Frequenz-/Zeitpunkt-Zuordner
$(f,t = map\_ft(R)$     138

146                  148

Frequenzinformation f              Zeitinformation t

Kanalzugriffsmuster

Fig. 6

R

Frequenzdifferenz-/Zeitpunkt-Zuordner
$(\Delta fi, t = map\_\Delta ft(R))$

138

$\Delta fi_n$

$fi_n$

154

150

152

Verzögerung

$\Delta fi_{n+1}$

Frequenzkanalinformation fi

Zeitinformation t

Fig. 7

EP 3 900 247 B1

Fig. 8

Fig. 9

Fig. 10

EP 3 900 247 B1

Fig. 11

Fig. 12

EP 3 900 247 B1

110

Kanalzugriffsmuster

Aktivitätsrate $A_1$

Aktivitätsrate $A_2$

Aktivitätsrate $A_3$

Bereich 1

Bereich 2

Bereich 3

Zeit

Fig. 13

Fig. 14

= Ressourceelemente des Grund-Kanalzugriffsmusters

= bei Bedarf zusätzlich aktivierbare Elemente des Kanalzugriffsmusters

Fig. 15

Fig. 16

Fig. 17

EP 3 900 247 B1

netzwerkspezifisches Kanalzugriffsmuster

110

1 Ressourceelement

Frequenz

Frequenz-kanal-index

Projektion auf Zeitachse

Entfernung ungenutzter Zeitschlitze

verfügbare Ressourcen (ohne Frequenz-information)

relatives Kanalzugriffsmuster eines Benutzers (116)

Fig. 18

Fig. 19

Fig. 20

relativer
Frequenzkanal-
index

2
1
0

0   1   2   3   4   5   ···

gleichzeitige
Belegung von zwei
Frequenzkanälen

relatives Kanalzugriffsmuster
mit gleichzeitiger Aussendung auf
mehreren Frequenzkanälen
(116)

Fig. 21

Fig. 22

EP 3 900 247 B1

Fig. 23

EP 3 900 247 B1

| Anwendungsfälle | $T_{frame}$ (ms) | A | $T_{RE}$ (ms) | F | Z | F x Z Ressourceelemente je Ressourcen-Frame |
|---|---|---|---|---|---|---|
| Latenzkritisch (Batteriebetrieben) | 360 | 0,33 | 15 | 1 | 8 | 8 |
| Latenzkritisch (Stromnetz) | 480 | 0,50 | 15 | 5 | 16 | 80 |
| Interferenzrobust (Batteriebetrieben) | 9000 | 0,10 | 30 | 1 | 30 | 30 |
| Interferenzrobust (Stromnetz) | 9000 | 0,33 | 30 | 10 | 100 | 1000 |

Fig. 24

Fig. 25

Fig. 26

114    114    114    114    114

Cluster 0    Cluster 1    Cluster 2    Cluster 3    Cluster 4    112

112    118    118    118    118    118

Zeit

relatives Kanalzugriffsmuster
(116)

Fig. 27

EP 3 900 247 B1

Fig. 28

EP 3 900 247 B1

Fig. 29

Fig. 30

Fig. 31

EP 3 900 247 B1

Fig. 32

Fig. 33

EP 3 900 247 B1

Fig. 34

Fig. 35

Fig. 36

Fig. 37

Korrelationsamplitude

Zeit in Zeitschlitzen

Fig. 38

Fig. 39

EP 3 900 247 B1

Fig. 40

Fig. 41

Fig. 42

Fig. 43a

Fig. 43b

Fig. 44

EP 3 900 247 B1

Fig. 45

Fig. 46

PER über aktive Endgeräte,N=576, J=18, 1/3-ratiger Faltungscode

Fig. 47

Fig. 48

300

Ableiten eines Sprungmusters von einem Grundsprungmuster
basierend auf einer Verschiebung des Grundsprungmusters in der
Frequenz und/oder Zeit, wobei beim Ableiten des Sprungmusters von
dem Grundsprungmuster, sofern zumindest ein Sprung des
Sprungmusters bedingt durch die Ableitung des Sprungmusters von
dem Grundsprungmusters basierend auf der Verschiebung des
Grundsprungmusters in der Frequenz außerhalb eines zulässigen
Frequenzbereichs liegt, der zumindest eine Sprung basierend auf einer
zyklischen Verschiebung in der Frequenz in den zulässigen
Frequenzbereich verschoben wird und der zumindest eine Sprung
zusätzlich basierend auf einer linearen Verschiebung in der Zeit
verschoben wird

~302

Senden des Datenpakets aufgeteilt auf eine Mehrzahl von
Sub-Datenpaketen entsprechend des Sprungmusters, so dass die
Mehrzahl von Sub-Datenpaketen entsprechend einer durch das
Sprungmuster angegebenen frequenz- und/oder zeitsprungbasierten
Belegung des Frequenzbands verteilt übertragen werden

~304

## Fig. 49

320

```
Korrelieren der von dem Kommunikationssystem zur Übertragung der
pilotsequenzaufweisenden Sub-Datenpakete der Mehrzahl von Sub-
Datenpaketen verwendbaren Ressourcenelemente oder die von dem
Kommunikationssystem zur Übertragung der Mehrzahl von Sub-
Datenpaketen verwendbaren Ressourcenelemente des
Kommunikationssystems jeweils mit einer Referenzsequenz, um für
die verwendbaren Ressourcenelemente Korrelationsergebnisse
zu erhalten
```
322

```
Überführen der Korrelationsergebnisse in ein zumindest
ein-dimensionales Array von Korrelationsergebnissen
```
324

```
Durchführen einer Korrelation zwischen dem zumindest
ein-dimensionalen Array von Korrelationsergebnissen und dem
zumindest ein-dimensionalen Array von Referenzwerten, wobei das
zumindest ein-dimensionale Array von Referenzwerten von dem
Grundsprungmuster abgeleitet ist
```
326

## Fig. 50

400

Empfangen eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte unterteilt ist ⟿402

Übertragen von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt ⟿404

Fig. 51

<u>420</u>

Senden eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das netzwerkspezifische Kanalzugriffsmuster in zumindest zwei Abschnitte unterteilt ist ⎯422

Empfangen von Daten von einem Endpunkt des Kommunikationssystems, wobei die Daten unter Verwendung eines relativen Kanalzugriffsmusters übertragen werden, wobei das relative Kanalzugriffsmuster eine für die Übertragung zu verwendende Belegung von Ressourcen aus der verwendbaren frequenz- und/oder zeitsprungbasierten Belegung von Ressourcen eines Abschnitts der zumindest zwei Abschnitte des netzwerkspezifischen Kanalzugriffsmusters angibt ⎯424

Fig. 52

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014241313 A1
- WO 2008033117 A1
- WO 2009139724 A1
- WO 2018059782 A1
- DE 102011082098 B4

**In der Beschreibung aufgeführte Nicht-Patentliteratur**

- **MEDIATEK INC.** Synchronization Signal Design in CP-OFDM Based on Time-Frequency Hopping Patterns. *3GPP DRAFT; R1-1609329_SYNCHRONIZATION SIGNAL DESIGN IN CP-OFDM BASED ON TIME-FREQUENCY HOPPING PATTERNS, 3RD GENERATION PARTNERSHIP PROJECT (3GPP), MOBILE COMPETENCE CENTRE ; 650, ROUTE DES LUCIOLES,* 01. Oktober 2016, vol. RAN WG1 (Lisbon

- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013

- **G. KILIAN ; M. BREILING ; H. H. PETKOV ; H. LIESKE ; F. BEER ; J. ROBERT ; A. HEUBERGER.** Increasing Transmission Reliability for Telemetry Systems Using Telegram Splitting. *IEEE Transactions on Communications,* Marz 2015, vol. 63 (3), 949-961